# EUROPEAN PATENT SPECIFICATION

(11) **EP 2 628 779 B1**
(45) Date of publication and mention of the grant of the patent: **17.05.2017**
(21) Application number: 13000511.9
(22) Date of filing: 01.02.2013
(51) Int. Cl.: C09K 19/20, C09K 19/30, C09K 19/34, C09K 19/44, C09K 19/06, C09K 19/04, C09K 19/12, C09K 19/54

(54) **LIQUID-CRYSTALLINE MEDIUM**
Flüssigkristallines Medium
Milieu liquide cristallin

(30) Priority: 15.02.2012 EP 12001001
(43) Date of publication of application: 21.08.2013
(73) Proprietor: Merck Patent GmbH, 64293 Darmstadt (DE)
(72) Inventor: Haensel, Helmut, 64367 Muehltal (DE); Pohle, Andreas, 64319 Pfungstadt (DE); Yun, Chang-Jun, 451-766 Pyeongtaek (KR); Yun, Yong-Kuk, 445-724 Hwaseong (KR); Lee, Hee-Kyu, 451-783 Pyeongtaek (KR); Choi, Chang-Suk, Asan-si 336-743 (KR)

(56) References cited:
- WO-A1-2010/012363
- WO-A1-2011/098214
- US-A- 5 273 680
- US-A1- 2010 301 270
- US-A1- 2011 095 229
- US-A1- 2011 140 039
- US-B2- 6 861 107

## Description

The present invention relates to a liquid-crystalline medium (LC medium), to the use thereof for electro-optical purposes, and to LC displays containing this medium.

Liquid crystals are used principally as dielectrics in display devices, since the optical properties of such substances can be modified by an applied voltage. Electro-optical devices based on liquid crystals are extremely well known to the person skilled in the art and can be based on various effects. Examples of such devices are cells having dynamic scattering, DAP (deformation of aligned phases) cells, guest/host cells, TN cells having a twisted nematic structure, STN (supertwisted nematic) cells, SBE (superbirefringence effect) cells and OMI (optical mode interference) cells. The commonest display devices are based on the Schadt-Helfrich effect and have a twisted nematic structure.

The liquid-crystal materials must have good chemical and thermal stability and good stability to electric fields and electromagnetic radiation. Furthermore, the liquid-crystal materials should have low viscosity and produce short addressing times, low threshold voltages and high contrast in the cells.

They should furthermore have a suitable mesophase, for example a nematic or cholesteric mesophase for the above-mentioned cells, at the usual operating temperatures, i.e. in the broadest possible range above and below room temperature. Since liquid crystals are generally used as mixtures of a plurality of components, it is important that the components are readily miscible with one another. Further properties, such as the electrical conductivity, the dielectric anisotropy and the optical anisotropy, have to satisfy various requirements depending on the cell type and area of application. For example, materials for cells having a twisted nematic structure should have positive dielectric anisotropy and low electrical conductivity.

For example, for matrix liquid-crystal displays with integrated non-linear elements for switching individual pixels (MLC displays), media having large positive dielectric anisotropy, broad nematic phases, relatively low birefringence, very high specific resistance, good UV and temperature stability and low vapour pressure are desired.

Matrix liquid-crystal displays of this type are known. Examples of non-linear elements which can be used to individually switch the individual pixels are active elements (i.e. transistors). The term "active matrix" is then used, where a distinction can be made between two types:
1. MOS (metal oxide semiconductor) or other diodes on silicon wafers as substrate.
2. Thin-film transistors (TFTs) on a glass plate as substrate.

The use of single-crystal silicon as substrate material restricts the display size, since even modular assembly of various part-displays results in problems at the joints.

In the case of the more promising type 2, which is preferred, the electro-optical effect used is usually the TN effect. A distinction is made between two technologies: TFTs comprising compound semiconductors, such as, for example, CdSe, or TFTs based on polycrystalline or amorphous silicon. Intensive work is being carried out worldwide on the latter technology.

The TFT matrix is applied to the inside of one glass plate of the display, while the other glass plate carries the transparent counterelectrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is opposite each switchable pixel.

The TFT displays usually operate as TN cells with crossed polarisers in transmission and are backlit.

The term MLC displays here encompasses any matrix display with integrated non-linear elements, i.e., besides the active matrix, also displays with passive elements, such as varistors or diodes (MIM = metal-insulator-metal).

MLC displays of this type are particularly suitable for TV applications (for example pocket televisions) or for high-information displays for computer applications (laptops) and in automobile or aircraft construction. Besides problems regarding the angle dependence of the contrast and the response times, difficulties also arise in MLC displays due to insufficiently high specific resistance of the liquid-crystal mixtures [TOGASHI, S., SEKIGUCHI, K., TANABE, H., YAMAMOTO, E., SORIMACHI, K., TAJIMA, E., WATA-NABE, H., SHIMIZU, H., Proc. Eurodisplay 84, Sept. 1984: A 210-288 Matrix LCD Controlled by Double Stage Diode Rings, pp. 141 ff, Paris; STROMER, M., Proc. Eurodisplay 84, Sept. 1984: Design of Thin Film Transistors for Matrix Addressing of Television Liquid Crystal Displays, pp. 145 ff, Paris]. With decreasing resistance, the contrast of an MLC display deteriorates, and the problem of after-image elimination may occur. Since the specific resistance of the liquid-crystal mixture generally drops over the life of an MLC display owing to interaction with the interior surfaces of the display, a high (initial) resistance is very important in order to obtain acceptable lifetimes. In particular in the case of low-volt mixtures, it was hitherto impossible to achieve very high specific resistance values. It is furthermore important that the specific resistance exhibits the smallest possible increase with increasing temperature and after heating and/or UV exposure. The low-temperature properties of the mixtures from the prior art are also particularly disadvantageous. It is demanded that no crystallisation and/or smectic phases occur, even at low temperatures, and the temperature dependence of the viscosity is as low as possible. The MLC displays from the prior art thus do not satisfy today's requirements.

Besides liquid-crystal displays which use backlighting, i.e. are operated transmissively and if desired transflectively, reflective liquid-crystal displays are also particularly interesting. These reflective liquid-crystal displays use the ambient light for information display. They thus consume significantly less energy than backlit liquid-crystal displays having a corresponding size and resolution. Since the TN effect is characterised by very good contrast, reflective displays of this type can even be read well in bright ambient conditions. This is already known of simple reflective TN displays, as used, for example, in watches and pocket calculators. However, the principle can also be applied to high-quality, higher-resolution active matrix-addressed displays, such as, for example, TFT displays. Here, as already in the transmissive TFT-TN displays which are generally conventional, the use of liquid crystals of low birefringence (Δn) is necessary in order to achieve low optical retardation (d · Δn). This low optical retardation results in usually acceptable low viewing-angle dependence of the contrast (cf. DE 30 22 818). In reflective displays, the use of liquid crystals of low birefringence is even more important than in transmissive displays since the effective layer thickness through which the light passes is approximately twice as large in reflective displays as in transmissive displays having the same layer thickness.

In order to achieve 3D effects by means of shutter glasses, fast-switching mixtures having low rotational viscosities and correspondingly high optical anisotropy (Δn), in particular, are employed. Electro-optical lens systems, by means of which a 2-dimensional representation of a display can be switched to a 3-dimensional autostereoscopic representation, can be achieved using mixtures having high optical anisotropy (Δn).

Thus, there continues to be a great demand for MLC displays having very high specific resistance at the same time as a large working-temperature range, short response times, even at low temperatures, and a low threshold voltage which do not exhibit these disadvantages or only do so to a lesser extent.

In the case of TN (Schadt-Helfrich) cells, media are desired which facilitate the following advantages in the cells:
- extended nematic phase range (in particular down to low temperatures)
- switchability at extremely low temperatures (outdoor use, automobiles, avionics)
- increased resistance to UV radiation (longer life)
- low threshold voltage
- high transmittance.

The media available from the prior art, i.e. US 2011/140039 A1, WO 2010/012363, WO 2011/098214 A1, US 2011/095229 A1 and US 2010/301270 A1, do not enable these advantages to be achieved while simultaneously retaining the other parameters.

In the case of supertwisted (STN) cells, media are desired which facilitate greater multiplexability and/or lower threshold voltages and/or broader nematic phase ranges (in particular at low temperatures). To this end, a further widening of the available parameter latitude (clearing point, smectic-nematic transition or melting point, viscosity, dielectric parameters, elastic parameters) is urgently desired.

In particular in the case of LC displays for TV and video applications (for example LCD-TVs, monitors, PDAs, notebooks, games consoles), a significant reduction in the response times is desired. This requires LC mixtures having low rotational viscosities and high dielectric anisotropies. At the same time, the LC media should have high clearing points, preferably ≥ 70°C.

The invention has the object of providing media, in particular for MLC, FFS, IPS, TN, positive VA or STN displays of this type, which do not exhibit the disadvantages indicated above or only do so to a lesser extent and preferably have fast response times and low rotational viscosities at the same time as a high clearing point, as well as high dielectric anisotropy and a low threshold voltage and a high transmittance.

Nowadays, fringe-field switching (FFS) mode is especially interesting for the small and medium size displays for the use in tablet and smart phone displays. The reason why the FFS mode is widely adapted for smart and medium size displays is the wide viewing angle, the high transmittance the low operating characteristics compared to the well-known modes of the prior art. LC mixtures of the prior art are characterized in that they consist of compounds with positive dielectric anisotropy and optionally of neutral compounds.

It has now been found that the LC mixtures having positive dielectric anisotropy (+Δε) can be improved if the LC media additionally contain one or more compounds selected from the compounds of the formula IIA, IIB and IIC having negative values for the dielectric anisotropy (-Δε). The mixtures according to the invention have a very high light efficiency, show very high transmittance, low values for the rotational viscosity γ₁ and thus are suitable for all kind of applications in the TN, IPS, FFS and VA modes, especially in the FFS mode.

The compounds of the formulae IA in combination with at least one compound selected from the group of compounds of the formula IIA, IIB and IIC result in LC mixtures having the desired properties indicated above.

The invention relates to a liquid-crystalline medium accordina to Claim 1 having a positive dielectric anisotropy, characterised in that it contains one or more compounds of the formula IA 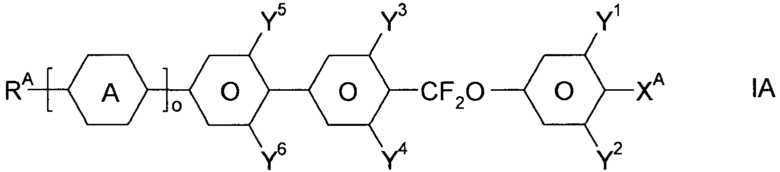 and
at least one compound selected from the group of compounds of the formula IIA, IIB and IIC, 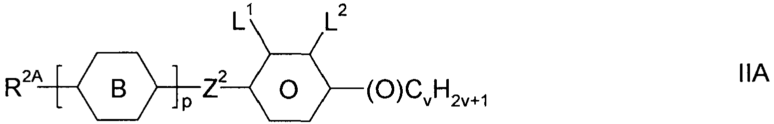 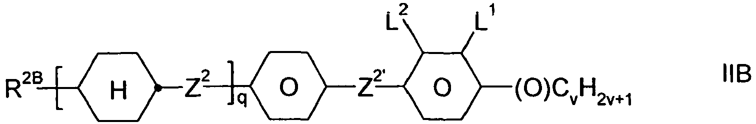 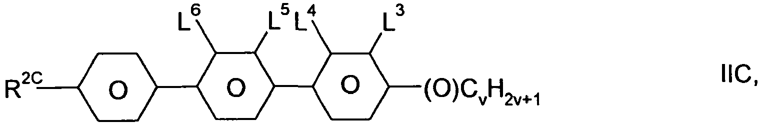 in which
- R^{A}, R^{2A}, R^{2B} and R^{2C}: each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 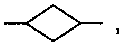 -C≡C-, -CF₂O-, -OCF₂-, -OC-O- or -O-CO- in such a way that O atoms are not linked directly to one another, 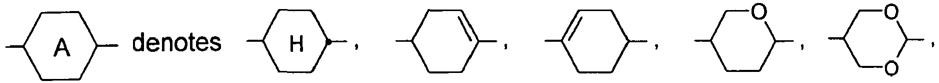 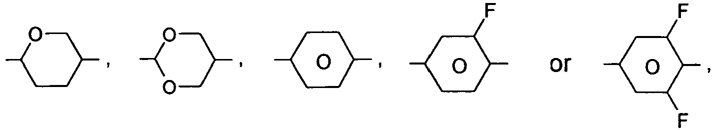 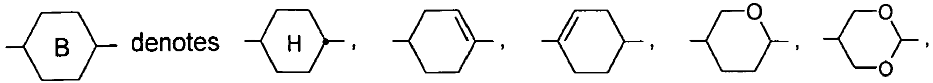 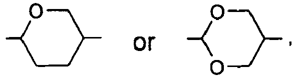
- X^{A}: denotes F, Cl, CN, SF₅, SCN, NCS, a halogenated alkyl radical, a halogenated alkenyl radical, a halogenated alkoxy radical or a halogenated alkenyloxy radical, each having up to 6 C atoms,
- Y¹⁻⁶: each, independently of one another, denote H or F,
- L¹ and L²: each, independently of one another, denote F, Cl, CF₃ or CHF₂,
- L³⁻⁶: each, independently of one another, denote H, F, Cl, CF₃ or CHF₂, but at least two of L³⁻⁶ denote F, Cl, CF₃ or CHF₂
- Z² and Z^{2'}: each, independently of one another, denote a single bond, -CH₂CH₂-, -CH=CH-, -C≡C-, -CF₂O-, -OCF₂-, -CH₂O-, -OCH₂-, -COO-, -OCO-, -C₂F₄-, -CF=CF-, -CH=CHCH₂O-,
- p: denotes 1 or 2, and, in the case where Z² = single bond, p may also denote 0,
- o and q: each, independently of one another, denote 0 or 1,
- (O)CᵥH₂ᵥ₊₁: denotes OCᵥH₂ᵥ₊₁ or CᵥH₂ᵥ₊₁, and
- v: denotes 1 to 6.

Surprisingly, it has been found that mixtures containing the compounds of the formulae IA and at least one compound of the formula IIA, IIB or IIC have high dielectric anisotropy Δε and at the same time have an advantageous rotational viscosity γ₁/clearing point ratio. They are therefore particularly suitable for achieving liquid-crystal mixtures having low γ₁, high transmittance and a relatively high clearing point. In addition, the compounds of the formulae IA, IIA, IIB and IIC exhibit good solubility in LC media. LC media according to the invention comprising compounds of the formulae IA and at least one compound of the formula IIA, IIB and/or IIC have a low rotational viscosity, fast response times, a high clearing point, very high positive dielectric anisotropy, relatively high birefringence and a broad nematic phase range and a high transmittance. They are therefore particularly suitable for mobile telephones, TV and video applications, most preferably for smart phones and tablet PC.

The compounds of the formulae IA, IIA, IIB and IIC have a broad range of applications. Depending on the choice of substituents, they can serve as base materials of which liquid-crystalline media are predominantly composed; however, liquid-crystalline base materials from other classes of compound can also be added to the compounds of the formulae IA and IIA, IIB, IIC in order, for example, to modify the dielectric and/or optical anisotropy of a dielectric of this type and/or to optimise its transmittance, threshold voltage and/or its viscosity.

In the pure state, the compounds of the formulae IA, IIA, IIB and IIC are colourless and form liquid-crystalline mesophases in a temperature range which is favourably located for electro-optical use. They are stable chemically, thermally and to light.

The compounds of the formulae IA, IIA, IIB and IIC are prepared by methods known per se, as described in the literature (for example in the standard works, such as Houben-Weyl, Methoden der organischen Chemie [Methods of Organic Chemistry], Georg-Thieme-Verlag, Stuttgart), to be precise under reaction conditions which are known and suitable for the said reactions. Use can also be made here of variants known per se, which are not mentioned here in greater detail.

The compounds of the formulae IA, IIA, IIB and IIC are known, for example, from WO 2004/048501 A, EP 0 786 445, EP 0 364 538, US 5,273,680.

If R^{A}, R^{2A}, R^{2B} and R^{2C} in the formulae above and below denote an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy. R^{A} and R^{B} each preferably denote straight-chain alkyl having 2-6 C atoms.

Oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxax-decyl.

If R^{A}, R^{2A}, R^{2B} and R^{2C} denote an alkyl radical in which one CH₂ group has been replaced by -CH=CH-, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

If R^{A}, R^{2A}, R^{2B} and R^{2C} denote an alkyl or alkenyl radical which is at least monosubstituted by halogen, this radical is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the ω-position.

In the formulae above and below, X^{A} is preferably F, Cl or a mono- or polyfluorinated alkyl or alkoxy radical having 1, 2 or 3 C atoms or a mono- or polyfluorinated alkenyl radical having 2 or 3 C atoms. X^{A} is particularly preferably F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, OCH=CF₂ or CH=CF₂, very particularly preferably F or OCF₃, furthermore CF₃, OCF=CF₂, OCHF₂ or OCH=CF₂.

Particular preference is given to compounds of the formulae IA in which X^{A} denotes F or OCF₃, preferably F. Preferred compounds of the formula IA are those in which Y¹ denotes F, those in which Y² denotes F, those in which Y³ denotes H, those in which Y⁴ denotes H and Y⁵ denotes F, and those in which Y⁶ and Y⁷ each denote H.

Preferred compounds of the formula IA are selected from the following sub-formulae: 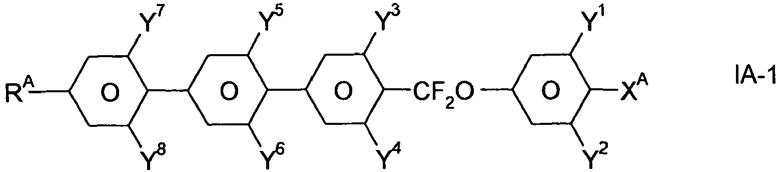 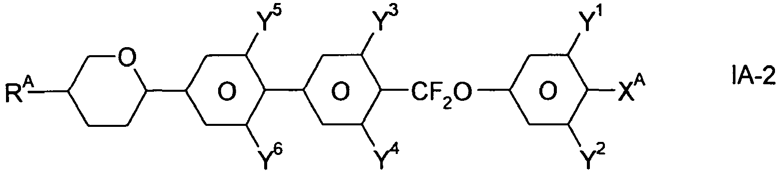 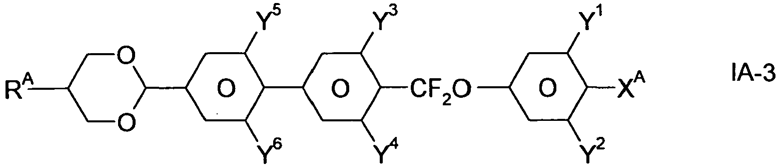 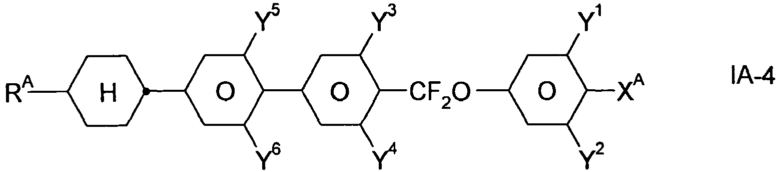 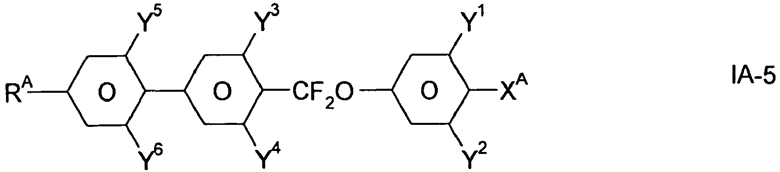 in which R^{A}, X^{A} and Y¹⁻⁶ have the above indicated meanings and Y⁷ and Y⁸ each, independently denote H or F.

Particularly preferred compounds of the formula IA are selected from the following formulae: 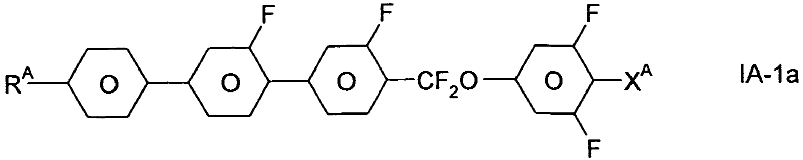 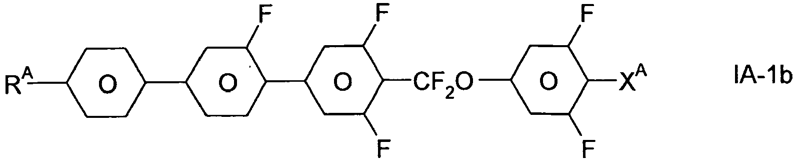 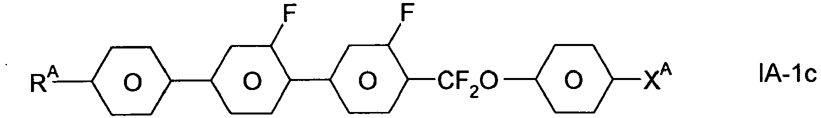 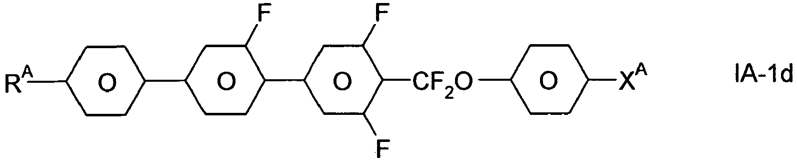 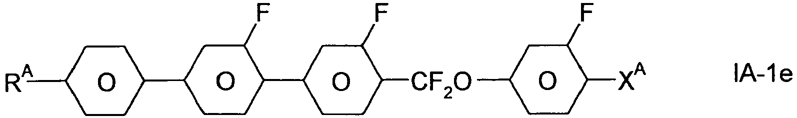 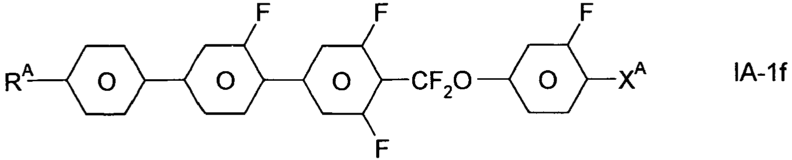 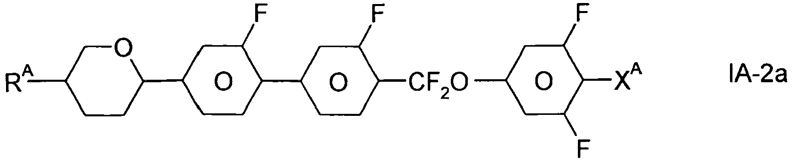 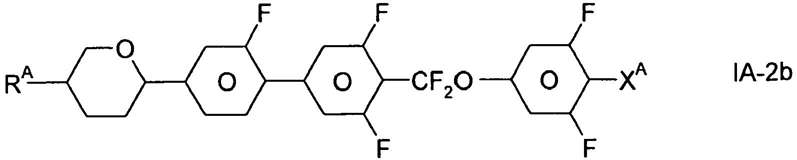 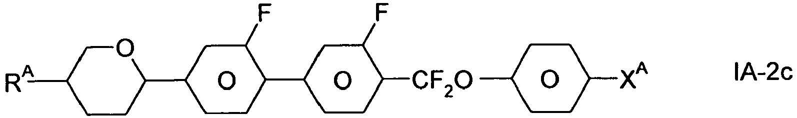 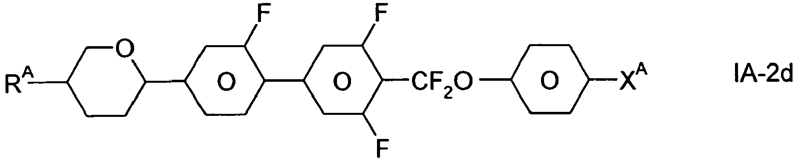 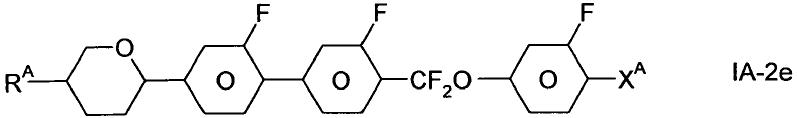 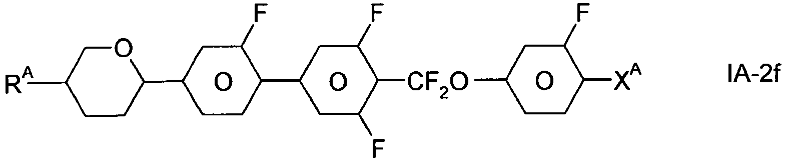 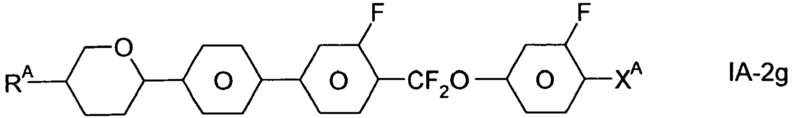 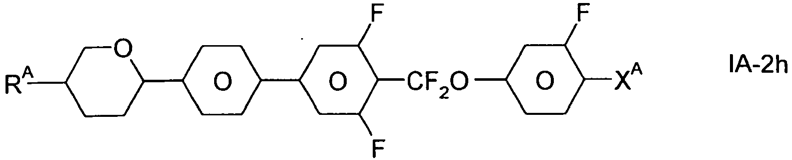 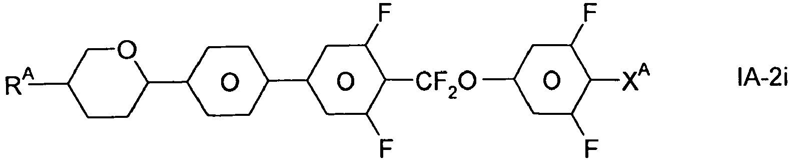 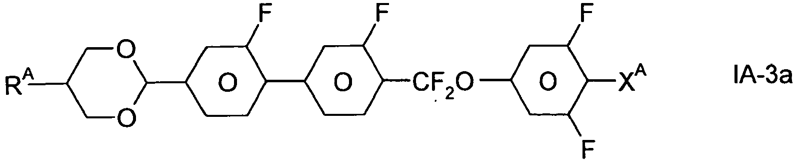 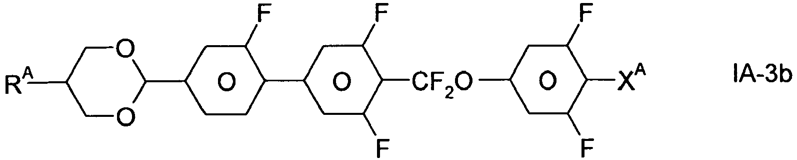 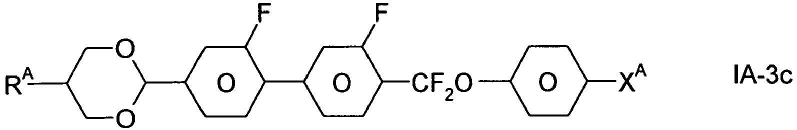 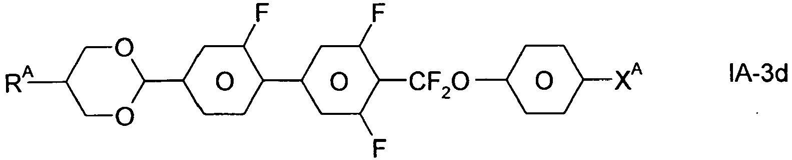 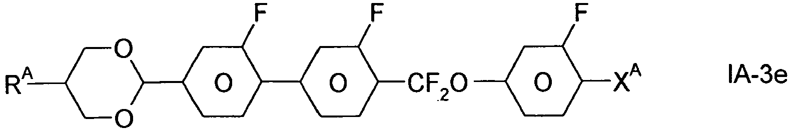 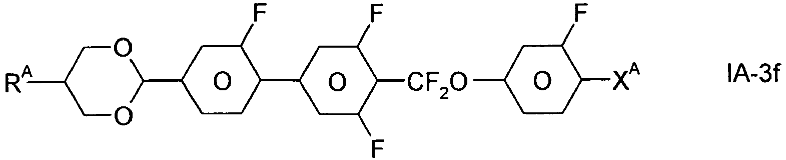 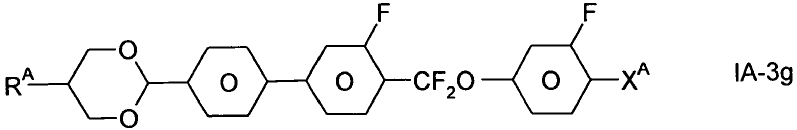 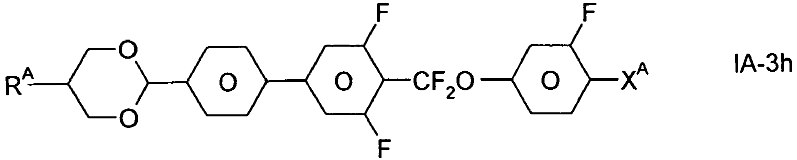 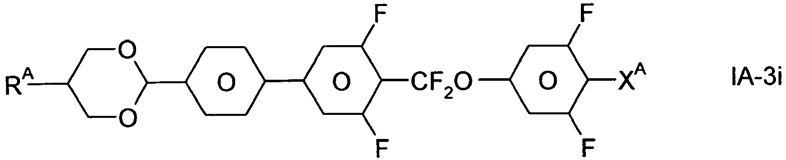 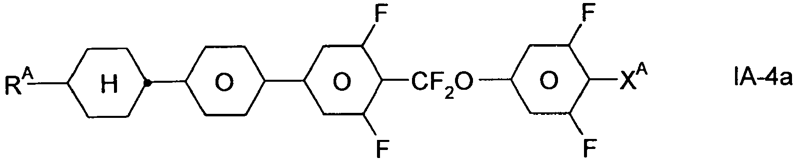 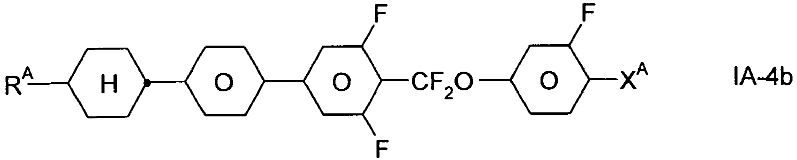 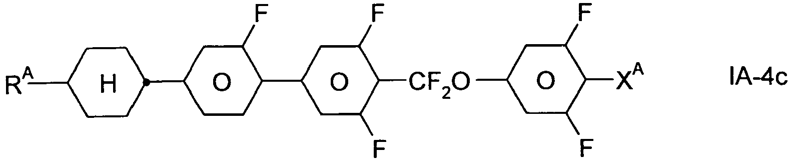 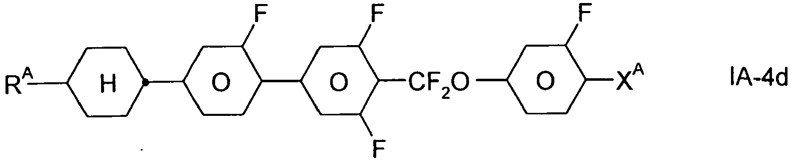 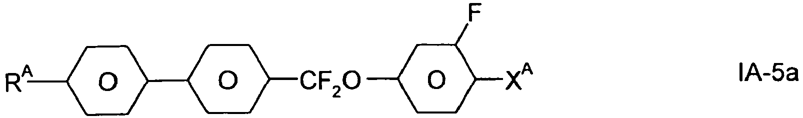 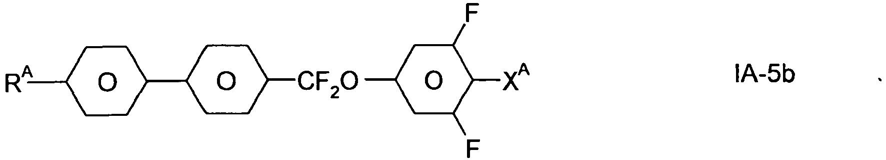 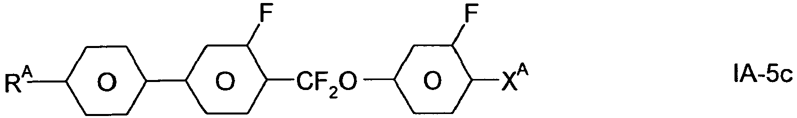 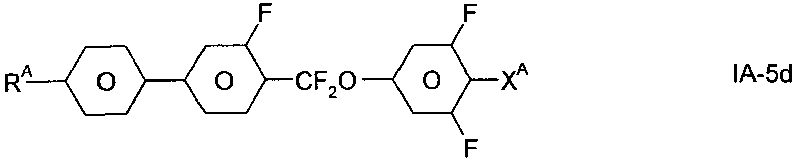 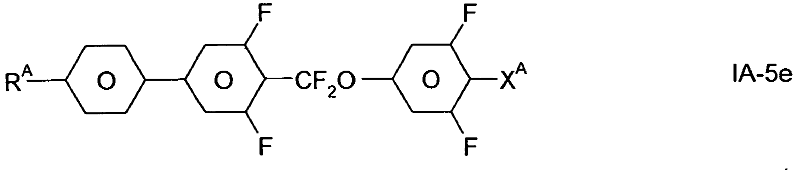 in which
R^{A} and X^{A} have the meanings indicated in Claim 1. R^{A} preferably denotes straight-chain alkyl having 1 to 6 C atoms, in particular ethyl, propyl and pentyl, furthermore butyl and alkenyl having 2 to 6 C atoms. X^{A} preferably denotes F, OCF₃, OCHFCF₃, OCF₂CHFCF₃, OCH=CF₂, most preferably F or OCF₃.

Very particular preference is given to the compound of the sub-formula IA-1 b, IA-2i, IA-3b and IA-5e.

In the compounds of the formulae IIA and IIB, Z² may have identical or different meanings. In the compounds of the formula IIB, Z² and Z² may have identical or different meanings.

In the compounds of the formulae IIA, IIB and IIC, R^{2A}, R^{2B} and R^{2C} each preferably denote alkyl having 1-6 C atoms, in particular CH₃, C₂H₅, n-C₃H₇, n-C₄H₉, n-C₅H₁₁.

In the compounds of the formulae IIA and IIB, L¹, L², L³ and L⁴ preferably denote L¹ = L² = F and L³ = L⁴ = F, furthermore L¹ = F and L² = Cl, L¹ = Cl and L² = F, L³ = F and L⁴ = Cl, L³ = Cl and L⁴ = F. Z² and Z^{2'} in the formulae IIA and IIB preferably each, independently of one another, denote a single bond, furthermore a -C₂H₄- bridge.

If in the formula IIB Z² = -C₂H₄-, -CH₂O-, -COO- or -CH=CH-, Z^{2'} is preferably a single bond or, if Z^{2'} = -C₂H₄-, -CH₂O-, -COO- or -CH=CH-, Z² is preferably a single bond. In the compounds of the formulae IIA and IIB, (O)CᵥH₂ᵥ₊₁ preferably denotes OCᵥH₂ᵥ₊₁, furthermore CᵥH₂ᵥ₊₁. In the compounds of the formula IIC, (O)CᵥH₂ᵥ₊₁ preferably denotes CᵥH₂ᵥ₊₁ In the compounds of the formula IIC, L³ and L⁴ preferably each denote F.

Preferred compounds of the formulae IIA, IIB and IIC are indicated below: 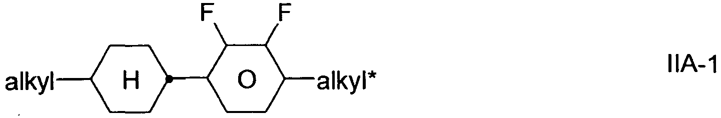 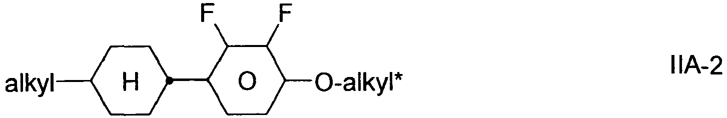 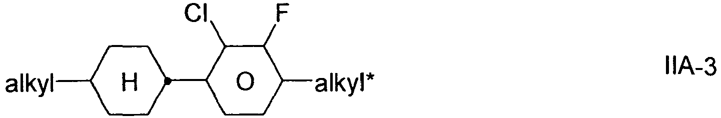 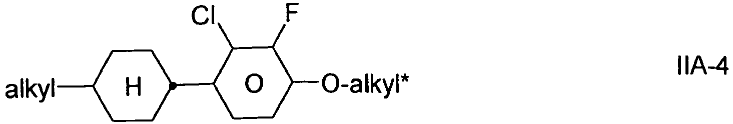 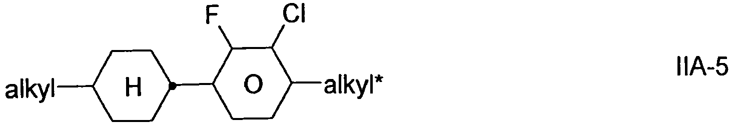 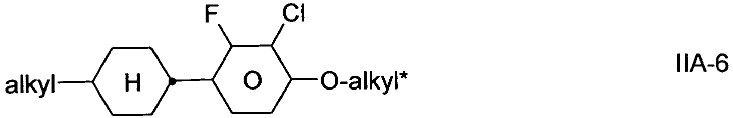 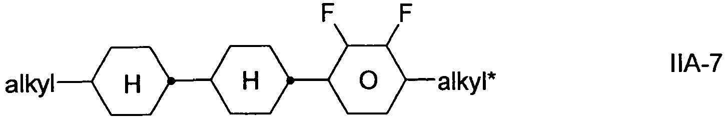 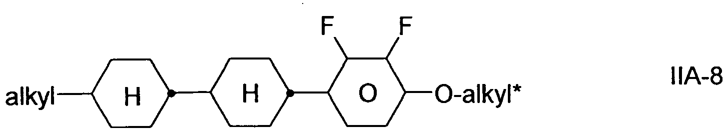 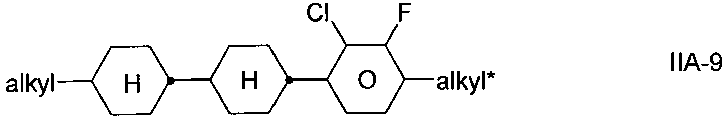 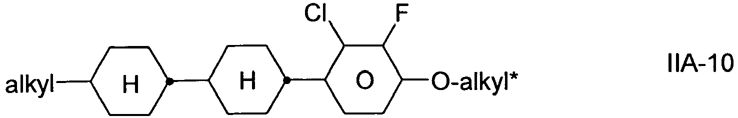 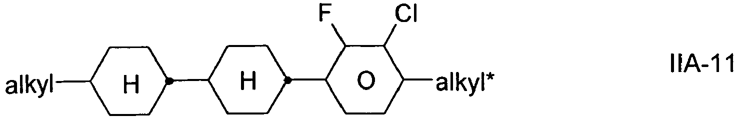 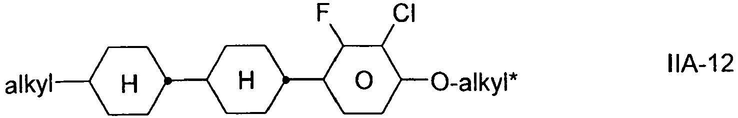 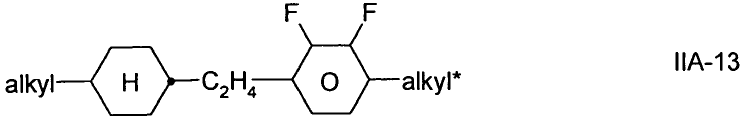 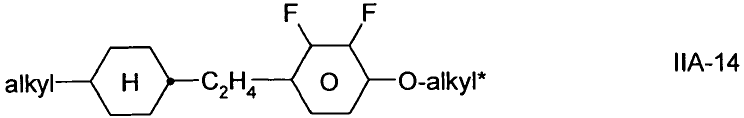 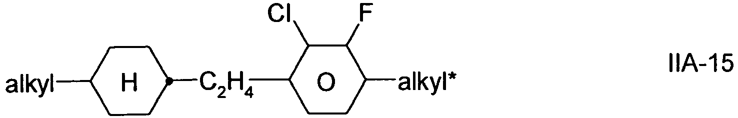 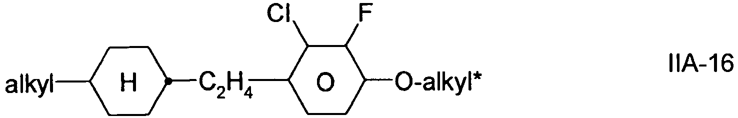 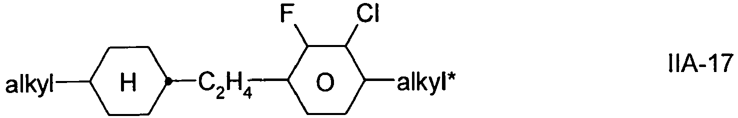 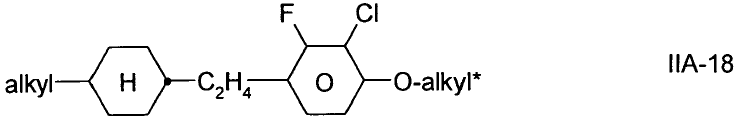 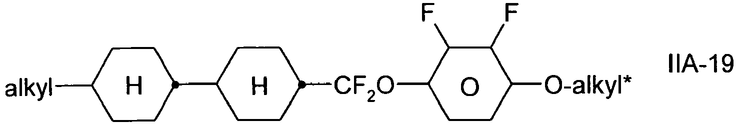 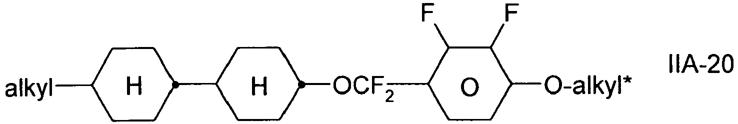 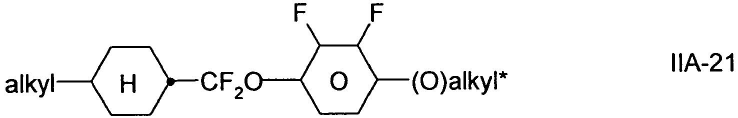 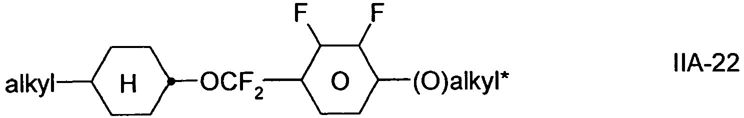 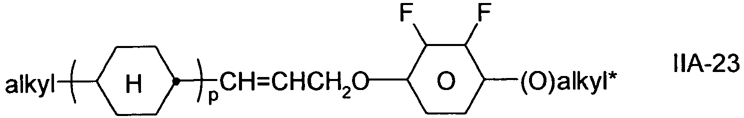 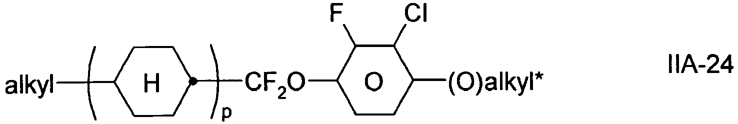 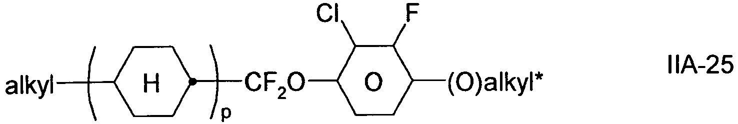 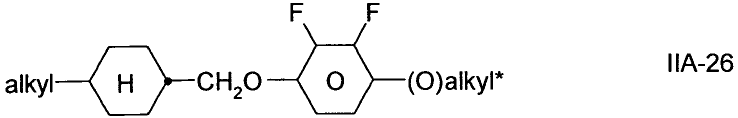 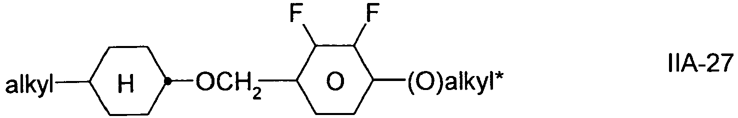 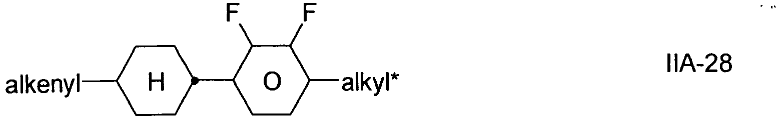 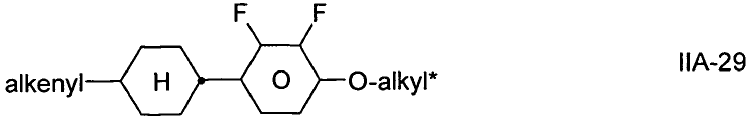 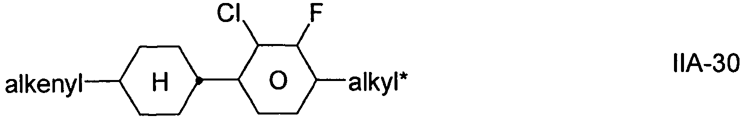 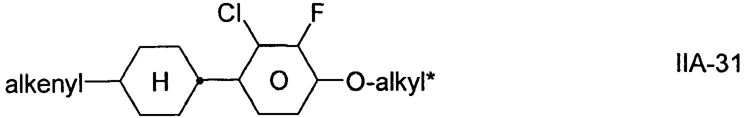 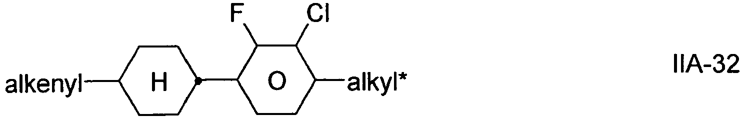 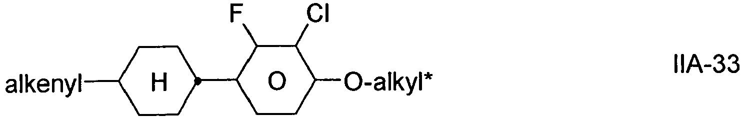 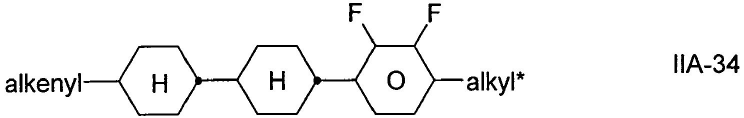 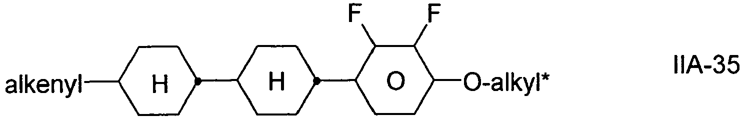 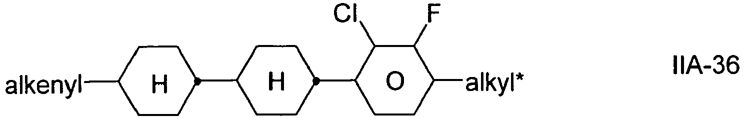 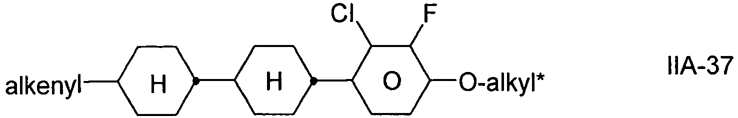 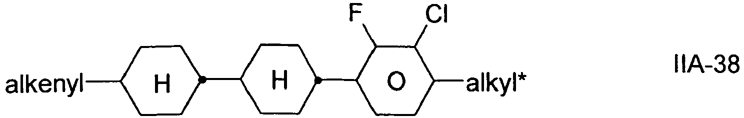 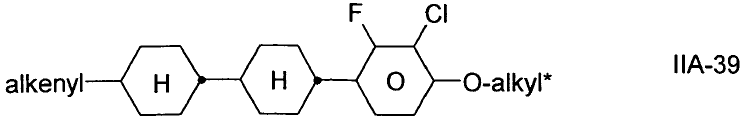 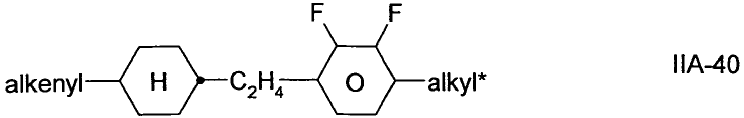 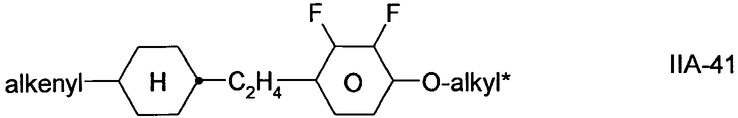 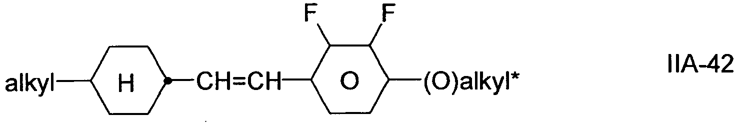 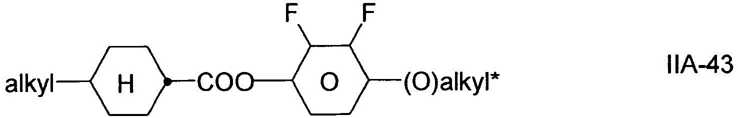 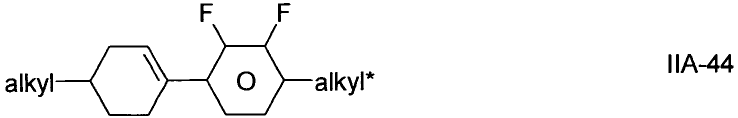 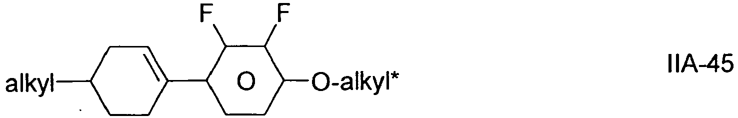 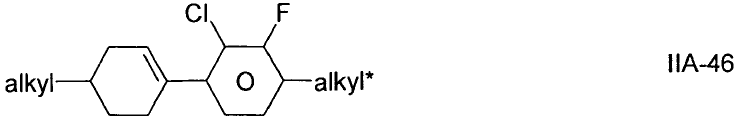 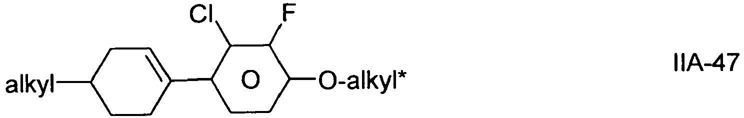 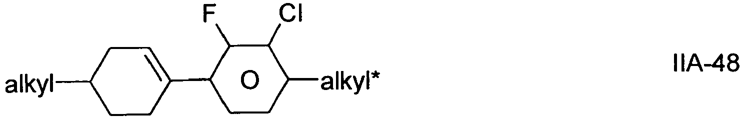 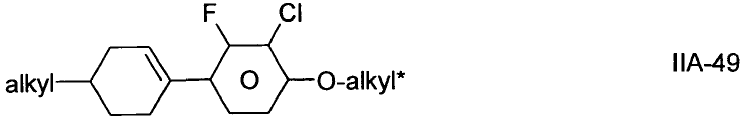 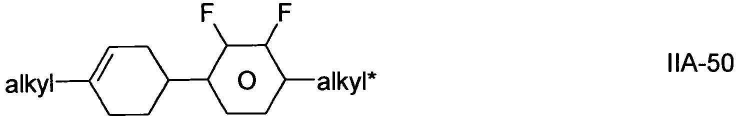 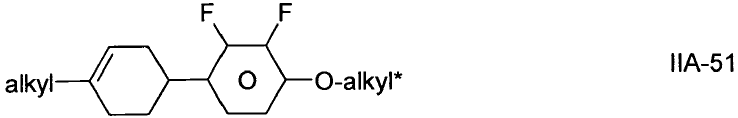 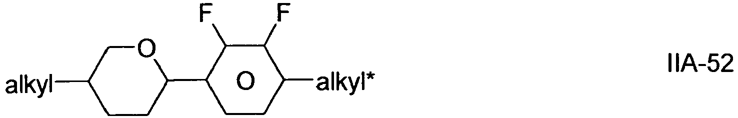 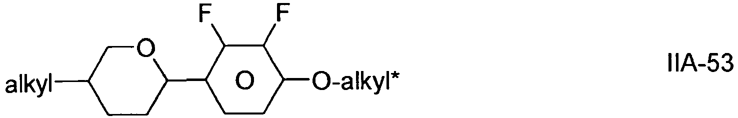 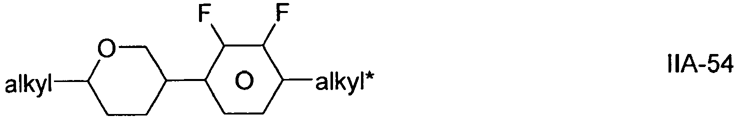 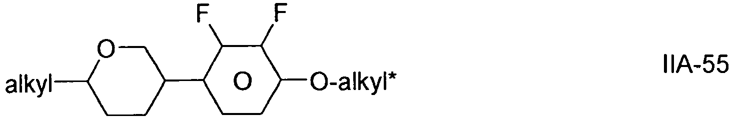 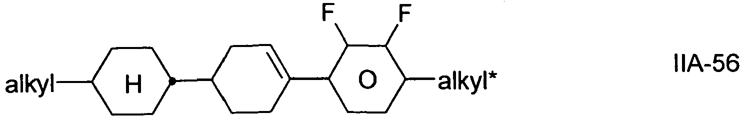 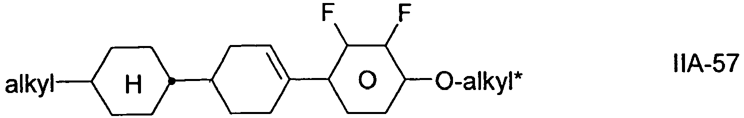 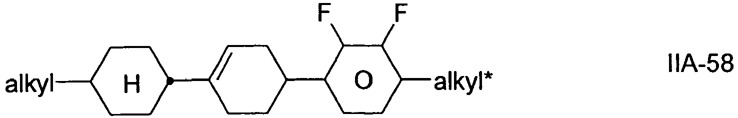 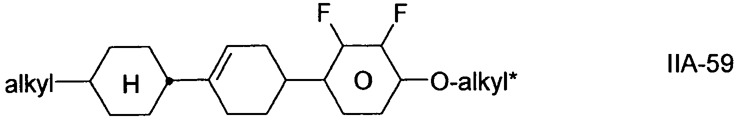 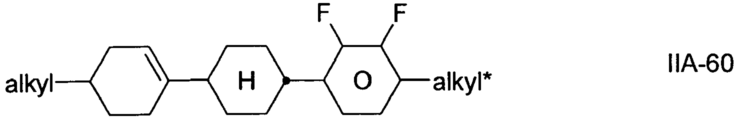 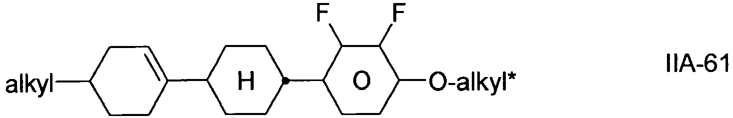 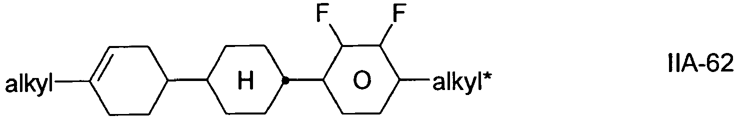 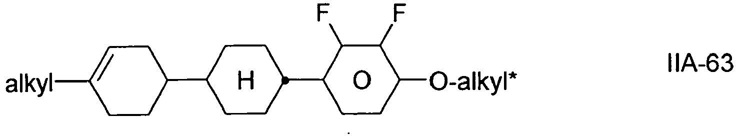 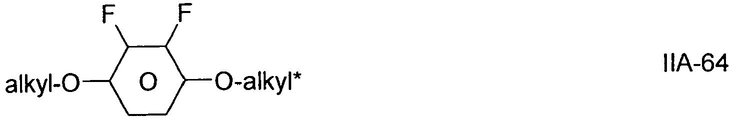 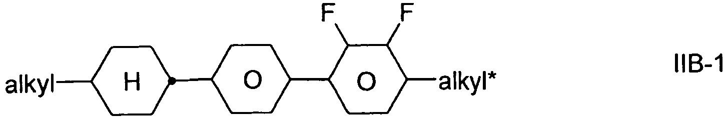 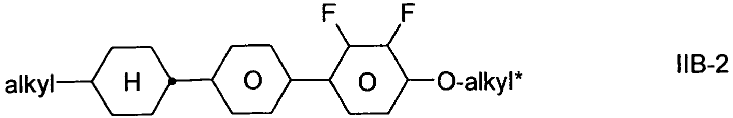 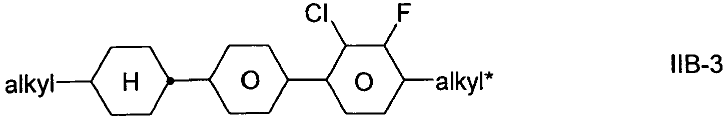 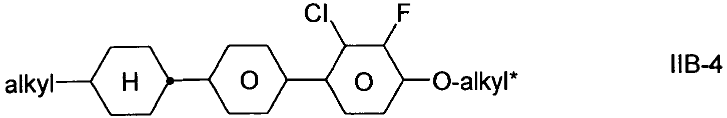 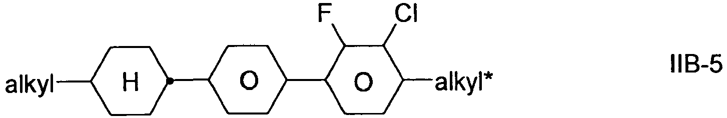 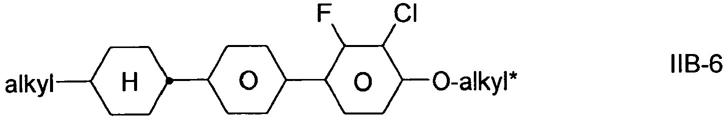 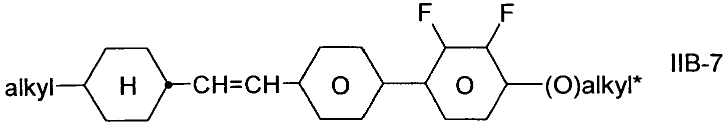 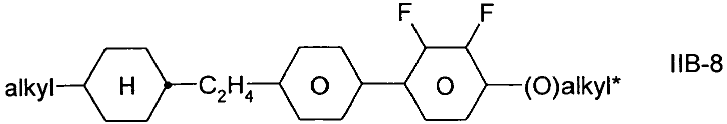 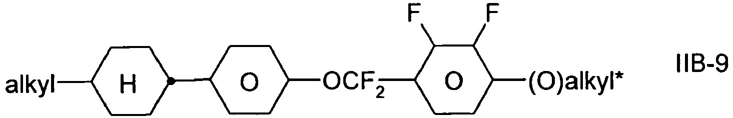 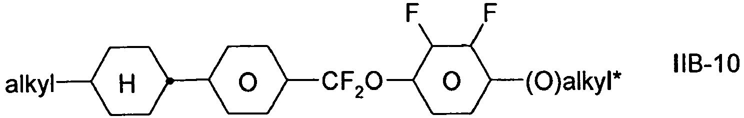 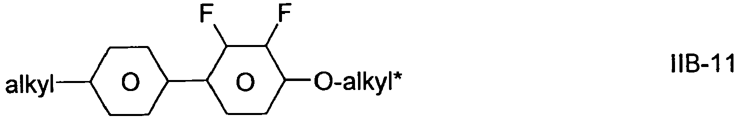 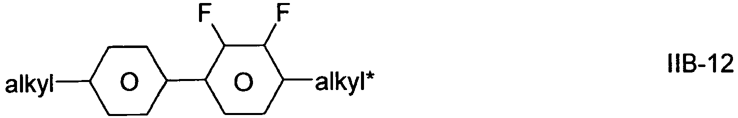 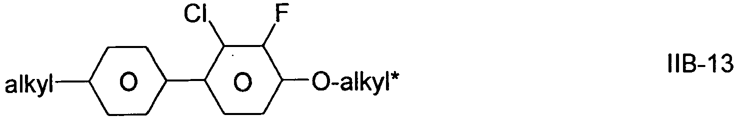 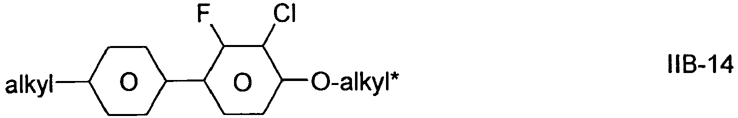 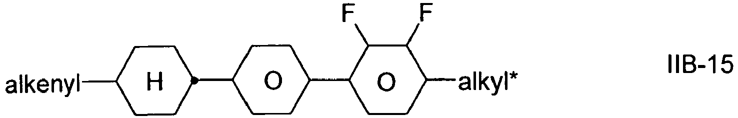 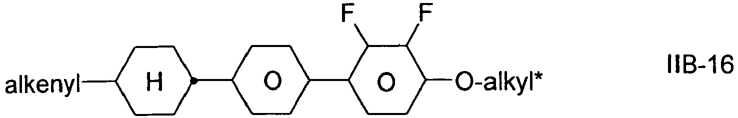 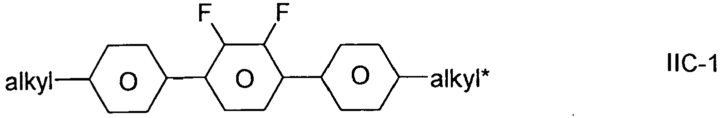 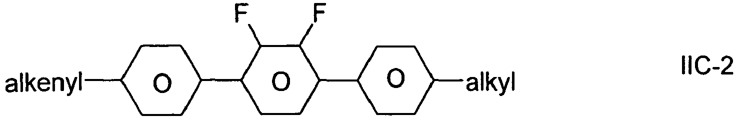 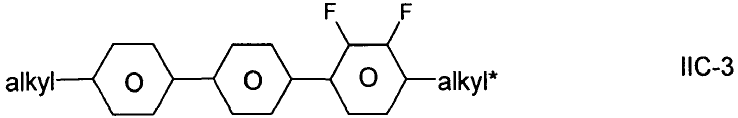 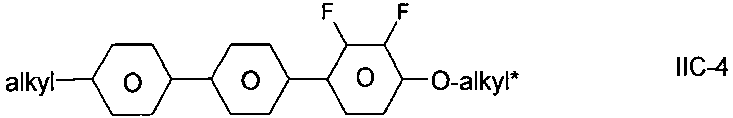 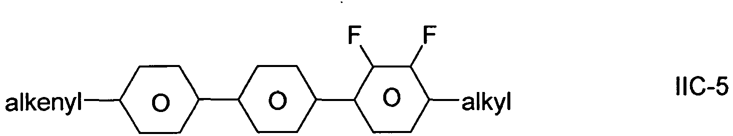 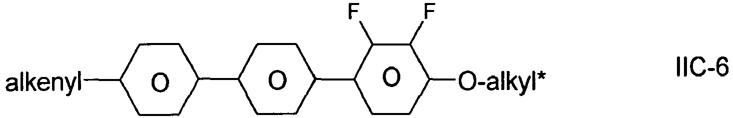 in which alkyl and alkyl* each, independently of one another, denote a straight-chain alkyl radical having 1-6 C atoms and alkenyl denotes a straight-chain alkenyl radical having 2-6 C atoms, in particular CH₂=CH, CH₂=CHCH₂, CH₂=CHC₂H₄, CH₃CH=CH, CH₃CH=CHCH₂ and CH₃CH=CHC₂H₄.

Particularly preferred mixtures according to the invention contain one or more compounds of the formulae IIA-2, IIA-8, IIA-14, IIA-26, IIA-29, IIA-35, IIA-45, IIA-57, IIB-2, IIB-11, IIB-16 and IIC-1.

The proportion of compounds of the formulae IIA, IIB and/or IIC in the mixture as a whole is preferably 3-40 %, preferably 5-30 % by weight, most preferably 3-20 %, by weight.

Particularly preferred media according to the invention contain at least one compound of the formula IIC-1, 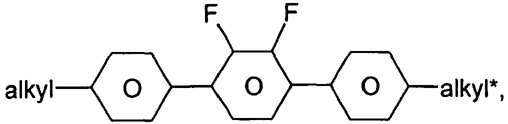 in which alkyl and alkyl* have the meanings indicated above, preferably in amounts of ≥ 3 % by weight, in particular ≥ 5 % by weight and particularly preferably 5-15 % by weight.

Preferred mixtures contain one or more compounds of the formula IIA-64:

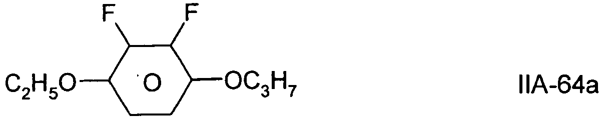

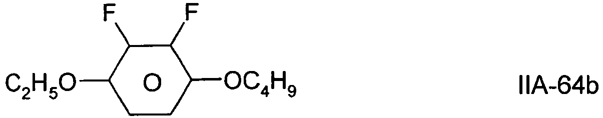

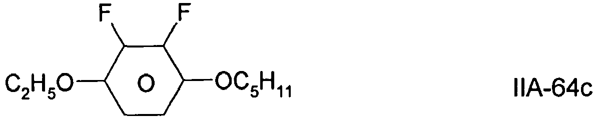

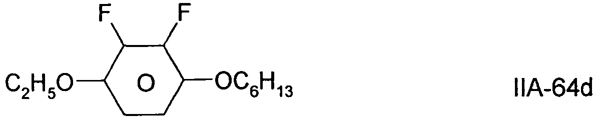

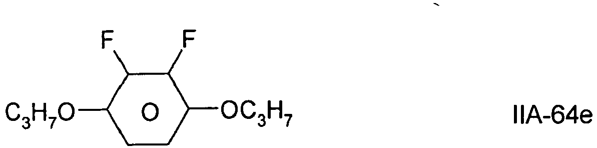

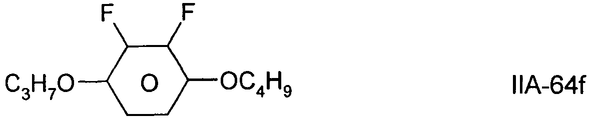

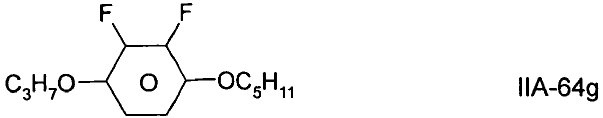

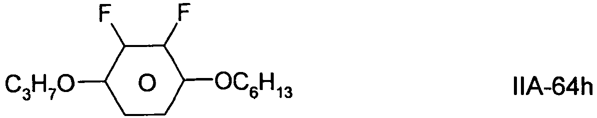

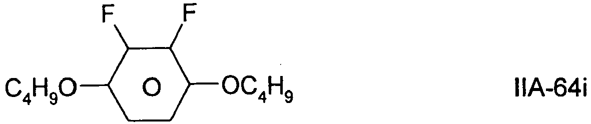

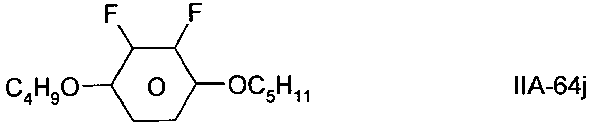

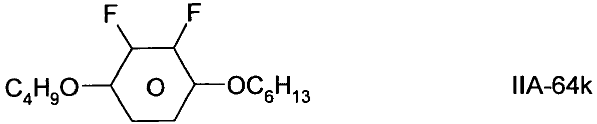

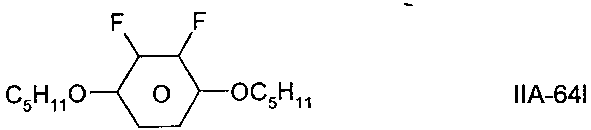

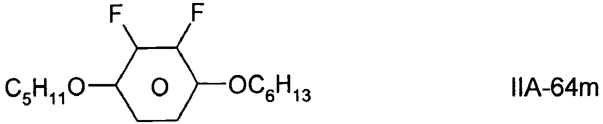

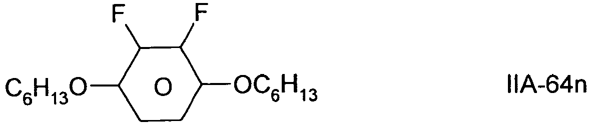

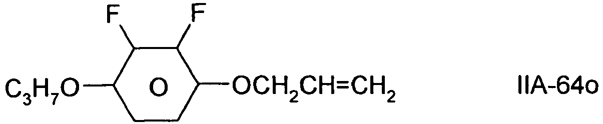

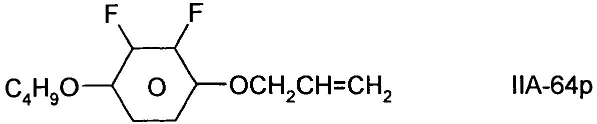

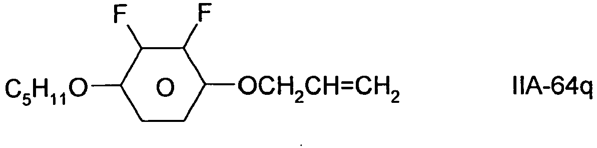

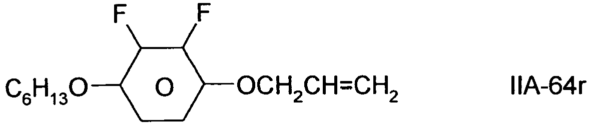

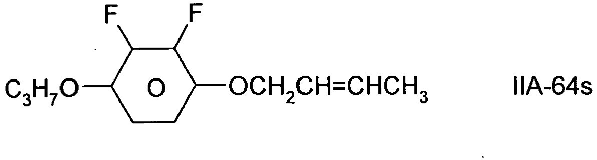

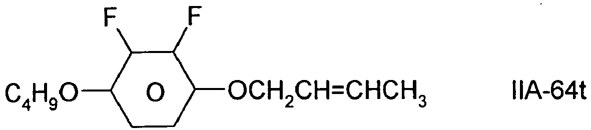

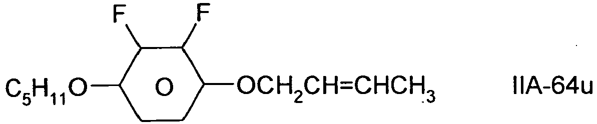

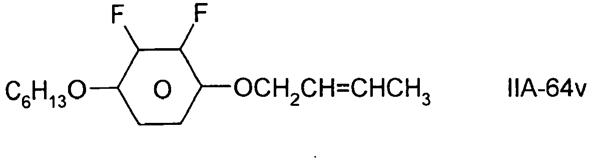

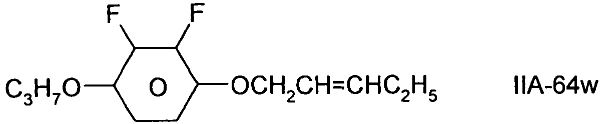

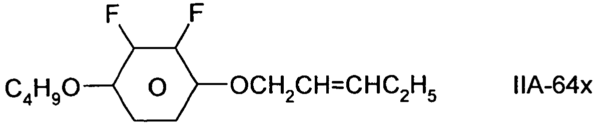

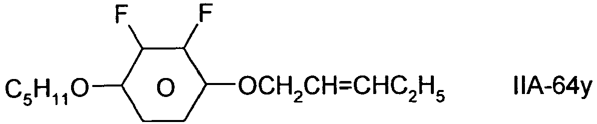

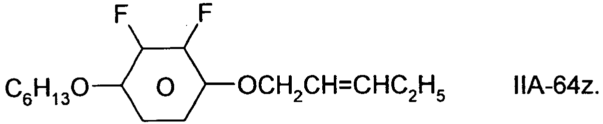

Preferred mixtures contain at least one compound of the formula IIA-64a to IIA-64n.

Preferred mixtures contain at least one or more tolan compound(s) of the formula IIB-T1 and IIB-T2,

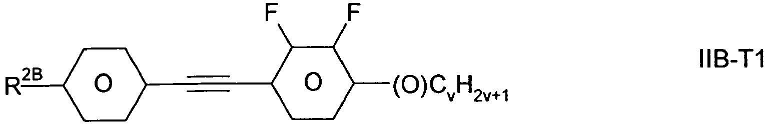

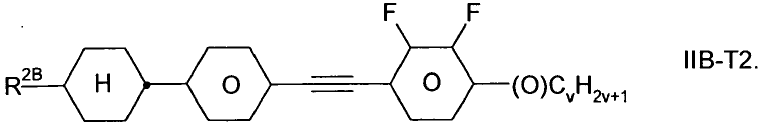

The mixtures according to the invention additionally can contain at least one compound of the formula To-1 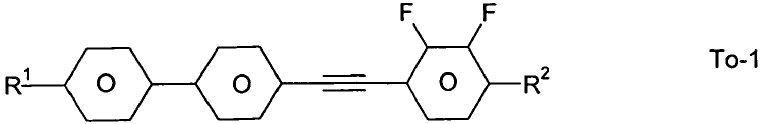 in which R¹ has the meaning for R^{2A} and R² has the meaning of (O)CᵥH₂ᵥ₊₁. R¹ preferably denotes straight-chain alkyl having 1-6 C atoms. R² preferably denotes alkoxy having 1-5 C atoms, in particular OC₂H₅, OC₃H₇, OC₄H₉, OC₅H₁₁, furthermore OCH₃.

The compounds of the formulae IIB-T1 and IIB-T2 are preferably employed in concentrations of 3 - 25 % by weight, in particular 5 - 15 % by weight based on the total mixture.

Further preferred embodiments of the mixture according to the invention are indicated below:
- The medium additionally contains one or more compounds of the formulae III and/or IV, 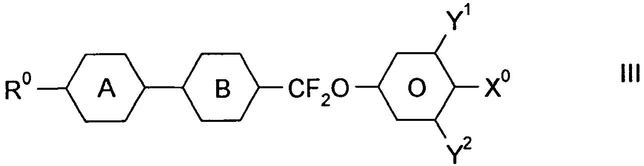 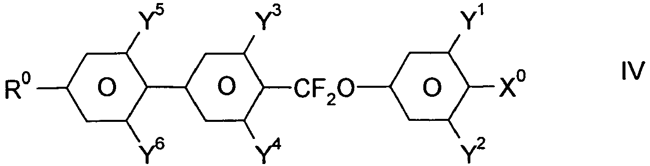 in which
   - R⁰: denotes a halogenated or unsubstituted alkyl or alkoxy radical having 1 to 15 C atoms, where, in addition, one or more CH₂ groups in these radicals may each be replaced, independently of one another, by -C≡C-, -CF₂O-, -O-, 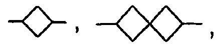 -CH=CH-, -CO-O- or -O-CO- in such a way that O atoms are not linked directly to one another,
   - X⁰: denotes F, Cl, CN, SF₅, SCN, NCS, a halogenated alkyl radical, a halogenated alkenyl radical, a halogenated alkoxy radical or a halogenated alkenyloxy radical having up to 6 C atoms,
   - Y¹⁻⁶: each, independently of one another, denote H or F, 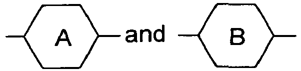 each, independently of one another, denote 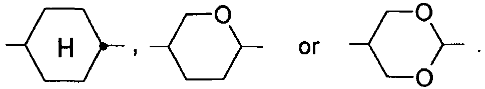
- The compounds of the formula III are preferably selected from the following formulae: 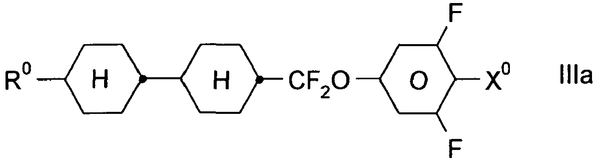 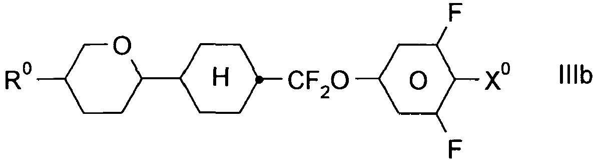 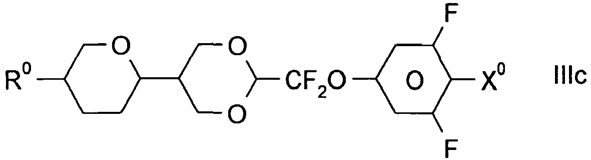 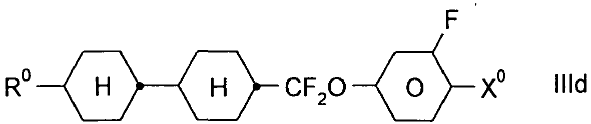 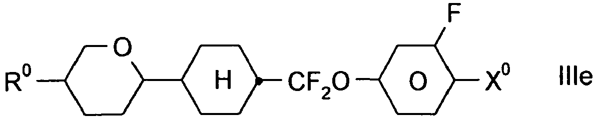 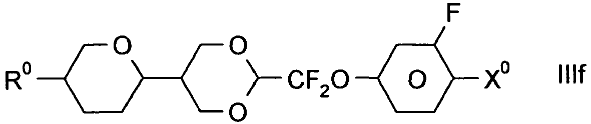 in which R⁰ and X⁰ have the meanings indicated above.
   R⁰ preferably denotes alkyl having 1 to 6 C atoms. X⁰ preferably denotes F. Particular preference is given to compounds of the formulae IIIa and IIIb, in particular compounds of the formulae IIIa and IIIb in which X denotes F.
- The compounds of the formula IV are preferably selected from the following formulae: 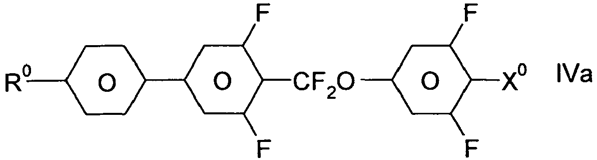 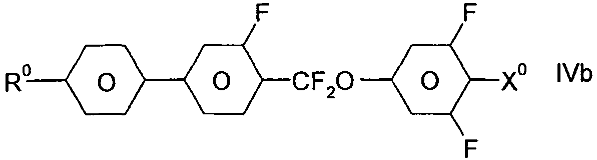 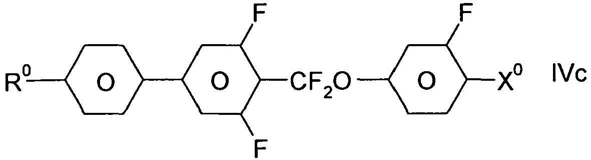 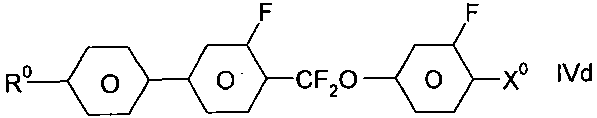 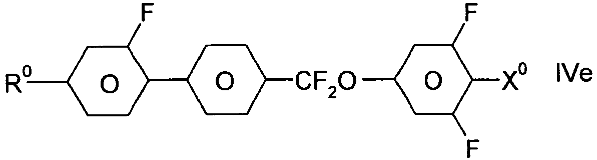 in which R⁰ and X⁰ have the meanings indicated above.
   R⁰ preferably denotes alkyl having 1 to 6 C atoms. X⁰ preferably denotes F, OCF₃ or CF₃. Particular preference is given to compounds of the formulae IVa and IVe, in particular compounds of the formula IVa;
- The medium additionally contains one or more compounds selected from the following formulae: 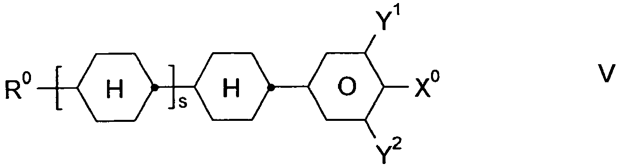 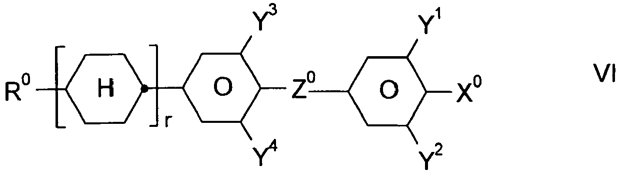 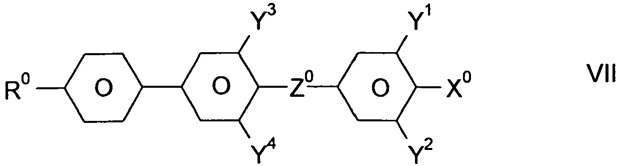 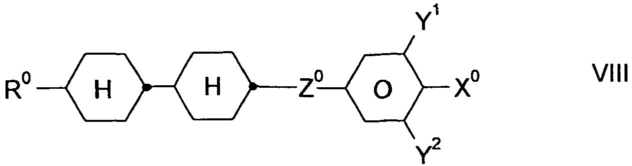 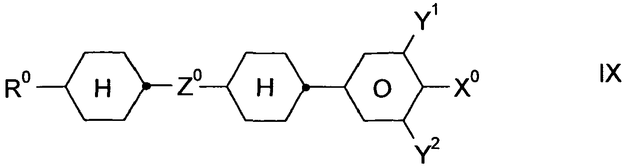 in which
   - R⁰: denotes a halogenated or unsubstituted alkyl or alkoxy radical having 1 to 15 C atoms, where, in addition, one or more CH₂ groups in these radicals may each be replaced, independently of one another, by -C≡C-, -CF₂O-, -O-, 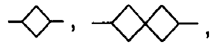 -CH=CH-, -CO-O- or -O-CO- in such a way that O atoms are not linked directly to one another,
   - X⁰: denotes F, Cl, CN, SF₅, SCN, NCS, a halogenated alkyl radical, a halogenated alkenyl radical, a halogenated alkoxy radical or a halogenated alkenyloxy radical having up to 6 C atoms.
   - Y¹⁻⁴: each, independently of one another, denote H or F,
   - Z⁰: denotes -C₂H₄-, -(CH₂)₄-, -CH=CH-, -CF=CF-, -C₂F₄-, -CH₂CF₂-, -CF₂CH₂-, -CH₂O-, -OCH₂-, -COO- or -OCF₂, and in formula VI and VII additionally a single bond and in formula VI and IX additionally -CF₂O-,
   - r: denotes 0 or 1, and
   - s: denotes 0 or 1;
- The compounds of the formula V are preferably selected from the following formulae: 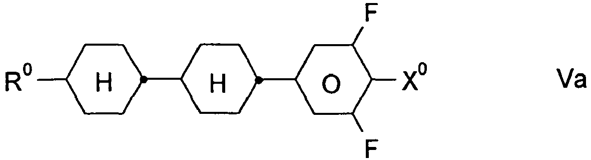 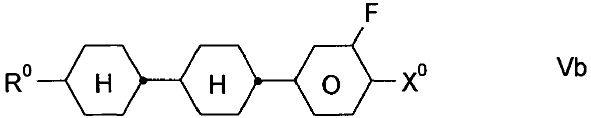 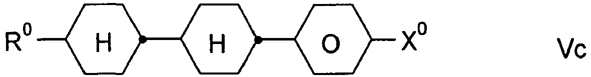 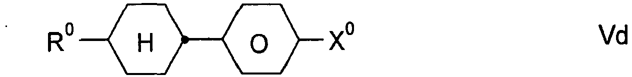 in which R⁰ and X⁰ have the meanings indicated above.
   R⁰ preferably denotes alkyl having 1 to 6 C atoms. X⁰ preferably denotes F, CF₃ or OCF₃, furthermore OCF=CF₂, OCH=CF₂ or Cl;
- The compounds of the formula VI are preferably selected from the following formulae: 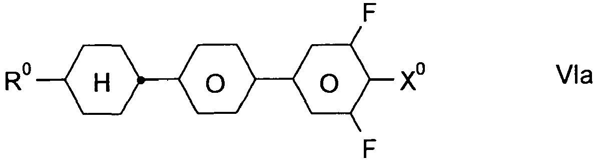 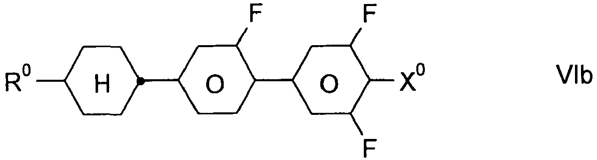 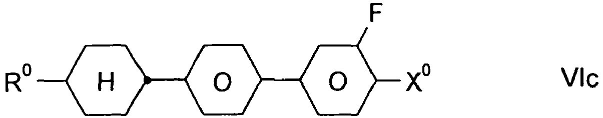 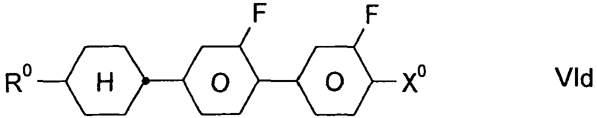 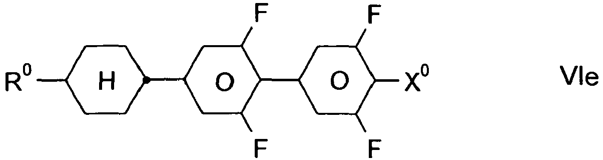 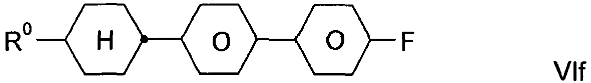 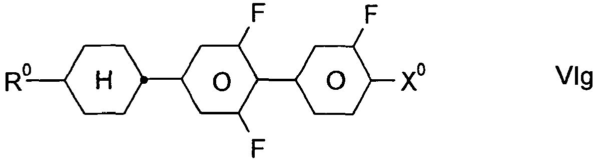 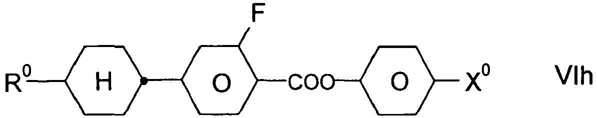 in which R⁰ and X⁰ have the meanings indicated above.
   R⁰ preferably denotes alkyl having 1 to 6 C atoms. X⁰ preferably denotes F, CF₃ or OCF₃, furthermore OCHF₂, CF₃, OCF=CF₂ and OCH=CF₂;
- The compounds of the formula VII are preferably selected from the following formulae: 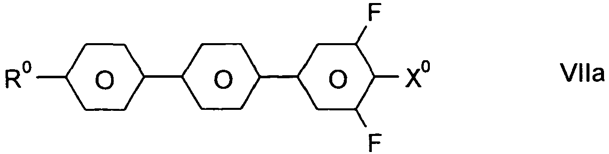 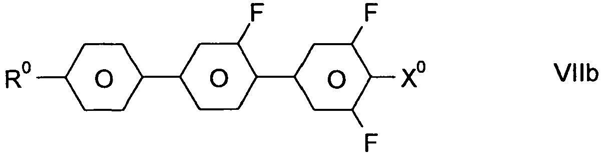 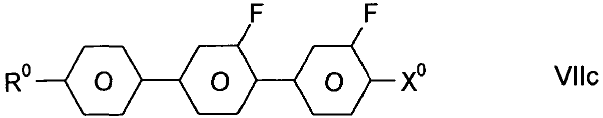 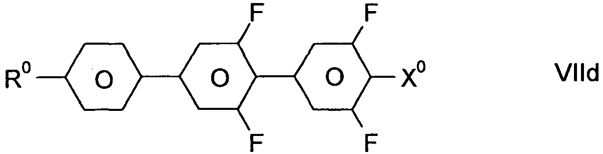 in which R⁰ and X⁰ have the meanings indicated above.
   R⁰ preferably denotes alkyl having 1 to 6 C atoms, X° preferably denotes F, furthermore OCF₃, CF₃, CF=CF₂, OCF=CF₂, OCHF₂ and OCH=CF₂;
- The compounds of the formula VIII are preferably selected from the following formulae: 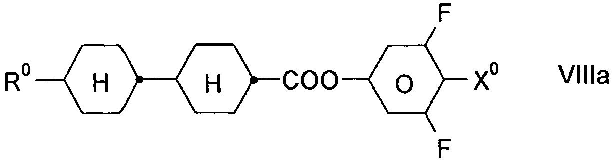 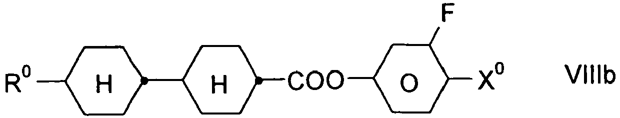 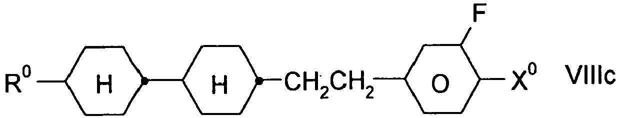 in which R⁰ and X⁰ have the meanings indicated above.
   R⁰ preferably denotes alkyl having 1 to 6 C atoms. X⁰ preferably denotes F, furthermore OCF₃, OCHF₂ and OCH=CF₂.
- The medium additionally contains one or more compounds selected from the following formulae: 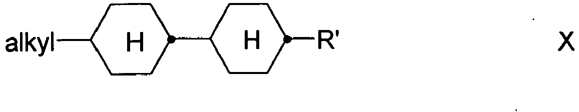 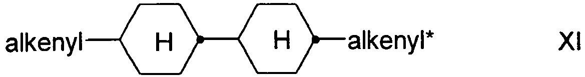 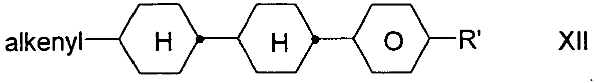 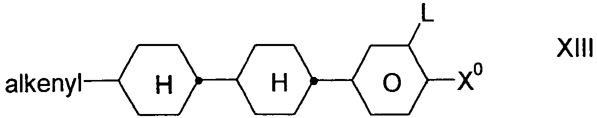 in which X⁰ has the meanings indicated above, and
   - L: denotes H or F,
   - "alkyl": denotes C₁₋₆-alkyl,
   - R': denotes C₁₋₆-alkyl, C₁₋₆-alkoxy or C₂₋₆-alkenyl, and "alkenyl" and "alkenyl*" each, independently of one another, denote C₂₋₆-alkenyl.
- The compounds of the formulae X-XIII are preferably selected from the following formulae: 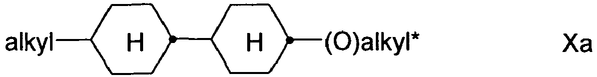 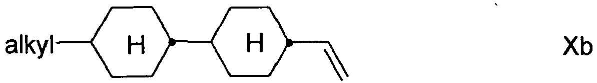 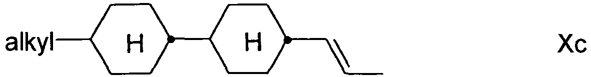 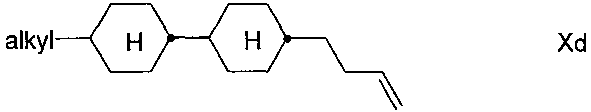 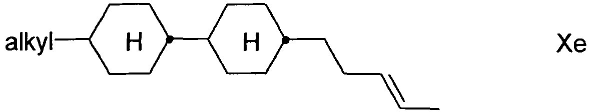 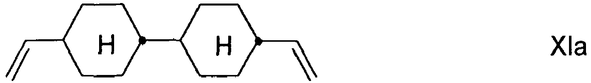 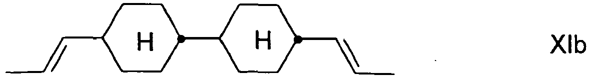 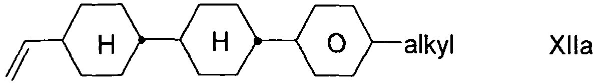 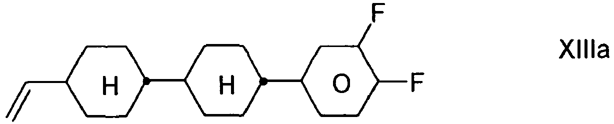 in which "alkyl" and alkyl* has the meaning indicated above and (O)alkyl denotes alkyl or O-alkyl (=alkoxy).
   Particular preference is given to the compounds of the formulae Xa, Xb, Xc, XIa, XIb, Xlla and Xllla. In the formulae X and XI, "alkyl" preferably, independently of one another, denotes n-C₃H₇, n-C₄H₉ or n-C_{S}H₁₁, in particular n-C₃H₇.
- The medium additionally contains one or more compounds selected from the following formulae: 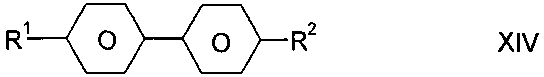 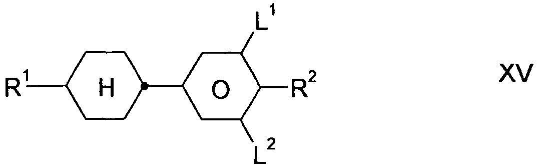 in which L¹ and L² have the meanings indicated above, and R¹ and R² each, independently of one another, denote n-alkyl, alkoxy, oxaalkyl, fluoroalkyl or alkenyl, each having up to 6 C atoms, and preferably each, independently of one another, denote alkyl having 1 to 6 C atoms; in the compounds of the formula XIV, at least one of the radicals R¹ and R² preferably denotes alkenyl having 2 to 6 C atoms or R¹ and R² each independently denote alkyl.
- The medium contains one or more compounds of the formula XIV in which at least one of the radicals R¹ and R² denotes alkenyl having 2 to 6 C atoms. Preferred compounds of the formula XIV are compounds of the following formulae: 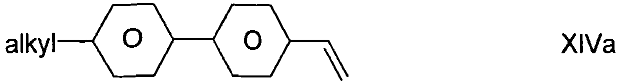 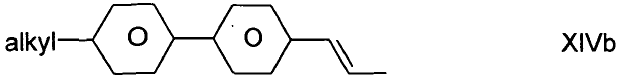 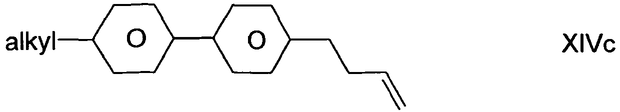 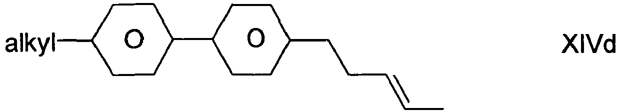 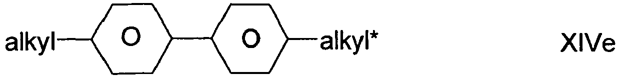 in which "alkyl" and "alkyl*" has the meaning indicated above; especially preferred are the compounds of the formula XIVd and XIVe.
- The medium contains one or more compounds of the following formula 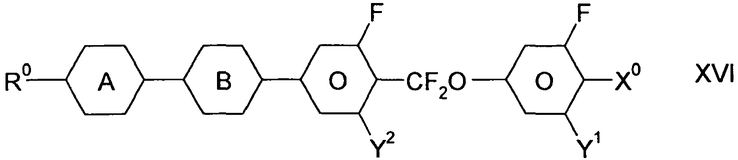 in which R⁰ has the meanings of R^{A}, X⁰ has the meanings of X^{A} and Y¹ and Y² each, independently denote H or F, and 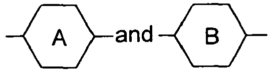 each, independently of one another, denote 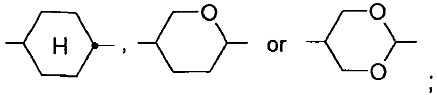
- The compounds of the formula XVI is preferably selected from the following formulae: 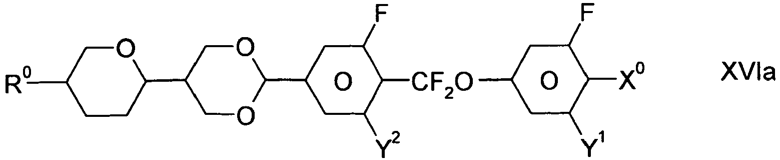 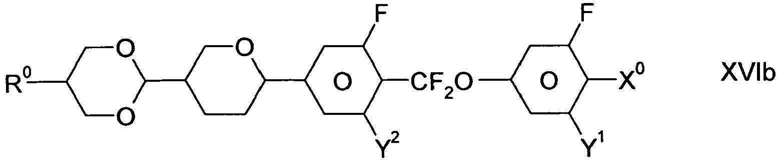 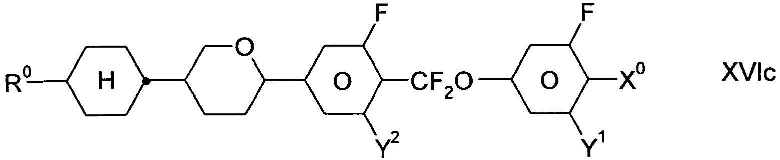 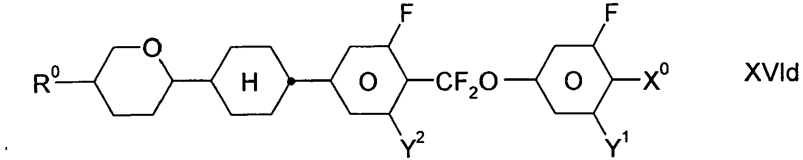 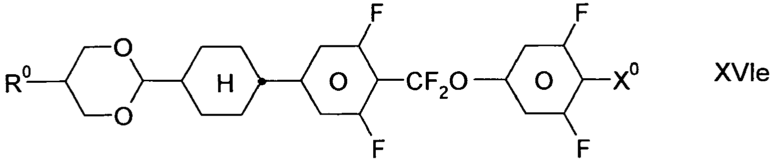 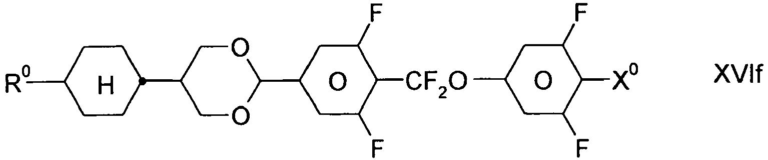 in which R⁰ and X⁰ have the meanings indicated above.
   R⁰ preferably denotes alkyl having 1 to 6 C atoms. X⁰ preferably denotes F, furthermore OCF₃. Particularly preferred compounds of the formulae XVI are those in which Y¹ denotes F and Y² denotes H or F, preferably F. The mixture according to the invention particularly preferably contains at least one compound of the formula XVIf.
- The medium contains one or more compounds of the formula XVII, 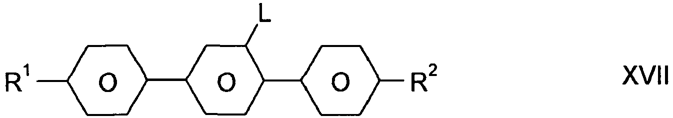 in which R¹ and R² have the meanings indicated above. L is H or F, preferably F. Preferably R¹ and R² each, independently of one another, denote alkyl having 1 to 6 C atoms or in the case that L=F R¹ denotes alkyl and R² denotes alkenyl or R¹ denotes alkenyl and R² denotes alkyl.
   Particularly preferred compounds of the formula XVII are those of the sub-formulae 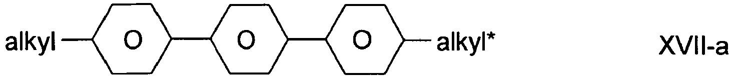 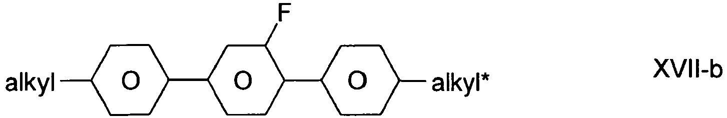 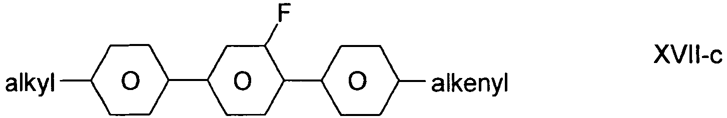 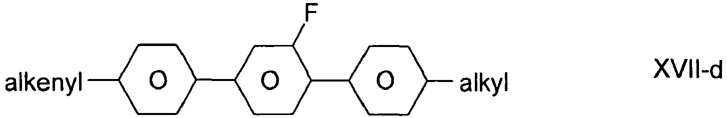 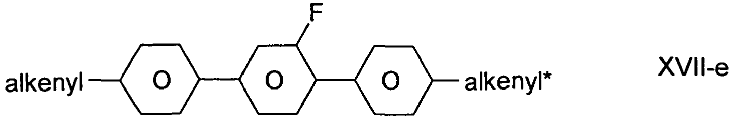 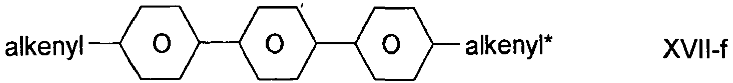 in which
   - alkyl and alkyl*: each, independently of one another, denote a straight-chain alkyl radical having 1-6 C atoms, in particular ethyl, propyl and pentyl,
   - alkenyl and alkenyl*: each, independently of one another, denote a straight-chain alkenyl radical having 2-6 C atoms, in particular CH₂=CHC₂H₄, CH₃CH=CHC₂H₄, CH₂=CH and CH₃CH=CH.
   Particular preference is given to the compounds of the formulae XVII-b and XVII-c. Very particular preference is given to the compounds of the formulae 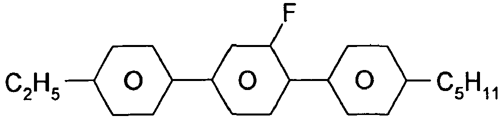 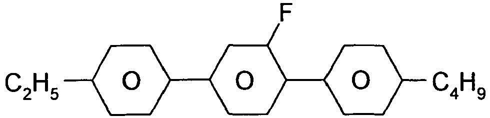 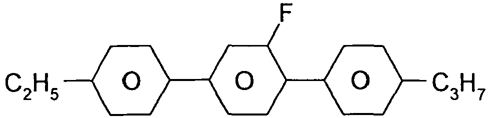 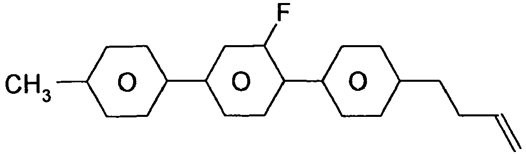 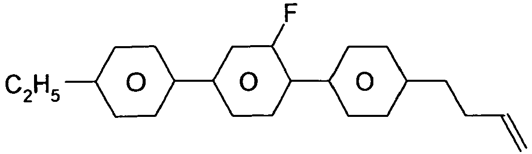 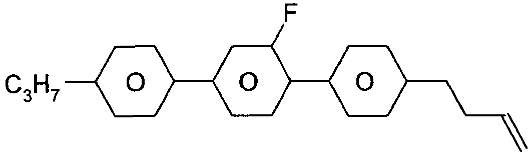 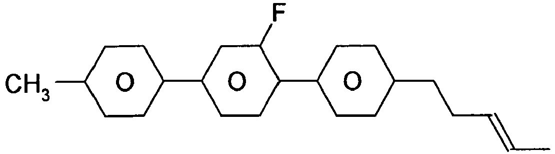 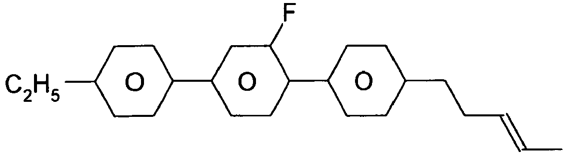 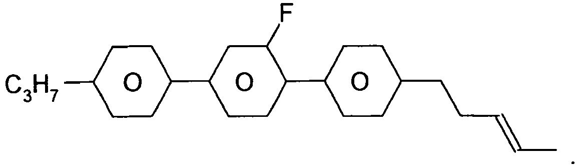
- The medium contains one or more compounds of the following formulae: 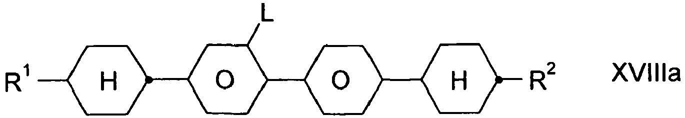 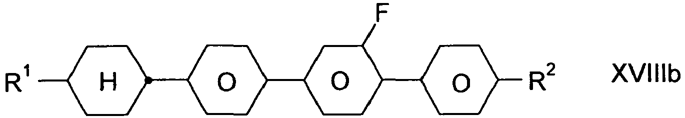 in which R¹ and R² have the meanings indicated above and preferably each, independently of one another, denote alkyl having 1 to 6 C atoms. L denotes H or F;
- The medium additionally contains one or more compounds selected from the following formulae: 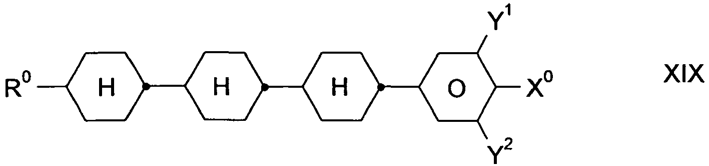 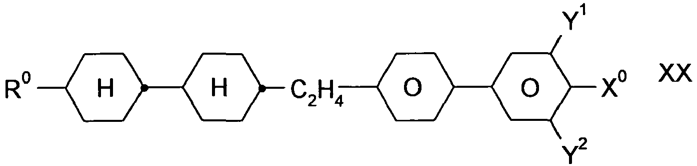 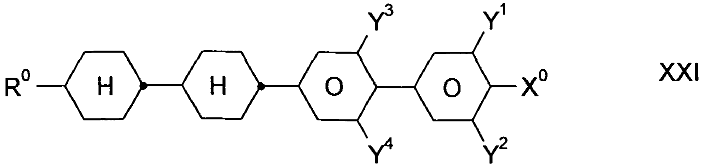 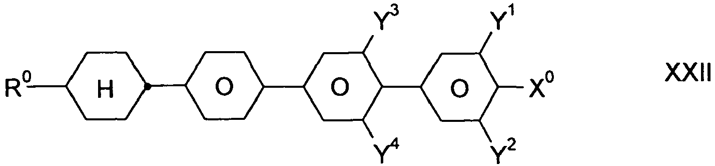 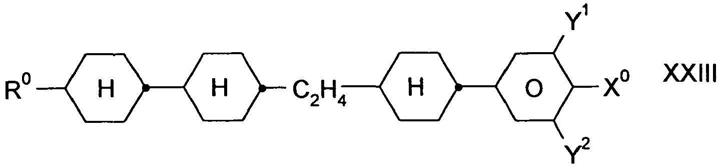 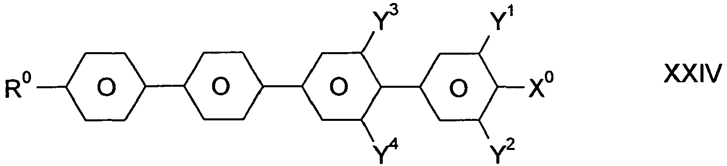 in which R⁰ and X⁰ each, independently of one another, have one of the meanings indicated above, and Y¹⁻⁴ each, independently of one another, denote H or F. X⁰ is preferably F, Cl, CF₃, OCF₃ or OCHF₂. R⁰ preferably denotes alkyl, alkoxy, oxaalkyl, fluoroalkyl or alkenyl, each having up to 6 C atoms.
   The mixture according to the invention particularly preferably contains one or more compounds of the formula XXIV-a, 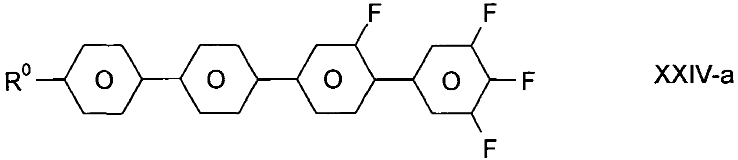 in which R⁰ has the meanings indicated above. R⁰ preferably denotes straight-chain alkyl, in particular ethyl, n-propyl, n-butyl and n-pentyl and very particularly preferably n-propyl. The compound(s) of the formula XXIV, in particular of the formula XXIV-a, is (are) preferably employed in the mixtures according to the invention in amounts of 0.5-20 % by weight, particularly preferably 1-15 % by weight.
- The medium additionally contains one or more compounds of the formula XXV, 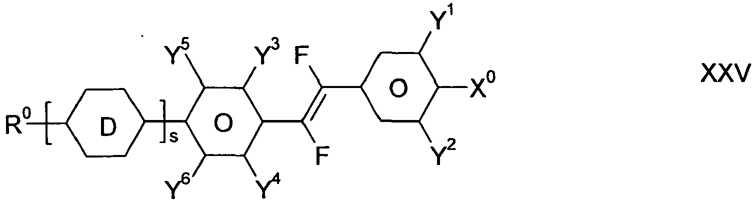 in which R⁰, X⁰ and Y¹⁻⁶ have the meanings indicated above, s denotes 0 or 1, and 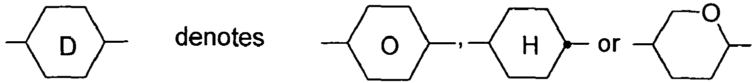 In the formula XV, X°may also denote an alkyl radical having 1-6 C atoms or an alkoxy radical having 1-6 C atoms. The alkyl or alkoxy radical is preferably straight-chain;
   R⁰ preferably denotes alkyl having 1 to 6 C atoms. X⁰ preferably denotes F;
- The compounds of the formula XXV are preferably selected from the following formulae: 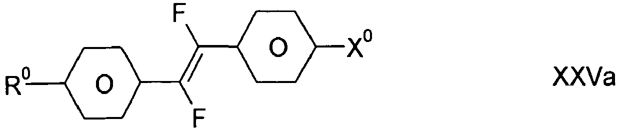 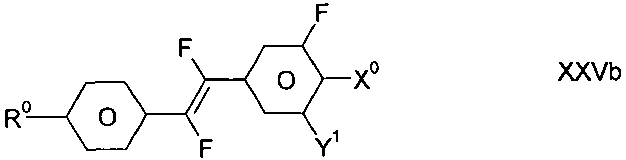 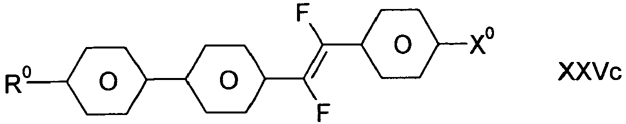 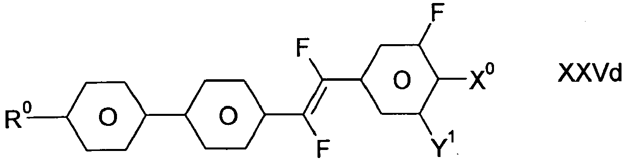 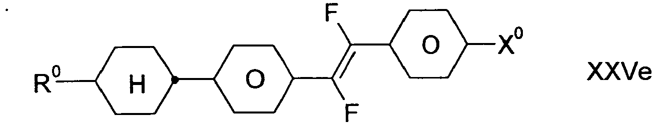 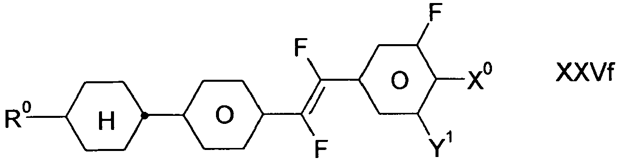 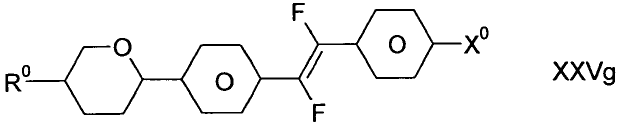 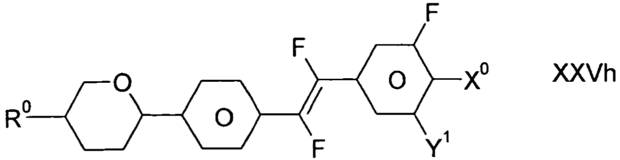 in which R⁰, X⁰ and Y¹ have the meanings indicated above. R⁰ preferably denotes alkyl having 1 to 6 C atoms. X⁰ preferably denotes F, and Y¹ is preferably F; 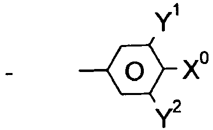 is preferably 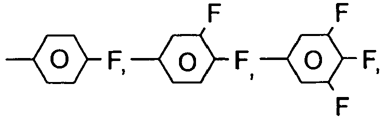 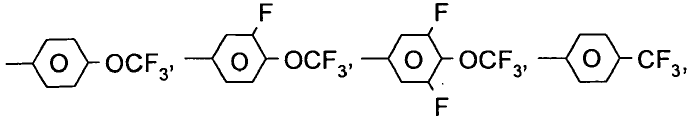 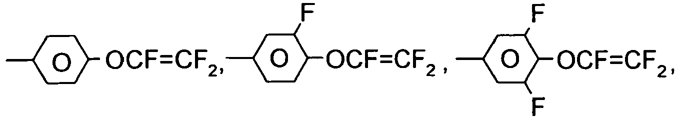 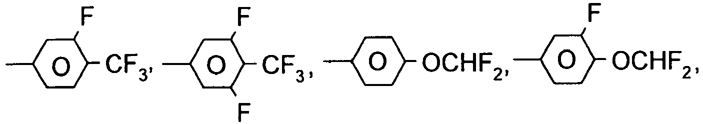 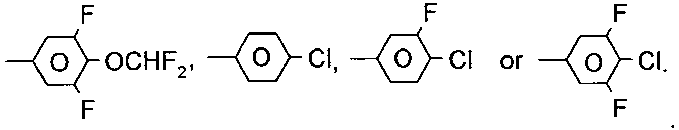
- R⁰ is straight-chain alkyl or alkenyl having 2 to 6 C atoms;
- The medium contains one or more compounds of the following formulae: 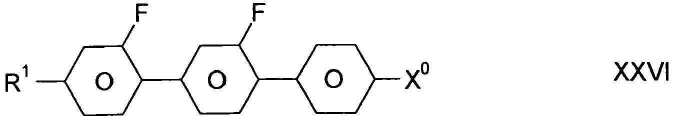 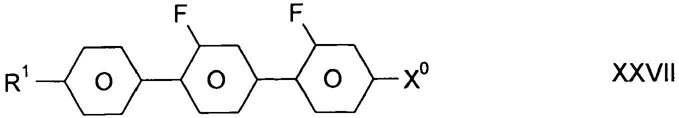 in which R¹ and X⁰ have the meanings indicated above. R¹ preferably denotes alkyl having 1 to 6 C atoms. X⁰ preferably denotes F or Cl. In the formula XXVI, X⁰ very particularly preferably denotes Cl.
- The medium contains one or more compounds of the following formulae: 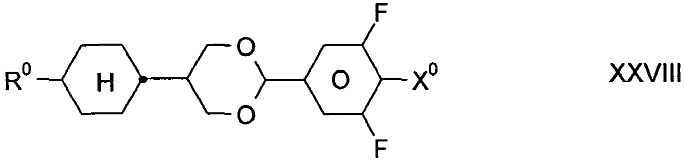 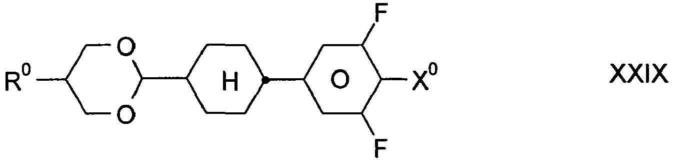 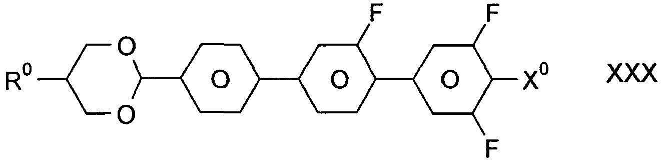 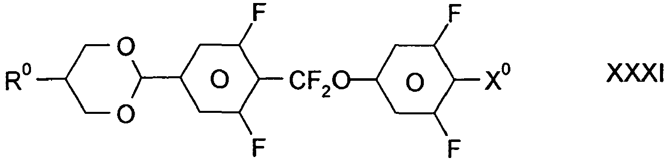 in which R⁰ and X⁰ have the meanings indicated above. R⁰ preferably denotes alkyl having 1 to 6 C atoms. X⁰ preferably denotes F. The medium according to the invention particularly preferably contains one or more compounds of the formula XXX in which X⁰ preferably denotes F. The compound(s) of the formulae XXVIII to XXX is (are) preferably employed in the mixtures according to the invention in amounts of 1-20 % by weight, particularly preferably 1-15 % by weight. Particularly preferred mixtures comprise at least one compound of the formula XXX.
- The medium contains one or more compounds of the following pyrimidine or pyridine compounds of the formulae 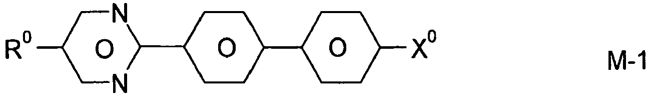 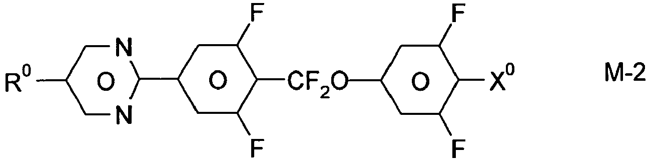 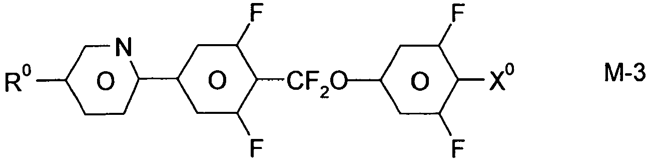 in which R⁰ and X⁰ have the meanings indicated above. R⁰ preferably denotes alkyl having 1 to 6 C atoms. X⁰ preferably denotes F. The medium according to the invention particularly preferably contains one or more compounds of the formula M-1, in which X⁰ preferably denotes F. The compound(s) of the formulae M-1 to M-3 is (are) preferably employed in the mixtures according to the invention in amounts of 1-20 % by weight, particularly preferably 1-15 % by weight.

Further particular preferred embodiments are indicated below:
- The medium contains two or more compounds of the formula IA, in particular of the formula IA-1b;
- The medium contains 2-50 % by weight, preferably 3-40 % by weight, particularly preferably 5-15 % by weight, of compounds of the formula IA;
- The medium contains 3-40 % by weight, particularly preferably 5-15 % by weight, of at least one compound of the formula IV;
- The medium contains 5-30 % by weight, particularly preferably 5-25 % by weight, of compounds of the formulae VII;
- The medium contains 20-70 % by weight, particularly preferably 25-65 % by weight, of compounds of the formulae X-XIV;
- The medium contains 3-40 % by weight, particularly preferably 5-30 % by weight, of compounds of the formula XVII;
- The medium contains 1-20 % by weight, particularly preferably 2-15 % by weight, of compounds of the formula XVIII;
- The medium contains at least two compounds of the formulae 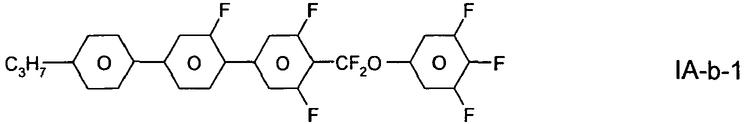 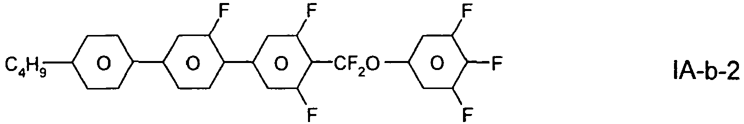 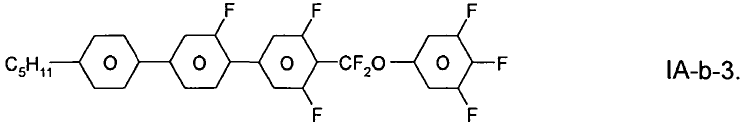
- The medium contains at least two compounds of the formulae 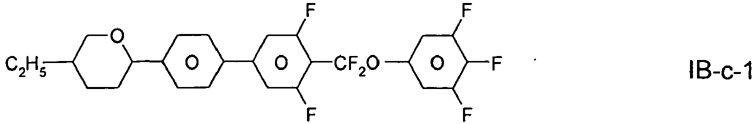 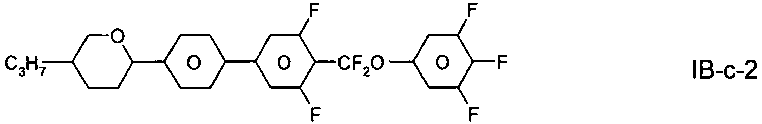 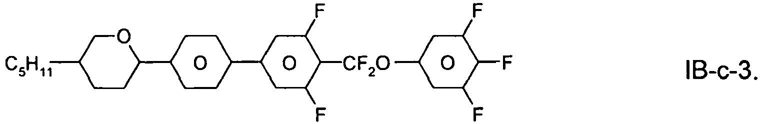
- The medium contains at least two compounds of the formula IA and at least two compounds of the formula IIB;
- The medium contains at least one compound of the formula IA and at least one compound of the formula IIB and at least one compound of the formula IIC;
- The medium contains at least two compounds of the formula IA and at least two compounds of the formula IIB and at least one compound of the formula IVa;
- The medium contains ≥ 20 % by weight, preferably ≥ 25 %, especially preferred ≥ 30 %, by weight, of one or more compounds of the formula IA and one or more compounds of the formula IIB;
- The medium contains ≥ 20 % by weight, preferably ≥ 25 %, especially preferred ≥ 30 %, by weight, of one or more compounds of the formula IA and one or more compounds of the formula IIB;
- The medium contains ≥ 20 % by weight, preferably ≥ 24 % by weight, preferably 25-60 % by weight, of compounds of the formula Xb, in particular the compound of the formula Xb-1, 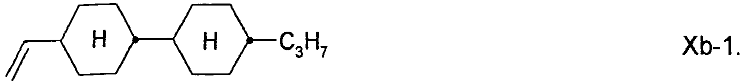
- The medium contains at least one compound of the formula XIb-1 and at least one compound of the formula Xc-1, 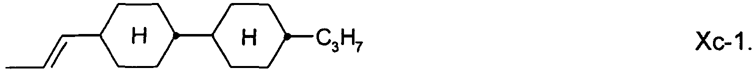 - The medium contains at least one compound of the formula DPGU-n-F;
- The medium contains at least one compound of the formula CDUQU-n-F;
- The medium contains at least one compound of the formula PUQU-n-F;
- The medium contains at least one compound of the formula APUQU-n-F and at least on compound of the formula PGUQU-n-F and at least one compound of the formula DPGU-n-F;
- The medium contains at least one compound of the formula PPGU-n-F.
- The medium contains at least one compound of the formula PGP-n-m, preferably two or three compounds.
- The medium contains at least one compound of PGP-n-2V having the following formula 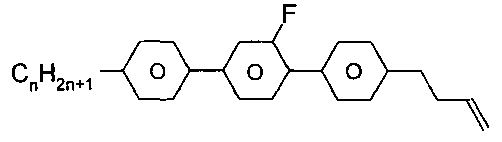 wherein n is 1-6, preferably 2, 3, 4 or 5.
- The medium contains at least one compound of the formula PYP-n-m, preferably in amounts of 1-20 wt.% based on the total mixture.
- The medium contains at least one compound of the formula IIA, IIB and IIC;
- The medium contains at least one compound of the formula PY-n-Om, preferably in amounts of 1-20 wt.% based on the total mixture;
- The medium contains at least one compound of the formula CY-n-Om; preferably in amounts of 1-20 wt.% based on the total mixture;
- The medium contains at least one compound of the formula Y-nO-Om, preferably in amounts of 1-20 wt.% based on the total mixture;
- The medium contains at least one compound of the formula PYP-n-m, preferably in amounts of 1-20 wt.% based on the total mixture;

It has been found that ≥ 20 % by weight, preferably ≥ 25 % by weight, of compounds of the formulae IA mixed with conventional liquid-crystal materials, but in particular with one or more compounds of the formulae III to XXIX, results in a significant increase in the light stability and in low birefringence values, with broad nematic phases with low smectic-nematic transition temperatures being observed at the same time, improving the shelf life. At the same time, the mixtures exhibit relatively low threshold voltages, very good values for the VHR on exposure to UV, and very high clearing points.

The term "alkyl" or "alkyl*" in this application encompasses straight-chain and branched alkyl groups having 1-6 carbon atoms, in particular the straight-chain groups methyl, ethyl, propyl, butyl, pentyl and hexyl. Groups having 2-5 carbon atoms are generally preferred.

The term "alkenyl" or "alkenyl*" encompasses straight-chain and branched alkenyl groups having 2-6 carbon atoms, in particular the straight-chain groups. Preferred alkenyl groups are C₂-C₇-1E-alkenyl, C₄-C₆-3E-alkenyl, in particular C₂-C₆-1E-alkenyl. Examples of particularly preferred alkenyl groups are vinyl, 1 E-propenyl, 1 E-butenyl, 1 E-pentenyl, 1 E-hexenyl, 3-butenyl, 3E-pentenyl, 3E-hexenyl, 4-pentenyl, 4Z-hexenyl, 4E-hexenyl and 5-hexenyl. Groups having up to 5 carbon atoms are generally preferred, in particular CH₂=CH, CH₃CH=CH.

The term "fluoroalkyl" preferably encompasses straight-chain groups having a terminal fluorine, i.e. fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term "oxaalkyl" or "alkoxy" preferably encompasses straight-chain radicals of the formula CₙH₂ₙ₊₁-O-(CH₂)ₘ, in which n and m each, independently of one another, denote 1 to 6. m may also denote 0. Preferably, n = 1 and m = 1-6 or m = 0 and n = 1-3.

Through a suitable choice of the meanings of R⁰ and X⁰, the addressing times, the threshold voltage, the steepness of the transmission characteristic lines, etc., can be modified in the desired manner. For example, 1E-alkenyl radicals, 3E-alkenyl radicals, 2E-alkenyloxy radicals and the like generally result in shorter addressing times, improved nematic tendencies and a higher ratio between the elastic constants k₃₃ (bend) and k₁₁ (splay) compared with alkyl and alkoxy radicals. 4-Alkenyl radicals, 3-alkenyl radicals and the like generally give lower threshold voltages and lower values of k₃₃/k₁₁ compared with alkyl and alkoxy radicals. The mixtures according to the invention are distinguished, in particular, by high Δε values and thus have significantly faster response times than the mixtures from the prior art.

The optimum mixing ratio of the compounds of the above-mentioned formulae depends substantially on the desired properties, on the choice of the components of the above-mentioned formulae and on the choice of any further components that may be present.

Suitable mixing ratios within the range indicated above can easily be determined from case to case.

The total amount of compounds of the above-mentioned formulae in the mixtures according to the invention is not crucial. The mixtures can therefore comprise one or more further components for the purposes of optimisation of various properties. However, the observed effect on the desired improvement in the properties of the mixture is generally greater, the higher the total concentration of compounds of the above-mentioned formulae.

In a particularly preferred embodiment, the media according to the invention comprise compounds of the formulae III to IX (preferably III, IV, V, VI and, VII, in particular IIIa and IVa) in which X⁰ denotes F, OCF₃, OCHF₂, CF₃, OCF₂CHFCF₃, OCHFCF₃, CF₂H, OCH=CF₂, OCF=CF₂ or OCF₂CF₂H. A favourable synergistic action with the compounds of the formulae IA and IIA-IIC results in particularly advantageous properties. In particular, mixtures comprising compounds of the formulae IA and at least one compound of the formula IIA, IIBC and IIC in combination with at least one compound of the formula IIIa and/or IVa are distinguished by their low threshold voltage.

The individual compounds of the above-mentioned formulae and the sub-formulae thereof which can be used in the media according to the invention are either known or can be prepared analogously to the known compounds.

The invention also relates to electro-optical displays, such as, for example, STN or MLC displays, having two plane-parallel outer plates, which, together with a frame, form a cell, integrated non-linear elements for switching individual pixels on the outer plates, and a nematic liquid-crystal mixture having positive dielectric anisotropy and high specific resistance located in the cell, which contain media of this type, and to the use of these media for electro-optical purposes.

The liquid-crystal mixtures according to the invention enable a significant broadening of the available parameter latitude. The achievable combinations of clearing point, viscosity at low temperature, thermal and UV stability and high optical anisotropy are far superior to previous materials from the prior art.

The mixtures according to the invention are particularly suitable for TV, monitor, mobile applications, smart phones, tablet PC and PDA. Furthermore, the mixtures according to the invention can be used in TN-⁻ TFT, FFS, VA-IPS, OCB and IPS displays.

The dielectric anisotropy Δε of the liquid-crystal mixtures according to the invention at 20 °C is preferably ≥ +3, particularly preferably ≥ +8, especially preferably ≥ 12.

The birefringence Δn of the liquid-crystal mixtures according to the invention at 20°C is preferably ≥ 0.09, particularly preferably ≥ 0.10.

The liquid-crystalline medium according to the invention preferably has a nematic phase from ≤ -20 °C to ≥ 70 °C, particularly preferably from ≤ -30 °C to ≥ 80 °C, very particularly preferably from ≤ -40 °C to ≥ 90 °C.

LC mixtures with this nematic phase range at the same time allow rotational viscosities γ₁ of ≤ 110 mPa·s, particularly preferably ≤ 100 mPa·s, and thus excellent MLC displays having fast response times can be achieved. The rotational viscosities are determined at 20 °C.

The expression "have a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20 °C in a corresponding test cell is 1000 h or more, the medium is referred to as stable at this temperature. At temperatures of -30 °C and -40 °C, the corresponding times are 500 h and 250 h respectively. At high temperatures, the clearing point is measured by conventional methods in capillaries.

The liquid-crystal media according to the invention have relatively low values for the threshold voltage (V₀). They are preferably in the range from 1.7 V to 3.0 V, particularly preferably ≤ 2.5 V and very particularly preferably ≤ 2.3 V.

In addition, the liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive mixture or compounds" denotes mixtures or compounds having a Δε > 1.5, the term "dielectrically neutral compounds" denotes those having -1.5 ≤ Δε ≤ 1.5 and the term "dielectrically negative compounds" denotes those having Δε < -1.5. The dielectric anisotropy of the compounds is determined here by dissolving 10 % of the compounds in a liquid-crystalline host and determining the capacitance of the resultant mixture in at least one test cell in each case having a layer thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

It goes without saying that, through a suitable choice of the components of the mixtures according to the invention, it is also possible for higher clearing points (for example above 100 °C) to be achieved at higher threshold voltages or lower clearing points to be achieved at lower threshold voltages with retention of the other advantageous properties. At viscosities correspondingly increased only slightly, it is likewise possible to obtain mixtures having a higher Δε and thus low thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975], where, besides particularly favourable electro-optical properties, such as, for example, high steepness of the characteristic line and low angle dependence of the contrast (German patent 30 22 818), lower dielectric anisotropy is sufficient at the same threshold voltage as in an analogous display at the second minimum. This enables significantly higher specific resistance values to be achieved using the mixtures according to the invention at the first minimum than in the case of mixtures comprising cyano compounds. Through a suitable choice of the individual components and their proportions by weight, the person skilled in the art is able to set the birefringence necessary for a pre-specified layer thickness of the MLC display using simple routine methods.

Measurements of the voltage holding ratio (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] have shown that mixtures according to the invention comprising compounds of the formulae IA and IB exhibit a significantly smaller decrease in the HR on UV exposure than analogous mixtures comprising cyanophenylcyclohexanes of the formula 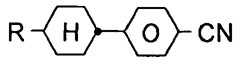 or Esters of the formula 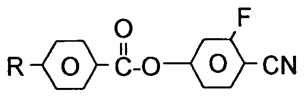 instead of the compounds of the formulae IA, IIA and IIB and IIC.

The light stability and UV stability of the mixtures according to the invention are considerably better, i.e. they exhibit a significantly smaller decrease in the HR on exposure to light or UV.

The construction of the MLC display according to the invention from polarisers, electrode base plates and surface-treated electrodes corresponds to the usual design for displays of this type. The term usual design is broadly drawn here and also encompasses all derivatives and modifications of the MLC display, in particular including matrix display elements based on poly-Si TFTs or MIM.

A significant difference between the displays according to the invention and the hitherto conventional displays based on the twisted nematic cell consists, however, in the choice of the liquid-crystal parameters of the liquid-crystal layer.

The liquid-crystal mixtures which can be used in accordance with the invention are prepared in a manner conventional per se, for example by mixing one or more compounds of the formulae IA with the compound(s) of the formula IIA, IIB and/or IIC with one or more mesogenic compounds, preferably at least one compound of the formulae III to XXX and optionally with suitable additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The dielectrics may also comprise further additives known to the person skilled in the art and described in the literature, such as, for example, UV stabilisers, such as Tinuvin^{®}, e.g. Tinuvin^{®} 770, from Ciba Chemicals, antioxidants, e.g. TEMPOL, microparticles, free-radical scavengers, nanoparticles, etc. For example, 0-15 % of pleochroic dyes or chiral dopants can be added. Suitable stabilisers and dopants are mentioned below in Tables C and D.

Polymerisable compounds, so-called reactive mesogens (RMs), for example as disclosed in U.S. 6,861,107, may furthermore be added to the mixtures according to the invention in concentrations of preferably 0.12-5 % by weight, particularly preferably 0.2-2 % by weight, based on the mixture. These mixtures may optionally also comprise an initiator, as described, for example, in U.S. 6,781,665. The initiator, for example Irganox-1076 from Ciba, is preferably added to the mixture comprising polymerisable compounds in amounts of 0-1 %. Mixtures of this type can be used for so-called polymer-stabilised (PS) modes, in which polymerisation of the reactive mesogens is intended to take place in the liquid-crystalline mixture, for example for PS-IPS, PS-FFS, PS-TN, PS-VA-IPS. The prerequisite for this is that the liquid-crystal mixture does not itself comprise any polymerisable components.

In a preferred embodiment of the invention, the polymerisable compounds are selected from the compounds of the formula M

R^{Ma}-A^{M1}-(Z^{M1}-A^{M2})ₘ₁-R^{Mb} M

in which the individual radicals have the following meanings:
- R^{Ma} and R^{Mb}: each, independently of one another, denote P, P-Sp-, H, halogen, SF₅, NO₂, an alkyl, alkenyl or alkynyl group, where at least one of the radicals R^{Ma} and R^{Mb} preferably denotes or contains a group P or P-Sp-,
- P: denotes a polymerisable group,
- Sp: denotes a spacer group or a single bond,
- A^{M1} and A^{M2}: each, independently of one another, denote an aromatic, heteroaromatic, alicyclic or heterocyclic group, preferably having 4 to 25 ring atoms, preferably C atoms, which may also encompass or contain fused rings, and which may optionally be mono- or polysubstituted by L,
- L: denotes P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-, preferably P, P-Sp-, H, OH, CH₂OH, halogen, SFₛ, NO₂, an alkyl, alkenyl or alkynyl group,
- Y¹: denotes halogen,
- Z^{M1}: denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-, -COO-, -OCO-CH=CH-, CR⁰R⁰⁰ or a single bond,
- R⁰ and R⁰⁰: each, independently of one another, denote H or alkyl having 1 to 12 C atoms,
- R^{x}: denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms,
- m1: denotes 0, 1, 2, 3 or 4, and
- n1: denotes 1, 2, 3 or 4,
where at least one, preferably one, two or three, particularly preferably one or two, from the group R^{Ma}, R^{Mb} and the substituents L present denotes a group P or P-Sp- or contains at least one group P or P-Sp-.

Particularly preferred compounds of the formula M are those in which
- R^{Ma} and R^{Mb}: each, independently of one another, denote P, P-Sp-, H, F, Cl, Br, I, -CN, -NO₂, -NCO, -NCS, -OCN, -SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where at least one of the radicals R^{Ma} and R^{Mb} preferably denotes or contains a group P or P-Sp-,
- A^{M1} and A^{M2}: each, independently of one another, denote 1,4-phenylene, naphthalene-1,4-diyl, naphthalene-2,6-diyl, phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicyclo[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L,
- L: denotes P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,
- P: denotes a polymerisable group,
- Y¹: denotes halogen,
- R^{x}: denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

Very particular preference is given to compounds of the formula M in which one of R^{Ma} and R^{Mb} or both denote(s) P or P-Sp-.

Suitable and preferred RMs for use in liquid-crystalline media and PS mode displays according to the invention are selected, for example, from the following formulae: 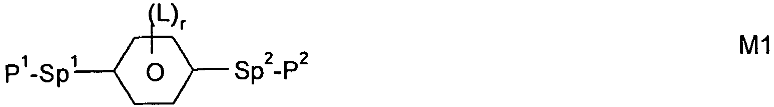 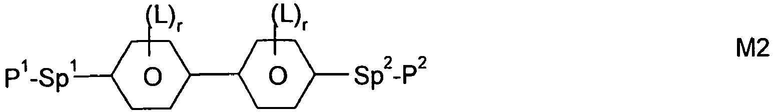 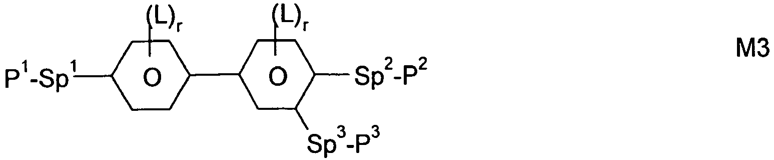 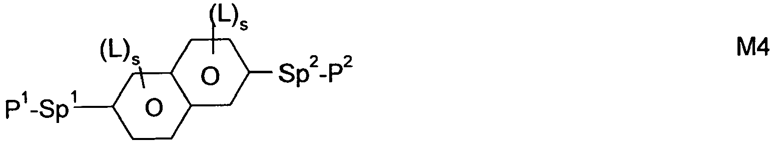 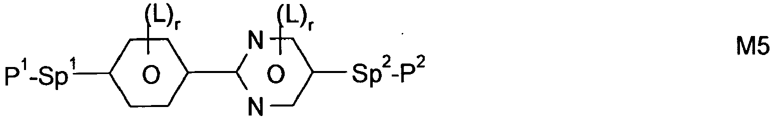 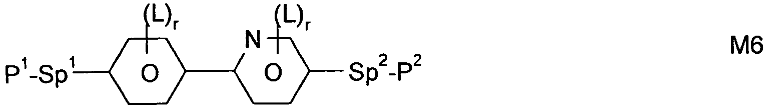 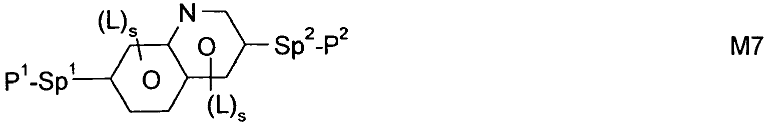 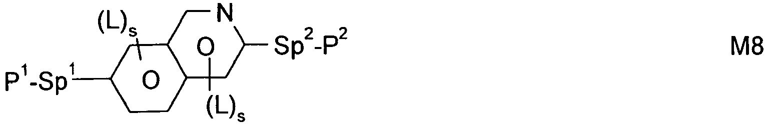 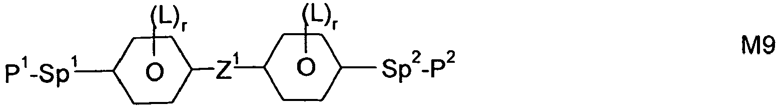 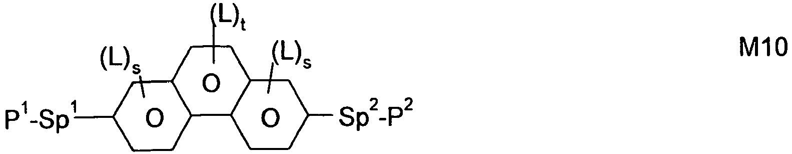 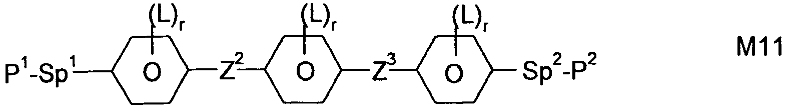 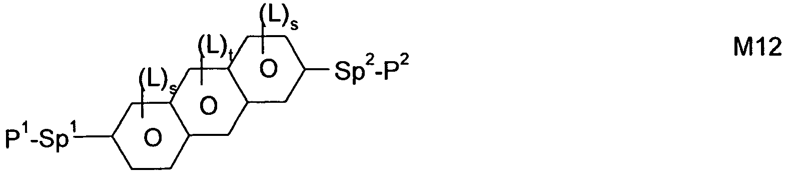 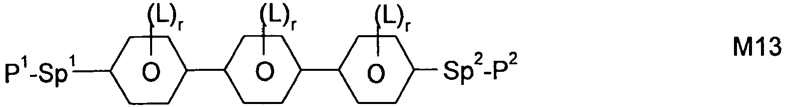 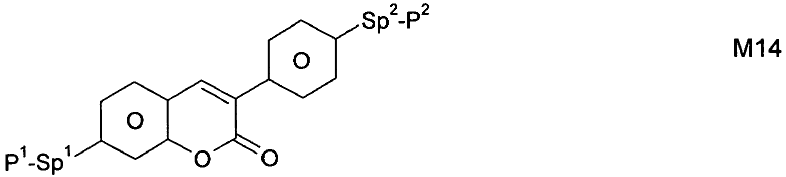 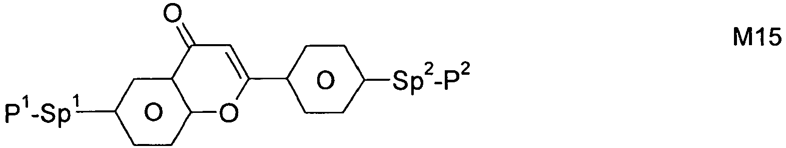 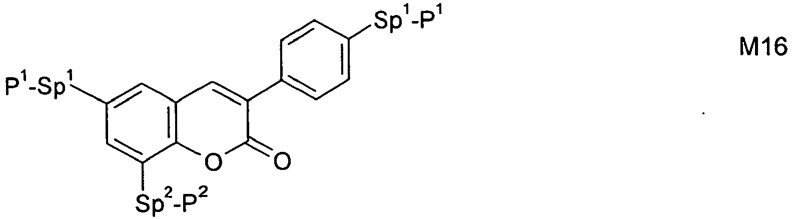 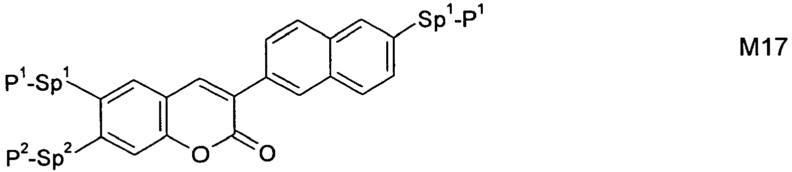 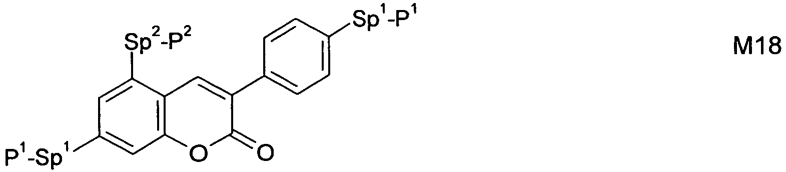 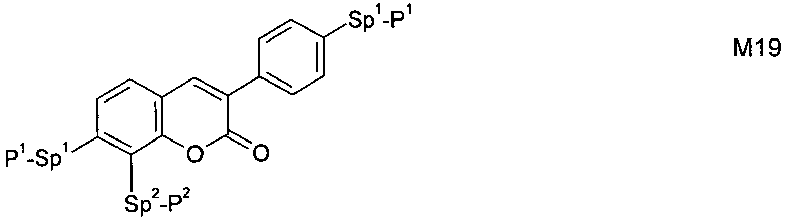 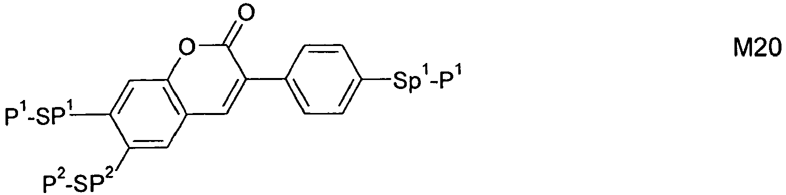 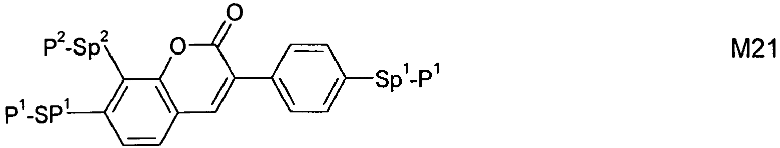 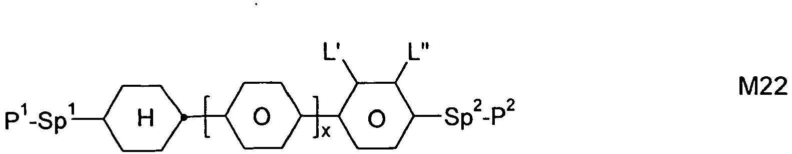 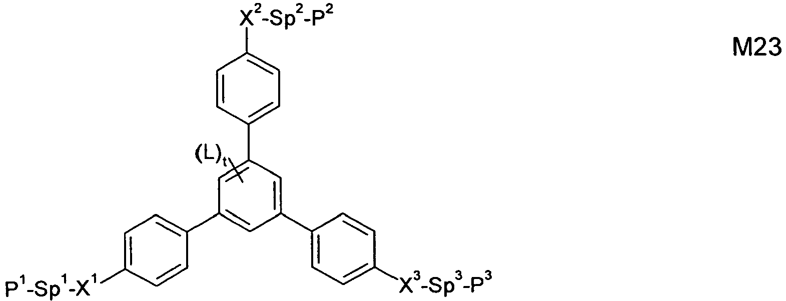 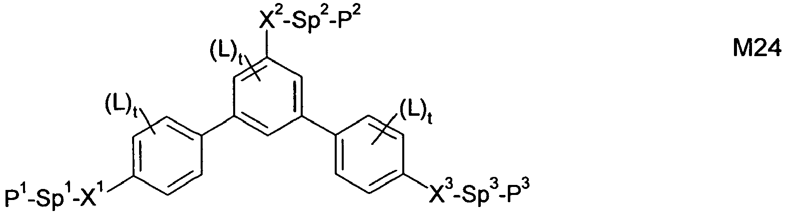 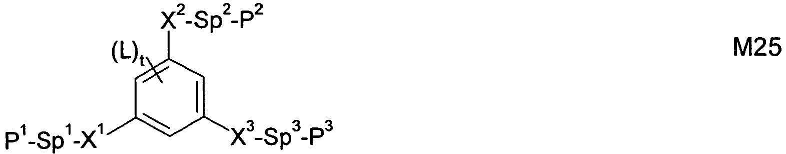 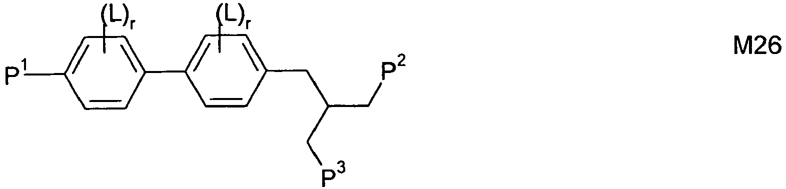 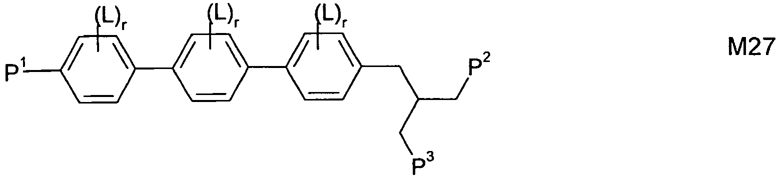 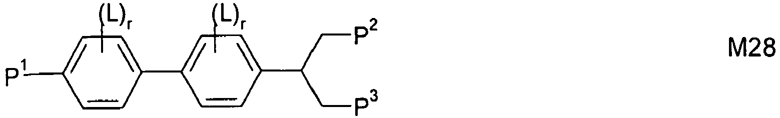 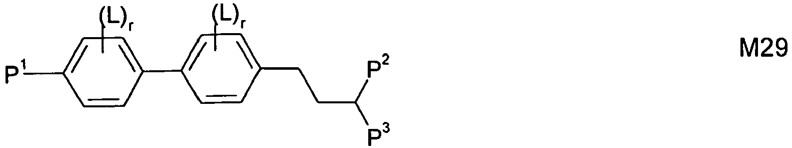 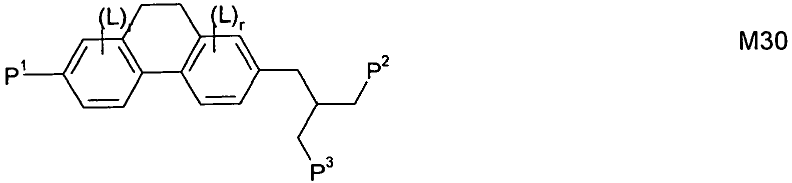 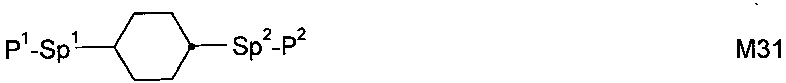 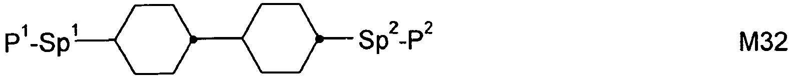 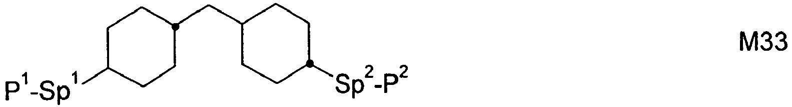 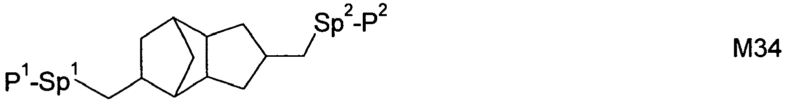 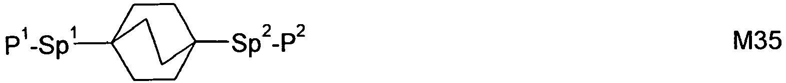 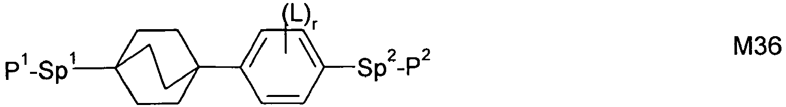 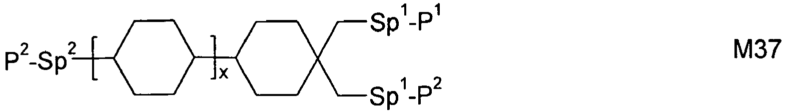 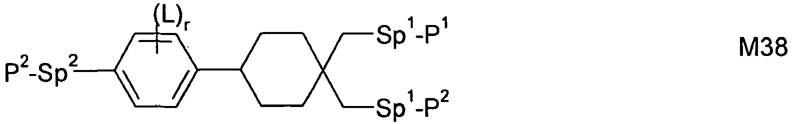 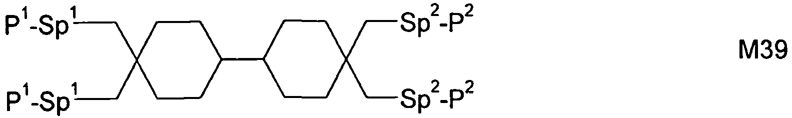 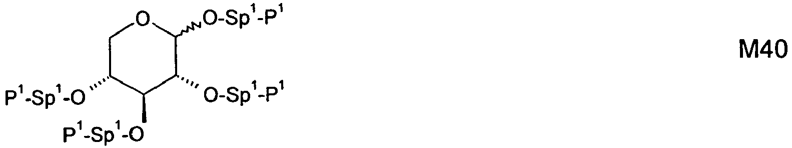 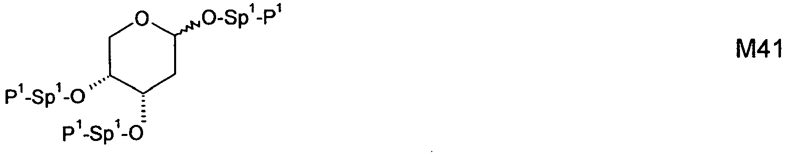 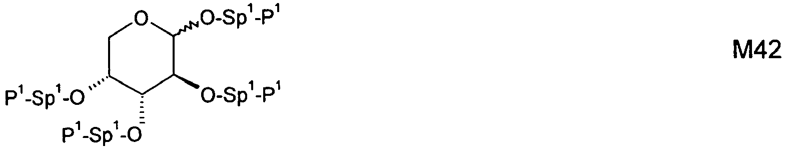 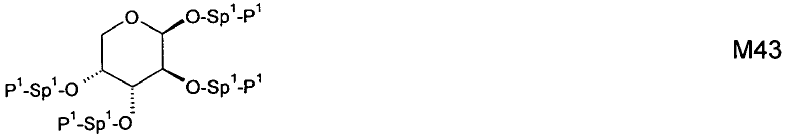 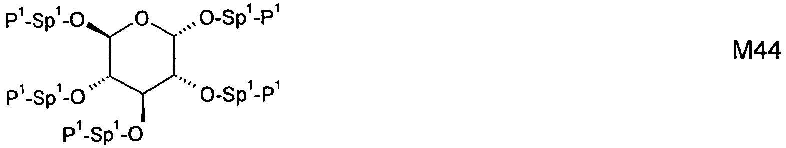 in which the individual radicals have the following meanings:
- P¹ and P²: each, independently of one another, denote a polymerisable group, preferably having one of the meanings indicated above and below for P, particularly preferably an acrylate, methacrylate, fluoroacrylate, oxetane, vinyloxy or epoxy group,
- Sp¹ and Sp²: each, independently of one another, denote a single bond or a spacer group, preferably having one of the meanings indicated above and below for Sp, and particularly preferably -(CH₂)ₚ₁-, -(CH₂)ₚ₁-O-, -(CH₂)ₚ₁-CO-O- or -(CH₂)ₚ₁-O-CO-O-, in which p1 is an integer from 1 to 12, and where the linking of the last-mentioned groups to the adjacent ring takes place via the O atom, where one of the radicals P¹-Sp¹- and P²-Sp²- may also denote R^{aa},
- R^{aa}: denotes H, F, Cl, CN or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl or alkylcarbonyloxy having 1 to 12 C atoms (where the alkenyl and alkynyl radicals have at least two C atoms and the branched radicals have at least three C atoms),
- R⁰, R⁰⁰: each, independently of one another and on each occurrence identically or differently, denote H or alkyl having 1 to 12 C atoms,
- R^{y} and R^{z}: each, independently of one another, denote H, F, CH₃ or CF₃,
- Z¹: denotes -O-, -CO-, -C(R^{y}R^{z})- or -CF₂CF₂-,
- Z² and Z³: each, independently of one another, denote -CO-O-, -O-CO-, -CH₂O-, -OCH₂-, -CF₂O-, -OCF₂- or -(CH₂)ₙ-, where n is 2, 3 or 4,
- L: on each occurrence, identically or differently, denotes F, Cl, CN, or straight-chain or branched, optionally mono- or polyfluorinated alkyl, alkoxy, alkenyl, alkynyl, alkylcarbonyl, alkoxycarbonyl or alkylcarbonyloxy having 1 to 12 C atoms, preferably F,
- L' and L": each, independently of one another, denote H, F or Cl,
- r: denotes 0, 1, 2, 3 or 4,
- s: denotes 0, 1, 2 or 3,
- t: denotes 0, 1 or 2, and
- x: denotes 0 or 1.

Suitable polymerisable compounds are listed, for example, in Table E.

The liquid-crystalline media in accordance with the present application preferably comprise in total 0.01 to 10 %, preferably 0.2 to 4.0 %, particularly preferably 0.2 to 2.0 %, of polymerisable compounds.

Particular preference is given to the polymerisable compounds of the formula M.

The present invention thus also relates to the use of the mixtures according to the invention in electro-optical displays and to the use of the mixtures according to the invention in shutter glasses, in particular for 3D applications, and in TN, PS-TN, STN, TN-TFT, OCB, IPS, PS-IPS, FFS, PS-FFS and PS-VA-IPS displays.

The following examples are intended to explain the invention without limiting it. Above and below, per cent data denote per cent by weight; all temperatures are indicated in degrees Celsius.

Throughout the patent application, 1,4-cyclohexylene rings and 1,4-phenylene rings are depicted as follows:

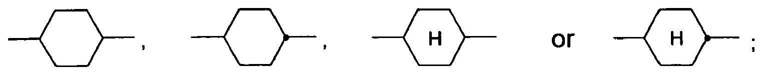

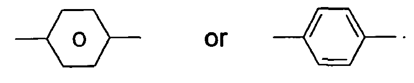

Besides the compounds of the formula IA and at least one compound selected from the compounds of the formula IIA, IIB and IIC, the mixtures according to the invention preferably contain one or more of the compounds from Table A indicated below.

In the present application and in the examples below, the structures of the liquid-crystal compounds are indicated by means of acronyms, the transformation into chemical formulae taking place in accordance with Table A. All radicals CₙH₂ₙ₊₁ and CₘH₂ₘ₊₁ are straight-chain alkyl radicals having n and m C atoms respectively; n, m and k are integers and preferably denote 0, 1, 2, 3, 4, 5, 6, 7, 8, 9, 10, 11 or 12. The coding in Table B is self-evident. In Table A, only the acronym for the parent structure is indicated. In individual cases, the acronym for the parent structure is followed, separated by a dash, by a code for the substituents R^{1*}, R^{2*}, L^{1*} and L^{2*}:

| Code for R^{1*}, R^{2*}, L^{1*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

The following abbreviations are used: (n, m, m', z: each, independently of one another, 1, 2, 3, 4, 5 or 6; (O)CₘH₂ₘ₊₁ denotes OCₘH₂ₘ₊₁ or CₘH₂ₘ₊₁)

Preferred mixture components are shown in Tables A and B.

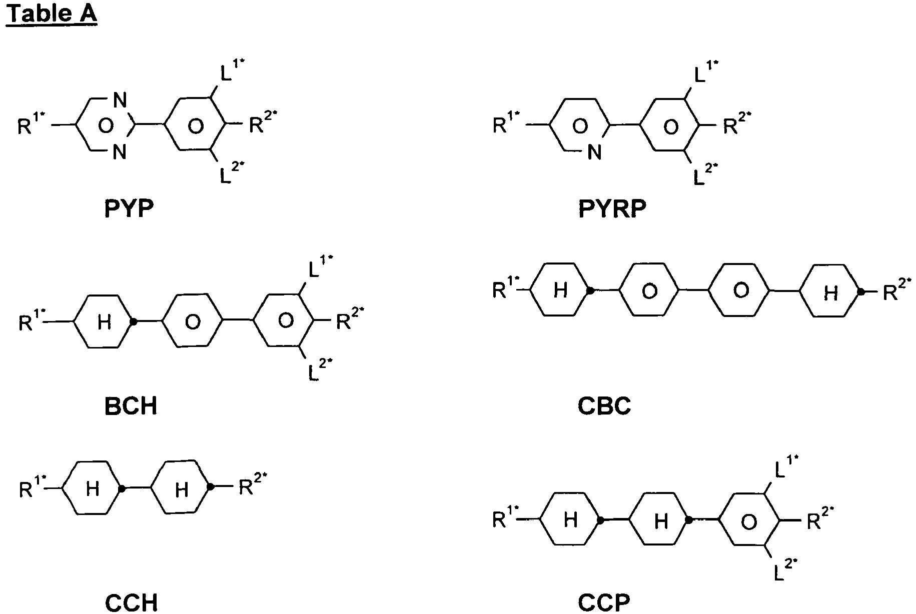

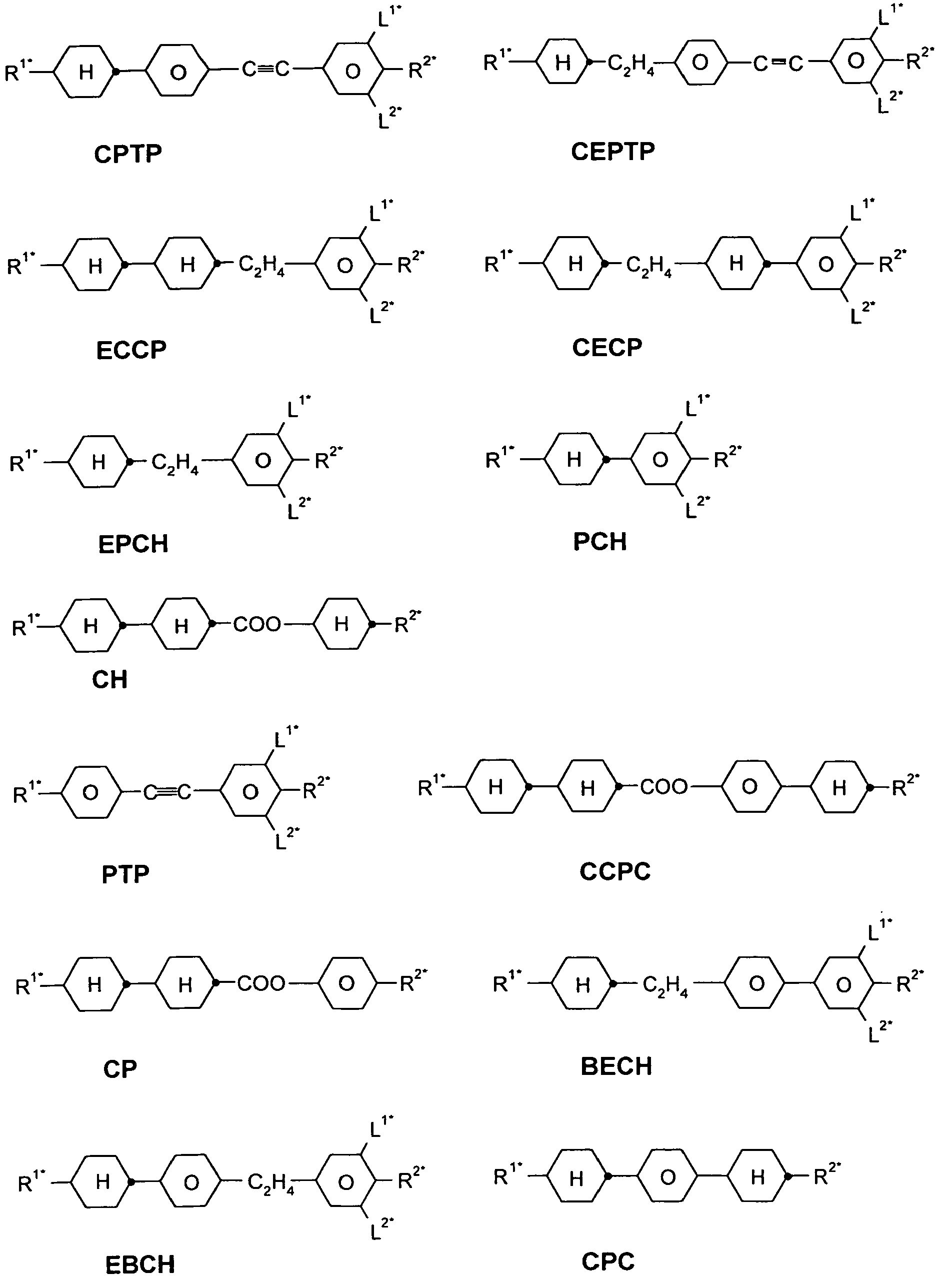

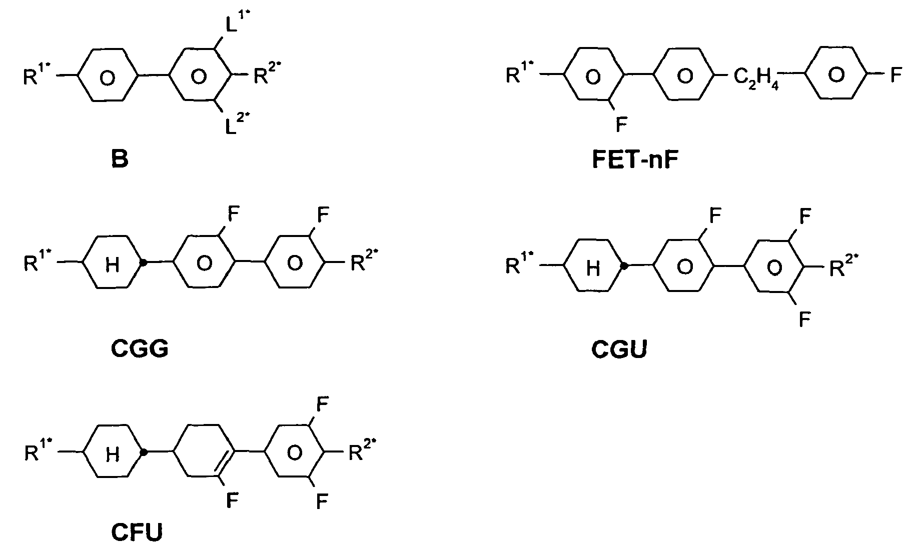

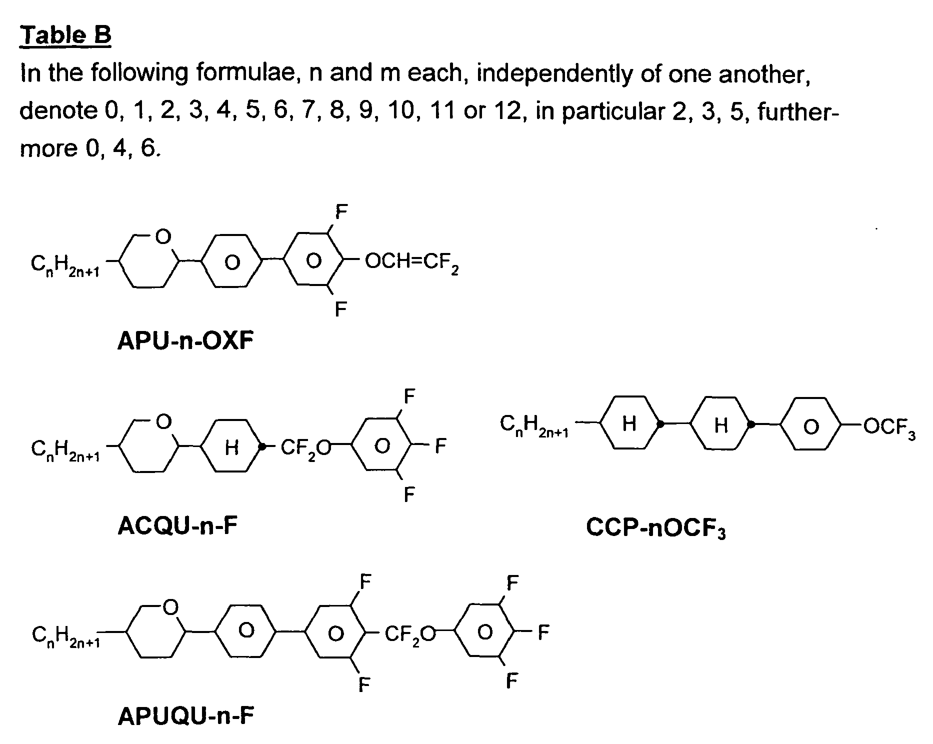

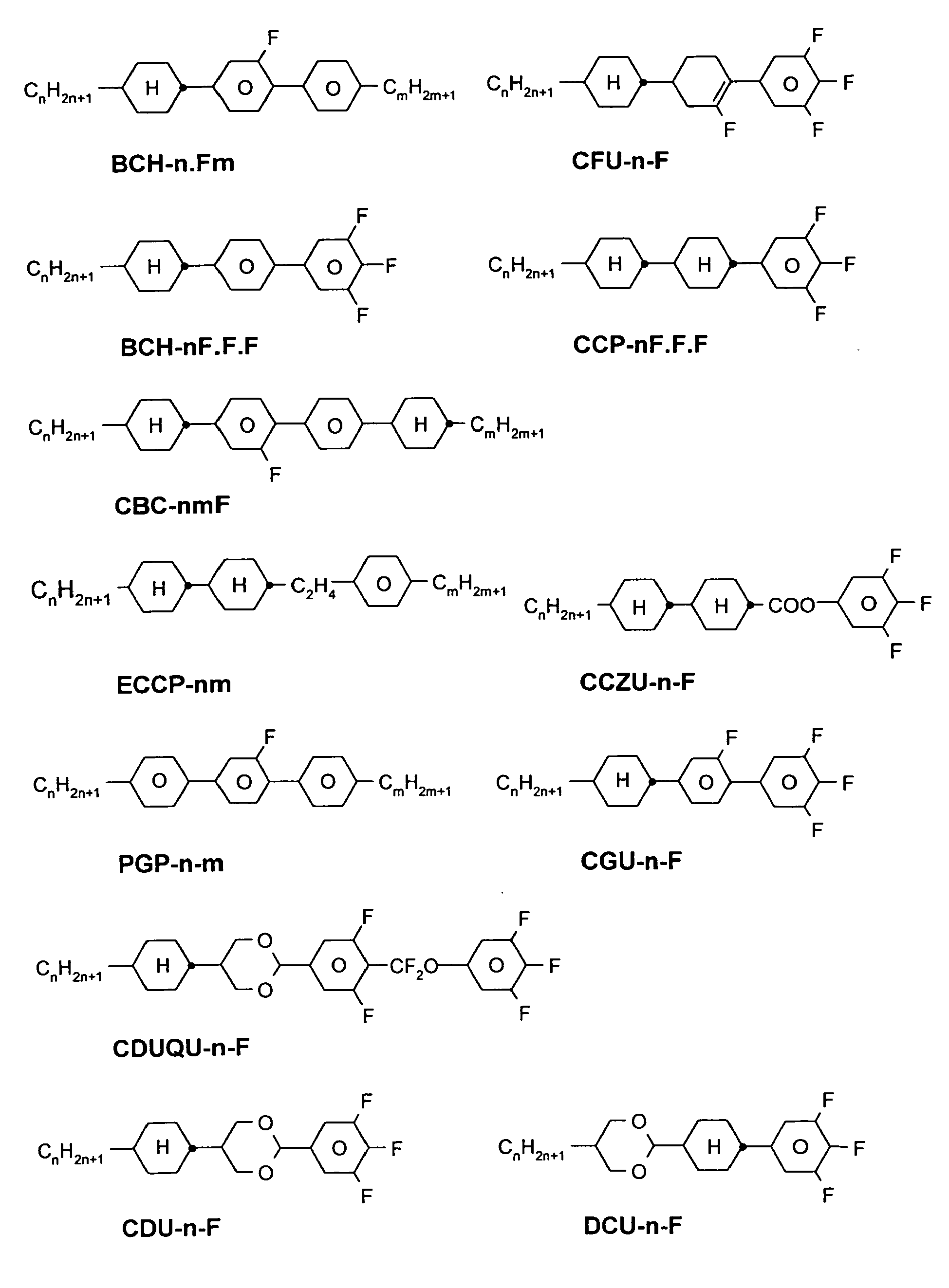

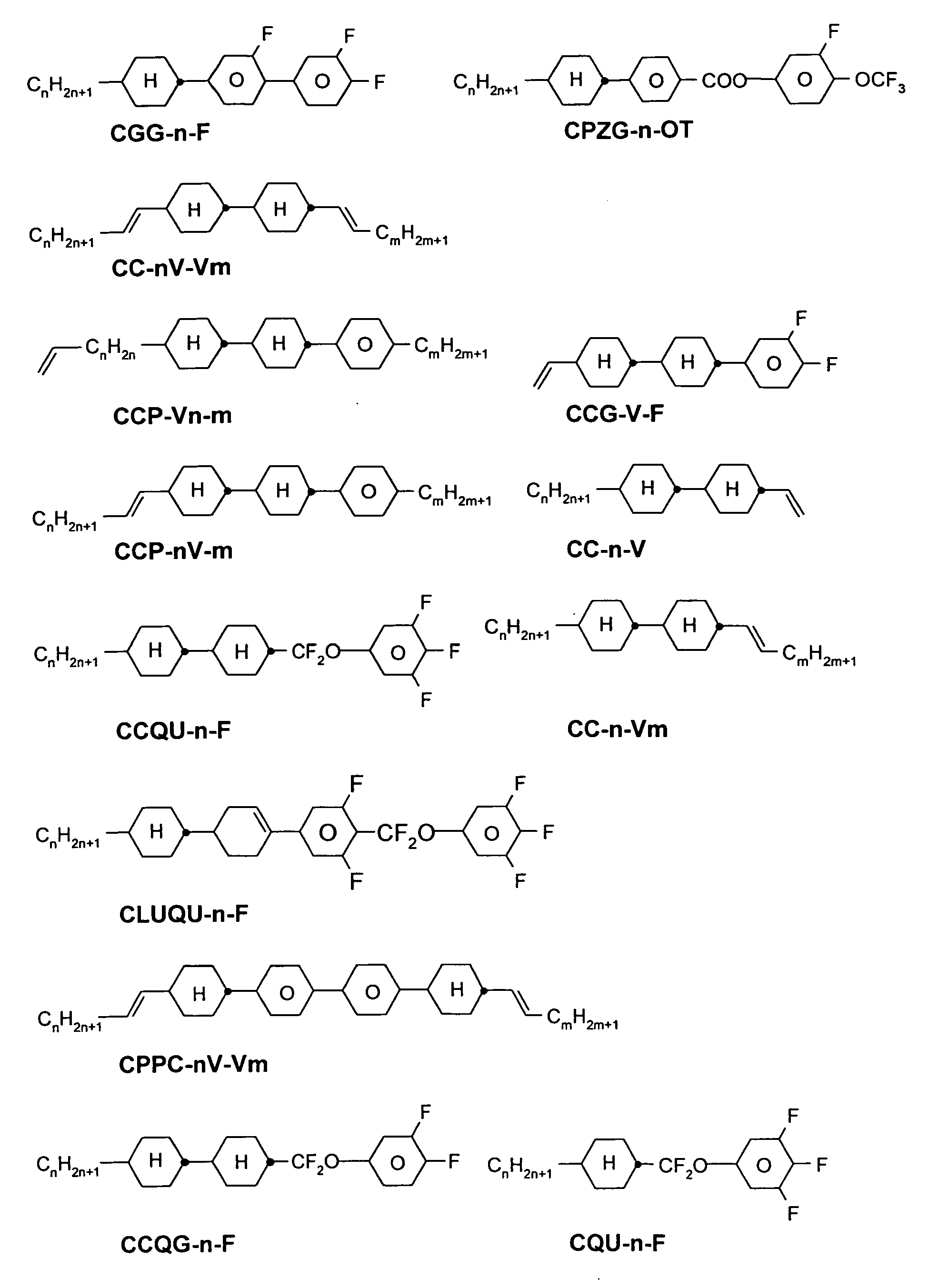

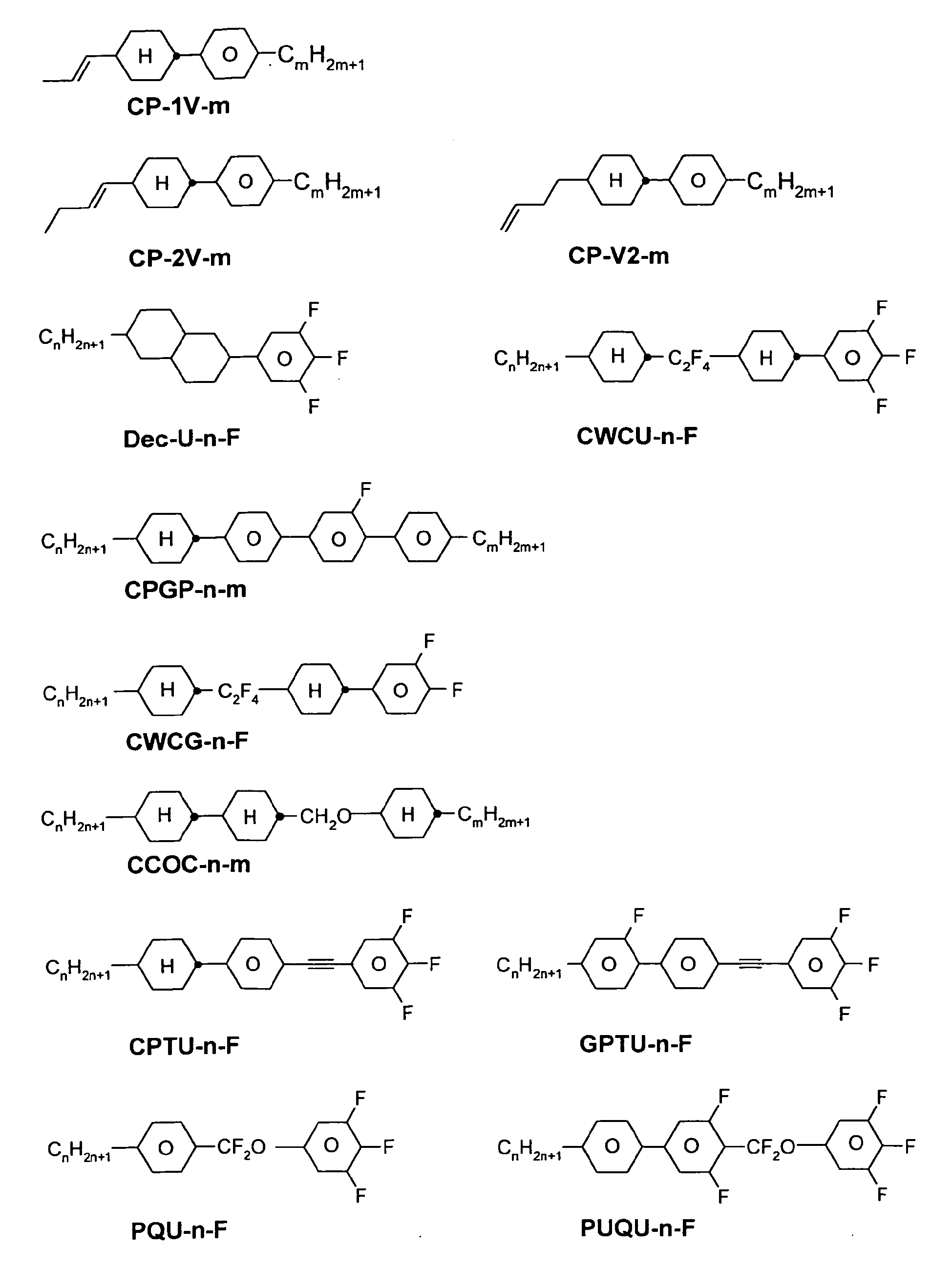

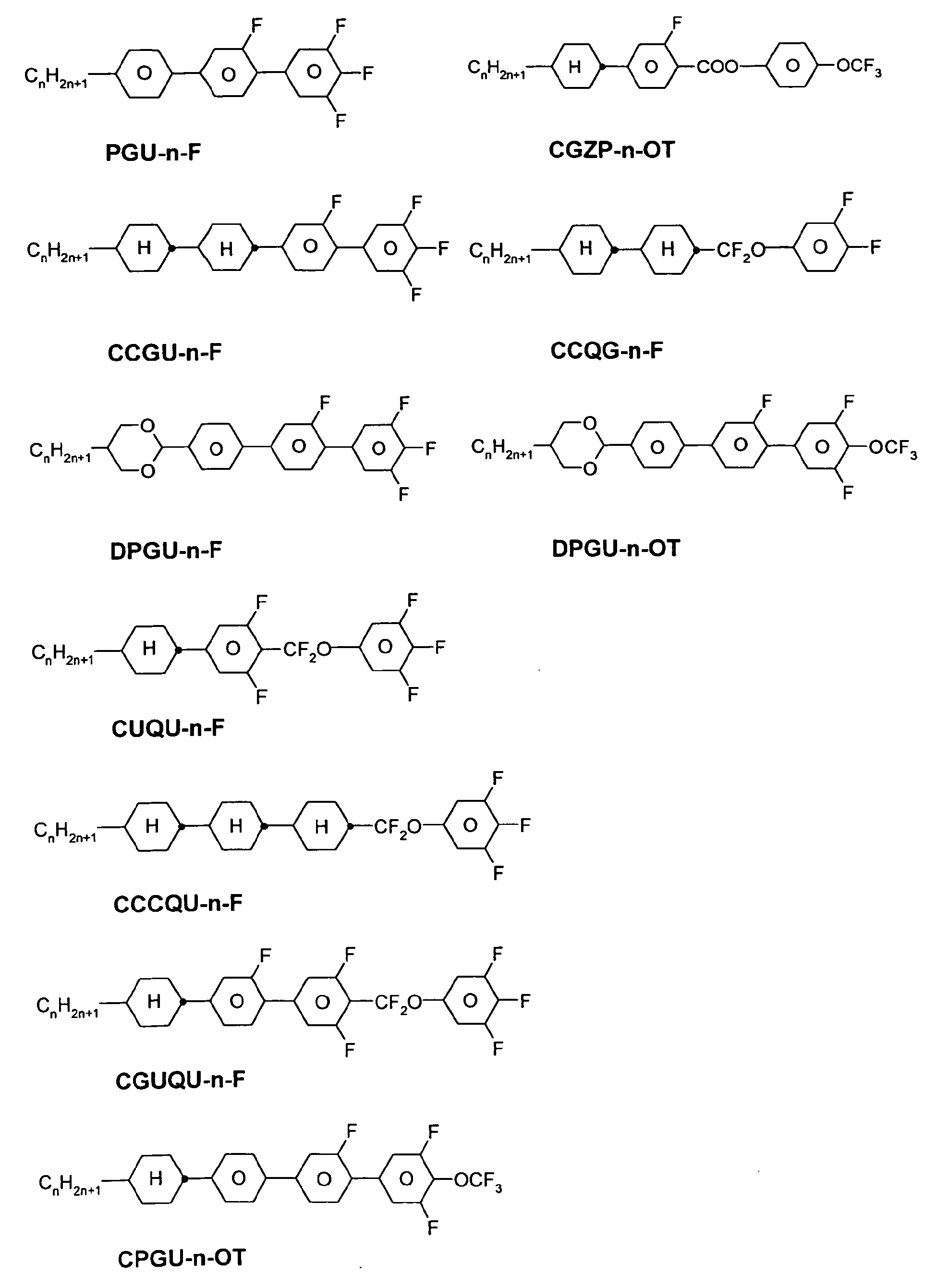

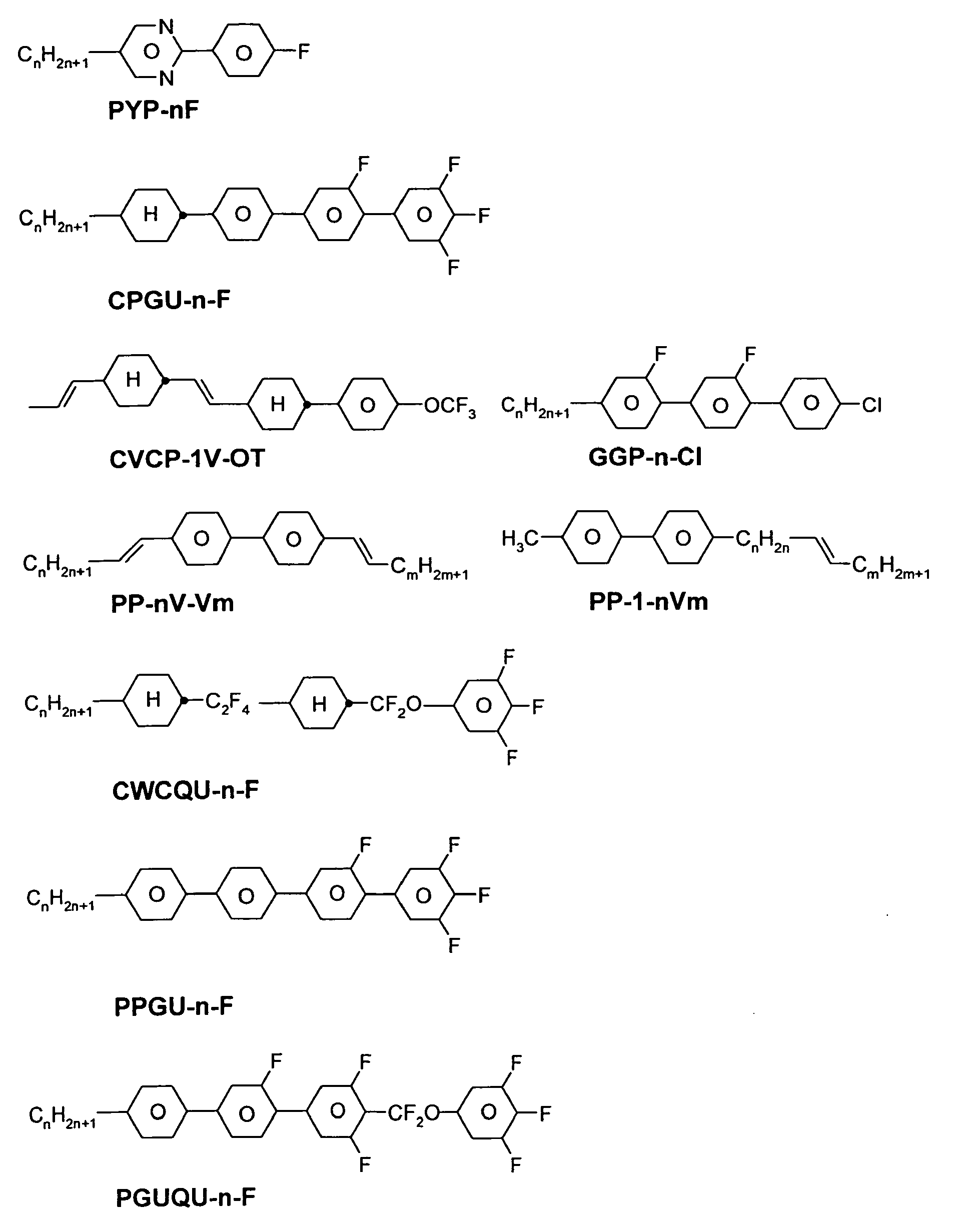

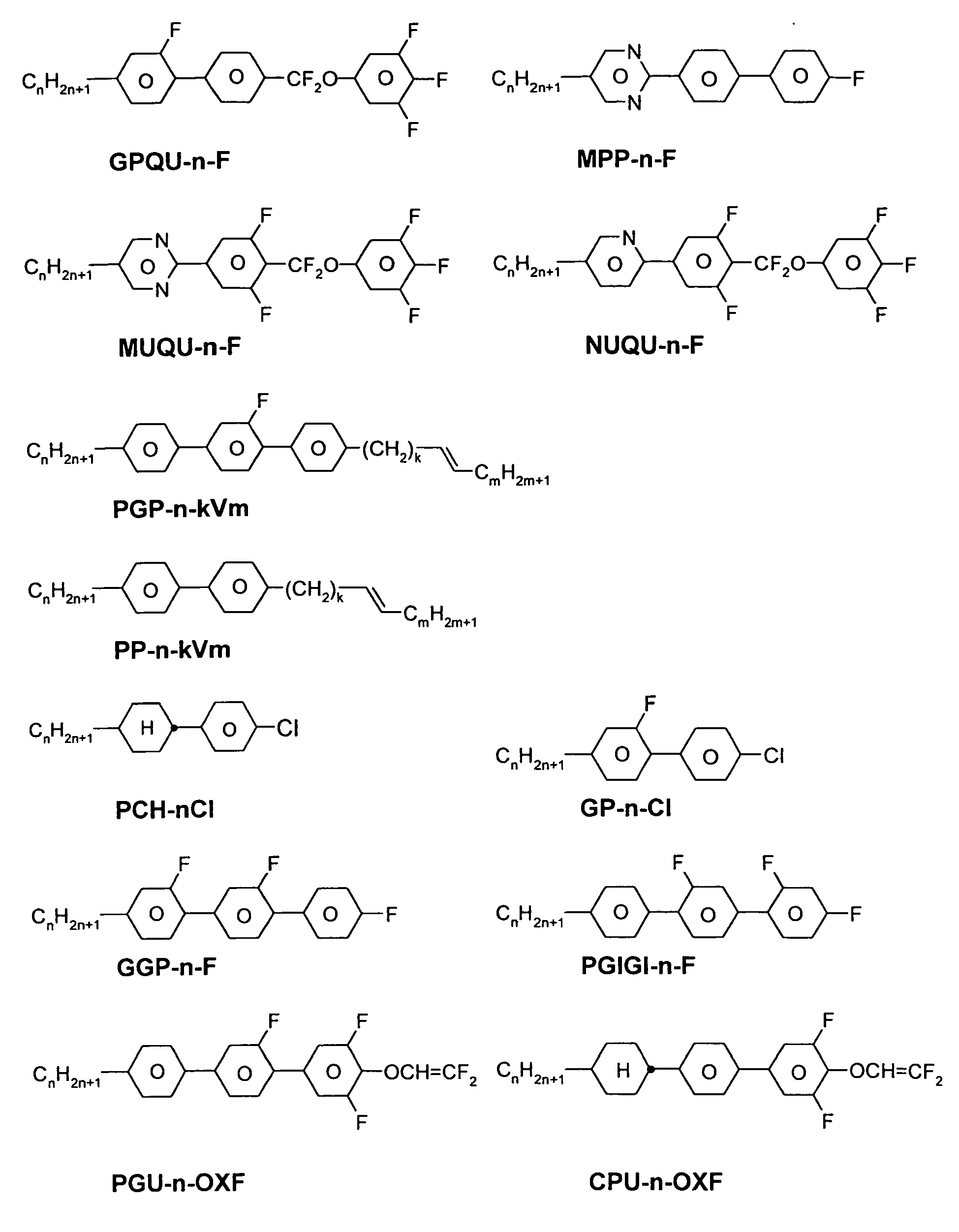

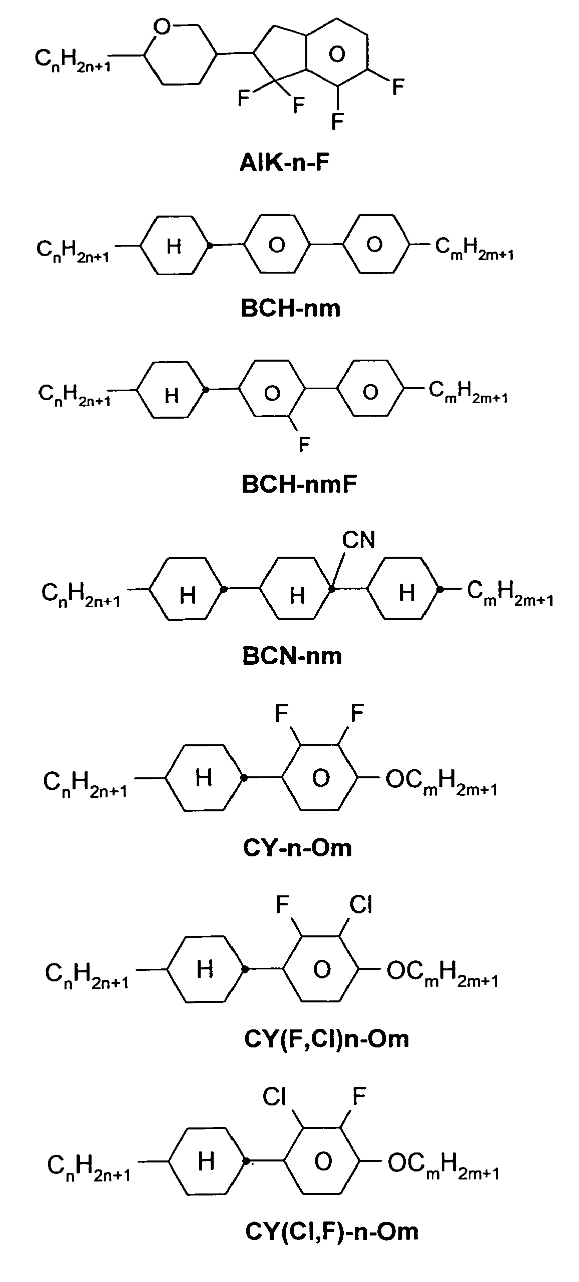

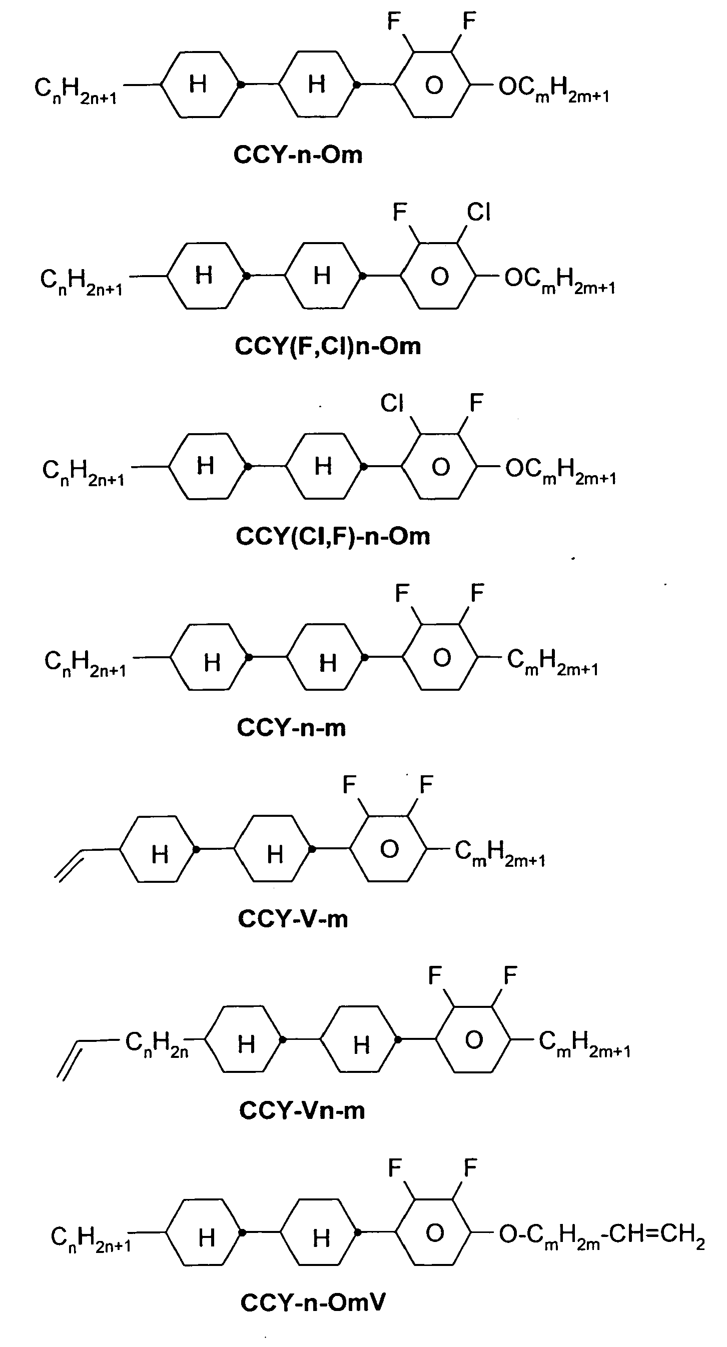

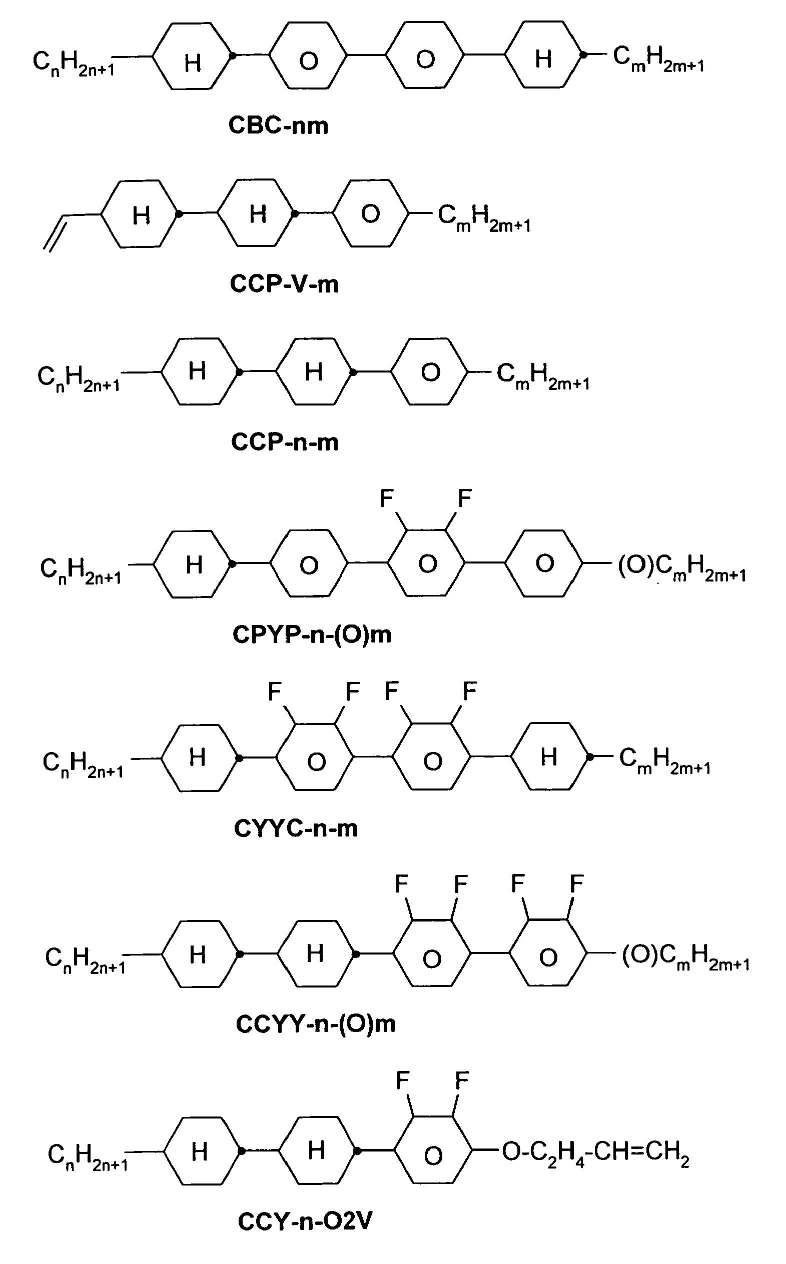

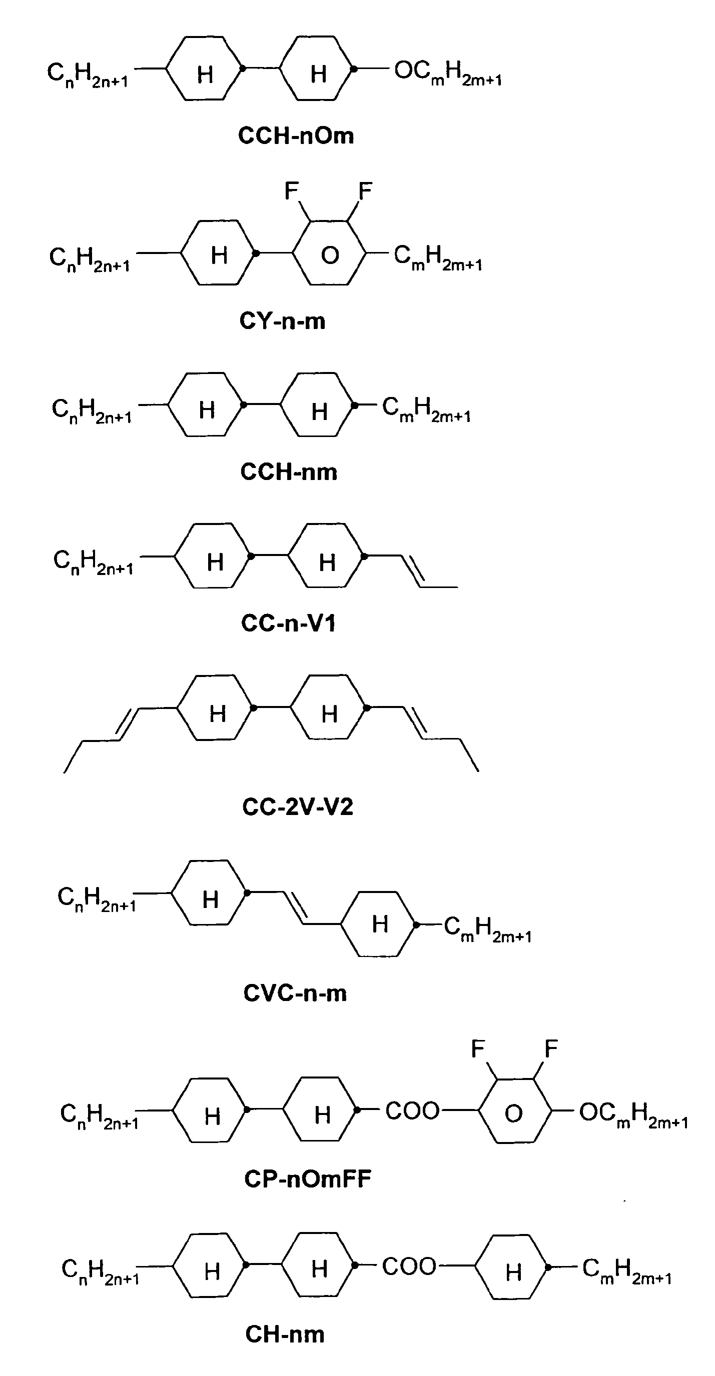

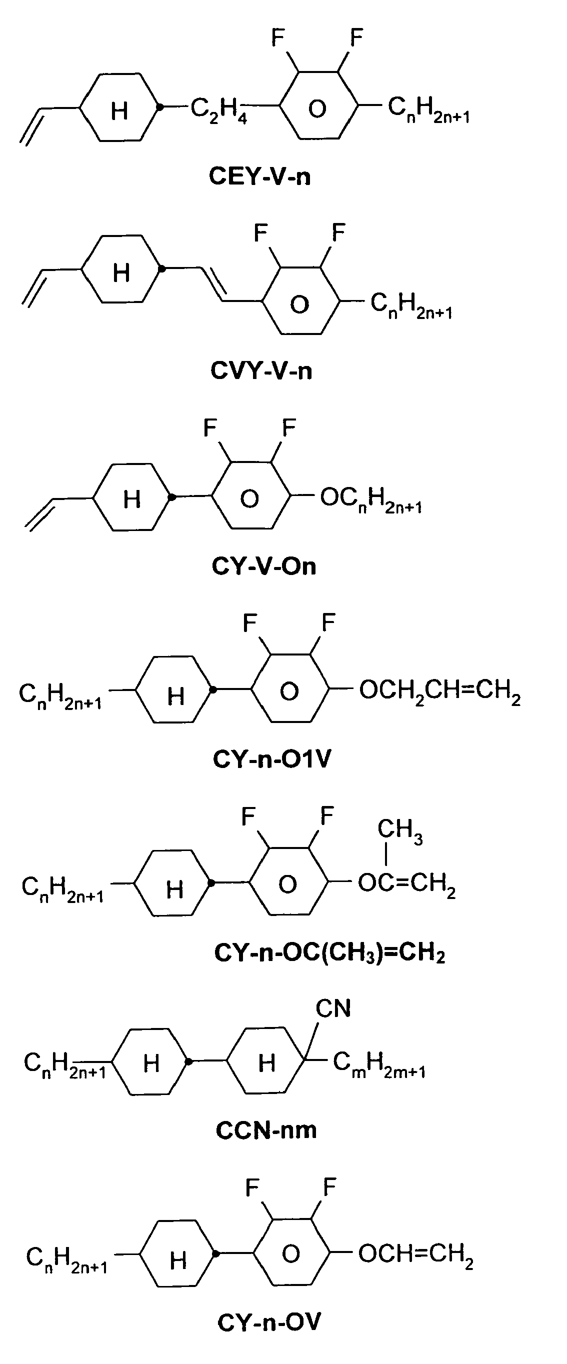

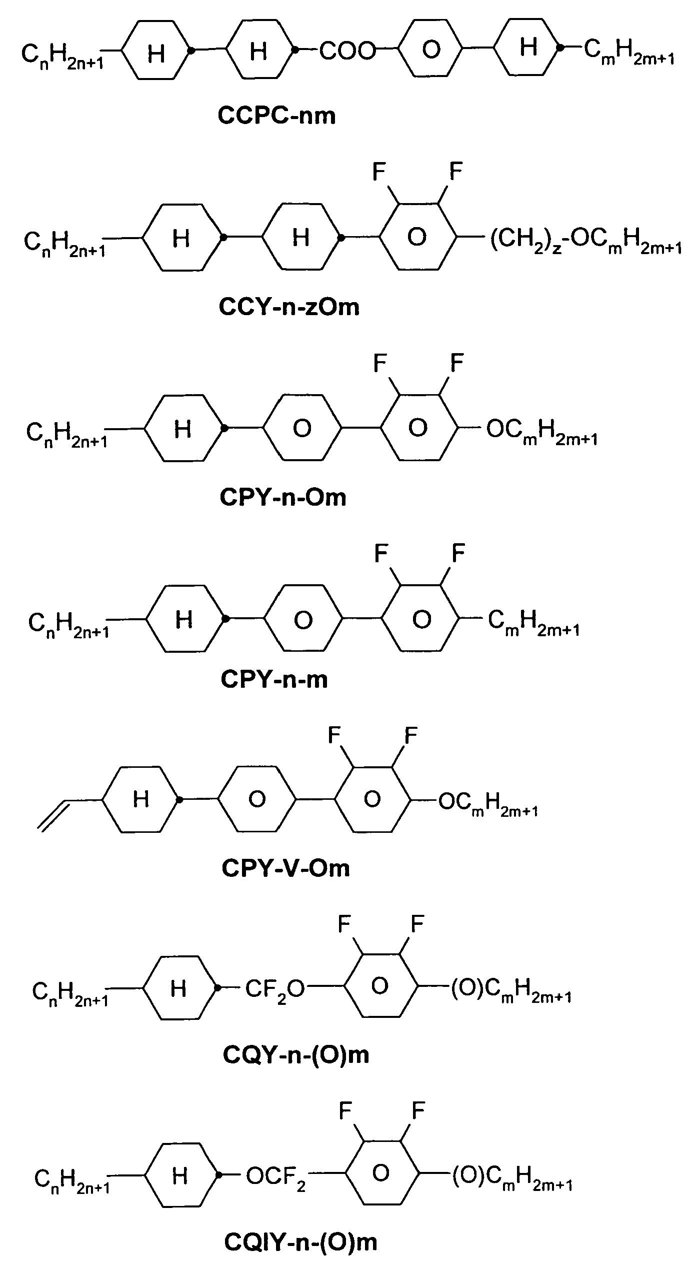

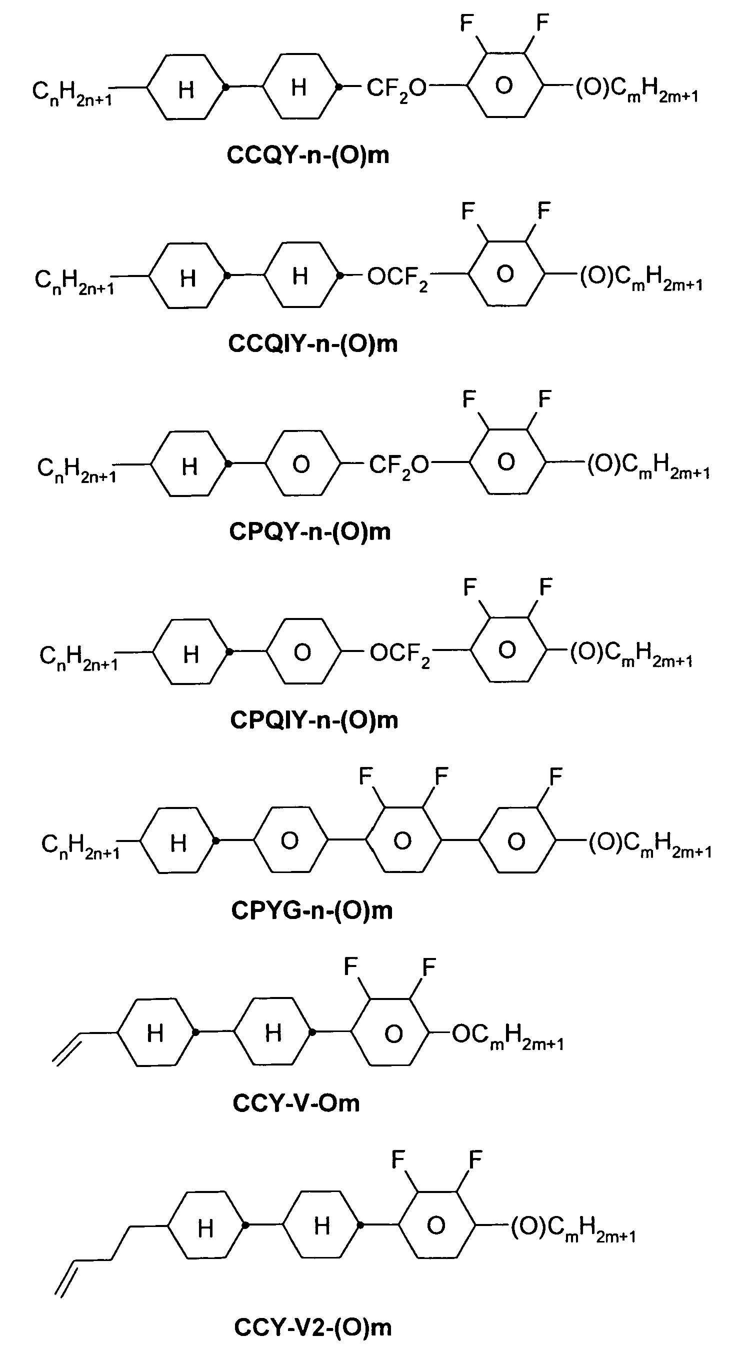

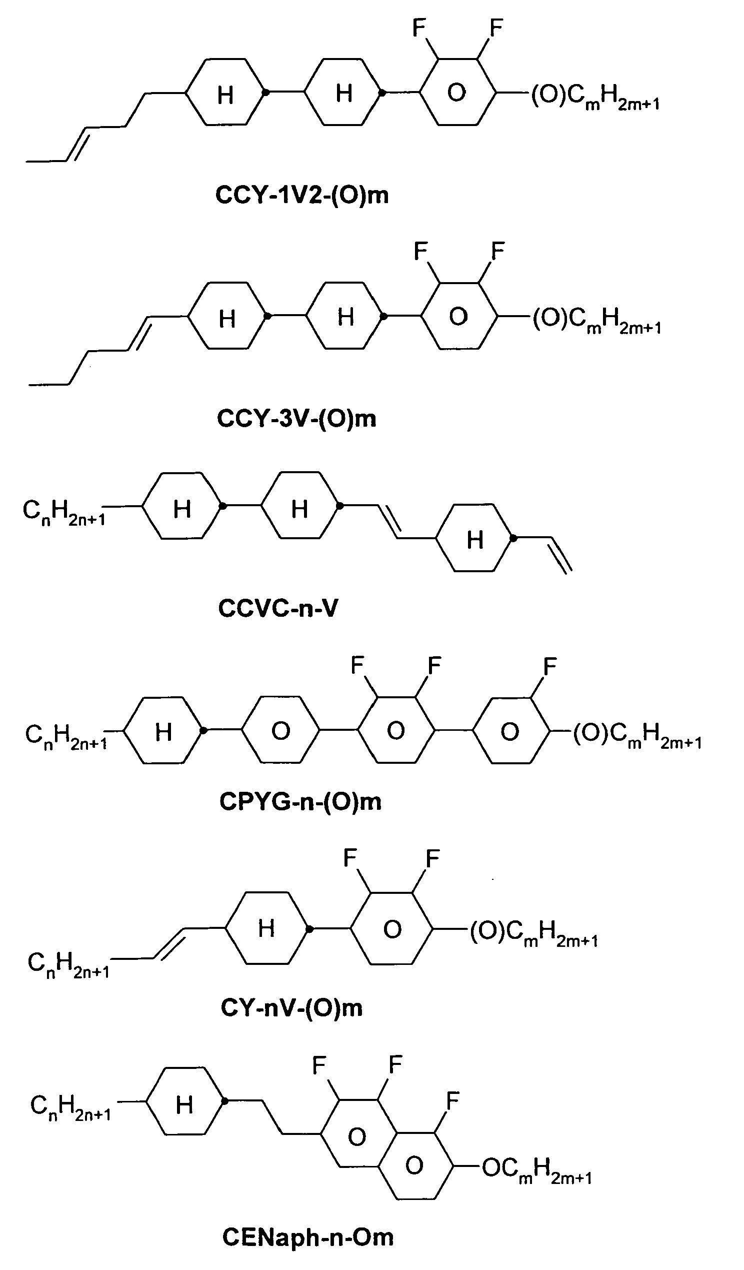

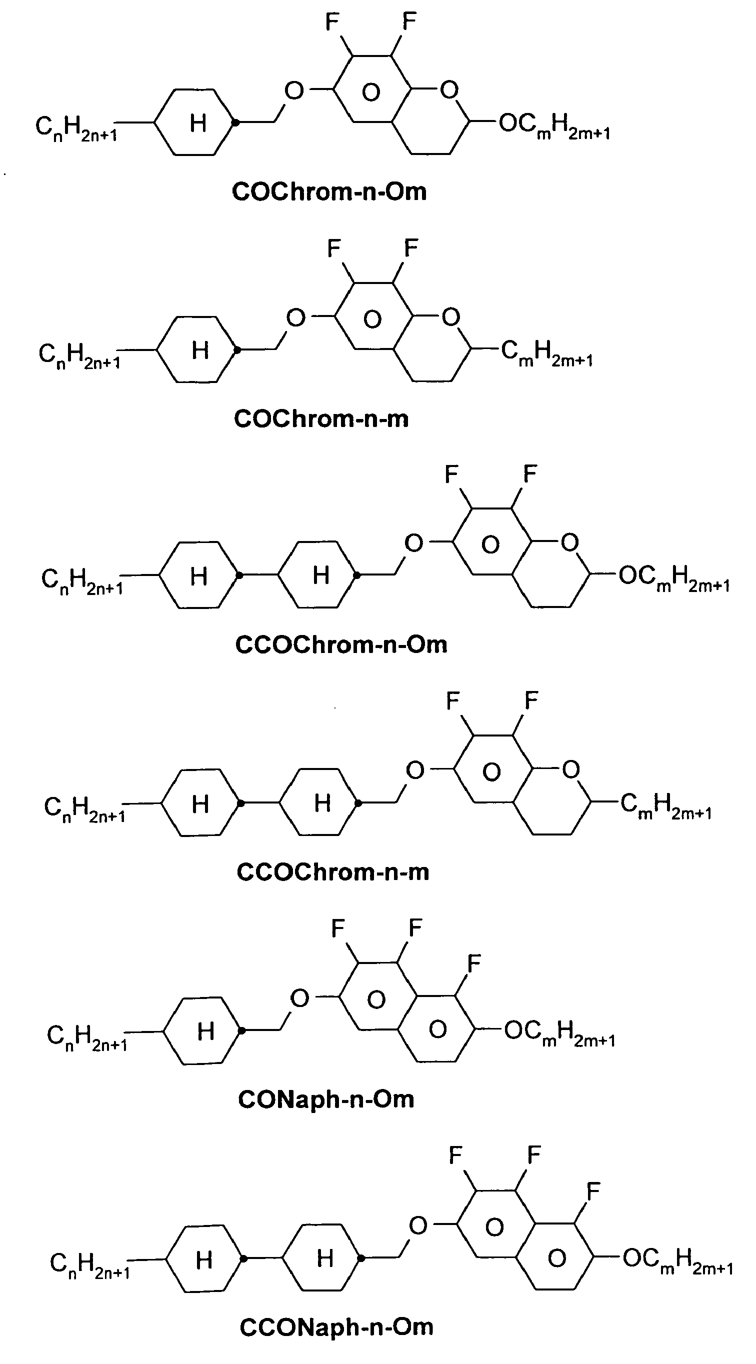

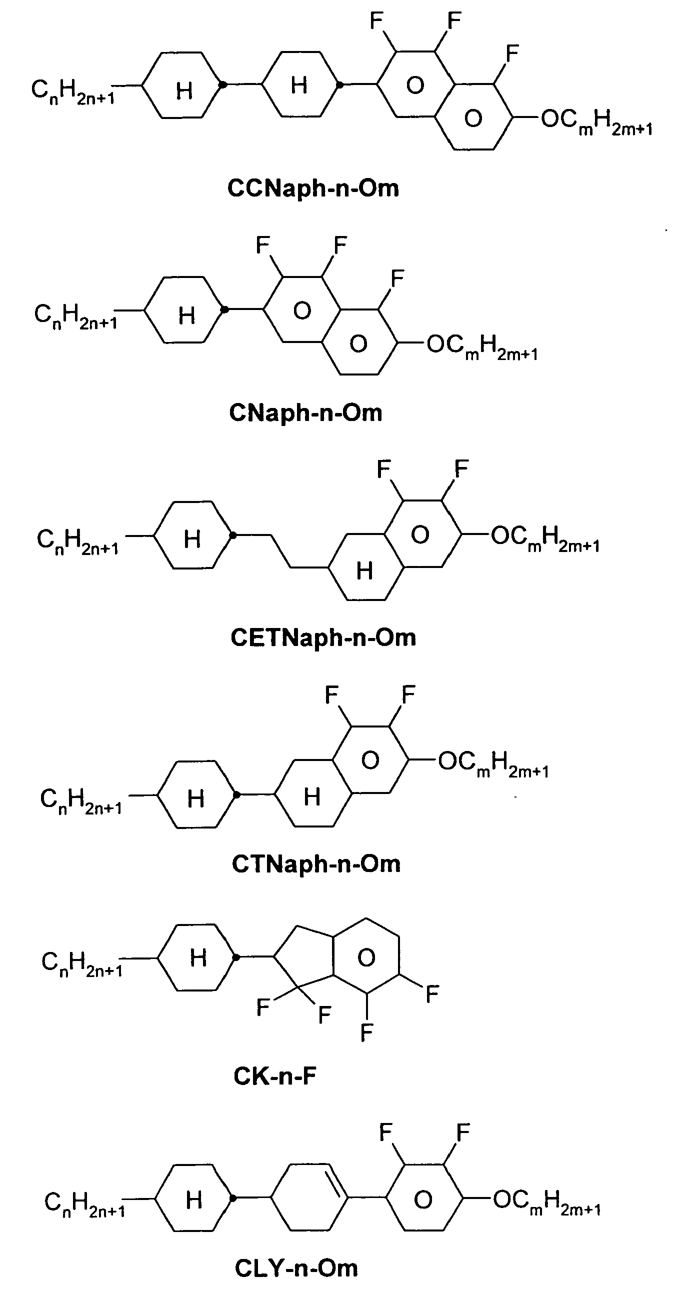

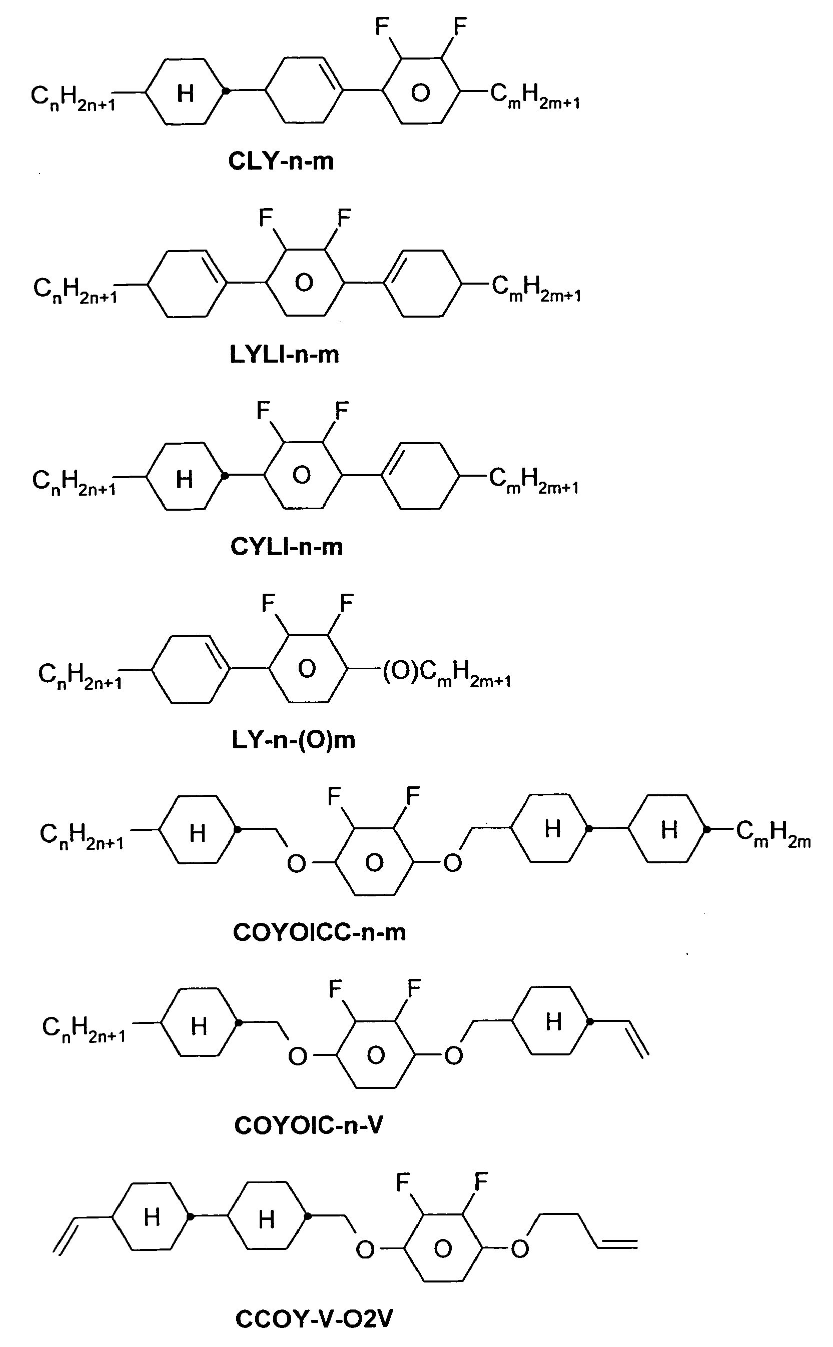

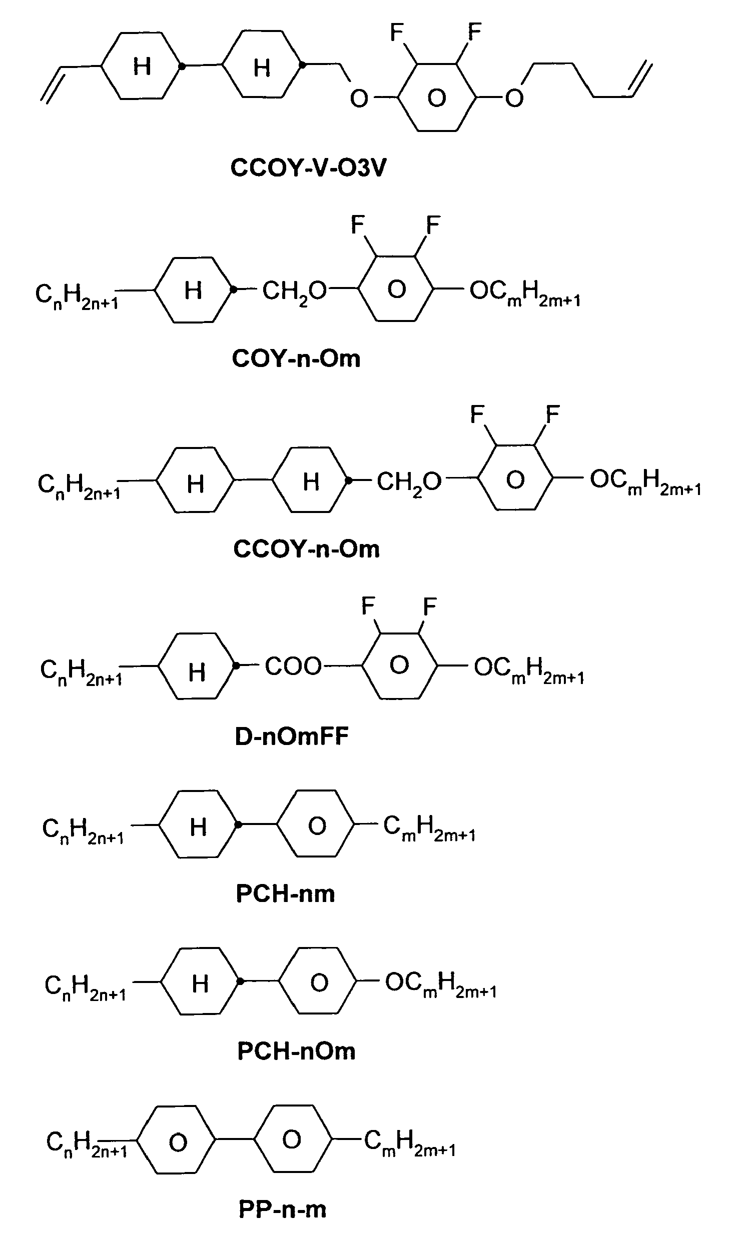

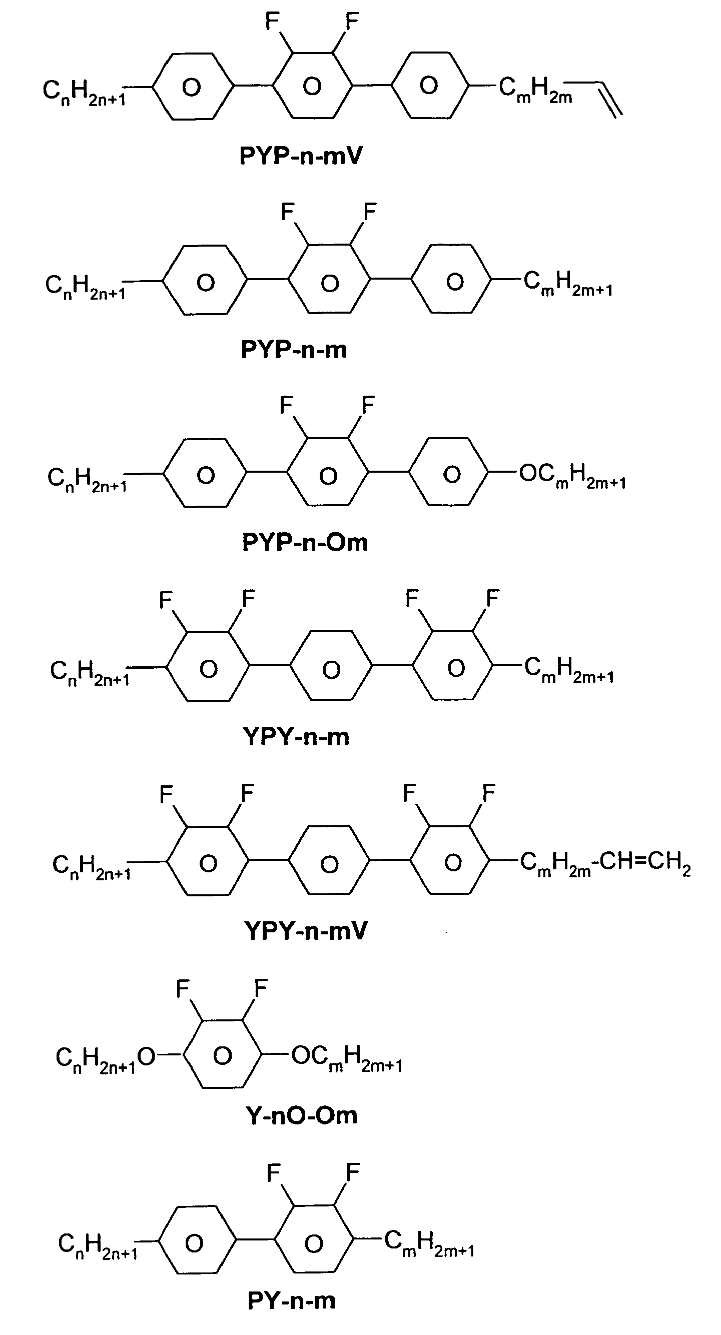

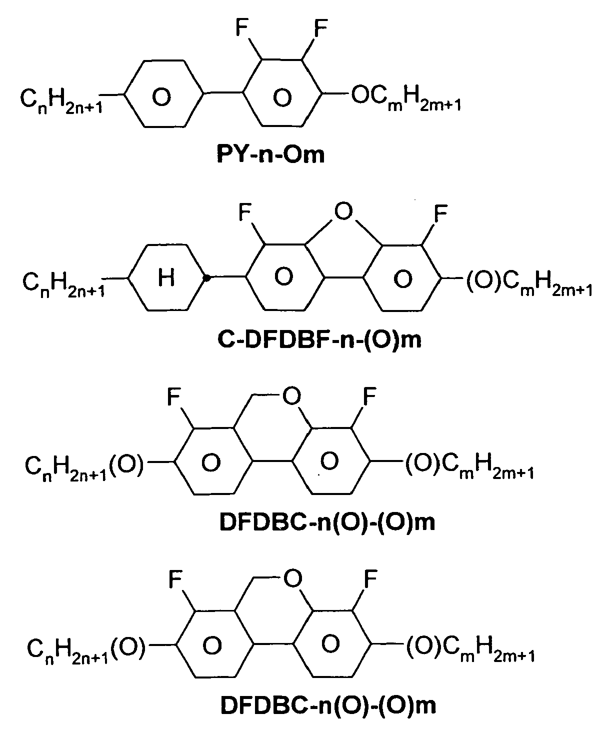

Particular preference is given to liquid-crystalline mixtures which, besides the compounds of the formulae IA and IB, comprise at least one, two, three, four or more compounds from Table B.

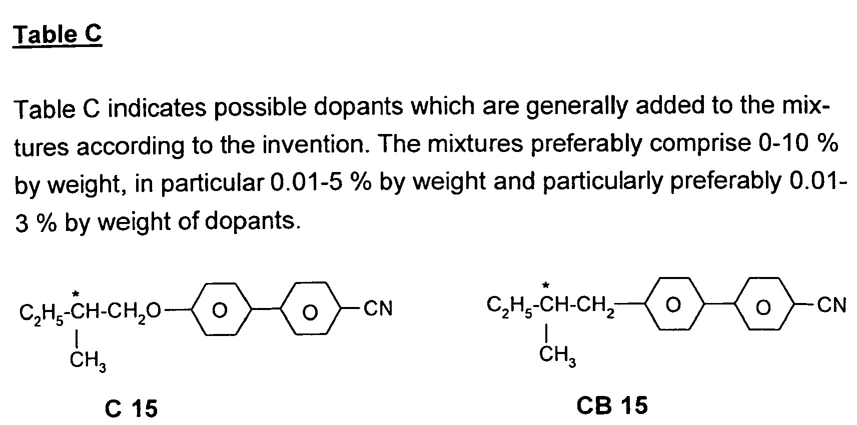

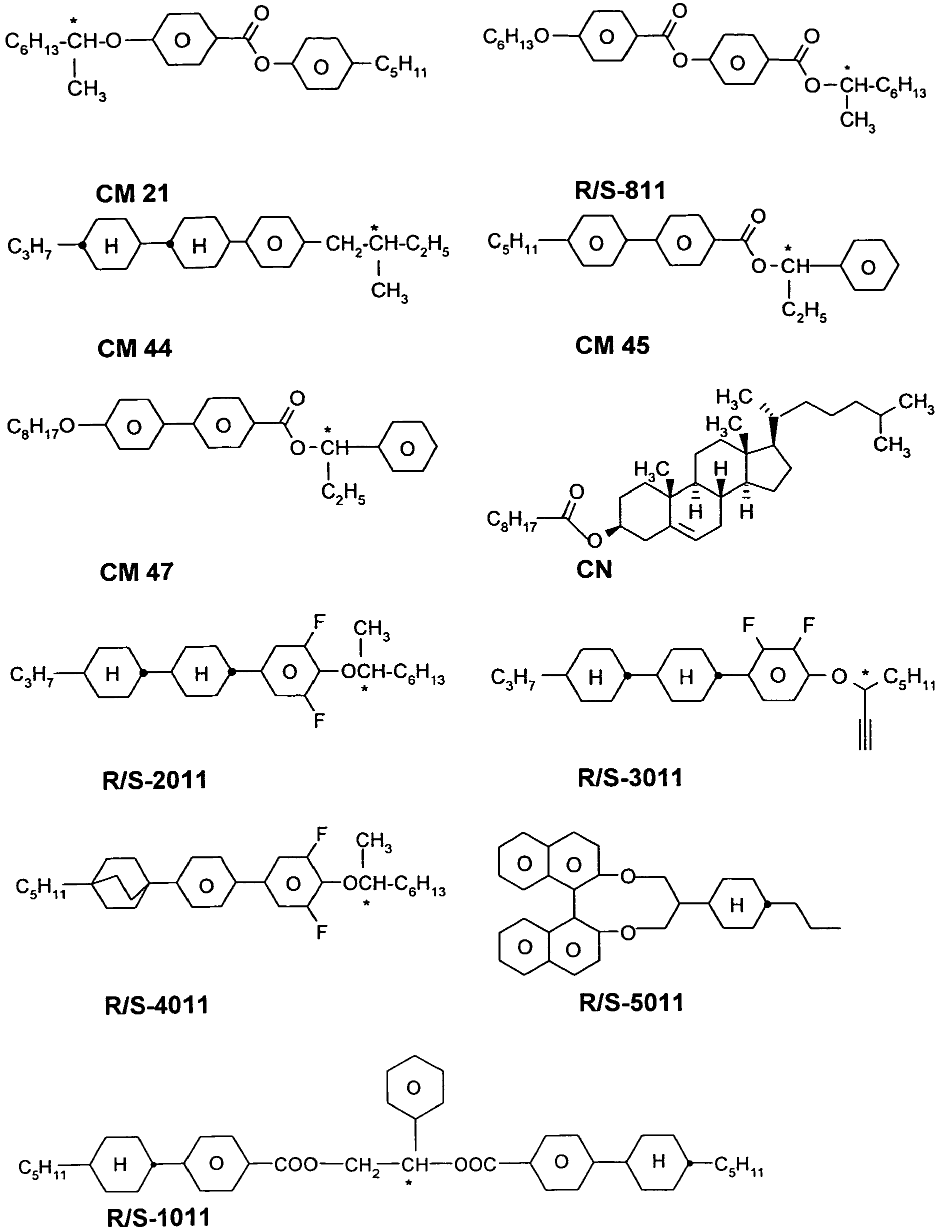

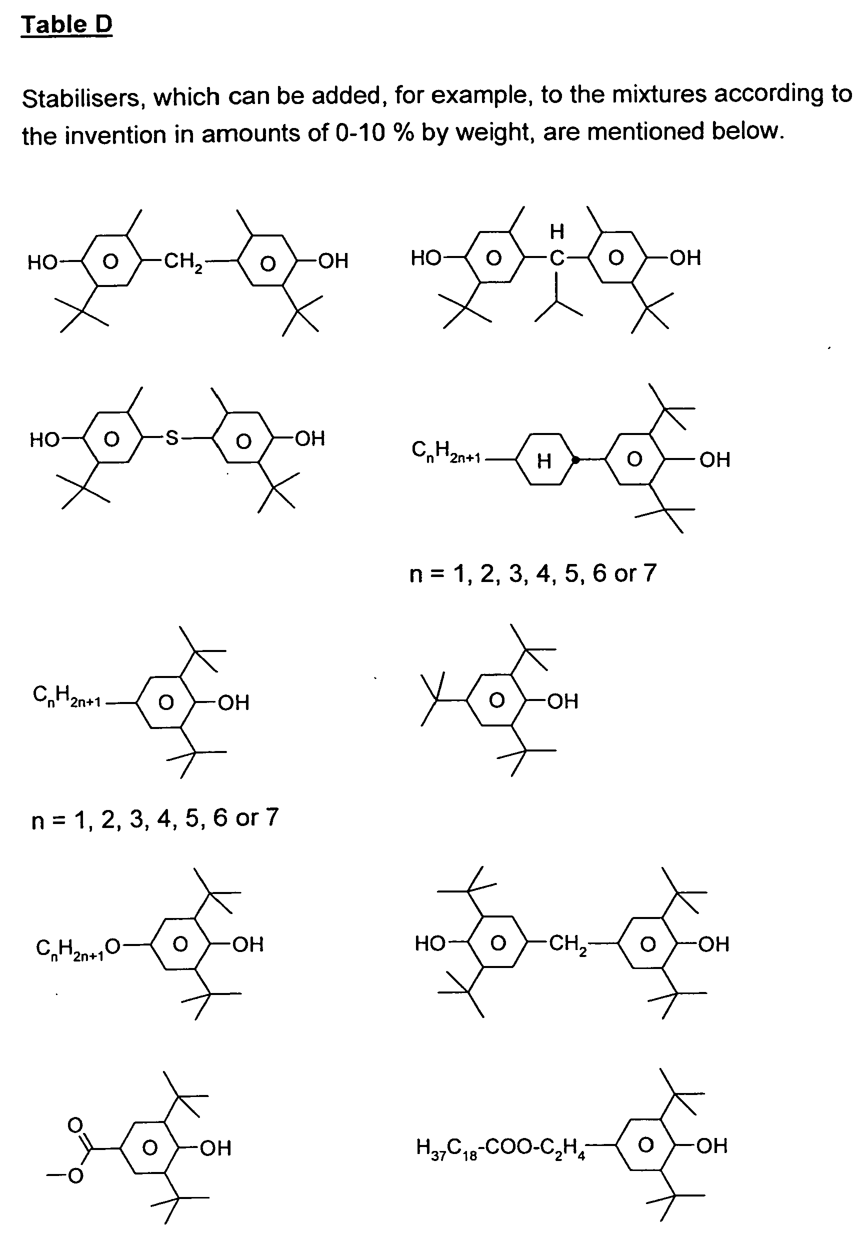

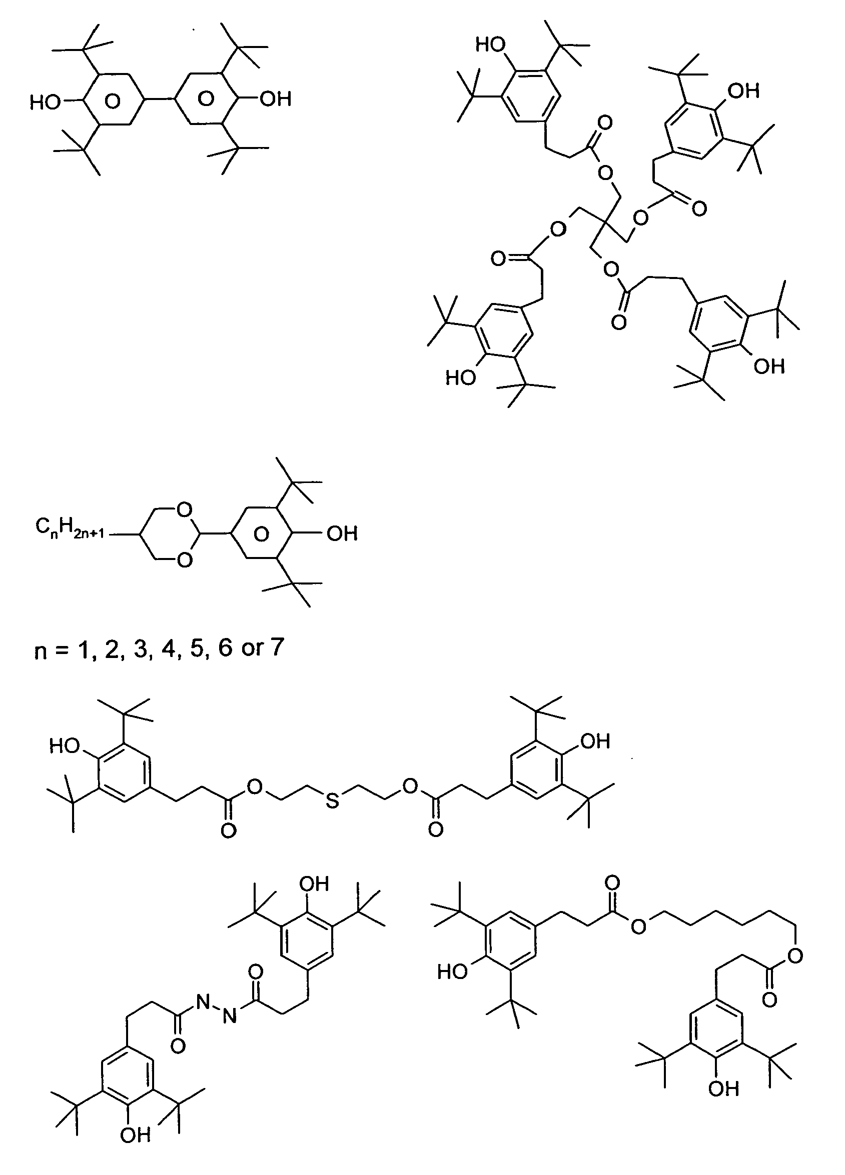

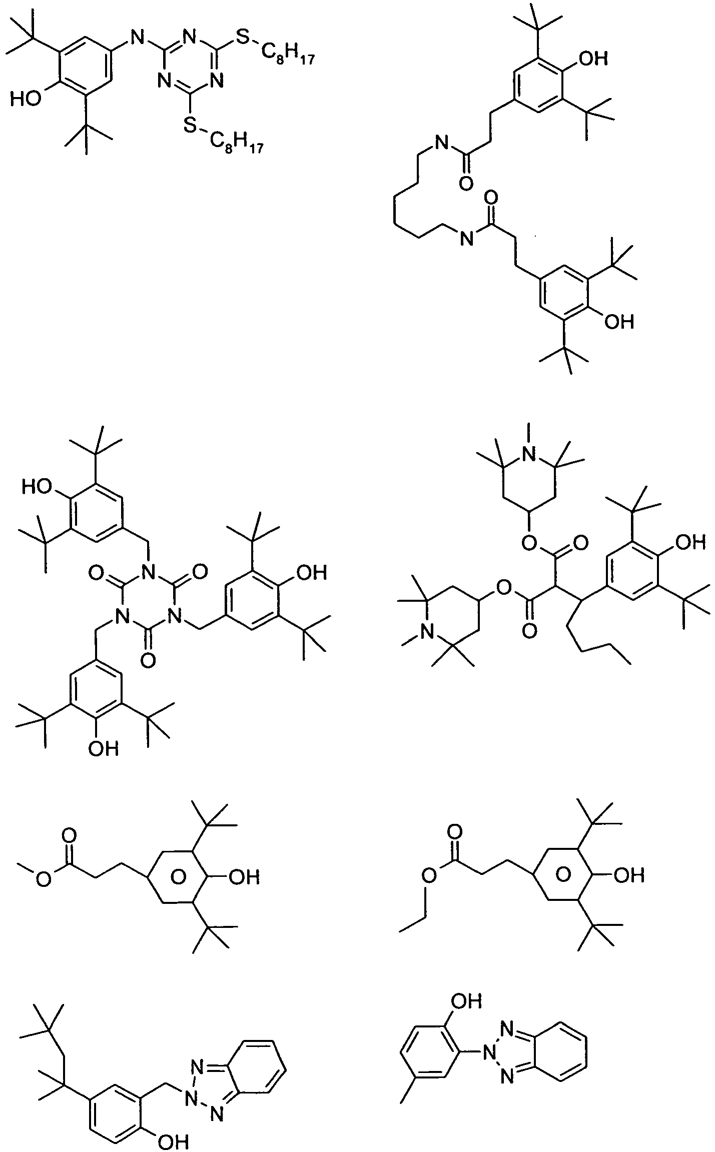

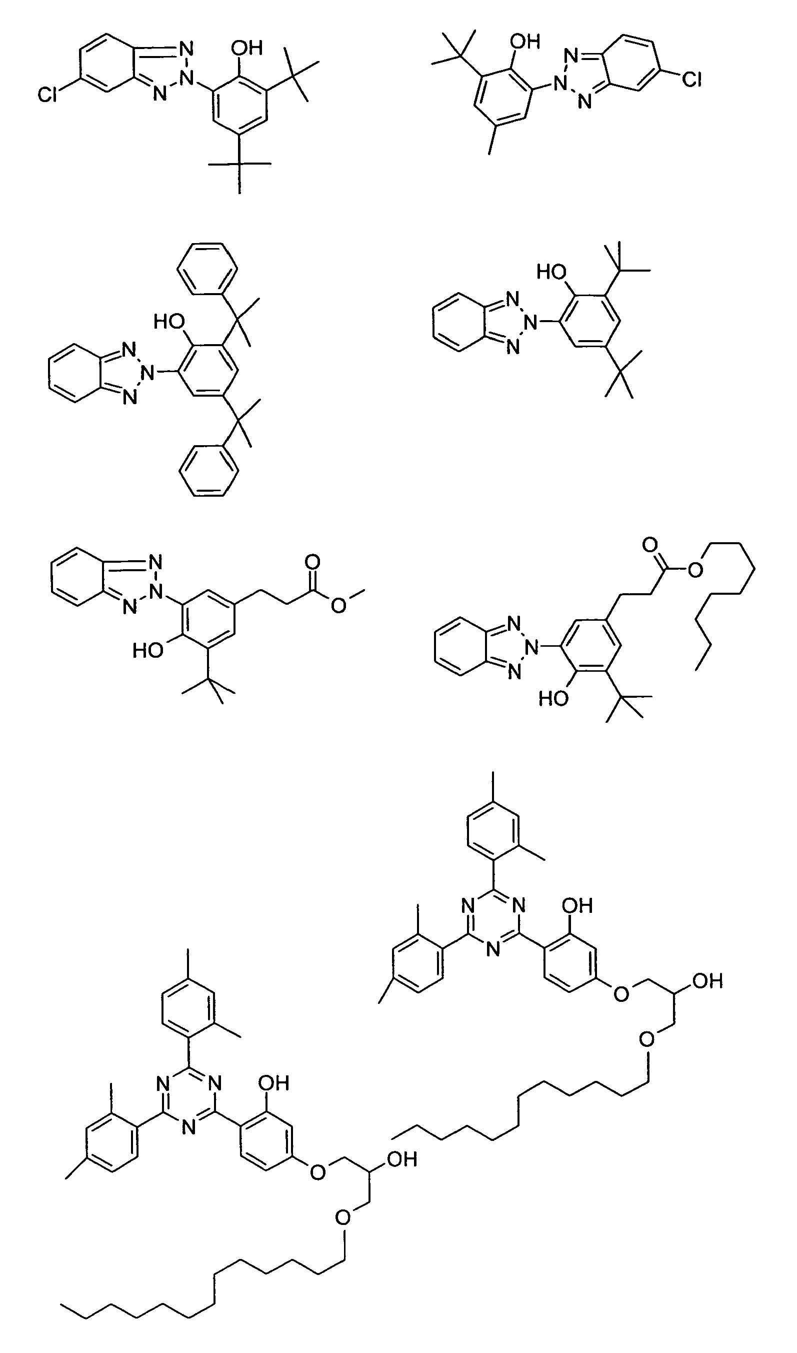

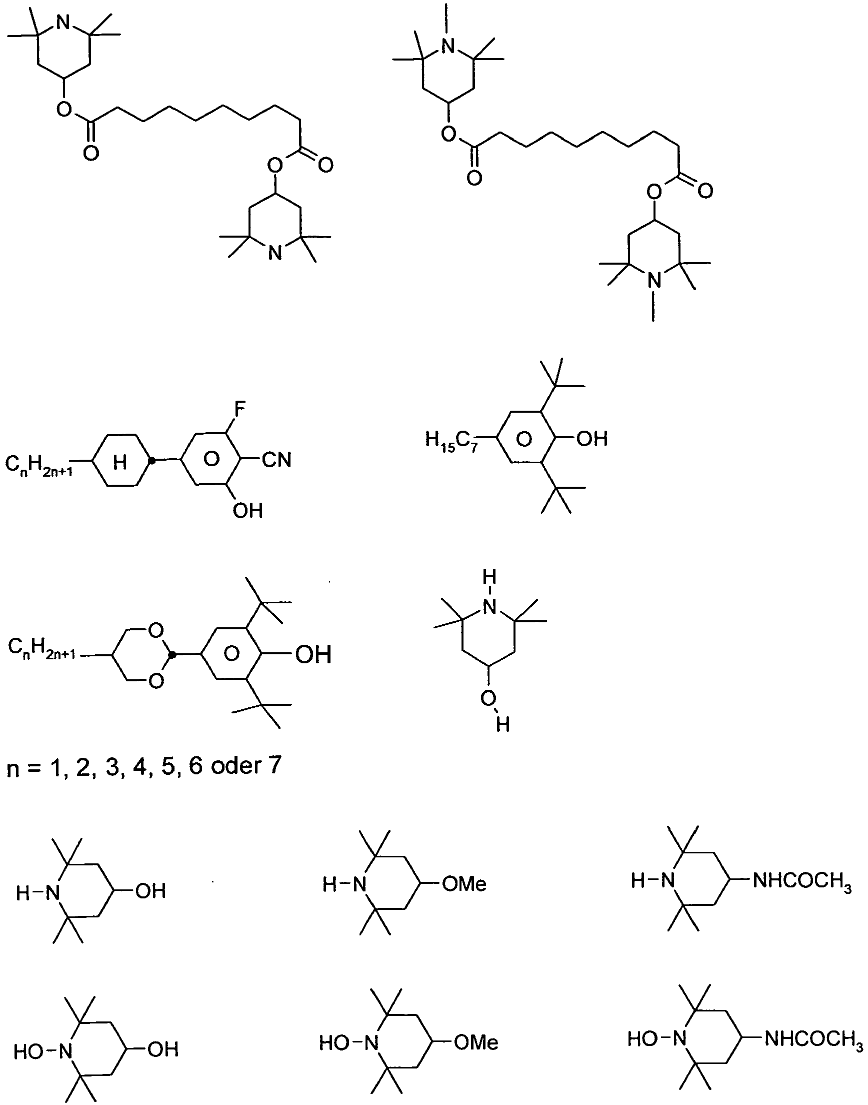

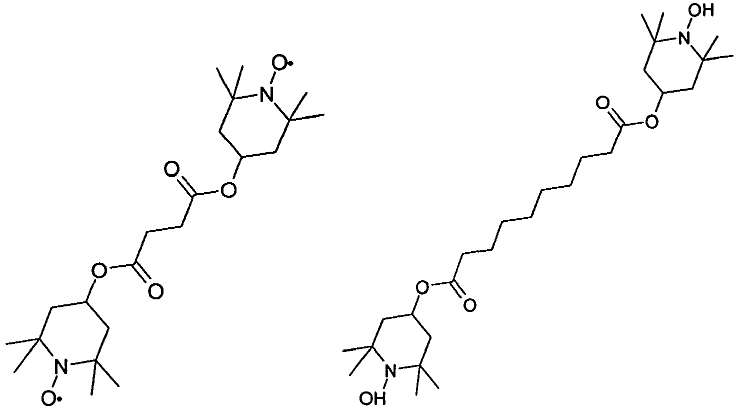

**Table E**

| Polymerisable compounds, which can be added, for example, to the mixtures according to the invention in amounts of 0.01 - 1 % by weight, are mentioned below. It may also be necessary to add an initiator for the polymerisation, preferably in amounts of 0 - 1 %. | |
|---|---|
| 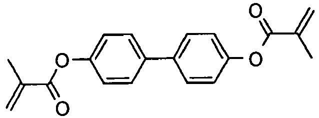 | RM-1 |
| 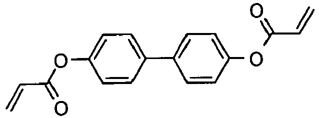 | RM-2 |
| 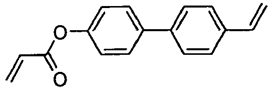 | RM-3 |
| 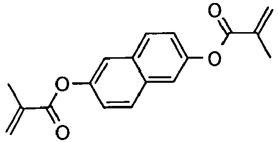 | RM-4 |
| 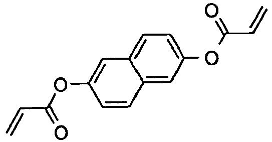 | RM-5 |
| 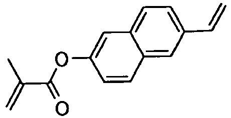 | RM-6 |
| 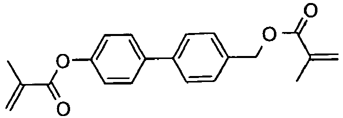 | RM-7 |
| 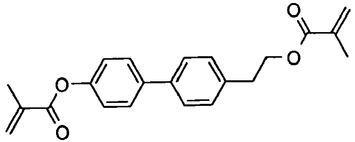 | RM-8 |
| 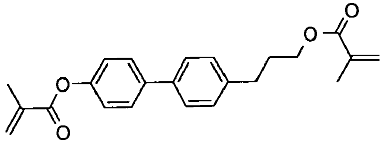 | RM-9 |
| 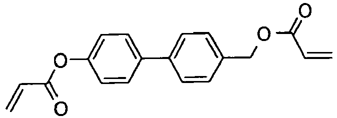 | RM-10 |
| 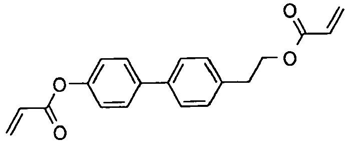 | RM-11 |
| 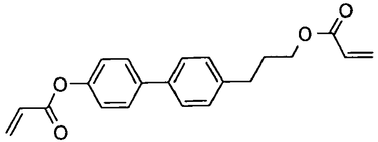 | RM-12 |
| 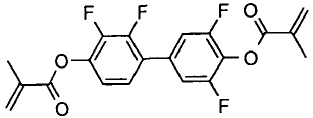 | RM-13 |
| 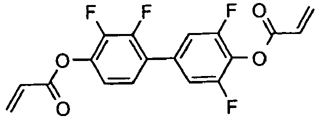 | RM-14 |
| 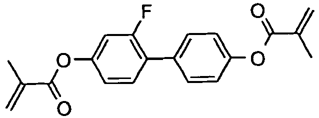 | RM-15 |
| 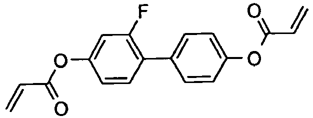 | RM-16 |
| 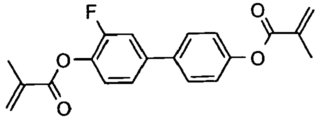 | RM-17 |
| 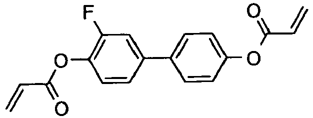 | RM-18 |
| 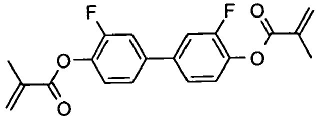 | RM-19 |
| 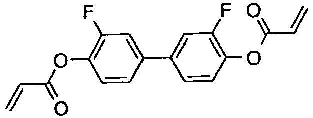 | RM-20 |
| 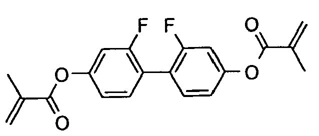 | RM-21 |
| 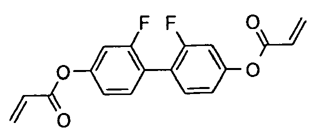 | RM-22 |
| 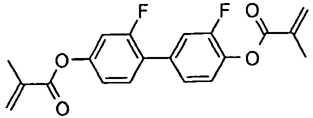 | RM-23 |
| 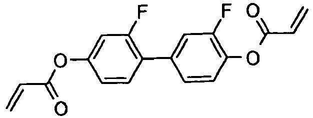 | RM-24 |
| 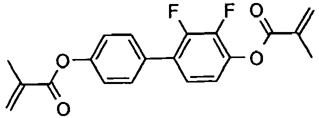 | RM-25 |
| 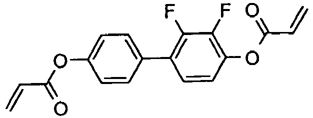 | RM-26 |
| 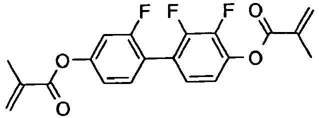 | RM-27 |
| 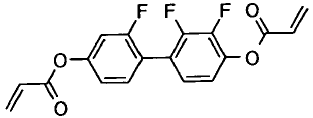 | RM-28 |
| 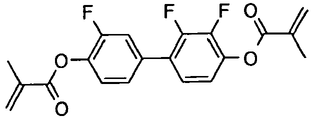 | RM-29 |
| 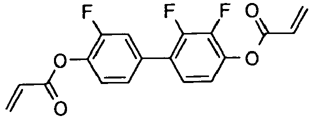 | RM-30 |
| 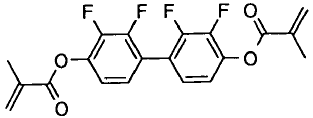 | RM-31 |
| 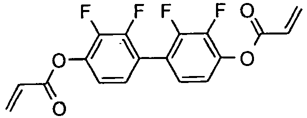 | RM-32 |
| 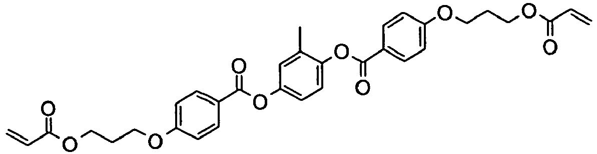 | RM-33 |
| 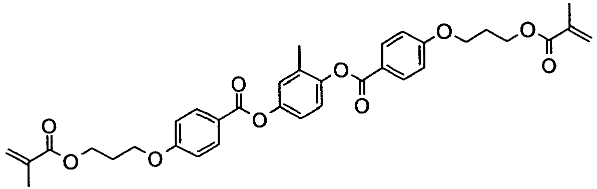 | RM-34 |
| 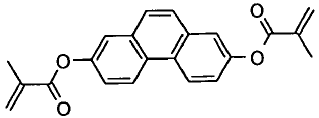 | RM-35 |
| 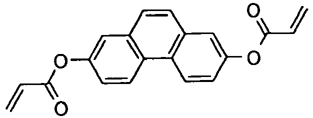 | RM-36 |
| 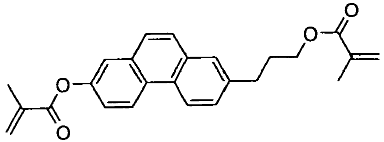 | RM-37 |
| 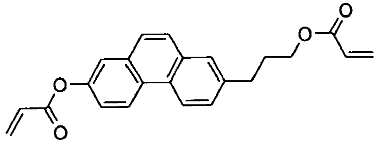 | RM-38 |
| 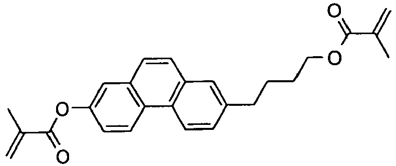 | RM-39 |
| 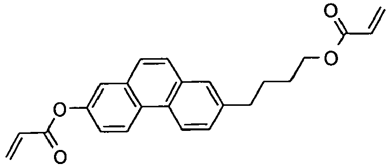 | RM-40 |
| 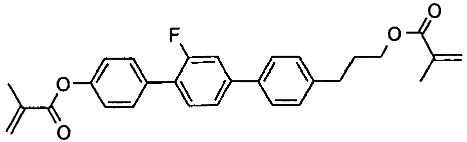 | RM-41 |
| 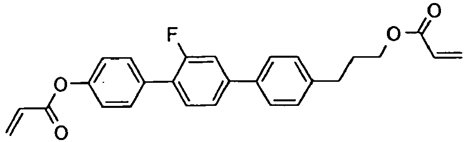 | RM-42 |
| 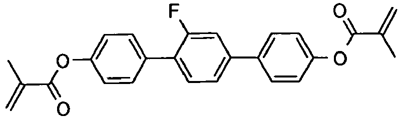 | RM-43 |
| 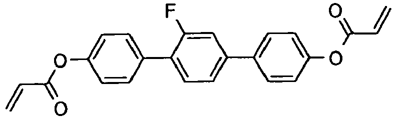 | RM-44 |
| 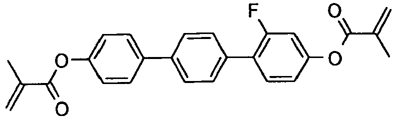 | RM-45 |
| 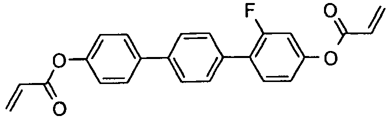 | RM-46 |
| 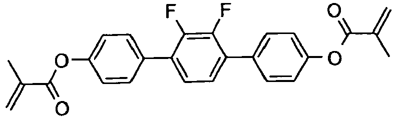 | RM-47 |
| 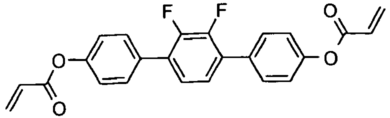 | RM-48 |
| 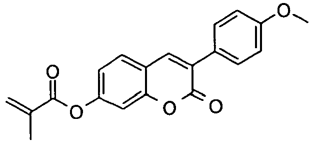 | RM-49 |
| 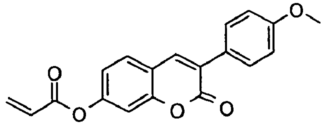 | RM-50 |
| 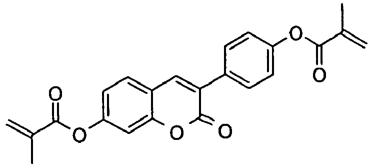 | RM-51 |
| 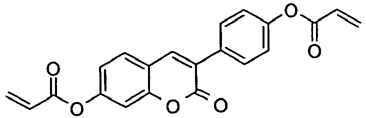 | RM-52 |
| 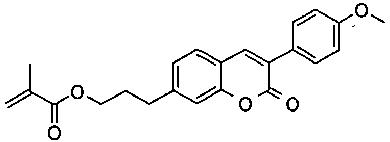 | RM-53 |
| 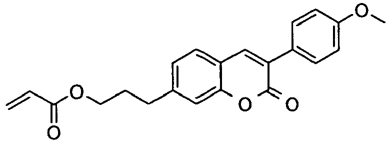 | RM-54 |
| 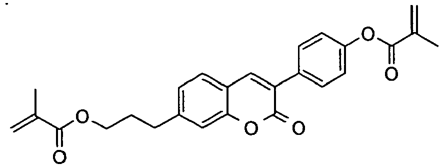 | RM-55 |
| 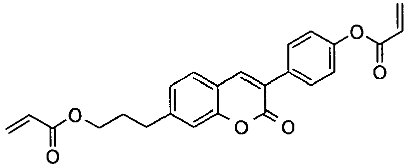 | RM-56 |
| 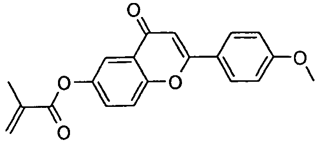 | RM-57 |
| 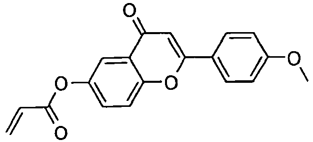 | RM-58 |
| 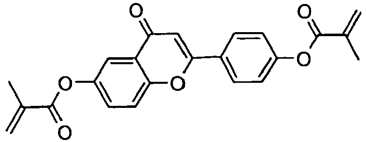 | RM-59 |
| 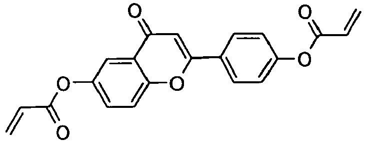 | RM-60 |
| 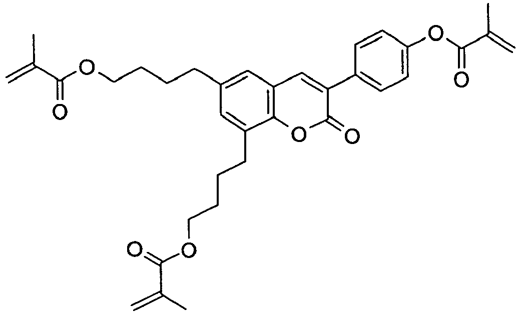 | RM-61 |
| 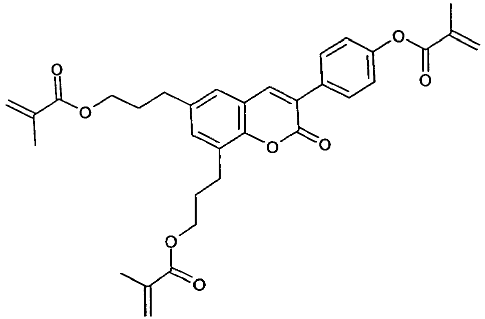 | RM-62 |
| 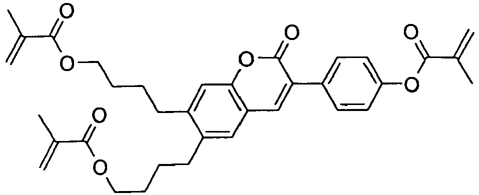 | RM-63 |
| 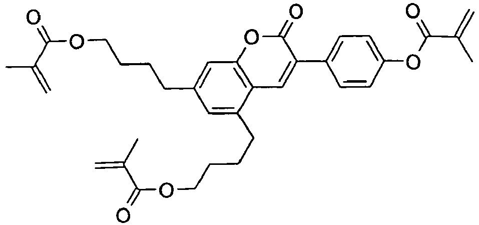 | RM-64 |
| 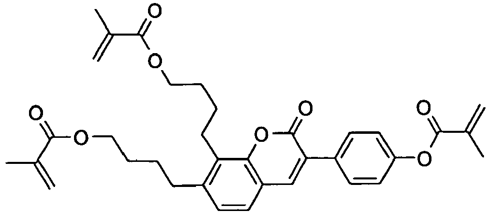 | RM-65 |
| 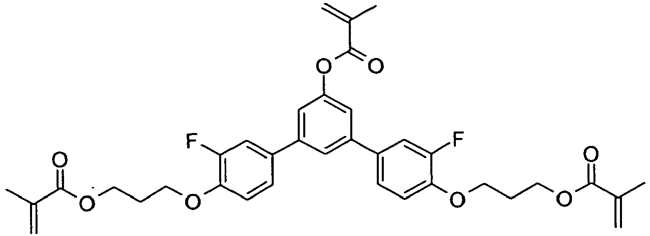 | RM-66 |
| 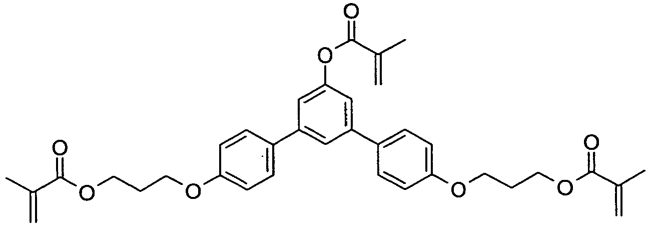 | RM-67 |
| 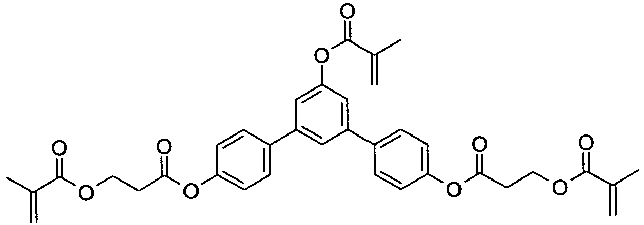 | RM-68 |
| 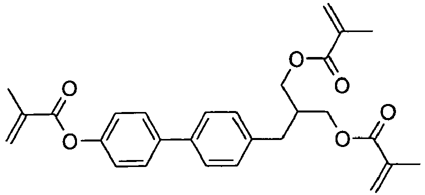 | RM-69 |
| 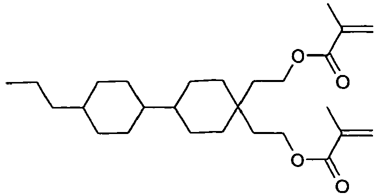 | RM-70 |
| 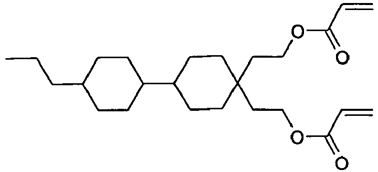 | RM-71 |
| 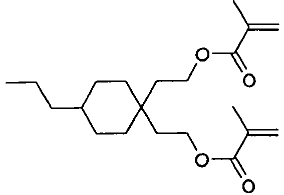 | RM-72 |
| 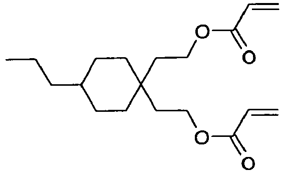 | RM-73 |
| 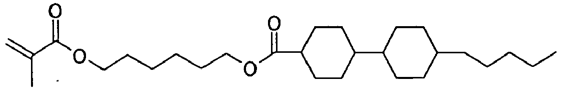 | RM-74 |
| 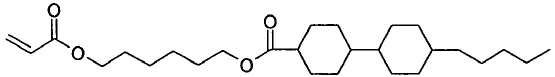 | RM-75 |
| 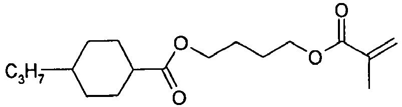 | RM-76 |
| 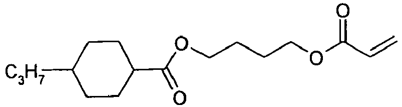 | RM-77 |
| 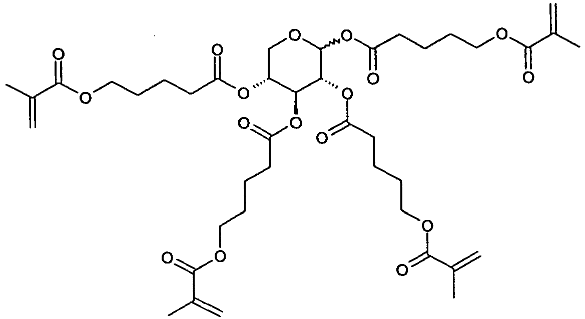 | RM-78 |
| 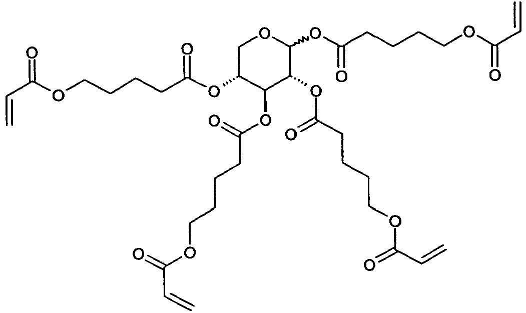 | RM-79 |
| 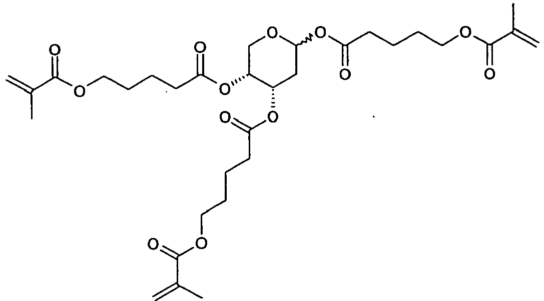 | RM-80 |
| 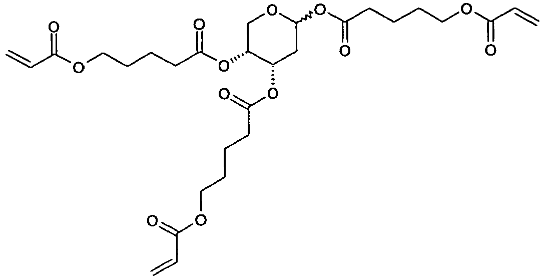 | RM-81 |
| 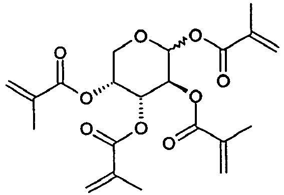 | RM-82 |
| 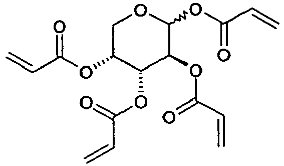 | RM-83 |
| 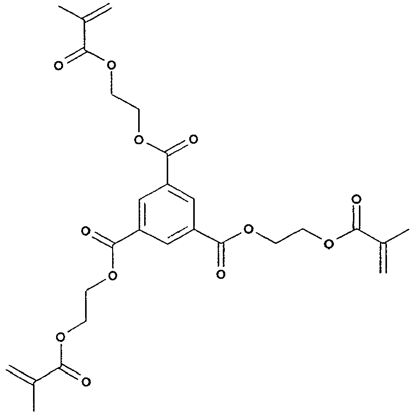 | RM-84 |
| 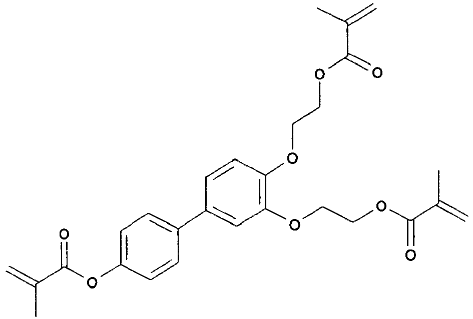 | RM-85 |
| 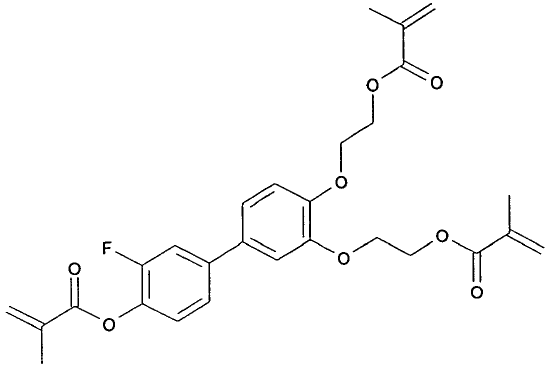 | RM-86 |

The following mixture examples are intended to explain the invention without limiting it.

Above and below, percentage data denote per cent by weight. All temperatures are indicated in degrees Celsius. m.p. denotes melting point, cl.p. = clearing point. Furthermore, C = crystalline state, N = nematic phase, S = smectic phase and I = isotropic phase. The data between these symbols represent the transition temperatures. Furthermore,
- Δn denotes the optical anisotropy at 589 nm and 20°C,
- γ₁ denotes the rotational viscosity (mPa·s) at 20°C,
- Δε denotes the dielectric anisotropy at 20°C and 1 kHz (Δε = ε∥ - ε⊥, where ε_{∥} denotes the dielectric constant parallel to the longitudinal axes of the molecules and ε_{⊥} denotes the dielectric constant perpendicular thereto),
- V₁₀ denotes the voltage (V) for 10 % transmission (viewing angle perpendicular to the plate surface), (threshold voltage), determined in a TN cell (90 degree twist) at the 1 st minimum (i.e. at a d · Δn value of 0.5 µm) at 20 °C,
- V₀ denotes the capacitively determined Freedericks threshold voltage in an antiparallel-rubbed cell at 20 °C.

All physical properties are determined in accordance with "Merck Liquid Crystals, Physical Properties of Liquid Crystals", status Nov. 1997, Merck KGaA, Germany, and apply for a temperature of 20 °C, unless explicitly indicated otherwise.

### Examples

**Mixture M1**

| | | | |
|---|---|---|---|
| CC-3-V | 16.87% | Clearing Point [°C]: | 82.0 |
| CC-3-V1 | 4.26% | Δn [589 nm, 20°C]: | 0.108 |
| CCQU-2-F | 6.39% | Δε [1 kHz, 20°C]: | 9.3 |
| CCQU-3-F | 9.23% | ε_{⊥} [1 kHz, 20 °C]: | 8.37 |
| CCP-2F.F.F | 4.26% | K₁ [20 °C]: | 12.5 |
| PUQU-3-F | 11.36 % | K₃ [20 °C] | 13.4 |
| CCP-V-1 | 9.94% | γ₁ [20 °C, m·Pas]: | 112 |
| APUQU-3-F | 8.52% | LTS Bulk -25 °C | > 1000 h |
| PGUQU-3-F | 5.68% | LTS Bulk -30 °C | > 1000 h |
| CY-3-O2 | 6.96% | | |
| CY-5-O2 | 1.015% | | |
| CLY-3-O2 | 2.03% | | |
| CCY-3-O2 | 2.90% | | |
| CCY-3-O3 | 1.305% | | |
| CCY-4-O2 | 1.16% | | |
| CPY-2-O2 | 2.90% | | |
| CPY-3-O2 | 2.32 % | | |
| PYP-2-3 | 1.74% | | |
| PYP-2-4 | 1.16 % | | |

**Mixture M2**

| | | | |
|---|---|---|---|
| CY-3-O2 | 8.50 % | Clearing Point [°C]: | 80.0 |
| CCY-3-O2 | 6.00 % | Δn [589 nm, 20°C]: | 0.109 |
| CPY-2-O2 | 6.00 % | Δε [1 kHz, 20°C]: | 9.5 |
| PYP-2-3 | 3.00 % | ε_{⊥} [1 kHz, 20 °C]: | 8.97 |
| CC-3-V | 30.50 % | K₁ [20 °C]: | 12.5 |
| CLY-3-O2 | 5.00% | K₃ [20 °C]: | 13.5 |
| CCQU-3-F | 11.50 % | γ₁ [20 °C, mPa·s]: | 105 |
| APUQU-2-F | 8.50 % | | |
| APUQU-3-F | 8.00% | | |
| PGUQU-3-F | 7.50% | | |
| PUQU-3-F | 5.50 % | | |

**Mixture M3**

| | | | |
|---|---|---|---|
| CCY-3-O2 | 5.00% | Clearing Point [°C]: | 78.5 |
| CPY-2-O2 | 8.00% | Δn [589 nm, 20°C]: | 0.109 |
| CC-3-V | 31.00% | Δε [1 kHz, 20°C]: | 9.7 |
| CLY-3-O2 | 8.00% | ε_{⊥} [1 kHz, 20 °C]: | 9.58 |
| CCQU-3-F | 7.50% | K₁ [20 °C]: | 12.6 |
| APUQU-2-F | 11.50% | K₃ [20 °C]: | 13.2 |
| APUQU-3-F | 12.00% | γ₁ [20 °C, mPa·s]: | 105 |
| DPGU-4-F | 3.00% | | |
| PUQU-3-F | 5.50% | | |
| PY-3-O2 | 5.50% | | |
| Y-40-O4 | 3.00% | | |

**Mixture M4**

| | | | |
|---|---|---|---|
| CY-3-O2 | 5.50 % | Clearing Point [°C]: | 78.5 |
| CCY-3-O2 | 4.50 % | Δn [589 nm, 20°C]: | 0.109 |
| CPY-2-O2 | 5.50 % | Δε [1 kHz, 20°C]: | 9.3 |
| PYP-2-3 | 3.00 % | ε_{⊥} [1 kHz, 20 °C]: | 8.95 |
| CC-3-V | 30.50 % | K₁ [20 °C]: | 12.4 |
| CLY-3-O2 | 7.00 % | K₃ [20 °C]: | 13.4 |
| CCQU-3-F | 8.00 % | γ₁ [20 °C, mPa·s]: | 103 |
| APUQU-2-F | 12.00 % | | |
| APUQU-3-F | 12.00 % | | |
| PUQU-3-F | 5.50 % | | |
| BCH-3F.F.F | 3.50 % | | |
| PY-3-O2 | 3.00 % | | |

**Mixture M5**

| | | | |
|---|---|---|---|
| CCY-3-O2 | 5.00 % | Clearing Point [°C]: | 78.0 |
| CPY-2-O2 | 8.00 % | Δn [589 nm, 20°C]: | 0.109 |
| CC-3-V | 31.00 % | Δε [1 kHz, 20°C]: | 9.9 |
| CLY-3-O2 | 8.00 % | ε_{⊥} [1 kHz, 20 °C]: | 9.55 |
| CCQU-3-F | 8.00 % | K₁ [20 °C]: | 12.5 |
| APUQU-2-F | 11.50 % | K₃ [20 °C]: | 13.3 |
| APUQU-3-F | 12.00 % | γ₁ [20 °C, mPa·s]: | 104 |
| PGUQU-3-F | 3.00 % | | |
| PUQU-3-F | 5.50 % | | |
| PY-3-O2 | 5.50 % | | |
| Y-4O-O4 | 2.50 % | | |

**Mixture M6**

| | | | |
|---|---|---|---|
| CC-3-V | 33.00 % | Clearing Point [°C]: | 77.5 |
| CCQU-3-F | 8.50% | Δn [589 nm, 20°C]: | 0.109 |
| APUQU-2-F | 10.00% | Δε [1 kHz, 20°C]: | 9.5 |
| APUQU-3-F | 10.00 % | ε_{⊥}[1 kHz, 20 °C]: | 8.25 |
| PUQU-3-F | 5.50% | K₁ [20 °C]: | 12.1 |
| PYP-2-3 | 4.00 % | K₃ [20 °C]: | 12.8 |
| CLY-3-O2 | 8.00 % | γ₁ [20 °C, mPa·s]: | 90 |
| CPY-2-O2 | 7.50 % | | |
| BCH-3F.F.F | 12.00 % | | |
| Y-4O-O4 | 1.50% | | |

**Mixture M7**

| | | | |
|---|---|---|---|
| CCY-3-O2 | 5.00 % | Clearing Point [°C]: | 79.5 |
| CPY-2-O2 | 8.00 % | Δn [589 nm, 20°C]: | 0.109 |
| CC-3-V | 31.00 % | Δε [1 kHz, 20°C]: | 9.4 |
| CLY-3-O2 | 8.00 % | ε_{⊥} [1 kHz, 20 °C]: | 9.36 |
| CCQU-3-F | 7.50 % | K₁ [20 °C]: | 12.6 |
| APUQU-2-F | 11.50 % | K₃ [20 °C]: | 13.4 |
| APUQU-3-F | 12.00 % | γ₁ [20 °C, mPa·s]: | 104 |
| CPGU-3-OT | 3.00 % | | |
| PUQU-3-F | 6.00 % | | |
| PY-3-O2 | 5.00 % | | |
| Y-4O-O4 | 3.00 % | | |

**Mixture M8**

| | | | |
|---|---|---|---|
| CCY-3-O2 | 5.00 % | Clearing Point [°C]: | 77.0 |
| CPY-2-O2 | 8.00 % | Δn [589 nm, 20°C]: | 0.109 |
| CC-3-V | 27.00 % | Δε [1 kHz, 20°C]: | 9.4 |
| PCH-301 | 5.00 % | ε_{⊥} [1 kHz, 20 °C]: | 9.49 |
| CLY-3-O2 | 8.00 % | K₁ [20 °C]: | 12.1 |
| CCQU-3-F | 8.00 % | K₃ [20 °C]: | 12.9 |
| APUQU-2-F | 11.50 % | γ₁ [20 °C, mPa·s]: | 107 |
| APUQU-3-F | 11.50 % | | |
| DPGU-4-F | 3.00 % | | |
| PUQU-3-F | 5.50 % | | |
| PY-3-O2 | 4.50 % | | |
| Y-40-O4 | 3.00 % | | |

**Mixture M9**

| | | | |
|---|---|---|---|
| CY-3-O2 | 6.50 % | Clearing Point [°C]: | 77.0 |
| CLY-3-O2 | 6.00 % | Δn [589 nm, 20°C]: | 0.111 |
| CCY-3-O2 | 8.00 % | Δε [1 kHz, 20°C]: | 9.5 |
| CPY-2-O2 | 7.00 % | ε_{⊥} [1 kHz, 20 °C]: | 9.88 |
| CPY-3-O2 | 5.50 % | K₁ [20 °C]: | 12.1 |
| CC-3-V | 27.00 % | K₃ [20 °C]: | 13.2 |
| PUQU-3-F | 15.00 % | γ₁ [20 °C, mPa·s]: | 114 |
| APUQU-2-F | 10.00 % | | |
| APUQU-3-F | 10.00 % | | |
| CCQU-3-F | 4.00 % | | |
| Y-4O-O4 | 1.00 % | | |

**Reference Mixture M10**

| | | | | |
|---|---|---|---|---|
| CC-3-V | 35.00 % | | Clearing Point [°C]: | 80 |
| CC-3-V1 | 11.00 % | | Δn [589 nm, 20°C]: | 0.1058 |
| CCP-V-1 | 4.50 % | | Δε [1 kHz, 20°C]: | 5.4 |
| PGP-2-2V | 10.00 % | | ε_{⊥} [1 kHz, 20 °C]: | 3.8 |
| CCP-3OCF₃ | 8.00 % | | K₁ [20 °C]: | 13.2 |
| APUQU-2-F | 7.00 % | | K₃ [20 °C]: | 14.4 |
| APUQU-3-F | 8.00 % | | γ₁ [20 °C, mPa·s]: | 69 |
| -RGUQU-3-F | 3.00 % | | V₀ [V]: | 1.65 |
| CPGU-3-OT | 3.00 % | | | |
| CY-3-O2 | 10.00 % | | | |

**Preference Mixture M11**

| | | | | |
|---|---|---|---|---|
| CC-3-V | 33.50 % | | Clearing Point [°C]: | 79.5 |
| CCP-V-1 | 12.50 % | | Δn [589 nm, 20°C]: | 0.1077 |
| PGP-2-2V | 6.50 % | | Δε [1 kHz, 20°C]: | 5.5 |
| CCP-3-1 | 7.00 % | | ε_{⊥} [1 kHz, 20 °C]: | 4.3 |
| CCP-3-3 | 6.00 % | | K₁ [20 °C]: | 12.8 |
| CCP-3OCF₃ | 2.00 % | | K₃ [20 °C] | 13.7 |
| APUQU-3-F | 8.00 % | | γ1 [20 °C, mPa·s]: | 69 |
| PGUQU-3-F | 3.00 % | | V₀ [V] | 1.61 |
| PGUQU-4-F | 7.00 % | | | |
| CPGU-3-OT | 5.00 % | | | |
| Y-4O-O4 | 10.00 % | | | |

**Reference Mixture M12**

| | | | | |
|---|---|---|---|---|
| CC-3-V | 29.50 % | | Clearing Point [°C]: | 80 |
| CC-3-V1 | 6.00 % | | Δn [589 nm, 20°C]: | 0.1056 |
| CCP-V-1 | 12.00 % | | Δε [1 kHz, 20°C]: | 6.1 |
| CCP-3-1 | 5.00 % | | ε_{⊥} [1 kHz, 20 °C]: | 4.3 |
| CCP-30CF₃ | 8.00 % | | K₁ [20 °C]: | 13.7 |
| CCP-50CF₃ | 2.00 % | | K₃ [20 °C]: | 14.8 |
| APUQU-2-F | 8.00 % | | γ₁ [20 °C, mPa·s]: | 74 |
| APUQU-3-F | 8.00 % | | V₀ [V] | 1.57 |
| PGUQU-3-F | 3.00 % | | | |
| PGUQU-4-F | 3.50 % | | | |
| PY-3-O2 | 15.00 % | | | |

**Reference Mixture M13**

| | | | | |
|---|---|---|---|---|
| APUQU-2-F | 6.00 % | | Clearing Point [°C]: | 80.2 |
| APUQU-3-F | 6.00 % | | Δn [589 nm, 25°C]: | 0.1043 |
| BCH-32 | 4.50 % | | Δε [1 kHz, 25°C]: | 8.4 |
| CC-3-V | 31.00 % | | ε_{⊥} [1 kHz, 25 °C]: | 4.0 |
| CC-3-V1 | 3.50 % | | K₁ [25 °C]: | 11.6 |
| CCP-3-1 | 3.50 % | | K₃ [25 °C]: | 13.1 |
| CCP-V-1 | 18.00 % | | γ₁ [25 °C, mPa·s]: | 60 |
| CDUQU-3-F | 4.00 % | | V₀ [V] | 1.24 |
| PGP-2-2V | 2.00 % | | | |
| PGUQU-3-F | 5.50 % | | | |
| PGUQU-4-F | 5.00 % | | | |
| PPGU-3-F | 0.50 % | | | |
| PUQU-3-F | 4.50 % | | | |
| Y-4O-O4 | 6.00 % | | | |

**Reference Mixture M14**

| | | | | |
|---|---|---|---|---|
| CC-3-V | 33.00 % | | Clearing Point [°C]: | 84.8 |
| CCP-3-1 | 6.00 % | | Δn [589 nm, 20°C]: | 0.1182 |
| CCP-30CF₃ | 4.00 % | | Δε [1 kHz, 20°C]: | 8.5 |
| CCP-V-1 | 13.50 % | | ε_{⊥} [1 kHz, 20 °C]: | 3.9 |
| CDUQU-3-F | 1.00 % | | K₁ [20 °C]: | 12.8 |
| CPGP-5-2 | 2.00 % | | K₃ [20°C]: | 14.8 |
| CPGU-3-OT | 4.50 % | | γ₁ [20 °C, mPa·s]: | 82 |
| DPGU-4-F | 5.00 % | | V₀ [V] | 1.29 |
| PGU-2-F | 3.00 % | | | |
| PGUQU-3-F | 7.00 % | | | |
| PPGU-3-F | 1.00 % | | | |
| PUQU-3-F | 12.00 % | | | |
| PY-3-O2 | 8.00 % | | | |

**Reference Mixture M15**

| | | | | |
|---|---|---|---|---|
| PUQU-3-F | 12.00 % | | Clearing Point [°C]: | 86.3 |
| APUQU-3-F | 6.00 % | | Δn [589 nm, 25°C]: | 0.1194 |
| PGUQU-3-F | 5.00 % | | Δ_{ε} [1 kHz, 25°C]: | 6.9 |
| PGUQU-4-F | 5.00 % | | ε_{⊥} [1 kHz, 25 °C]: | 3.8 |
| CC-3-V | 28.00 % | | K₁ [25 °C]: | 13.3 |
| CC-3-V1 | 5.00 % | | K₃ [25 °C]: | 14.2 |
| CCP-V-1 | 12.00 % | | γ₁ [25 °C, mPa·s]: | 70 |
| CCP-V2-1 | 12.00 % | | V₀ [V] | 1.45 |
| PYP-2-3 | 10.00 % | | | |
| CPY-3-O2 | 2.00 % | | | |
| PY-3-O2 | 3.00 % | | | |

**Reference Mixture M16**

| | | | | |
|---|---|---|---|---|
| APUQU-3-F | 6.00 % | | Clearing Point [°C]: | 115.1 |
| CBC-33 | 4.00 % | | Δn [589 nm, 25°C]: | 0.1211 |
| CBC-53F | 3.25 % | | Δε [1 kHz, 25°C]: | 1.8 |
| CC-3-V | 27.25 % | | ε_{⊥} [1 kHz, 25 °C]: | 3.2 |
| CC-3-V1 | 7.00 % | | | |
| CCGU-3-F | 6.00 % | | | |
| CCP-3-1 | 4.00 % | | | |
| CCP-V-1 | 12.00 % | | | |
| CPGP-5-2 | 3.75 % | | | |
| PGP-2-3 | 5.00 % | | | |
| PGP-2-4 | 4.75 % | | | |
| PUQU-3-F | 11.75 % | | | |
| CCY-3-O2 | 5.25 % | | | |

**Preference Mixture M17**

| | | | | |
|---|---|---|---|---|
| APUQU-2-F | 6.00 % | | Clearing Point [°C]: | 80.4 |
| APUQU-3-F | 5.50 % | | Δn [589 nm, 25°C]: | 0.1038 |
| CC-3-V | 32.00 % | | Δε [1 kHz, 25°C]: | 11.4 |
| CCP-3-1 | 7.00 % | | ε_{⊥} [1 kHz, 25 °C]: | 4.1 |
| CCP-30CF₃ | 7.00 % | | K₁ [25°C]: | 11.4 |
| CCP-V-1 | 6.00 % | | K₃ [25 °C]: | 11.7 |
| CDUQU-3-F | 8.00 % | | γ₁ [25 °C, mPa·s]: | 71 |
| CPGU-3-OT | 5.00 % | | V₀ [V] | 1.06 |
| DPGU-4-F | 4.00 % | | | |
| PGU-2-F | 2.50 % | | | |
| PGUQU-3-F | 4.00 % | | | |
| PPGU-3-F | 0.50 % | | | |
| PUQU-3-F | 6.50 % | | | |
| Y-4O-O4 | 6.00 % | | | |

## Claims

1. Liquid-crystalline medium having a positive anisotropy, **characterised in that** it contains one or more compounds of the formula IA, 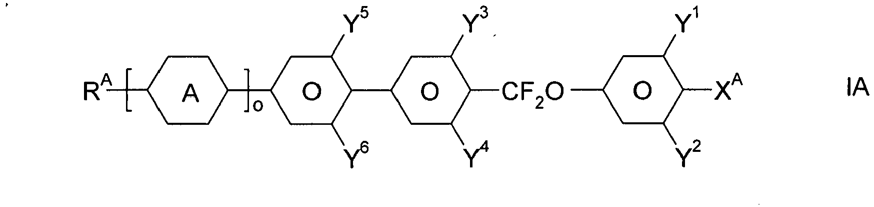 and
at least one compound selected from the group of compounds of the formula IIA, IIB and IIC, 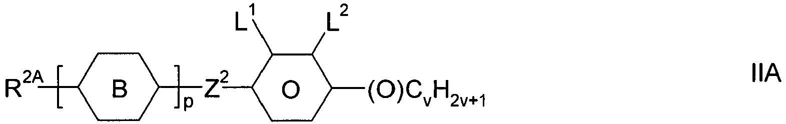 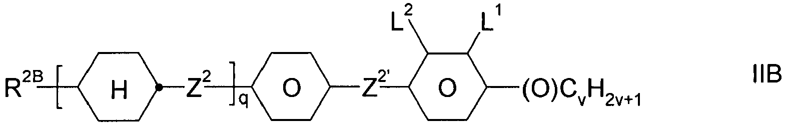 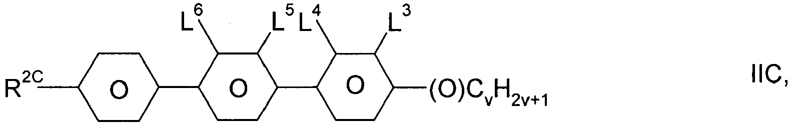 in which
R^{A}, R^{2A}, R^{2B} and R^{2C} each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 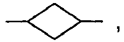 -C≡C-, -CF₂O-, -OCF₂-, -OC-O- or -O-CO- in such a way that O atoms are not linked directly to one another, 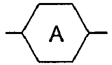 denotes 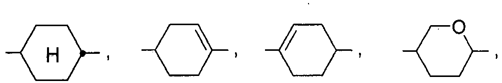 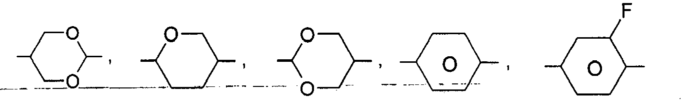 or 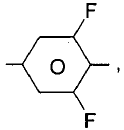 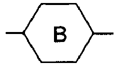 denotes 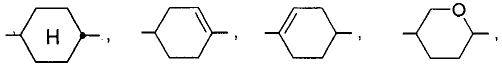 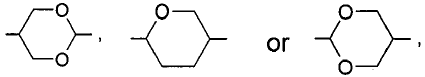
X^{A} denotes F, Cl, CN, SF₅, SCN, NCS, a halogenated alkyl radical, a halogenated alkenyl radical, a halogenated alkoxy radical or a halogenated alkenyloxy radical, each having up to 6 C atoms, and
Y¹⁻⁶ each, independently of one another, denote H or F.
L¹ and L² each, independently of one another, denote F, Cl, CF₃ or CHF₂,
L³⁻⁶ each, independently of one another, denote H, F, Cl, CF₃ or CHF₂, but at least two of L³⁻⁶ denote F, Cl, CF₃ or CHF₂
Z² and Z^{2'} each, independently of one another, denote a single bond, -CH₂CH₂-, -CH=CH-, -C≡C-, -CF₂O-, -OCF₂-, -CH₂O-, -OCH₂-, -COO-, -OCO-, -C₂F₄-, -CF=CF-, -CH=CHCH₂O-,
p denotes 1 or 2, and, in the case where Z² = single bond, p may also denote 0,
o and q each, independently of one another, denote 0 or 1,
(O)CᵥH₂ᵥ₊₁ denotes OCᵥH₂ᵥ₊₁ or CᵥH₂ᵥ₊₁, and
v denotes 1 to 6,
and that
the liquid-crystalline medium contains at least two compounds of the formula IA and at least two compounds of the formula IIA
and that further either
the liquid-crystalline medium contains in total ≥ 20 % by weight of compounds of the formula IA and compounds of the formula IIB, based on the mixture
or
the liquid-crystalline medium contains in total ≥ 20 % by weight of compounds of the formula IA and compounds of the formula IIC, based on the mixture.

2. Liquid-crystalline medium according to Claim 1, **characterised in that** it contains one or more compounds selected from the compounds of the formulae IA-1 to IA-5, 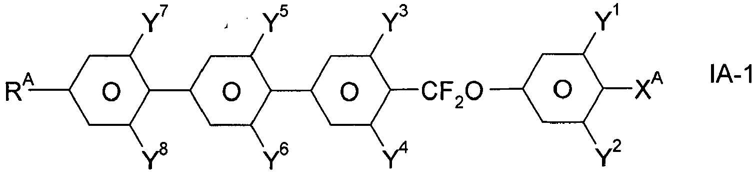 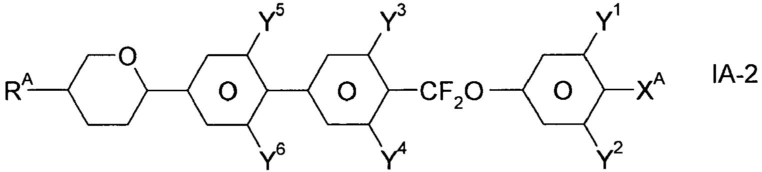 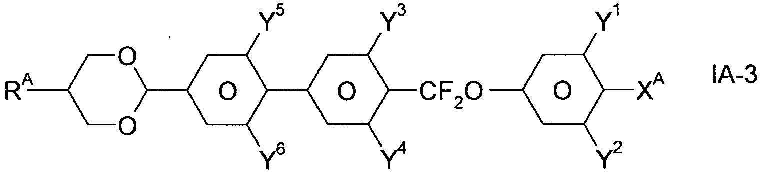 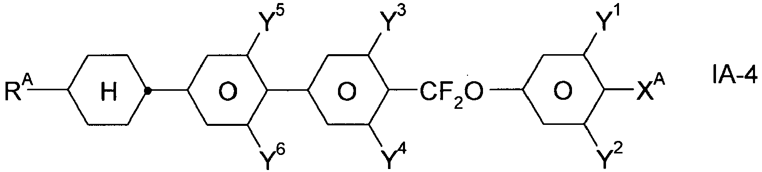 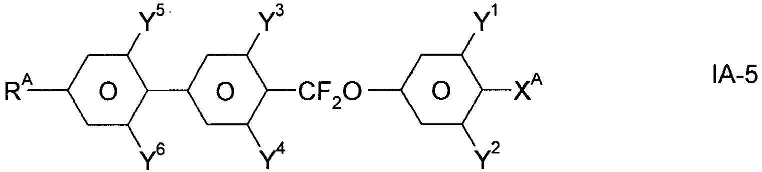 in which R^{A}, X^{A} and Y¹⁻⁶ have the above indicated meanings according to Claim 1 and Y⁷ and Y⁸ each, independently denote H or F.

3. Liquid-crystalline medium according to Claim 1 or 2, **characterised in that** it contains one or more compounds selected from the compounds of the formulae IA-1a to IA-4d, 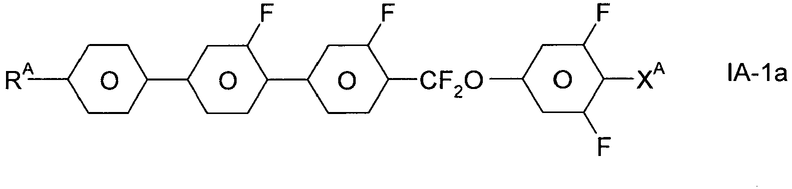 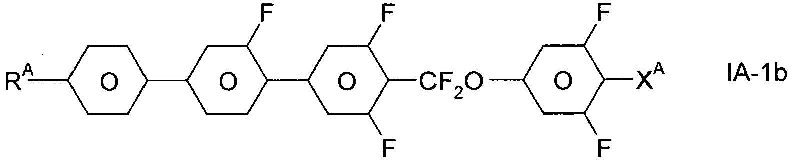 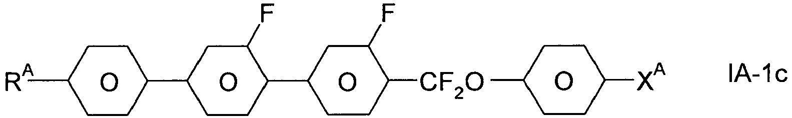 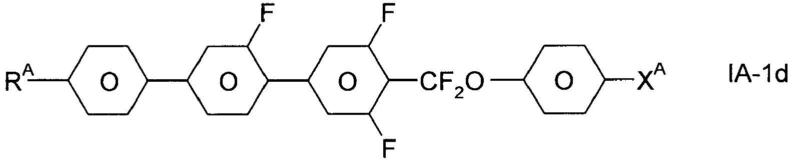 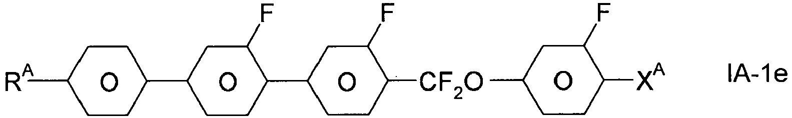 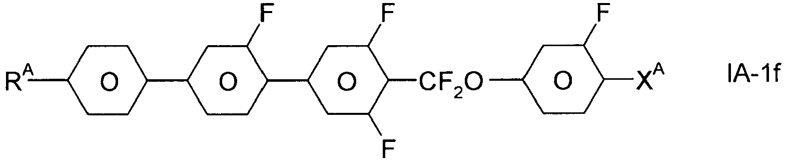 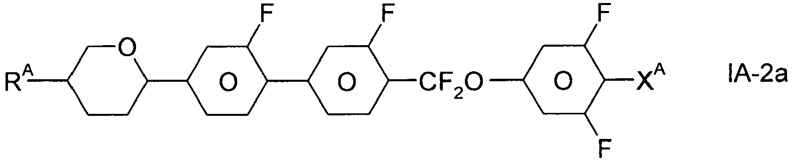 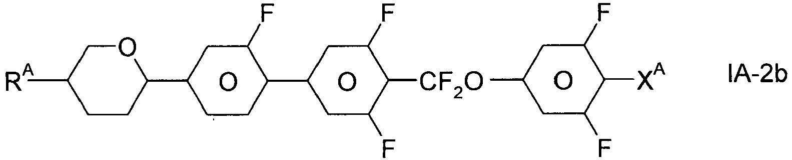 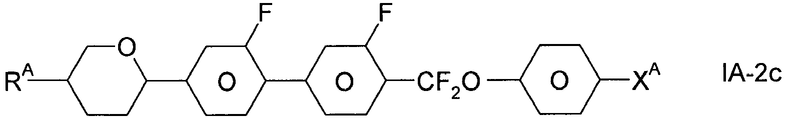 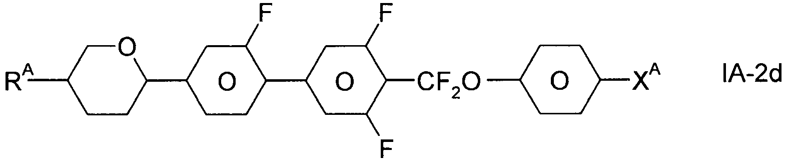 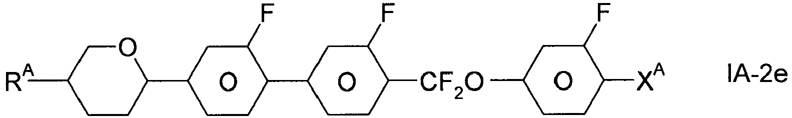 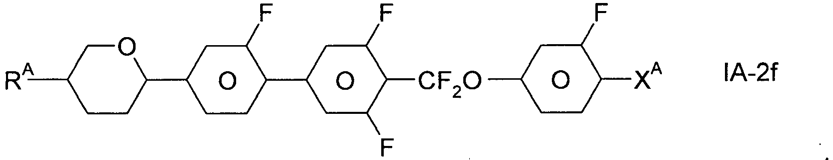 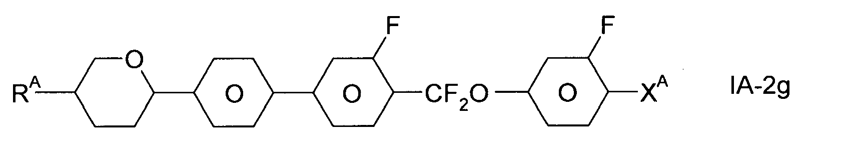 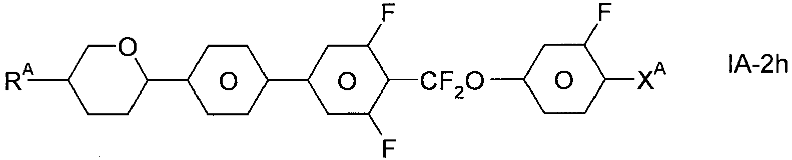 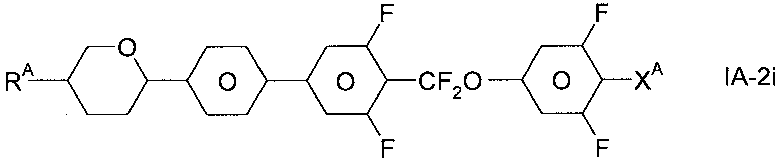 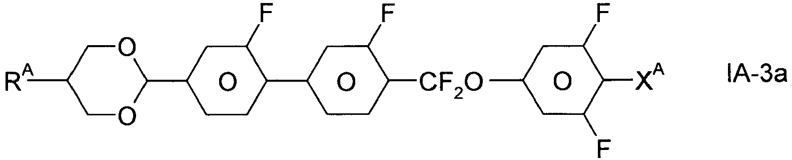 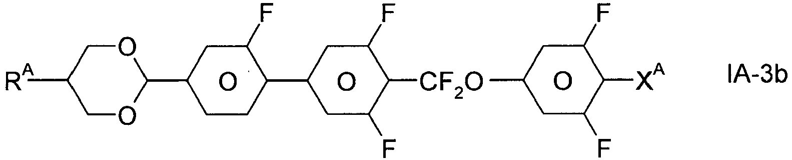 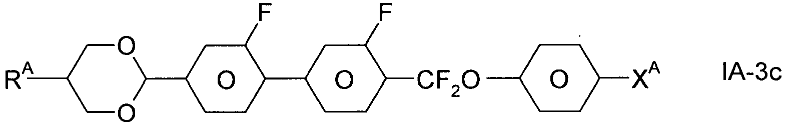 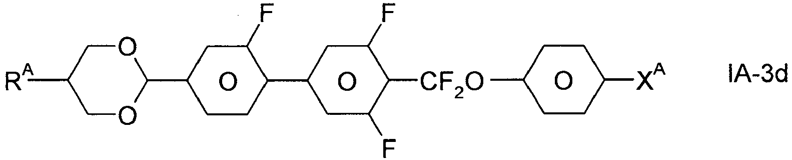 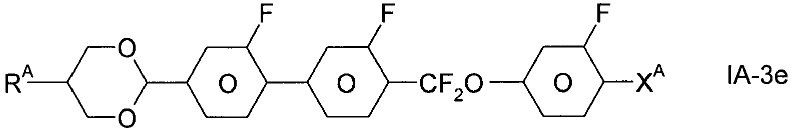 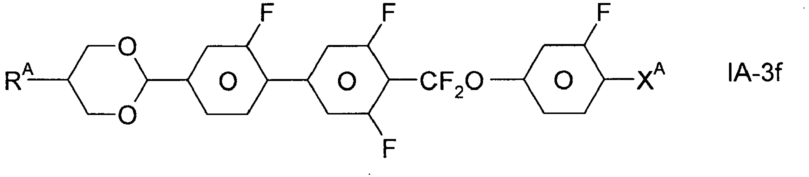 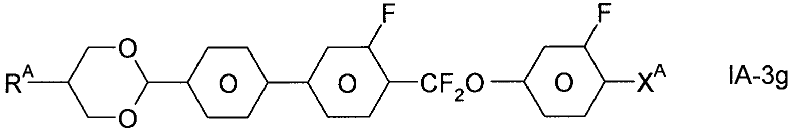 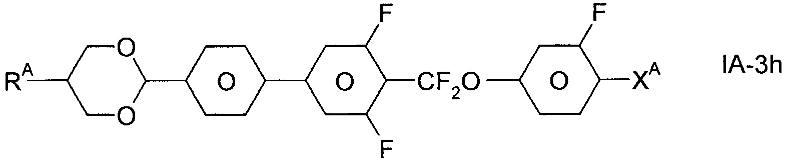 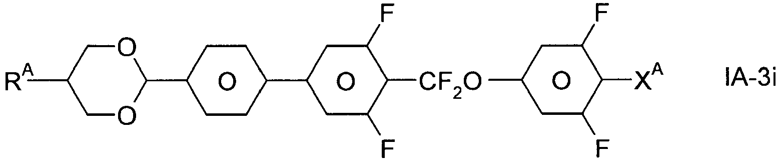 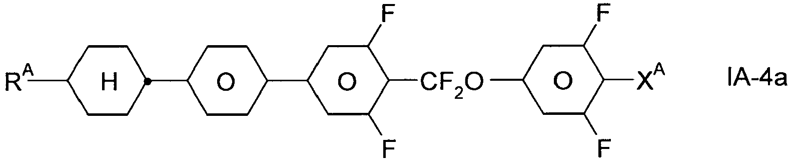 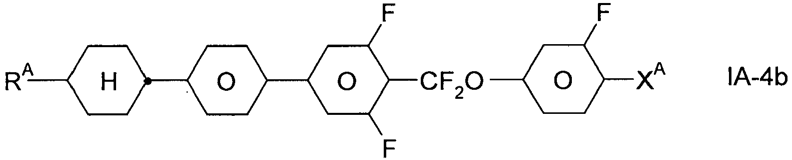 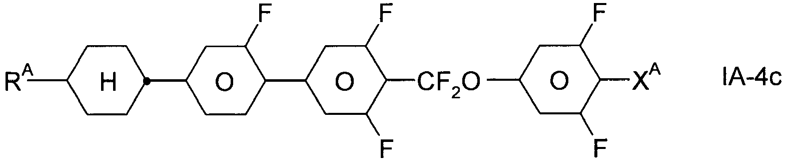 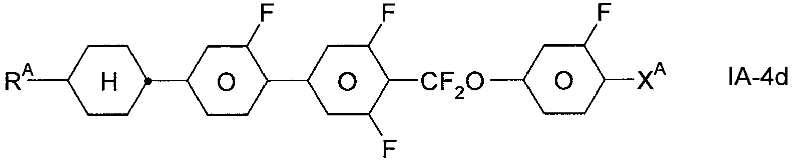 in which R^{A} and X^{A} have the meanings indicated in Claim 1.

4. Liquid-crystalline medium according to one or more of Claims 1 to 3, **characterised in that** X^{A} in formula IA denotes F, OCF₃, OCHF₂, CF₃, OCHF₂, OCHFCF₃, OCF₂CHFCF₃, CF=CF₂, CH=CF₂, OCF=CF₂ or OCH=CF₂.

5. Liquid-crystalline medium according to one or more of Claims 1 to 4, **characterised in that** it contains one or more compounds of the formula IIA-1 to IIC-6, 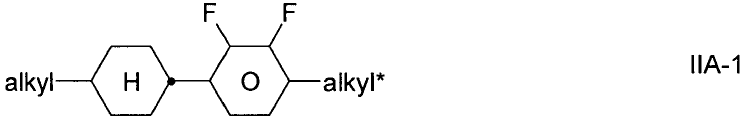 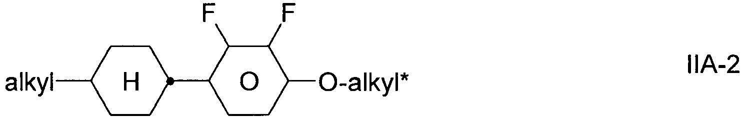 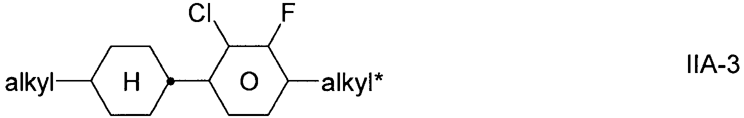 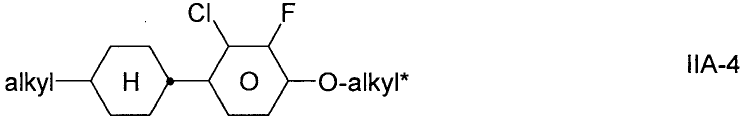 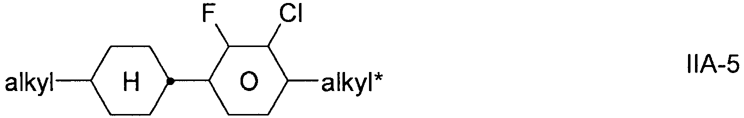 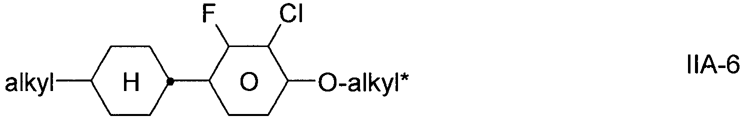 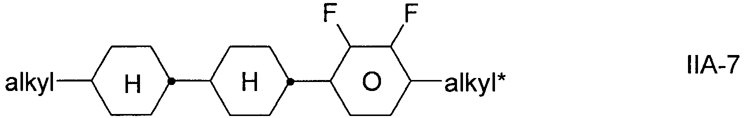 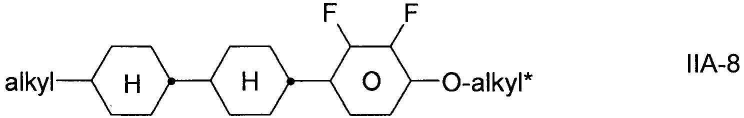 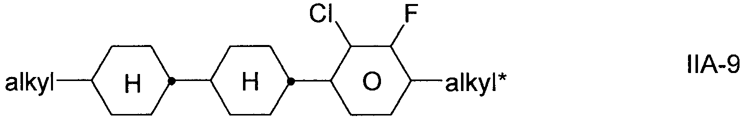 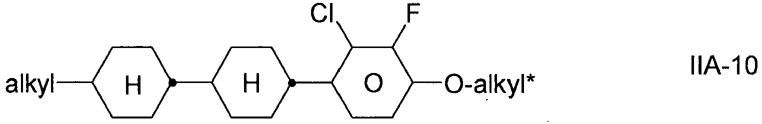 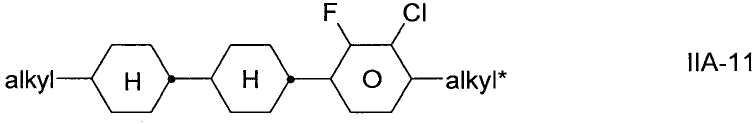 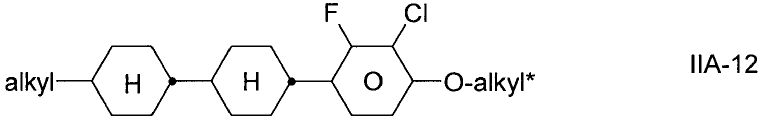 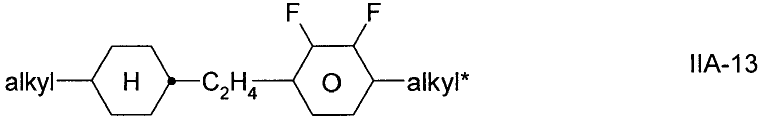 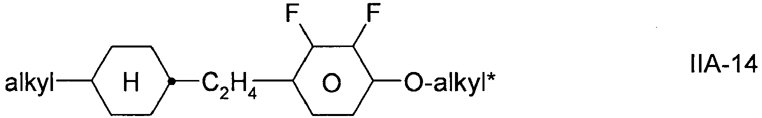 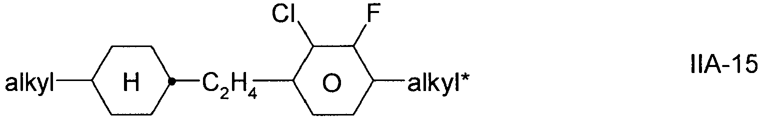 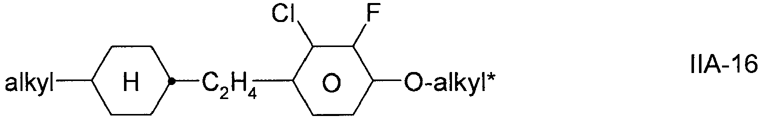 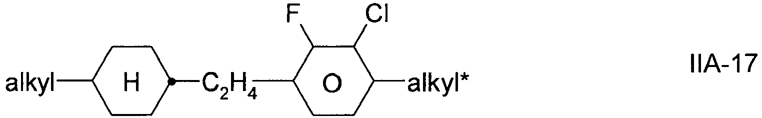 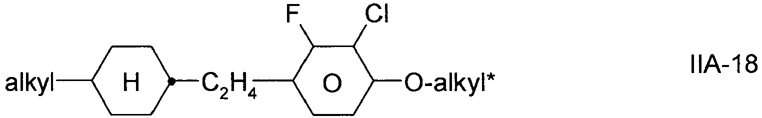 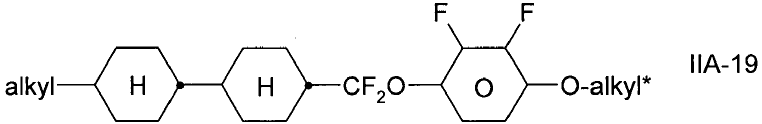 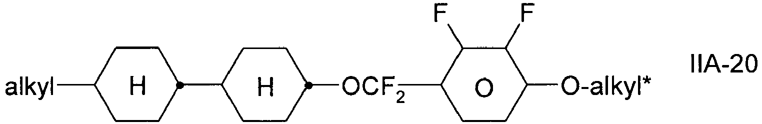 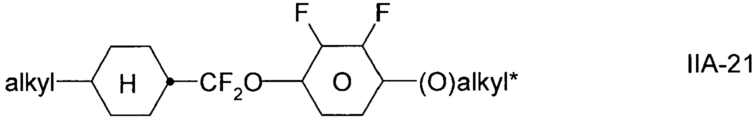 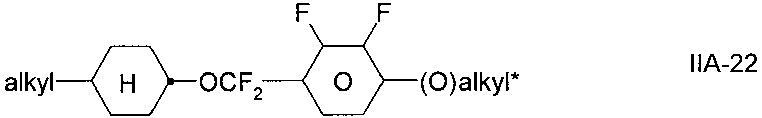 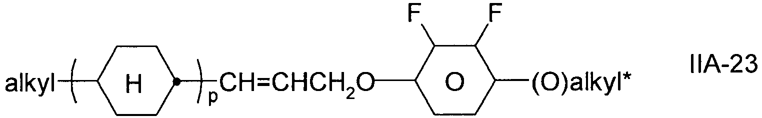 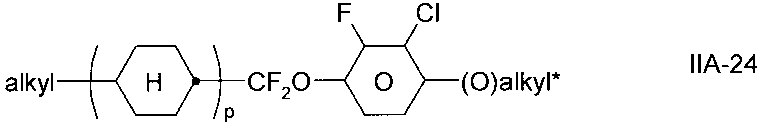 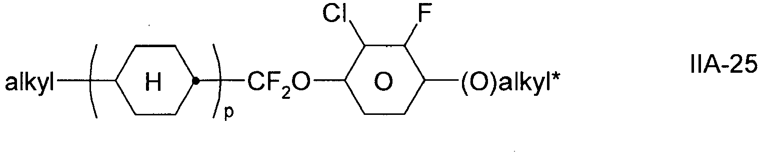 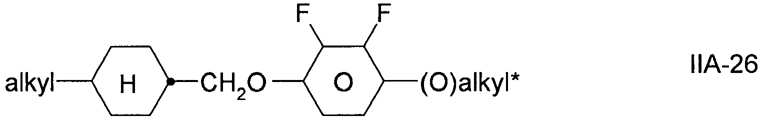 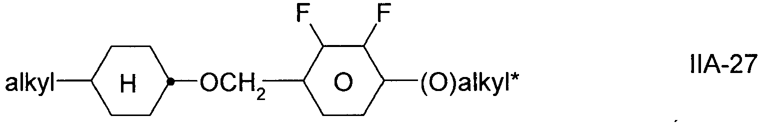 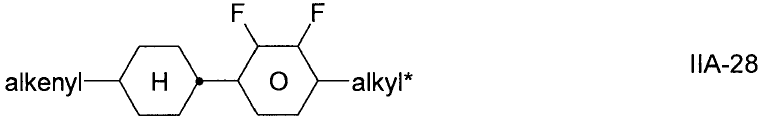 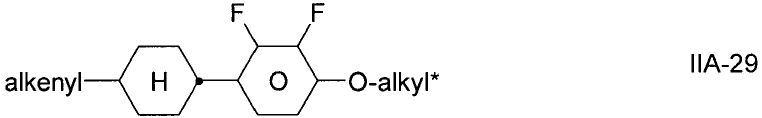 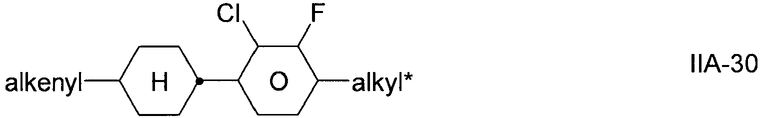 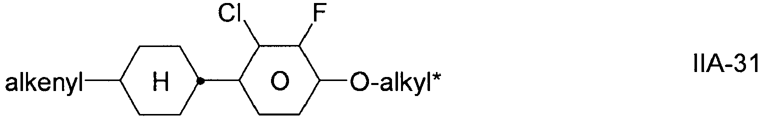 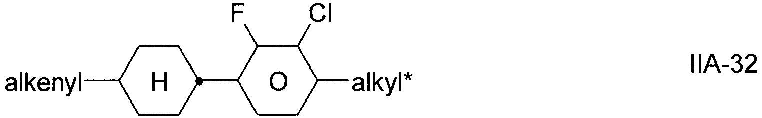 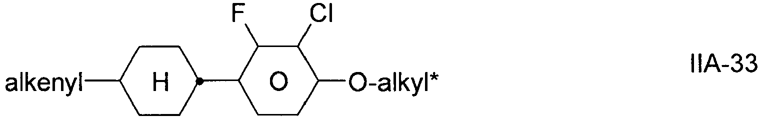 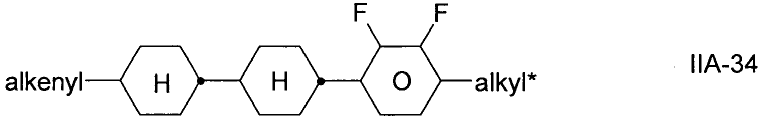 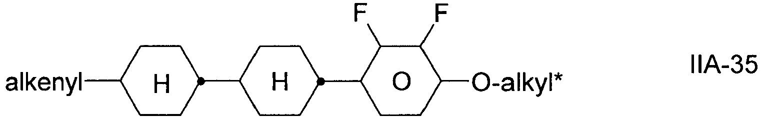 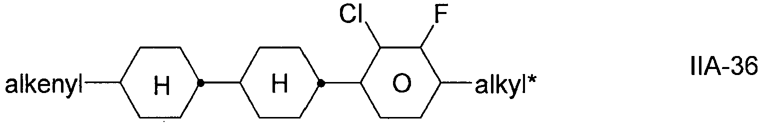 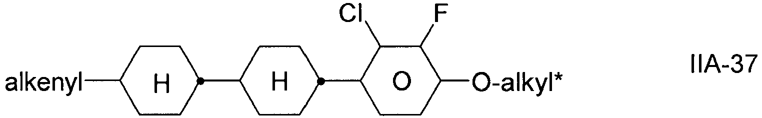 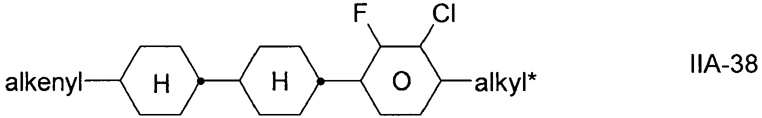 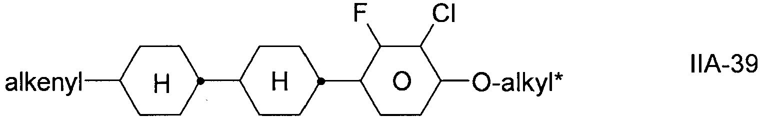 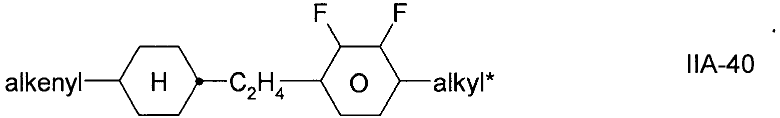 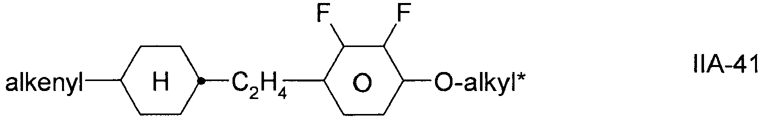 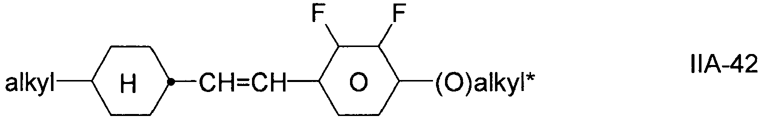 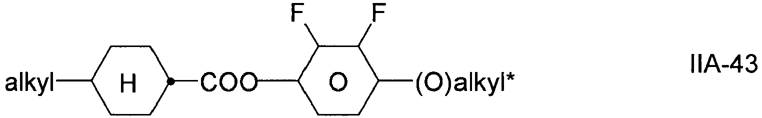 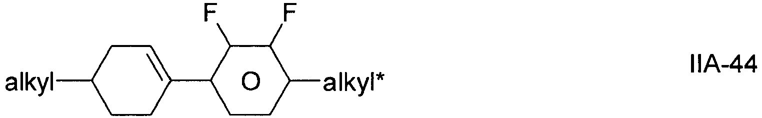 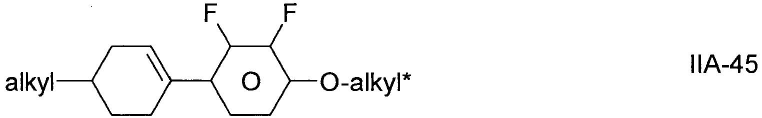 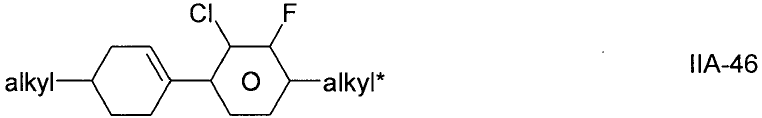 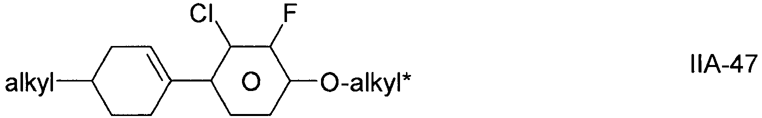 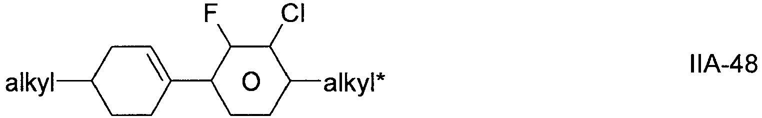 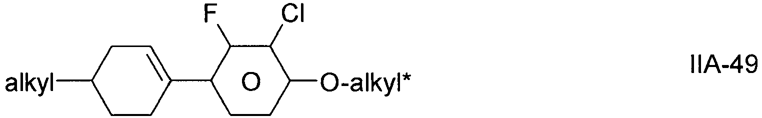 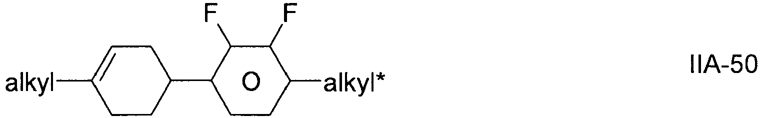 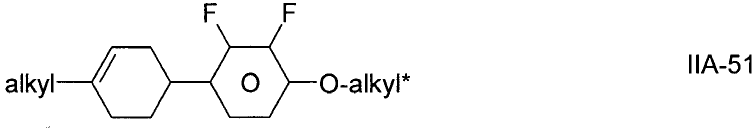 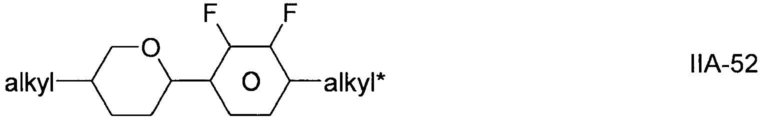 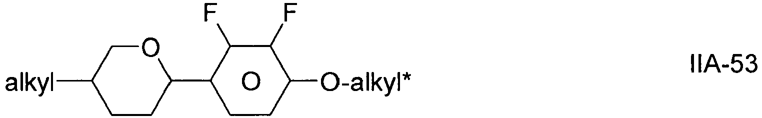 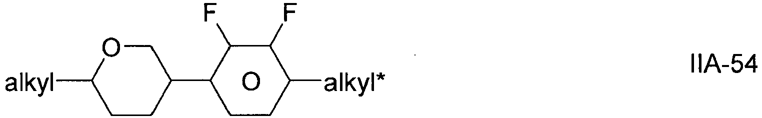 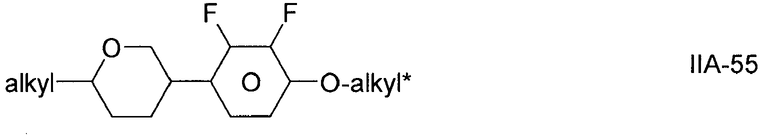 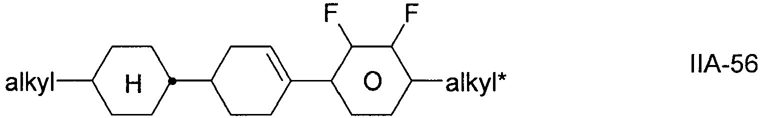 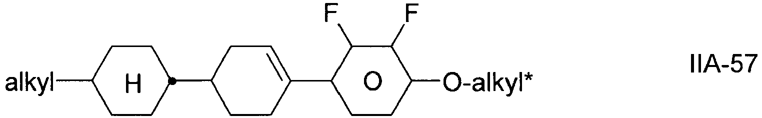 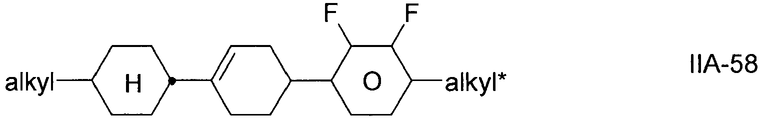 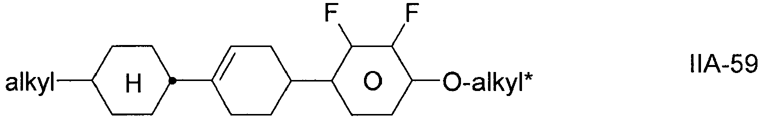 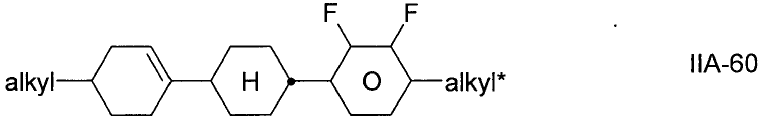 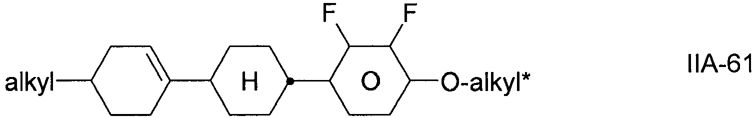 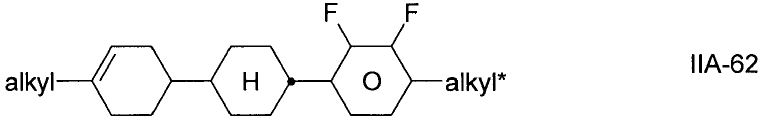 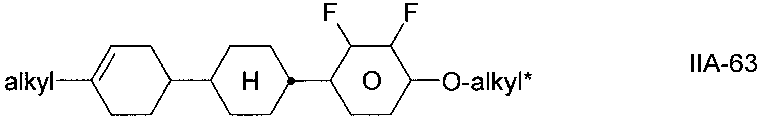 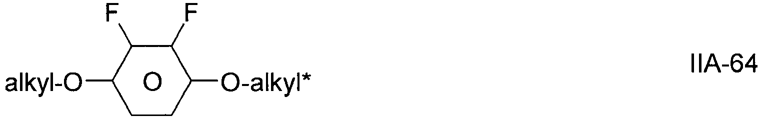 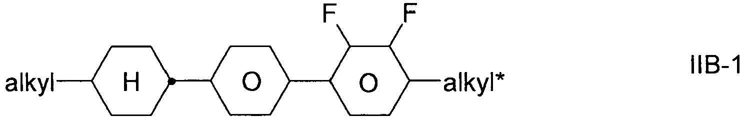 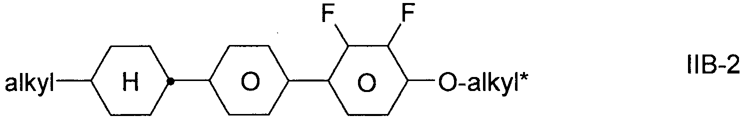 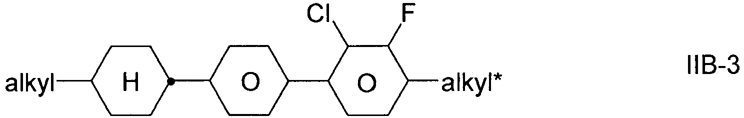 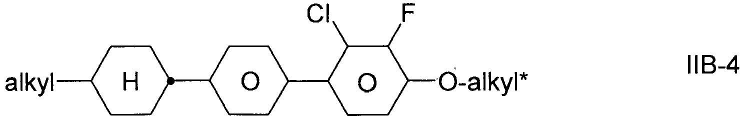 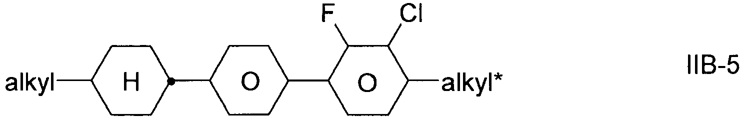 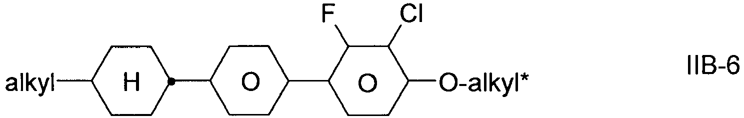 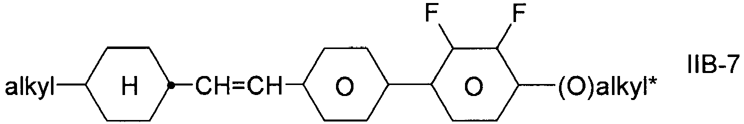 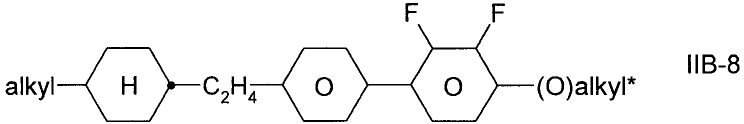 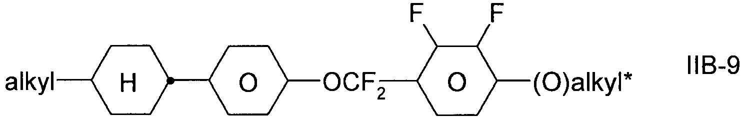 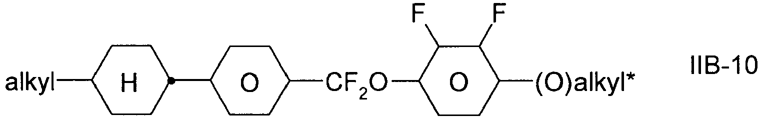 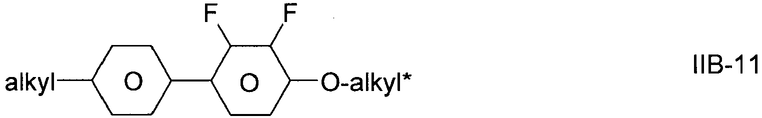 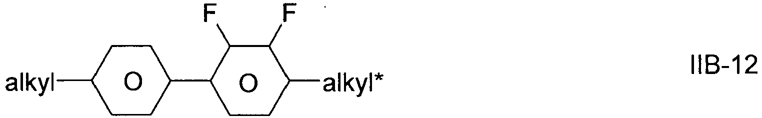 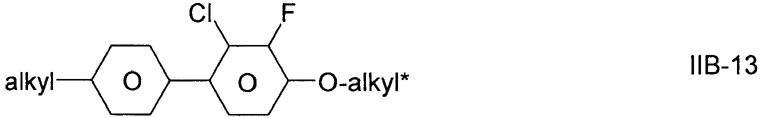 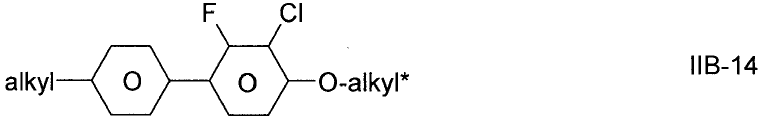 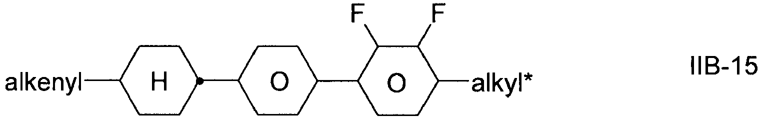 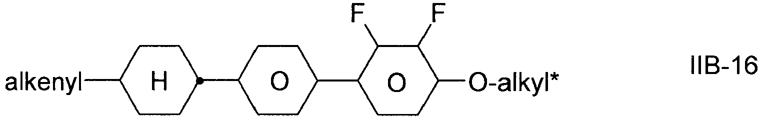 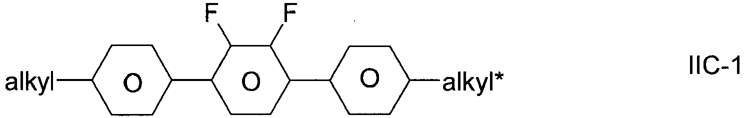 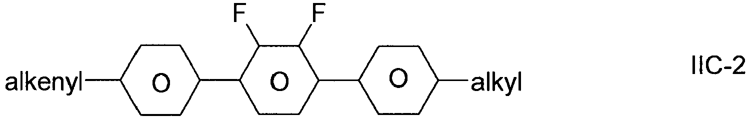 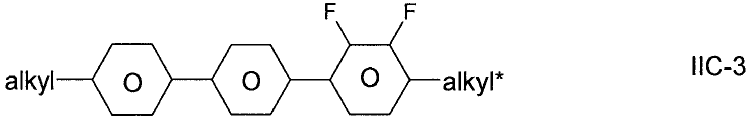 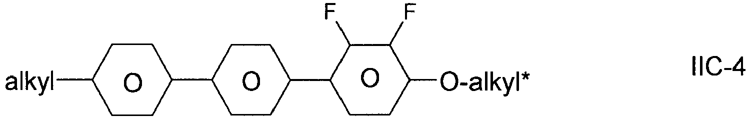 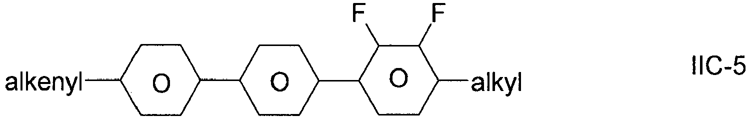 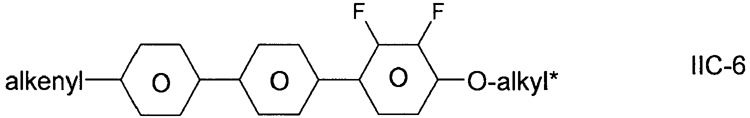 in which alkyl and alkyl* each, independently of one another, denote a straight-chain alkyl radical having 1-6 C atoms and alkenyl denotes a straight-chain alkenyl radical having 2-6 C atoms.

6. Liquid-crystalline medium according to one or more of Claims 1 to 5, **characterised in that** it additionally contains one or more compounds selected from the formulae III and/or IV, 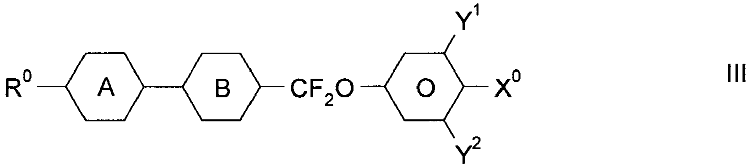 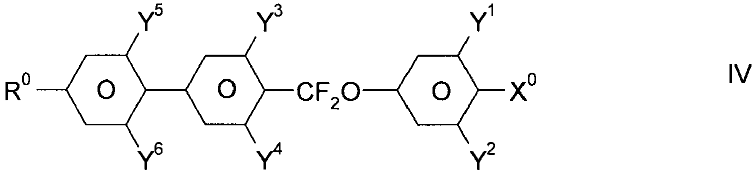 in which
R⁰ denotes a halogenated or unsubstituted alkyl or alkoxy radical having 1 to 15 C atoms, where, in addition, one or more CH₂ groups in these radicals may each be replaced, independently of one another, by -C≡C-, -CF₂O-, -CH=CH-, 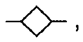 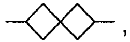 -O-, -CO-O- or -O-CO- in such a way that O atoms are not linked directly to one another,
X⁰ denotes F, Cl, CN, SF₅, SCN, NCS, a halogenated alkyl radical, a halogenated alkenyl radical, a halogenated alkoxy radical or a halogenated alkenyloxy radical, each having up to 6 C atoms, and
Y¹⁻⁶ each, independently of one another, denote H or F, 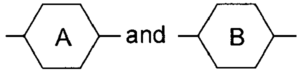 each, independently of one another, denote

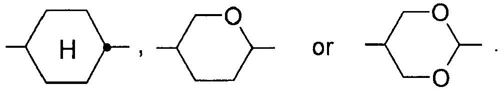

7. Liquid-crystalline medium according to one or more of Claims 1 to 6, **characterised in that** it additionally contains one or more compounds selected from the formulae V to IX, 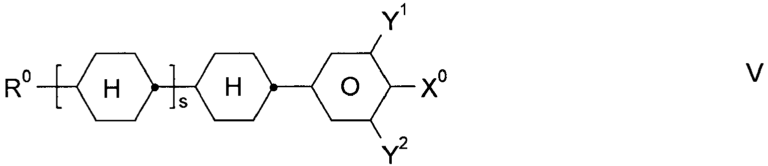 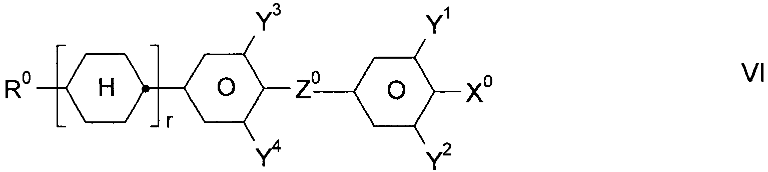 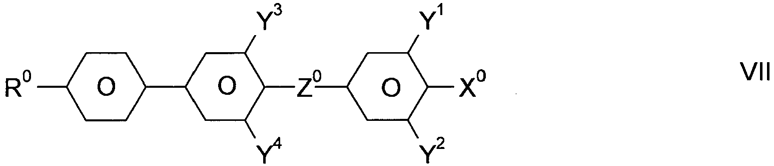 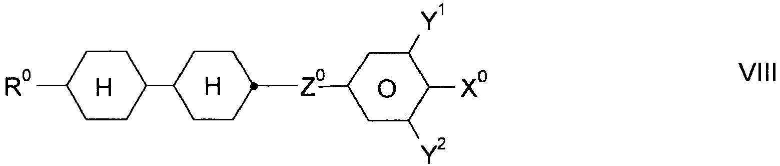 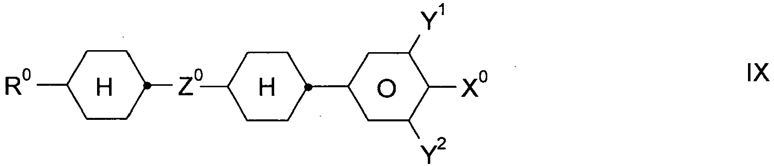 in which
R⁰ denotes a halogenated or unsubstituted alkyl or alkoxy radical having 1 to 15 C atoms, where, in addition, one or more CH₂ groups in these radicals may each be replaced, independently of one another, by -C≡C-, -CF₂O- -O-, 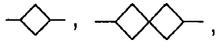 -CH=CH-, -CO-O- or -O-CO- in such a way that O atoms are not linked directly to one another,
X⁰ denotes F, Cl, CN, SF₅, SCN, NCS, a halogenated alkyl radical, a halogenated alkenyl radical, a halogenated alkoxy radical or a halogenated alkenyloxy radical having up to 6 C atoms,
Y¹⁻⁴ each, independently of one another, denote H or F,
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO- or -OCF₂-, in formula VI and VII also a single bond and in formula VI and IX also -CF₂O-,
r denotes 0 or 1, and
s denotes 0 or 1.

8. Liquid-crystalline medium according to one or more of Claims 1 to 7, **characterised in that** it additionally contains one or more compounds selected from the formulae X to XIII, 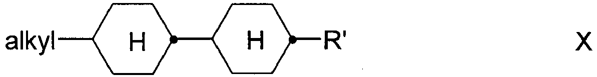 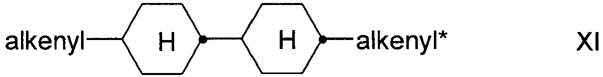 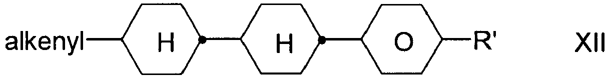 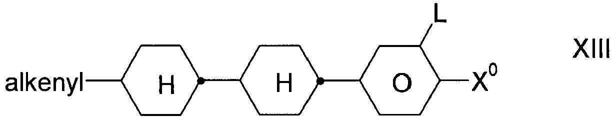 in which X⁰ has the meanings indicated in Claim 7, and
L denotes H or F,
"alkyl" denotes C₁₋₆-alkyl,
R' denotes C₁₋₆-alkyl, C₁₋₆-alkoxy or C₂₋₆-alkenyl, and
"alkenyl" and "alkenyl*" each, independently of one another, denote C₂₋₆-alkenyl.

9. Liquid-crystalline medium according to one or more of Claims 1 to 8, **characterised in that** it additionally contains one or more compounds selected from the formulae Xa, Xb, Xc, Xd, Xe, XIa, XIb, XIIa and XIIIa: 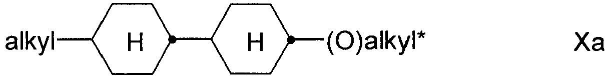 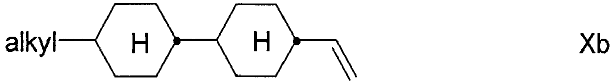 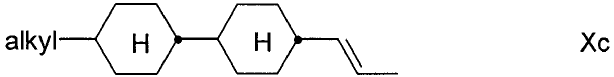 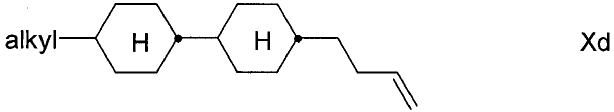 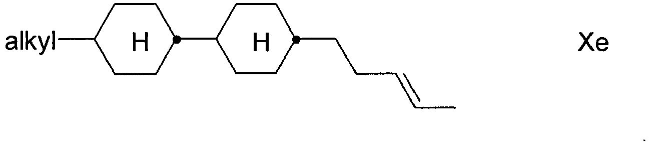 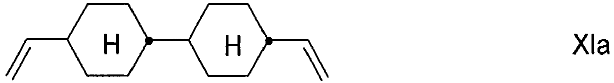 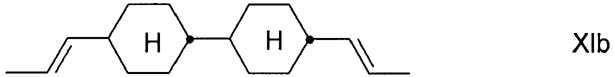 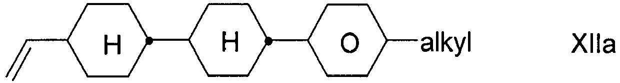 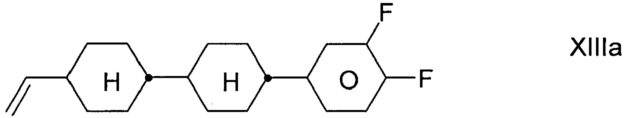 in which "alkyl" and alkyl* each, independently of one another, denote a straight-chain alkyl radical having 1-6 C atoms and alkenyl denotes a straight-chain alkenyl radical having 2-6 C atoms, and
(O)alkyl* denotes alkyl* or O-alkyl* (=alkoxy).

10. Liquid-crystalline medium according to one or more of Claims 1 to 9, **characterised in that** it additionally contains one or more compounds of the formula XIV, 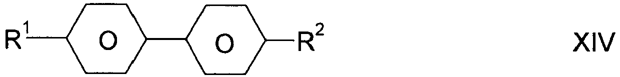 in which R¹ and R² each, independently of one another, denote n-alkyl, alkoxy, oxaalkyl, fluoroalkyl or alkenyl, each having up to 6 C atoms.

11. Liquid-crystalline medium according to one or more of Claims 1 to 10, **characterised in that** it additionally contains one or more compounds of the formula XVII, 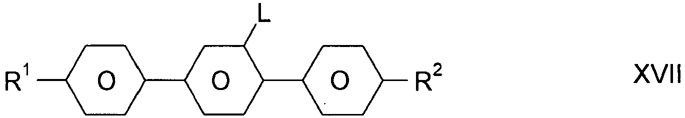 in which R¹ and R² each, independently of one another, denote n-alkyl, alkoxy, oxaalkyl, fluoroalkyl or alkenyl, each having up to 6 C atoms, and L denotes H or F.

12. Liquid-crystalline medium according to one or more of Claims 1 to 11, **characterised in that** it contains one or more compounds selected from the group of the compounds of the formulae XXVIII to XXXI, 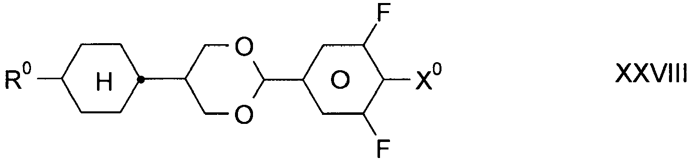 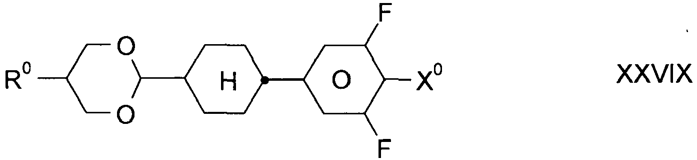 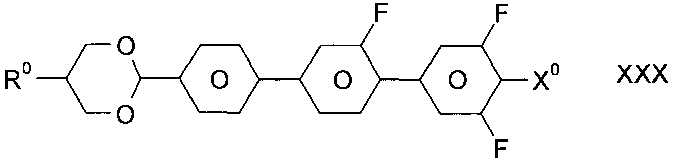 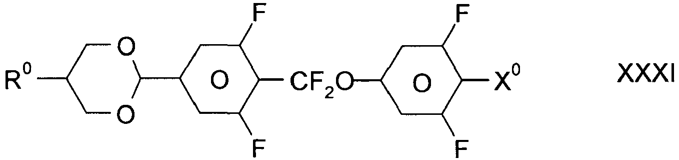 in which R⁰ and X⁰ have the meanings indicated in Claim 7.

13. Liquid-crystalline medium according to one or more of Claims 1 to 12, **characterised in that** it contains one or more compounds selected from the group of the compounds of the formulae XIX, XX, XXI, XXII, XXIII and XXIV, 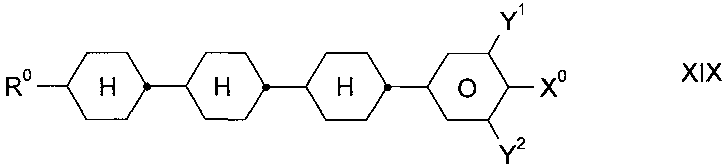 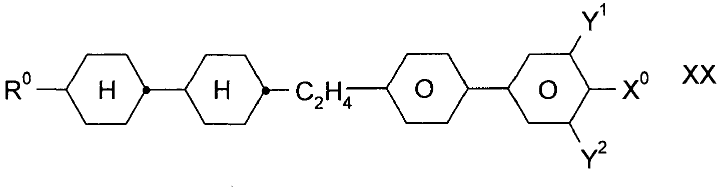 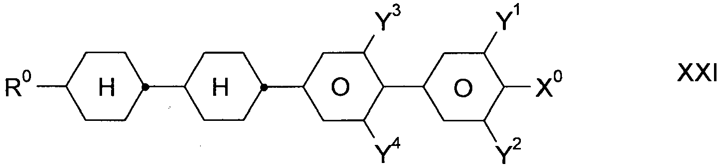 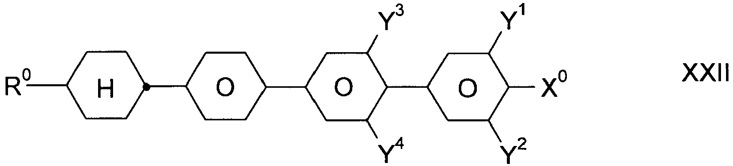 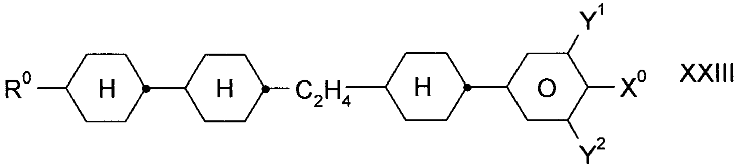 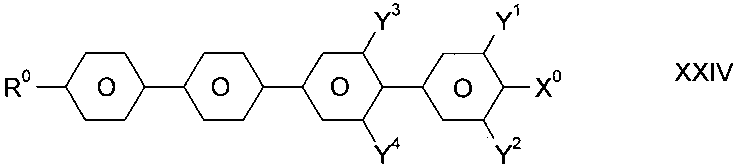 in which R⁰ and X⁰ have the meanings indicated in Claim 7, and Y¹⁻⁴ each, independently of one another, denote H or F.

14. Liquid-crystalline medium according to one or more of Claims 1 to 13, **characterised in that** it contains ≥ 20 % by weight of the compound of the formula Xb, 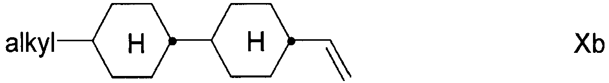 in which alkyl has the meaning indicated in Claim 5.

15. Liquid-crystalline medium according to one or more of Claims 1 to 14, **characterised in that** it has a dielectric anisotropy (Δε) of > 1.5 at 20 °C and 1 kHz.

16. Liquid-crystalline medium according to one or more of Claims 1 to 15, **characterised in that** it additionally contains one or more additive(s) selected from the group of the UV stabilisers, dopants and antioxidants.

17. Liquid-crystalline medium according to one or more of Claims 1 to 16, **characterised in that** the additive(s) is selected from

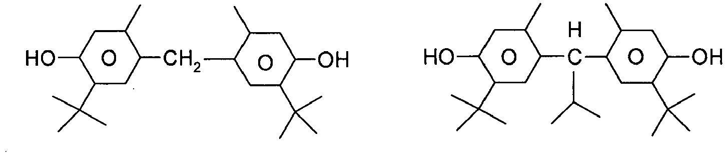

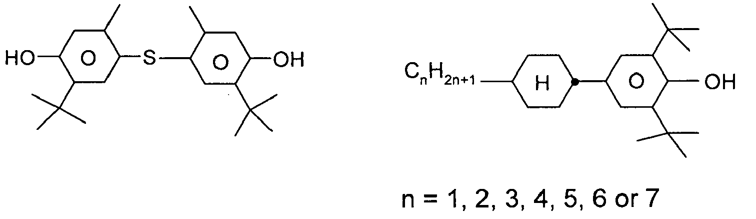

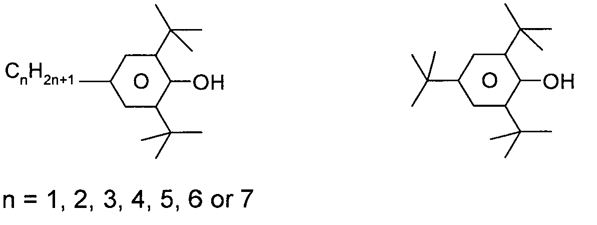

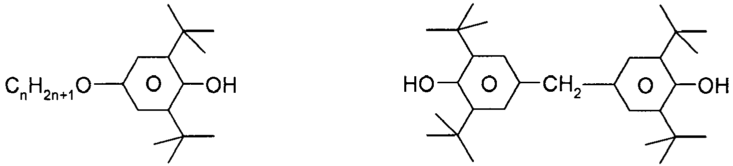

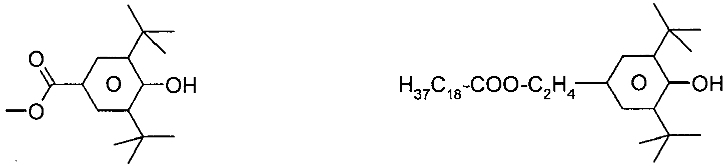

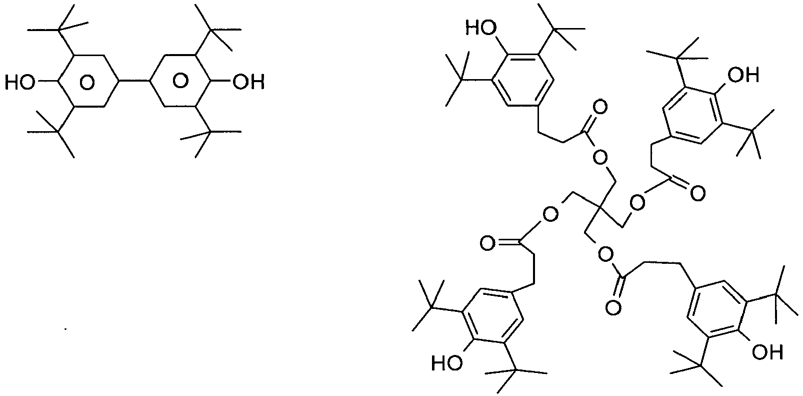

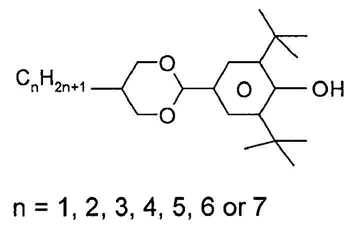

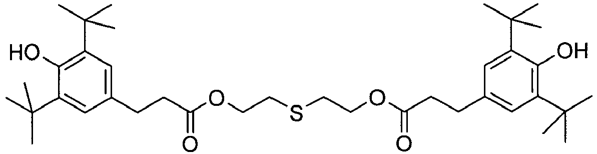

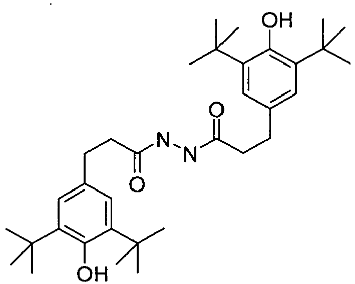

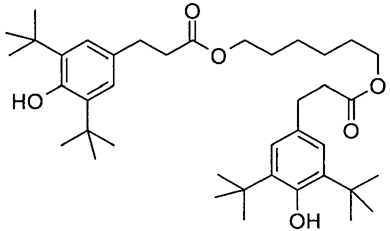

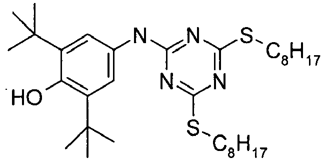

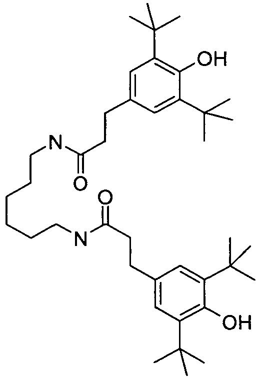

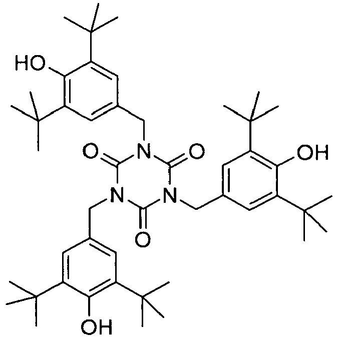

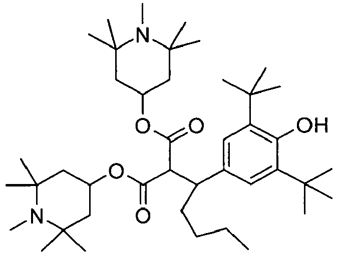

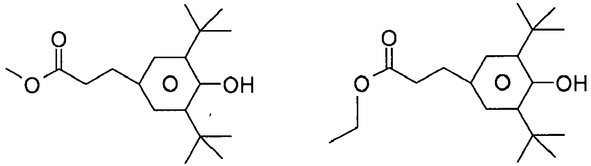

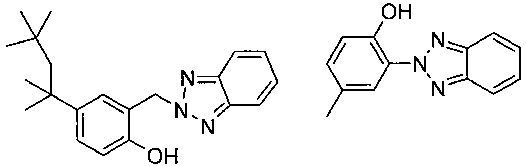

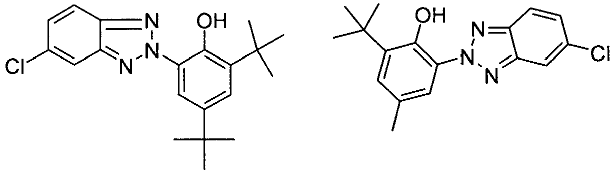

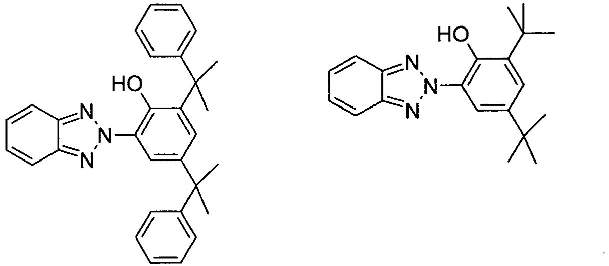

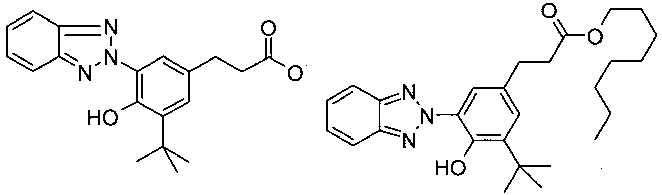

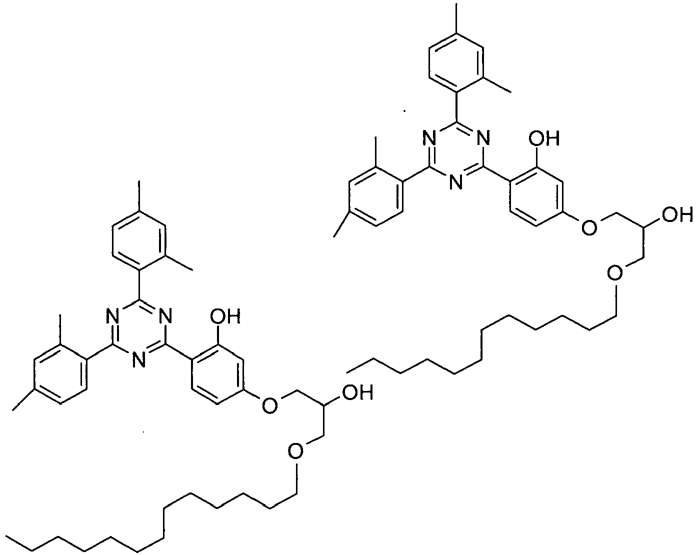

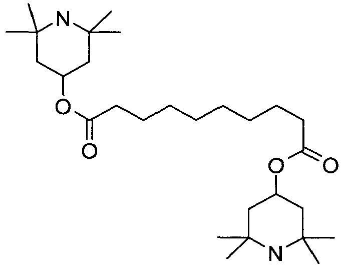

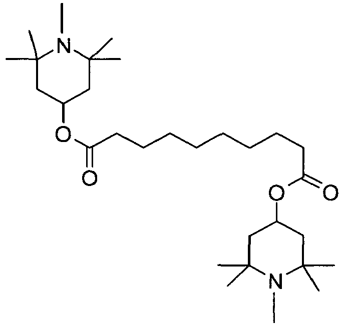

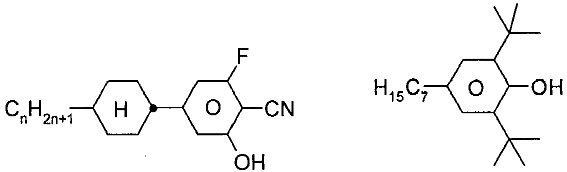

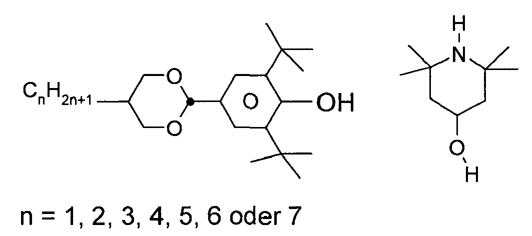

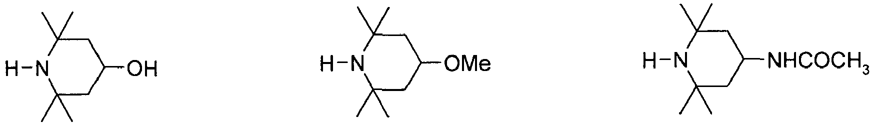

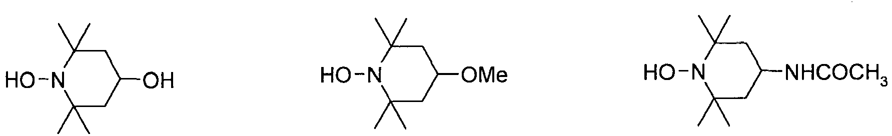

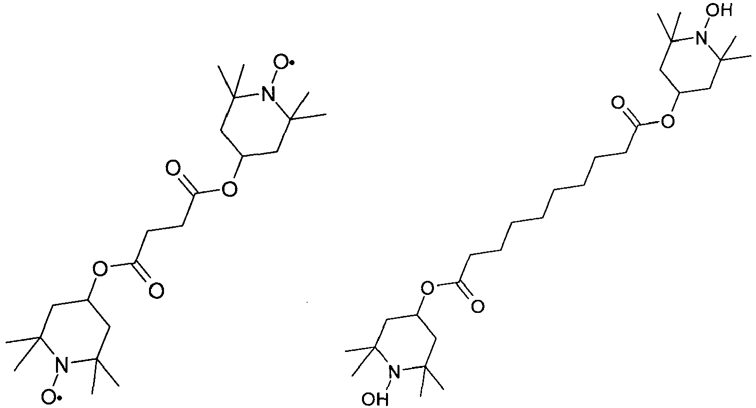

18. Liquid-crystalline medium according to one or more of Claims 1 to 17, **characterised in that** it additionally contains one or more polymerisable compounds.

19. Liquid-crystalline medium according to one or more of Claims 1 to 18, **characterised in that** the polymerisable compound is selected from RM-1 to RM-86:

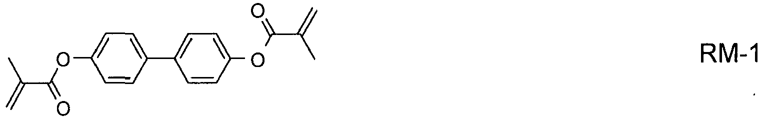

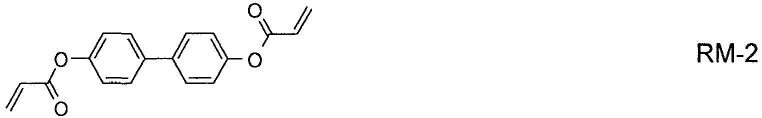

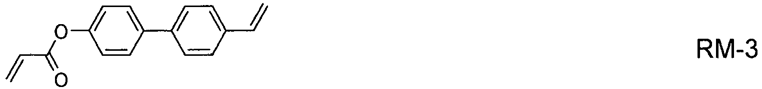

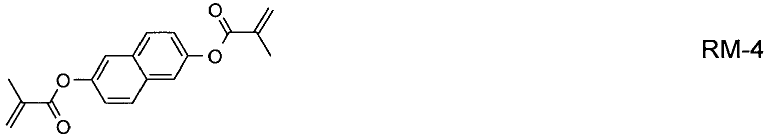

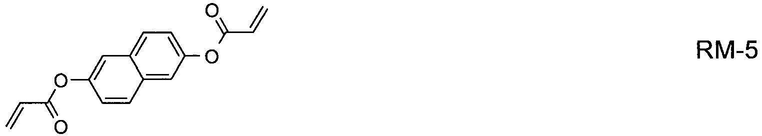

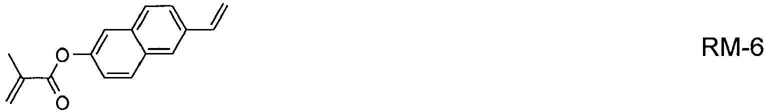

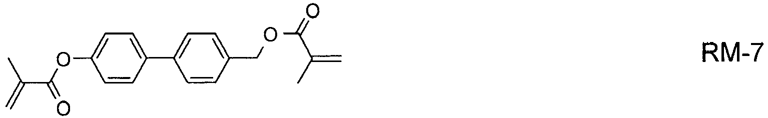

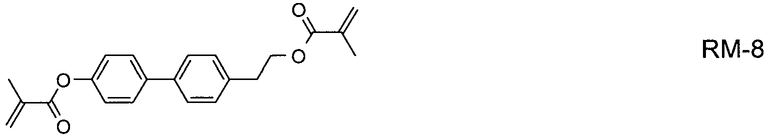

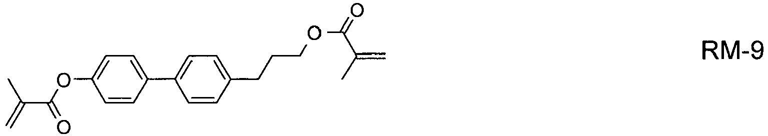

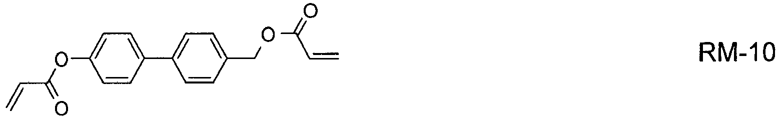

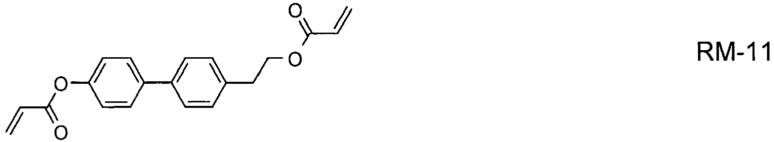

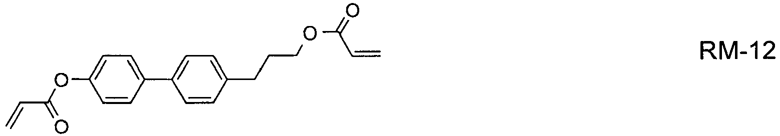

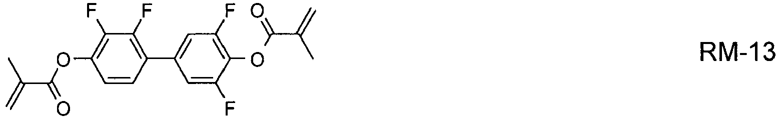

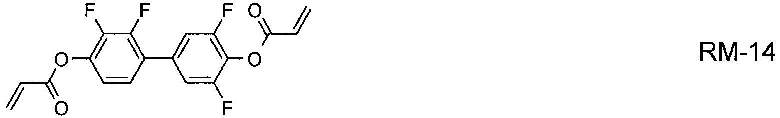

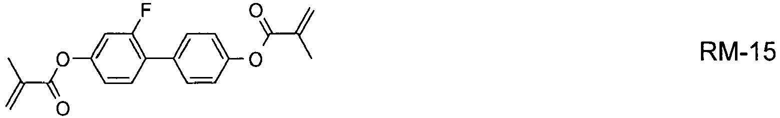

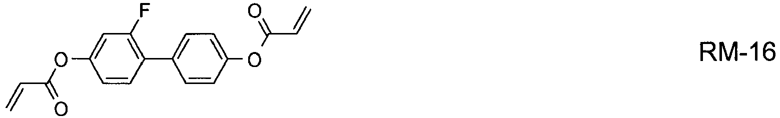

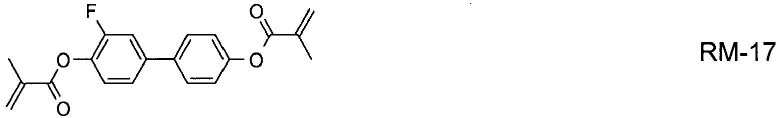

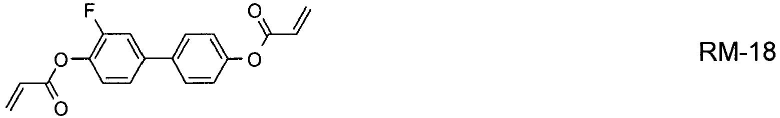

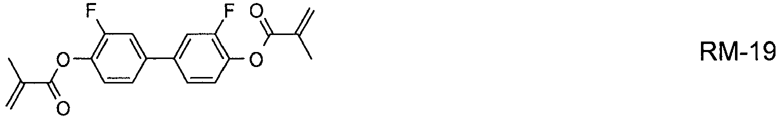

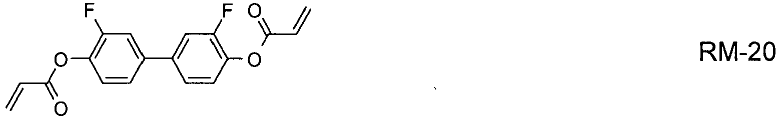

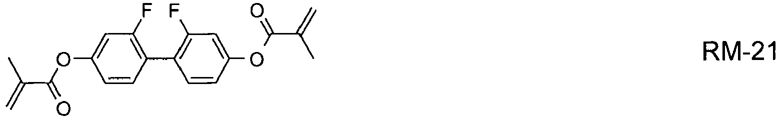

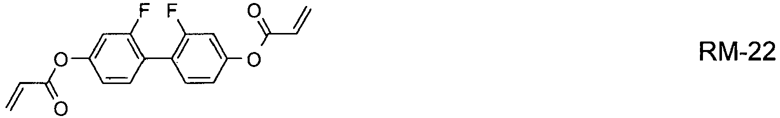

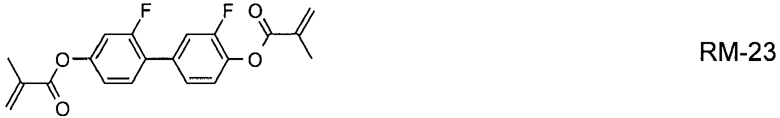

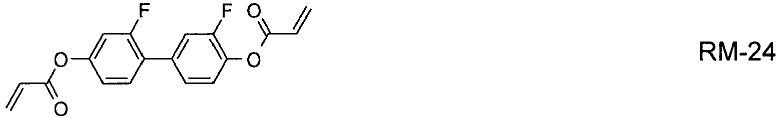

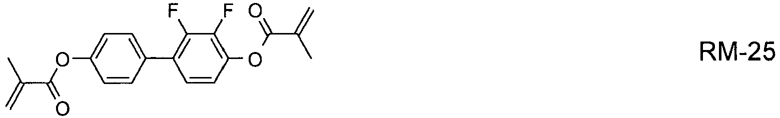

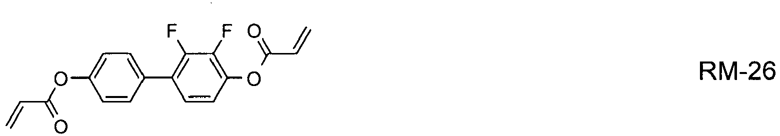

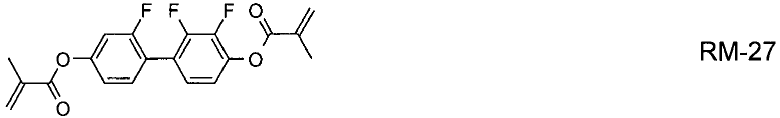

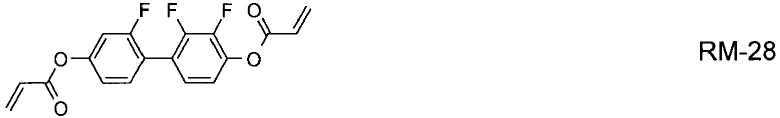

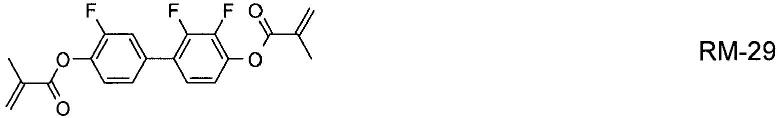

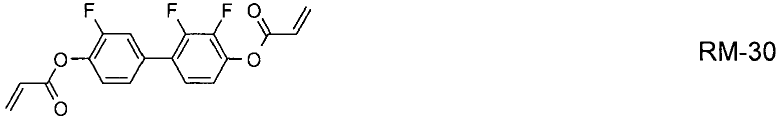

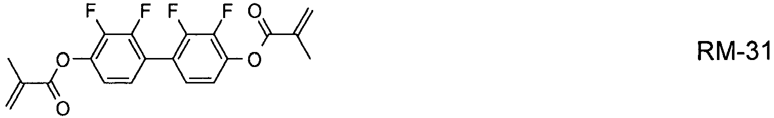

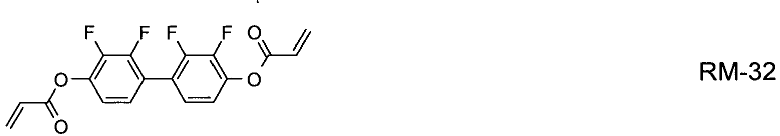

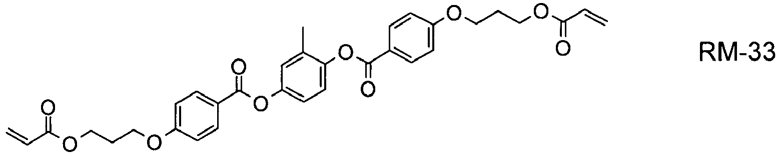

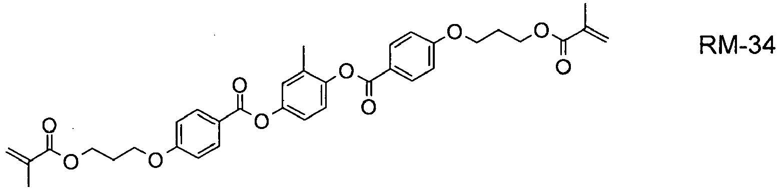

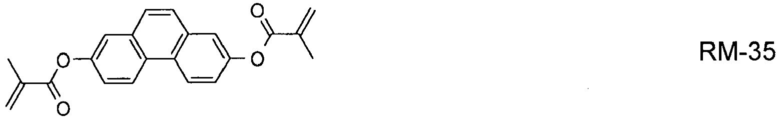

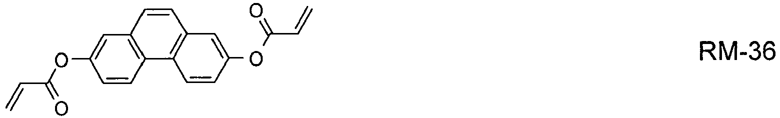

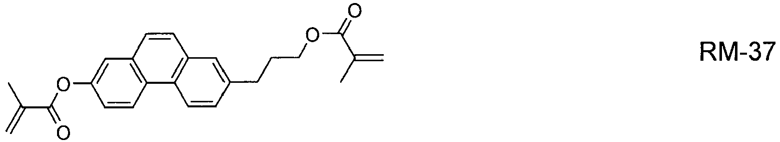

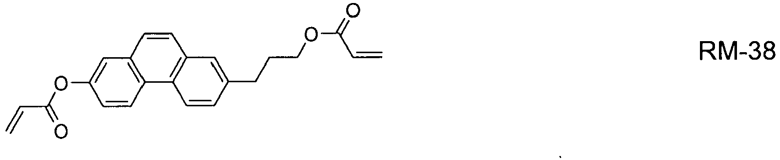

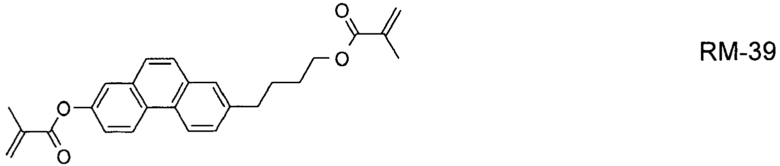

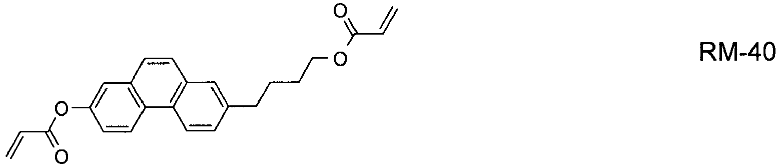

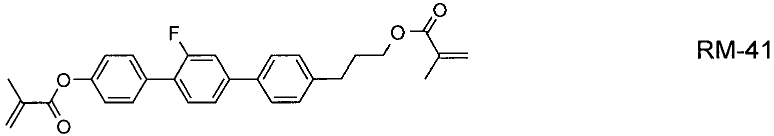

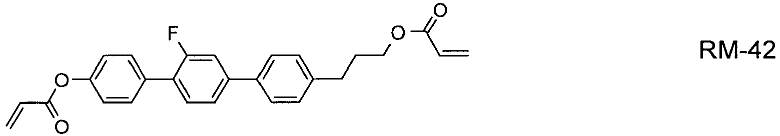

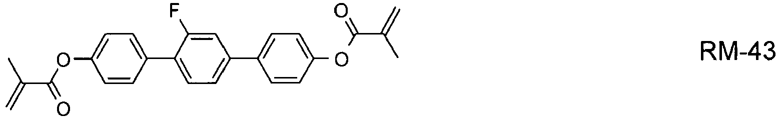

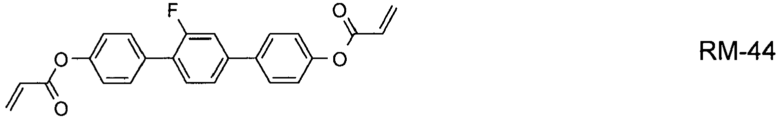

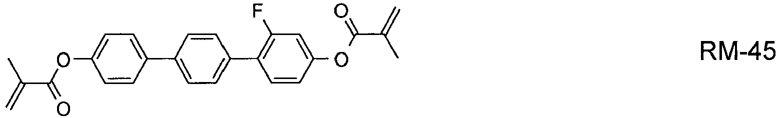

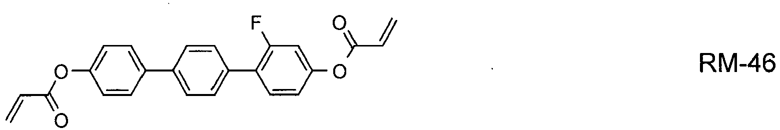

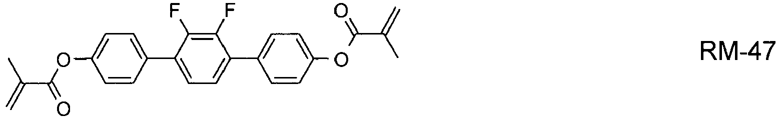

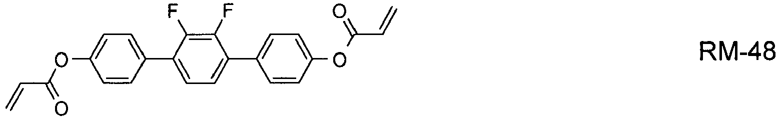

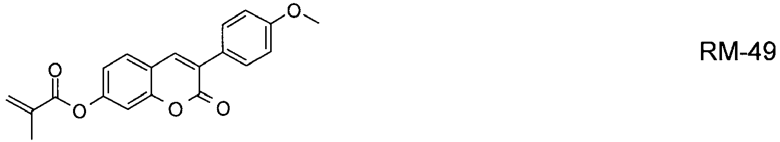

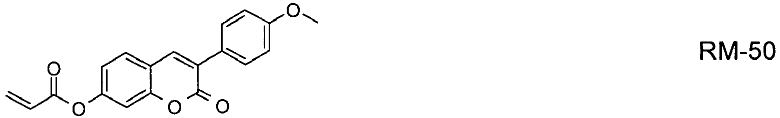

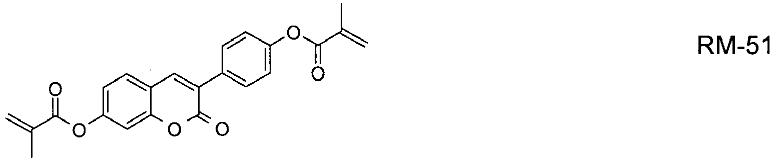

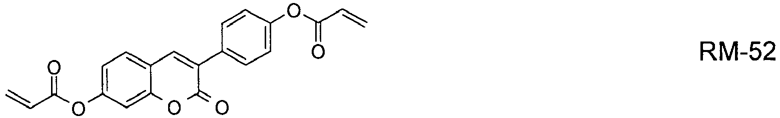

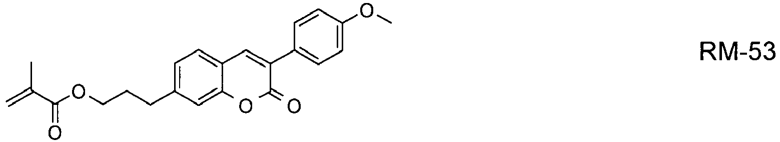

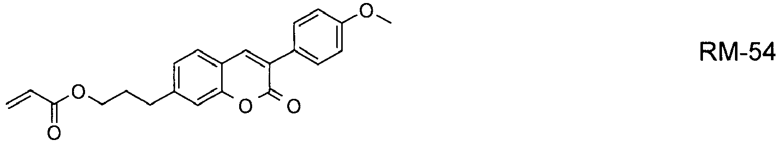

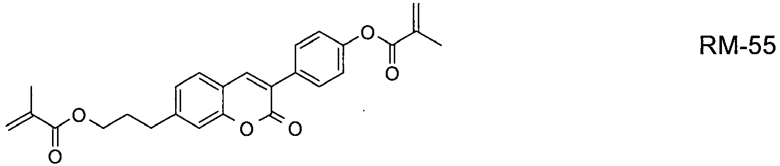

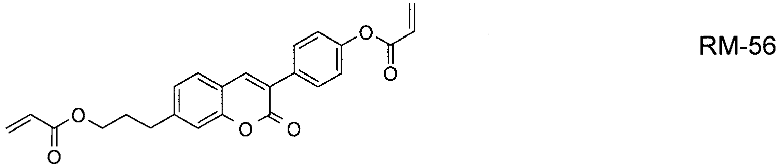

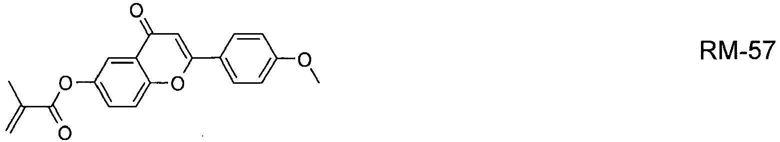

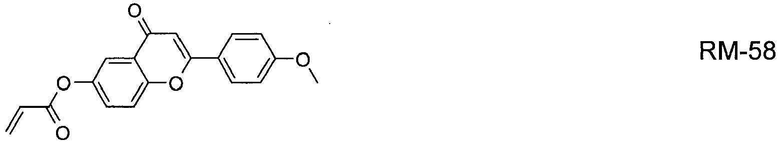

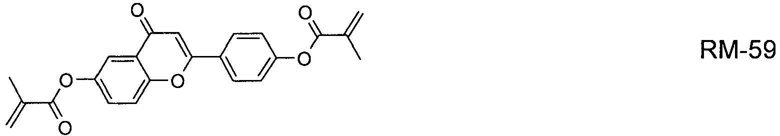

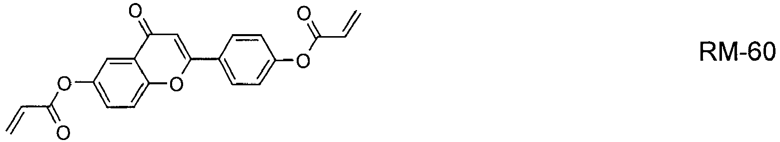

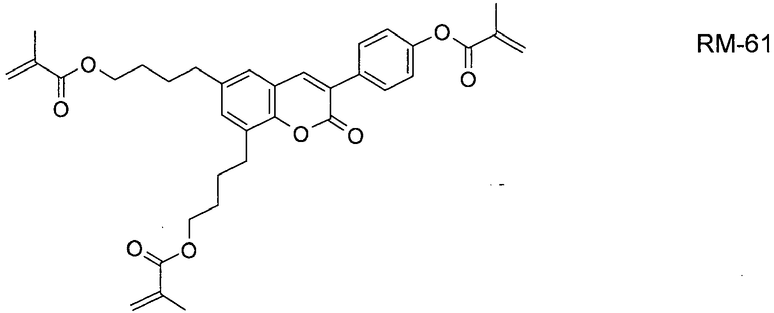

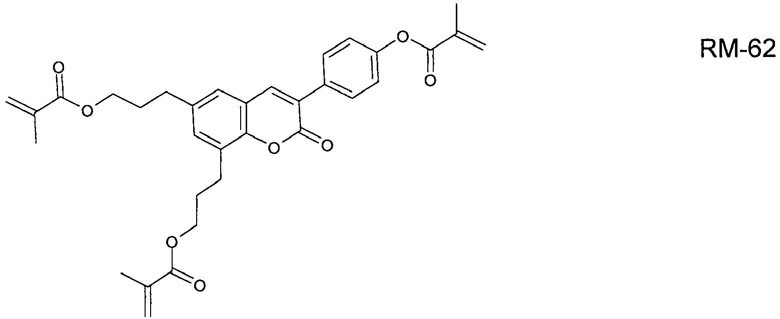

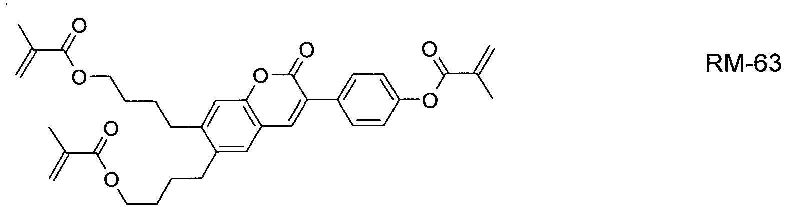

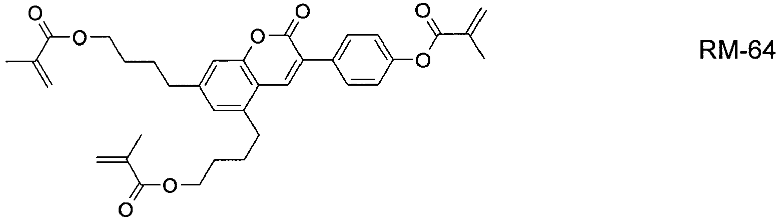

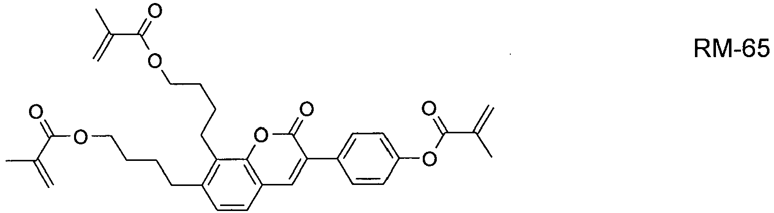

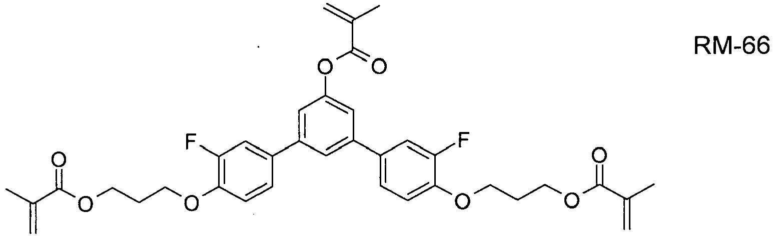

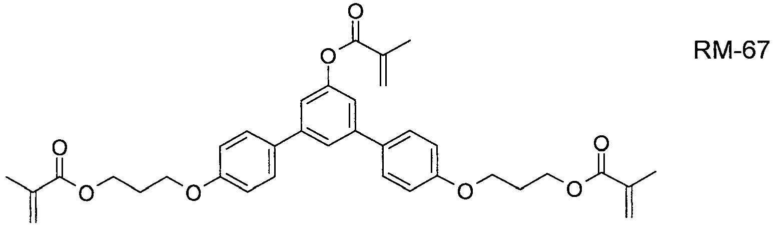

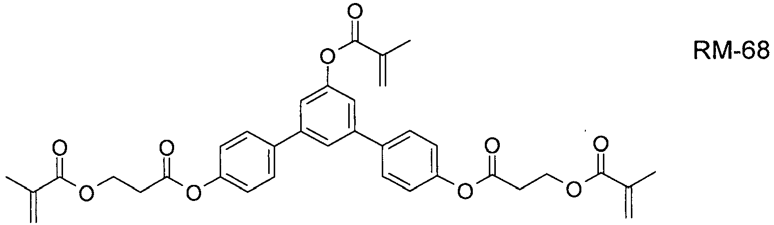

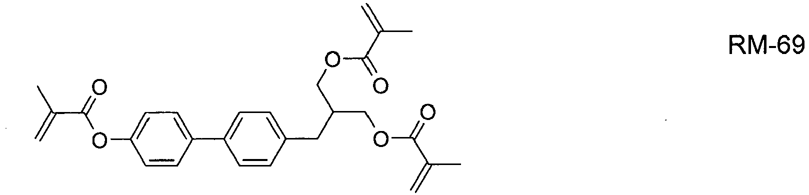

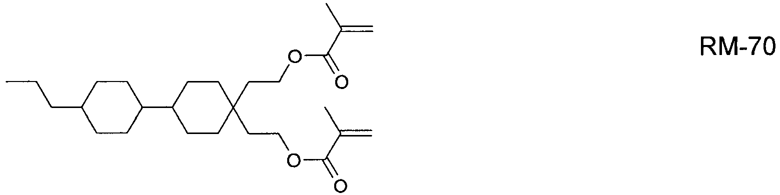

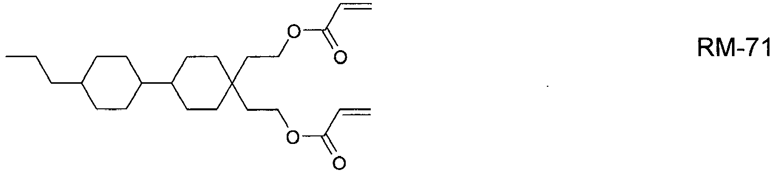

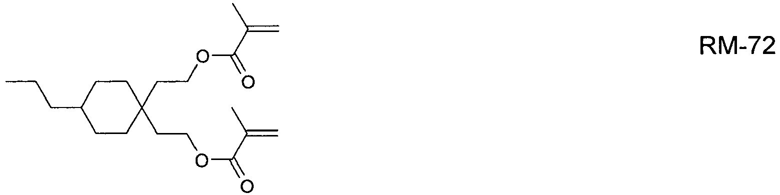

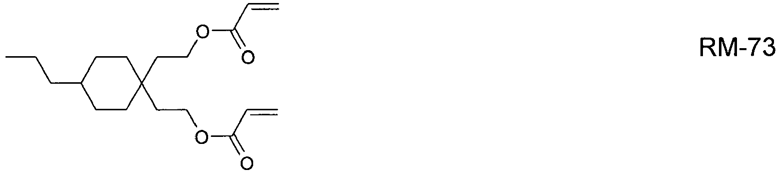

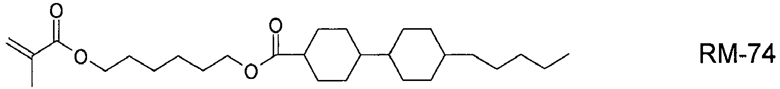

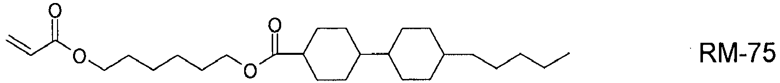

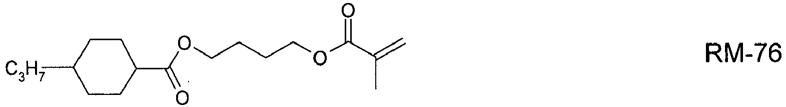

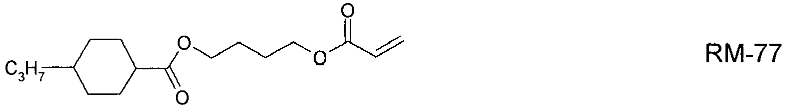

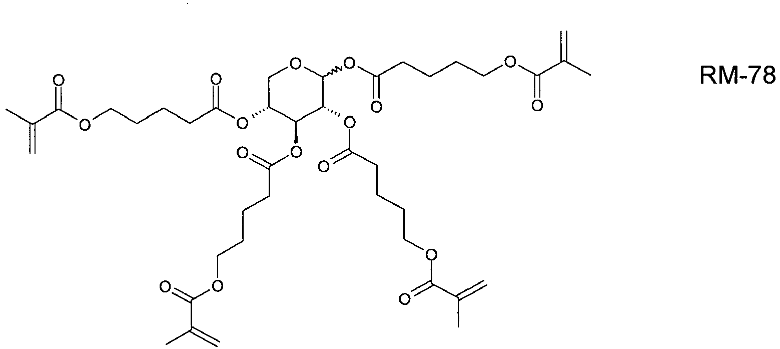

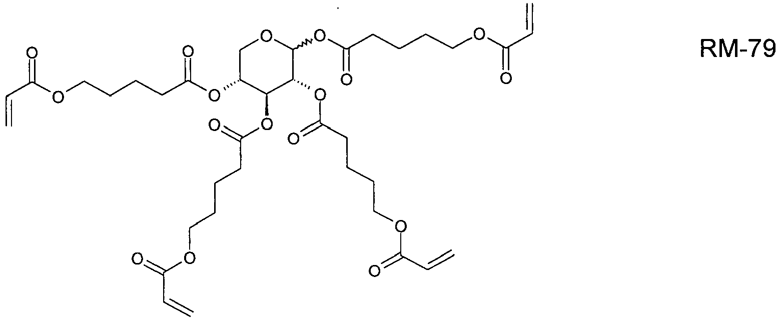

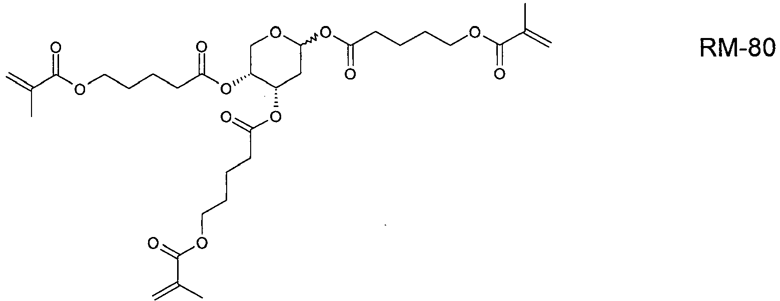

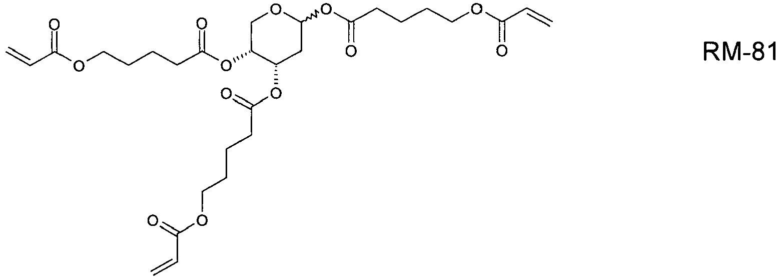

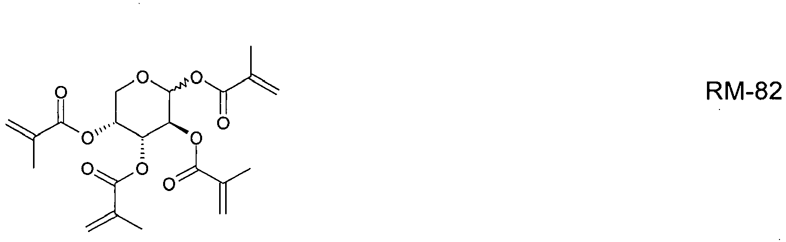

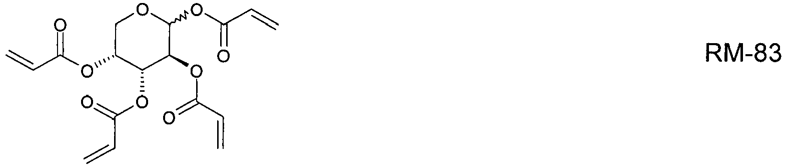

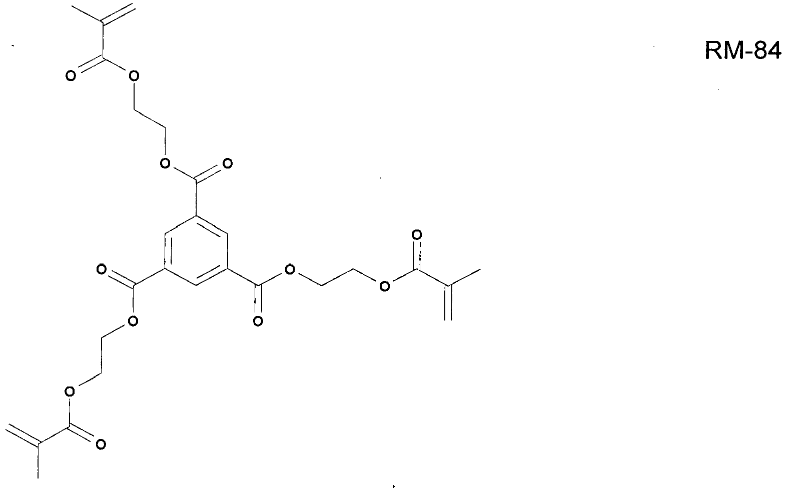

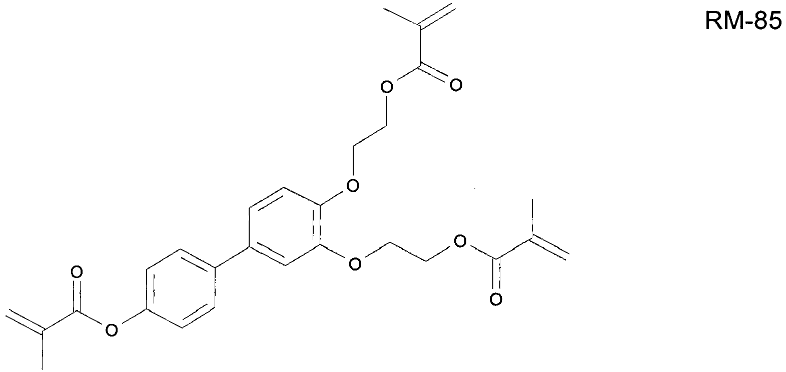

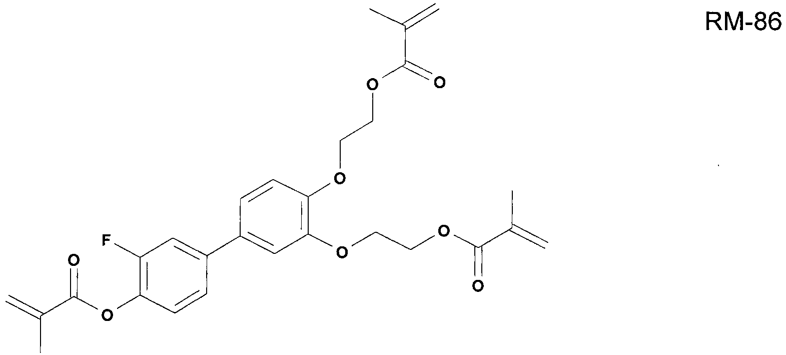

20. Process for the preparation of a liquid-crystalline medium according to one or more of Claims 1 to 19, **characterised in that** one or more compounds of the formula IA and one or more compounds selected from the group of compounds of the formula IIA, IIB and IIC as defined in Claim 1, are mixed with one or more mesogenic compounds and optionally also with one or more additives and/or at least one polymerisable compound.

21. Use of a liquid-crystalline medium according to one or more of Claims 1 to 19 for electro-optical purposes.

22. Use of the liquid-crystalline medium according to Claim 21 in shutter glasses, for 3D applications, in TN, PS-TN, STN, TN-TFT, OCB, IPS, PS-IPS, FFS, PS-FFS and PS-VA-IPS displays.

23. Electro-optical liquid-crystal display containing a liquid-crystalline medium according to one or more of Claims 1 to 19.

## Patentansprüche

1. Flüssigkristallines Medium mit einer positiven Anisotropie, **dadurch gekennzeichnet, dass** es eine oder mehrere Verbindungen der Formel IA 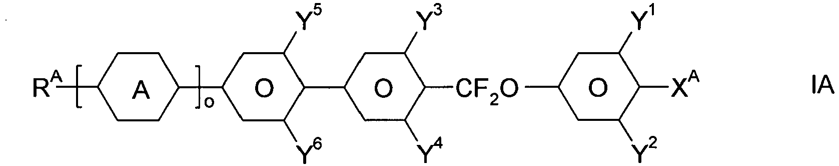 und
mindestens eine Verbindung ausgewählt aus der Gruppe von Verbindungen der Formel IIA, IIB und IIC 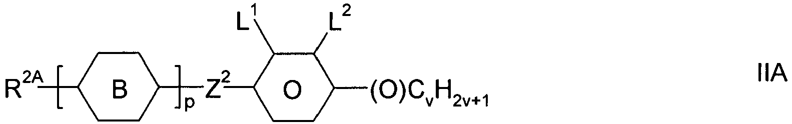 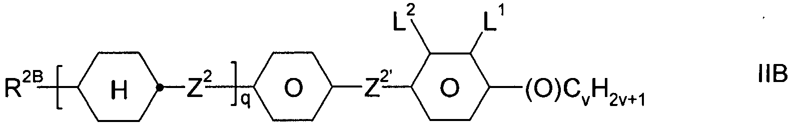 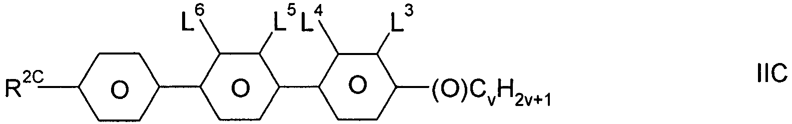 enthält, in denen
R^{A}, R^{2A}, R^{2B} und R^{2C} jeweils unabhängig voneinander H, einen Alkyl- oder Alkenylrest mit bis zu 15 C-Atomen bedeuten, der unsubstituiert, einfach durch CN oder CF₃ substituiert oder mindestens einfach durch Halogen substituiert ist, wo zusätzlich eine oder mehrere CH₂-Gruppen in diesen Resten so durch -O-, -S-, 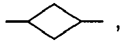 -C≡C-, -CF₂O-, -OCF₂-, -OC-O- oder -O-CO- ersetzt sein können, dass O-Atome nicht direkt miteinander verknüpft sind, 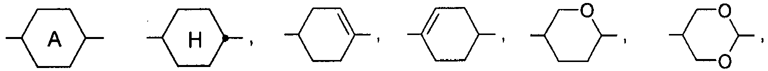 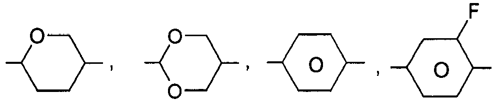 oder 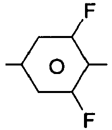 bedeutet, 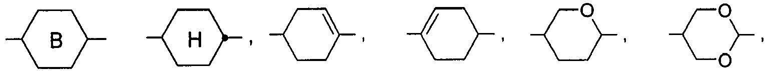 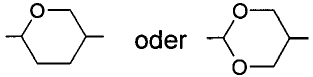 bedeutet,
X^{A} F, Cl, CN, SF₅, SCN, NCS, einen halogenierten Alkylrest, einen halogenierten Alkenylrest, einen halogenierten Alkoxy-rest oder einen halogenierten Alkenyloxyrest, jeweils mit bis zu 6 C-Atomen, bedeutet, und
Y¹⁻⁶ jeweils unabhängig voneinander H oder F bedeuten,
L¹ und L² jeweils unabhängig voneinander F, Cl, CF₃ oder CHF₂ bedeuten,
L³⁻⁶ jeweils unabhängig voneinander H, F, Cl, CF₃ oder CHF₂ bedeuten, aber mindestens zwei von L³⁻⁶ F, Cl, CF₃ oder CHF₂ bedeuten,
Z² und Z^{2'} jeweils unabhängig voneinander eine Einfachbindung, -CH₂CH₂-, -CH=CH-, -C≡C-, -CF₂O-, -OCF₂-, -CH₂O-, -OCH₂-, -COO-, -OCO-, -C₂F₄-, -CF=CF-, -CH=CHCH₂O- bedeuten,
p 1 oder 2 bedeutet und, in wenn Z² = Einfachbindung, p auch 0 bedeuten kann,
o und q jeweils unabhängig voneinander 0 oder 1 bedeuten,
(O)CᵥH₂ᵥ₊₁ OCᵥH₂ᵥ₊₁ oder CᵥH₂ᵥ₊₁ bedeutet, und
v 1 bis 6 bedeutet,
und dass
das flüssigkristalline Medium mindestens zwei Verbindungen der Formel IA und mindestens zwei Verbindungen der Formel IIA enthält und dass weiterhin entweder
das flüssigkristalline Medium insgesamt ≥ 20 Gew.-% an Verbindungen der Formel IA und Verbindungen der Formel IIB, bezogen auf das Gemisch, enthält,
oder
das flüssigkristalline Medium insgesamt ≥ 20 Gew.-% an Verbindungen der Formel IA und Verbindungen der Formel IIC, bezogen auf das Gemisch, enthält.

2. Flüssigkristallines Medium nach Anspruch 1, **dadurch gekennzeichnet, dass** es eine oder mehrere Verbindungen ausgewählt aus den Verbindungen der Formeln IA-1 bis IA-5 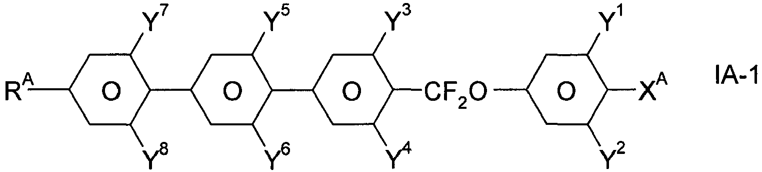 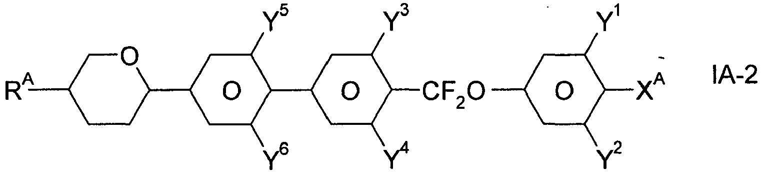 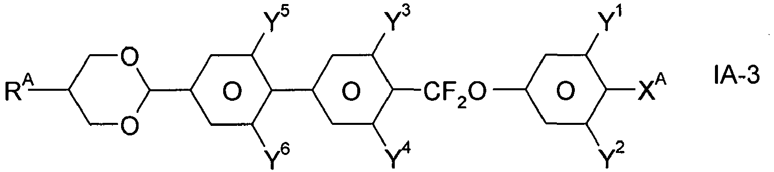 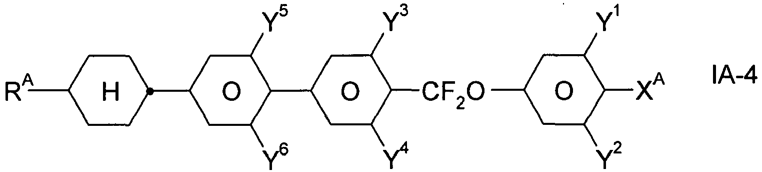 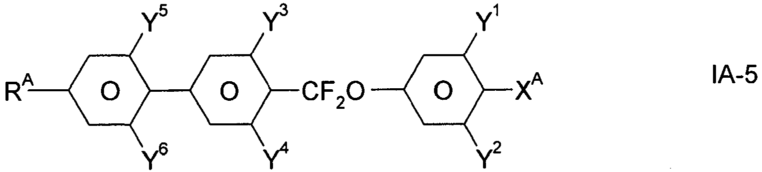 enthält, in denen R^{A}, X^{A} und Y¹⁻⁶ die vorstehend angegebenen Bedeutungen nach Anspruch 1 besitzen und Y⁷ und Y⁸ jeweils unabhängig H oder F bedeuten.

3. Flüssigkristallines Medium nach Anspruch 1 oder 2, **dadurch gekennzeichnet, dass** es eine oder mehrere Verbindungen ausgewählt aus den Verbindungen der Formeln IA-1a bis IA-4d 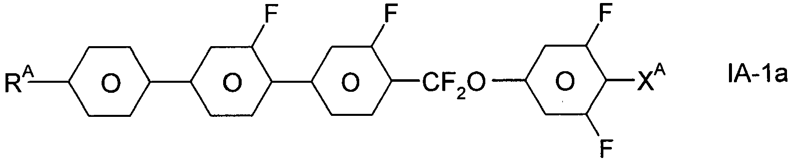 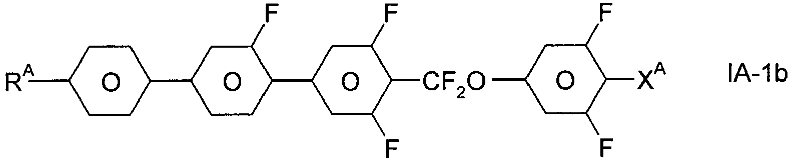 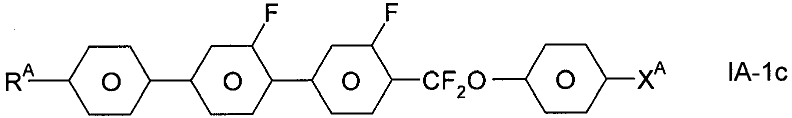 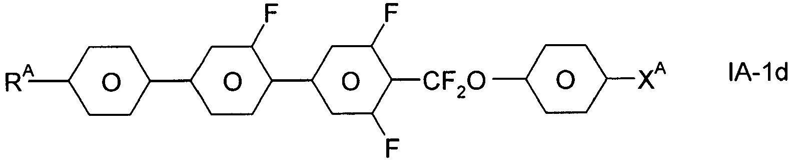 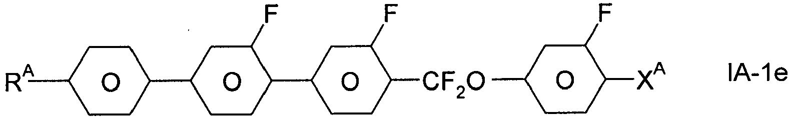 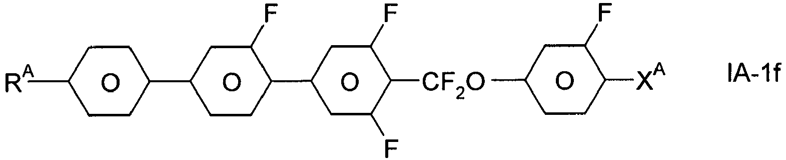 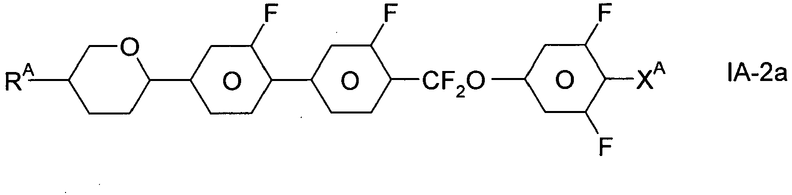 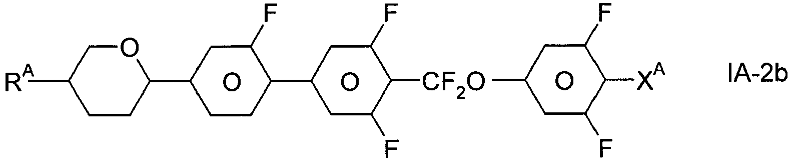 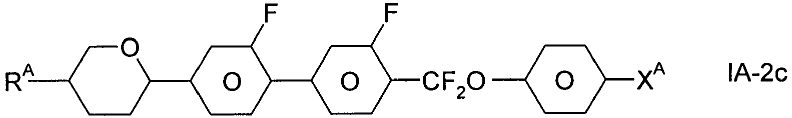 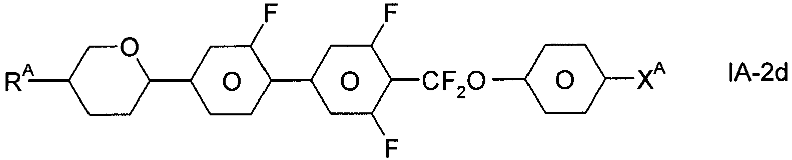 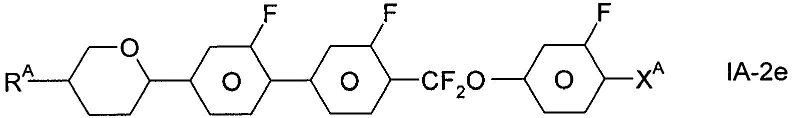 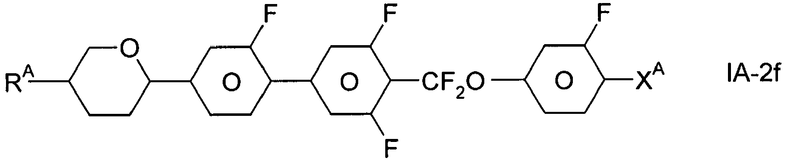 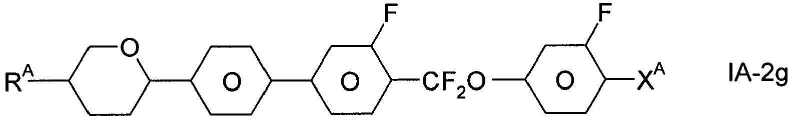 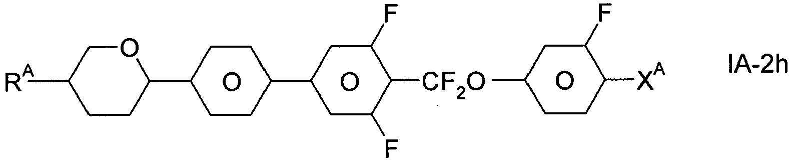 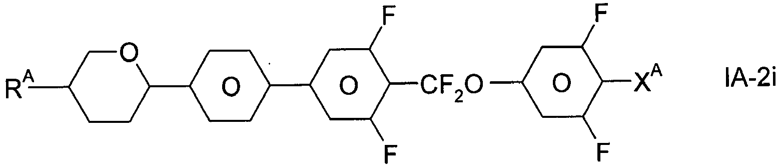 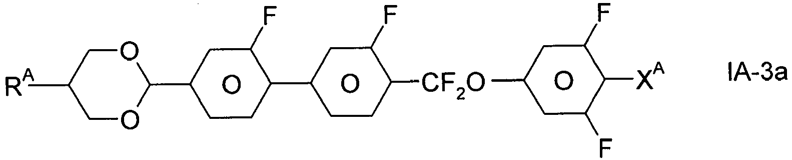 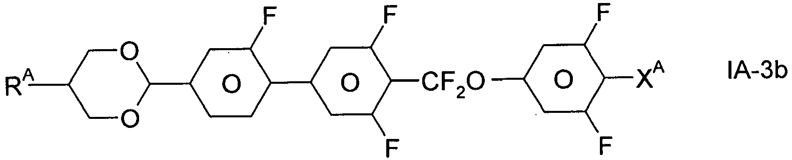 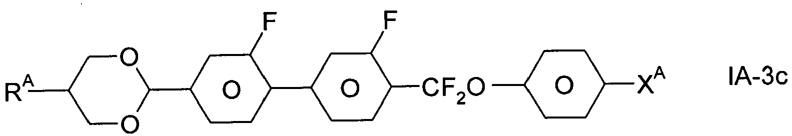 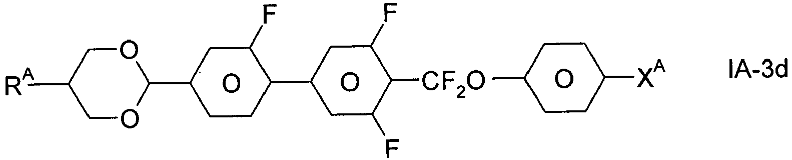 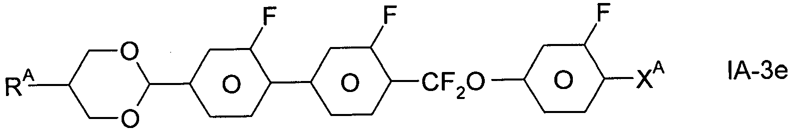 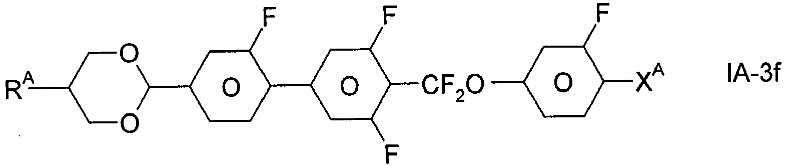 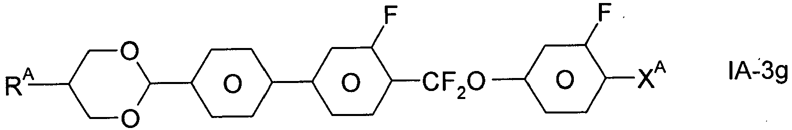 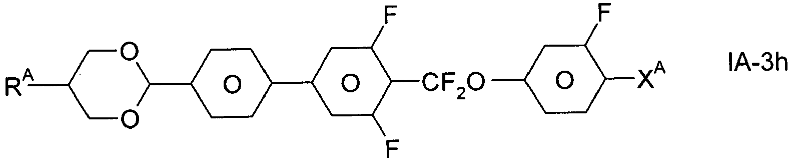 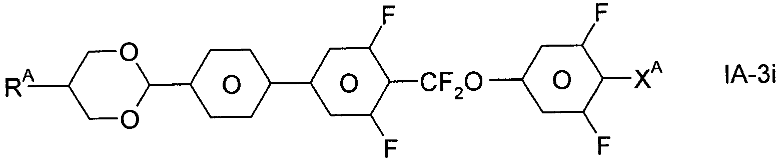 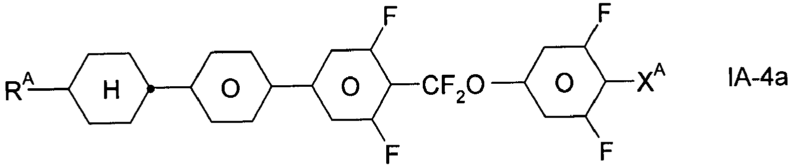 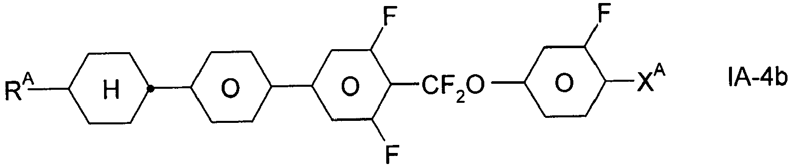 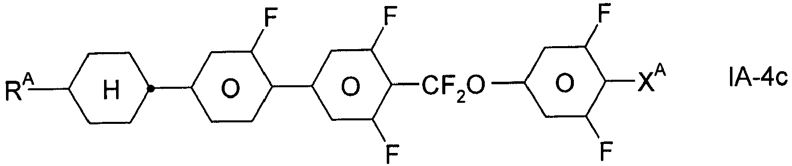 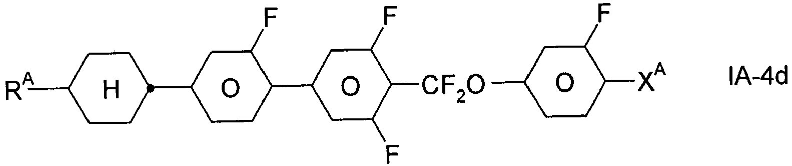 enthält, in den R^{A} und X^{A} die in Anspruch 1 angegebenen Bedeutungen besitzen.

4. Flüssigkristallines Medium nach einem oder mehreren der Ansprüche 1 bis 3, **dadurch gekennzeichnet, dass** X^{A} in Formel IA F, OCF₃, OCHF₂, CF₃, OCHF₂, OCHFCF₃, OCF₂CHFCF₃, CF=CF₂, CH=CF₂, OCF=CF₂ oder OCH=CF₂ bedeutet.

5. Flüssigkristallines Medium nach einem oder mehreren der Ansprüche 1 bis 4, **dadurch gekennzeichnet, dass** es eine oder mehrere Verbindungen der Formel IIA-1 bis IIC-6 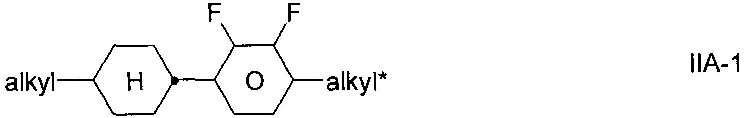 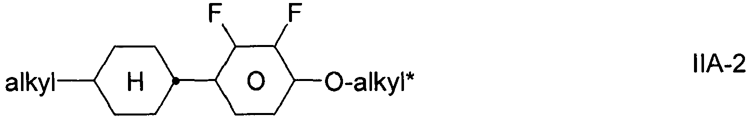 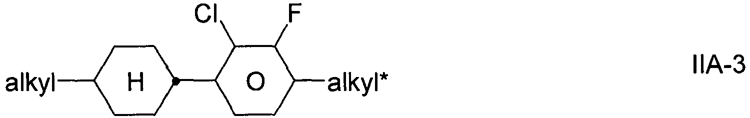 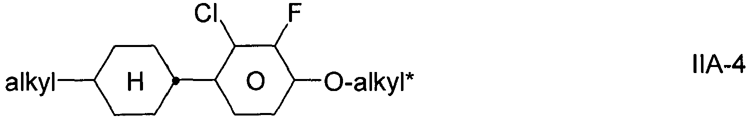 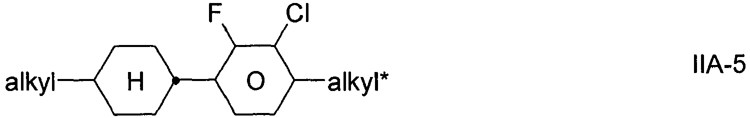 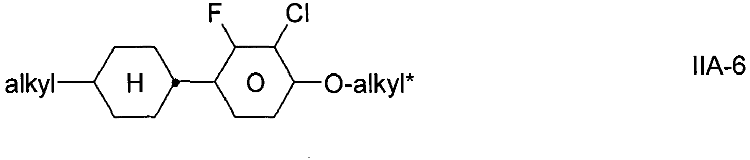 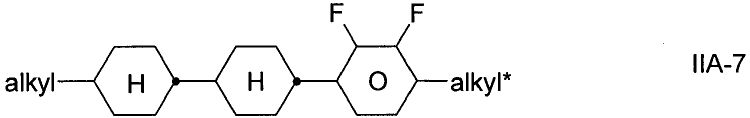 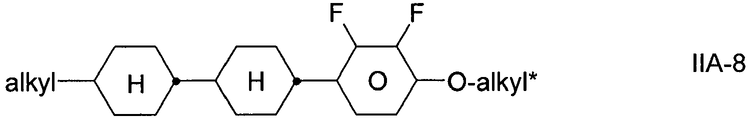 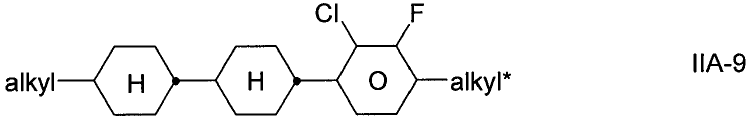 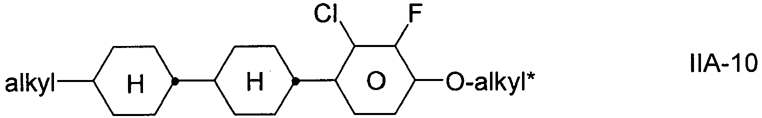 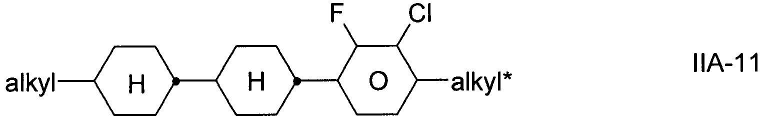 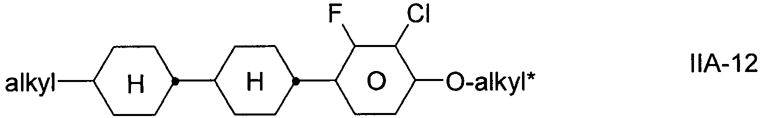 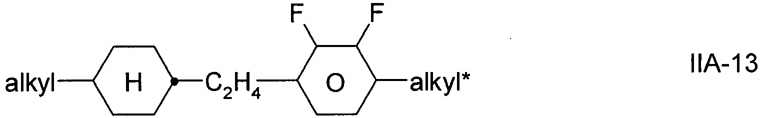 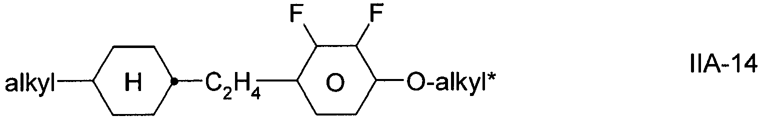 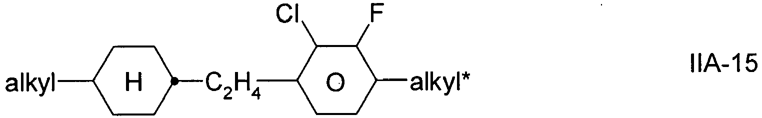 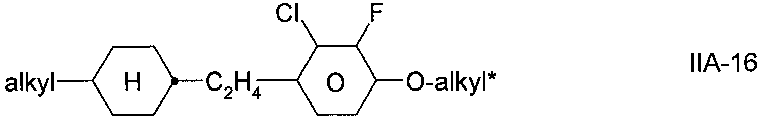 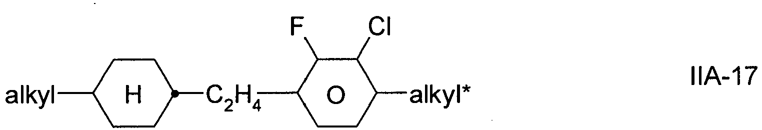 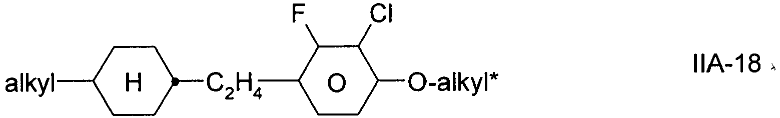 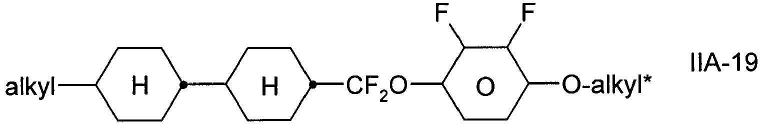 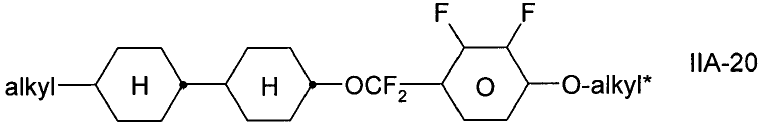 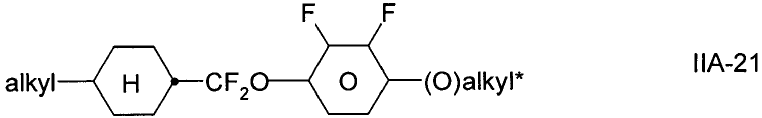 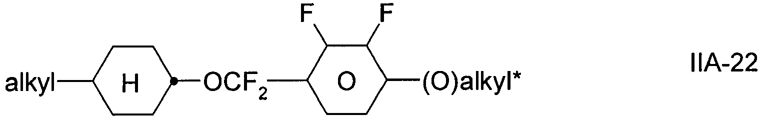 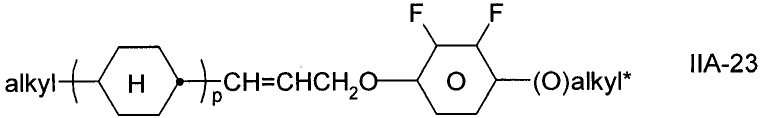 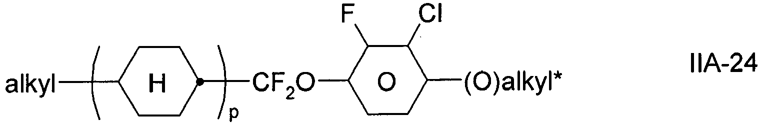 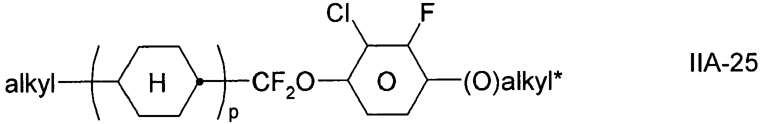 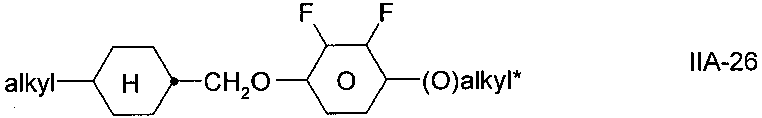 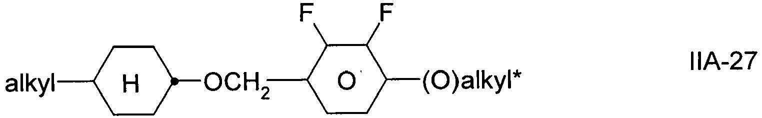 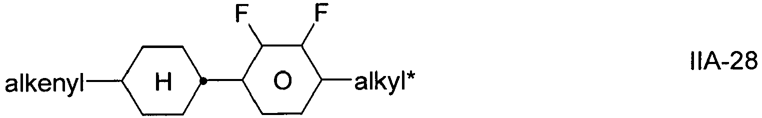 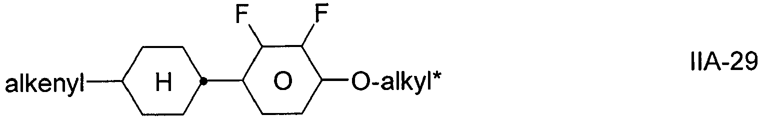 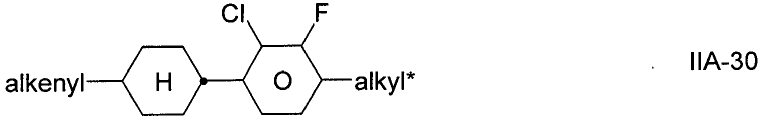 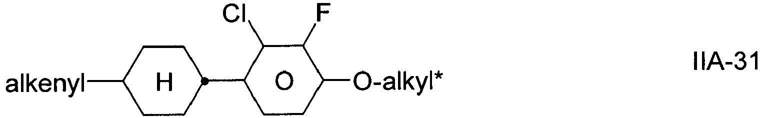 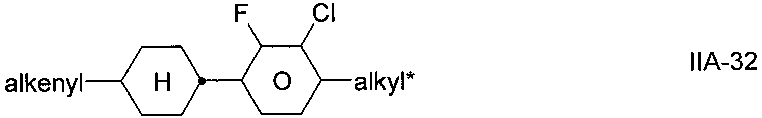 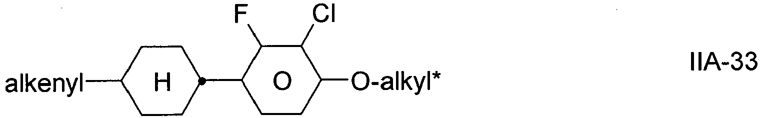 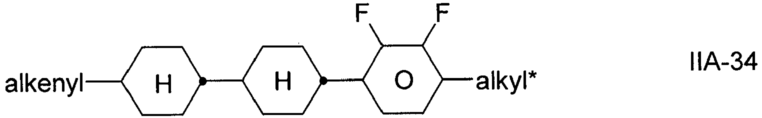 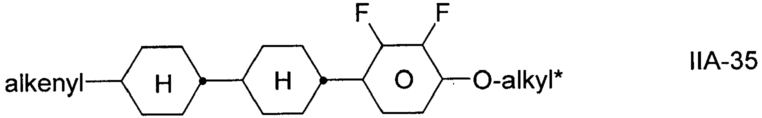 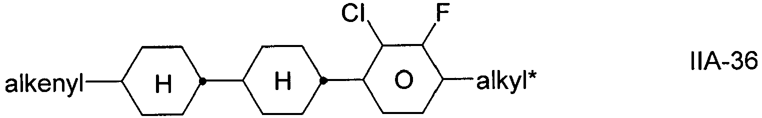 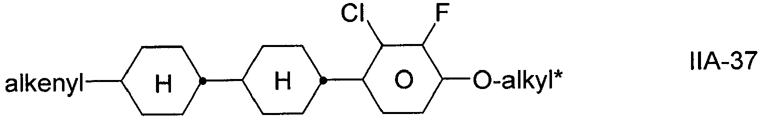 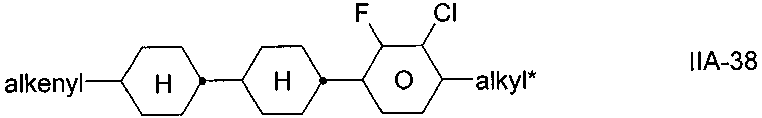 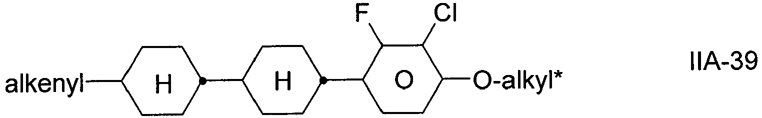 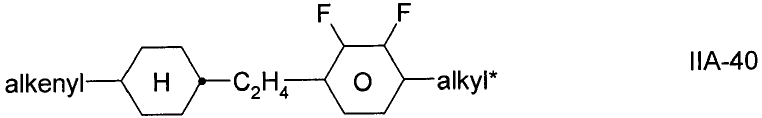 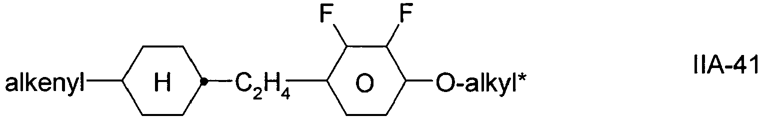 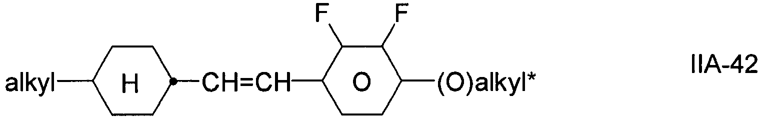 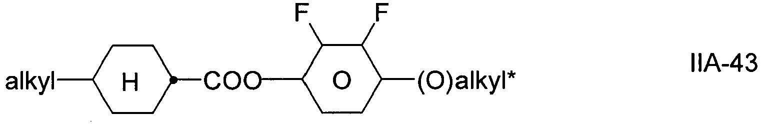 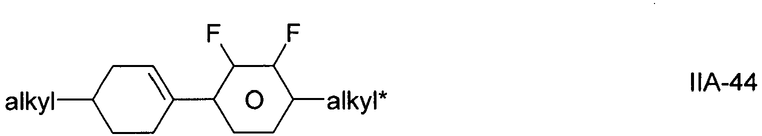 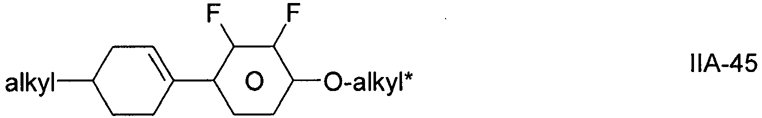 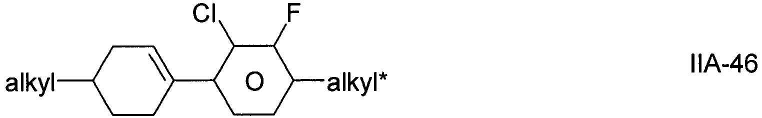 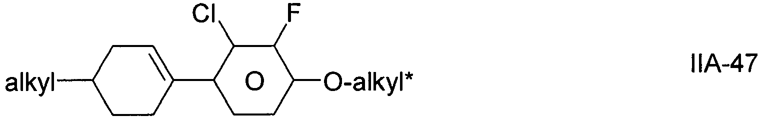 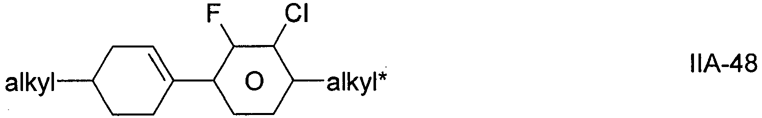 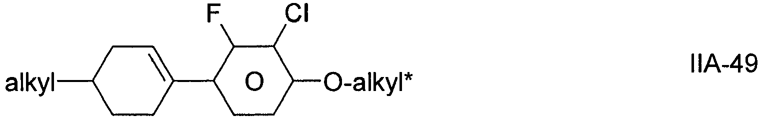 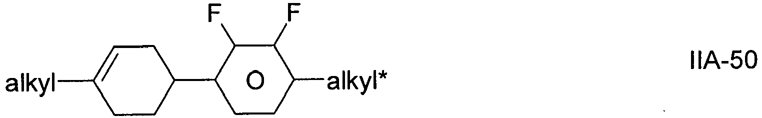 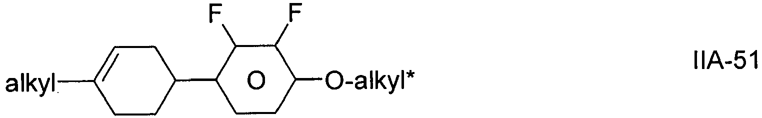 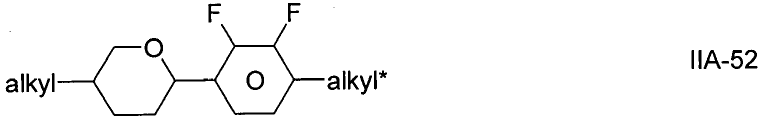 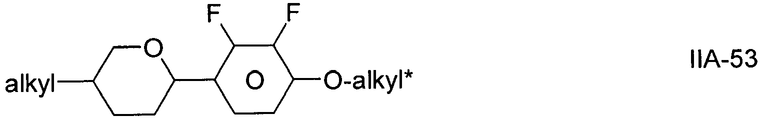 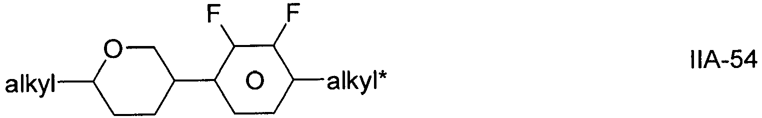 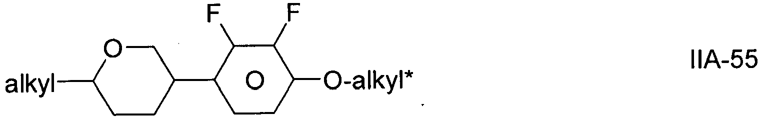 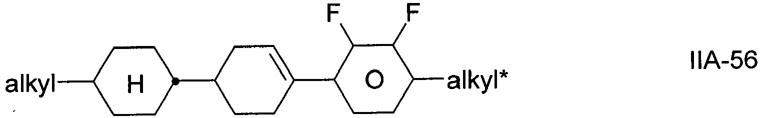 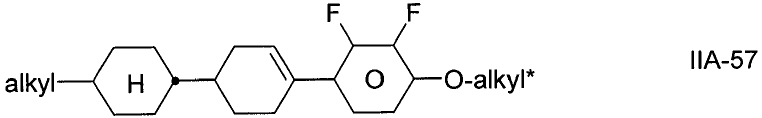 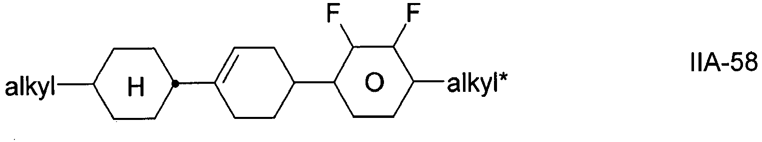 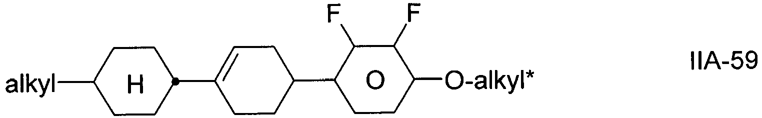 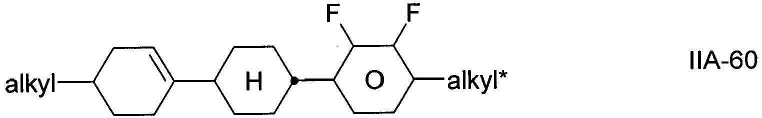 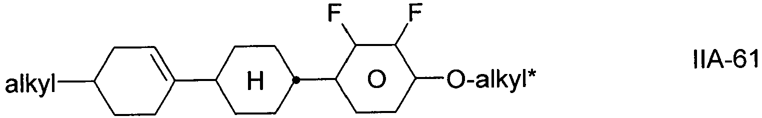 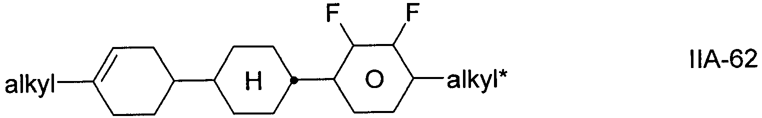 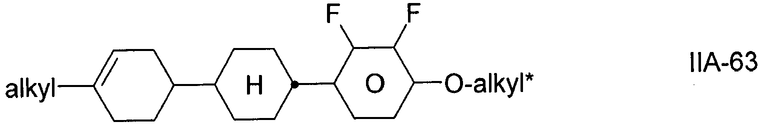 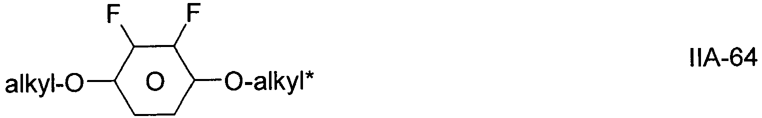 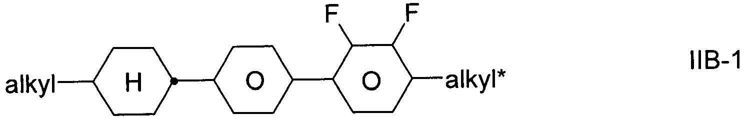 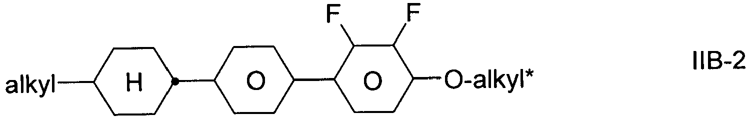 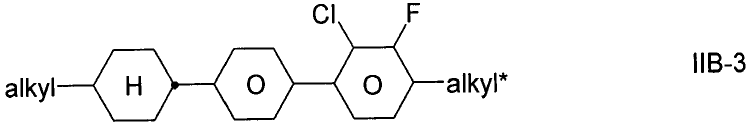 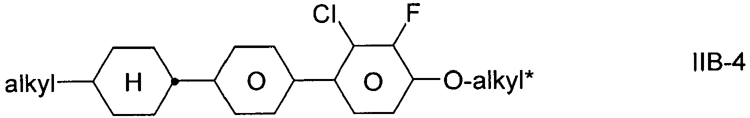 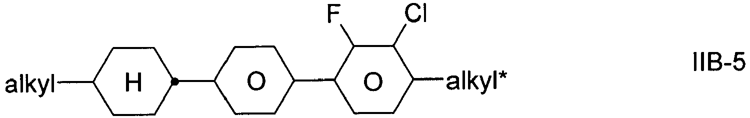 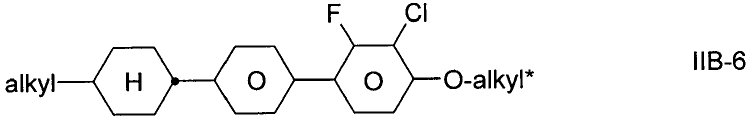 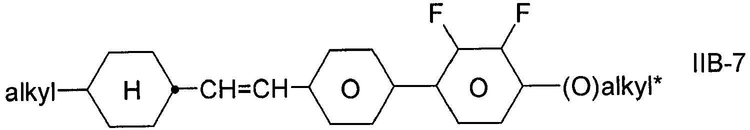 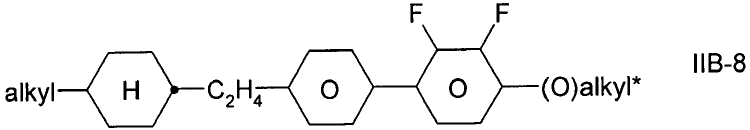 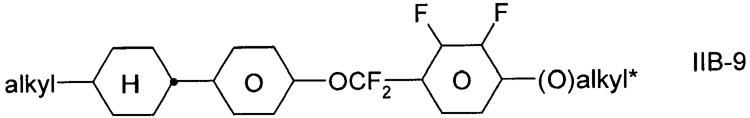 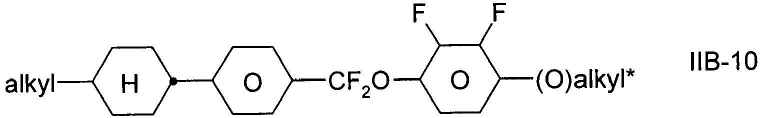 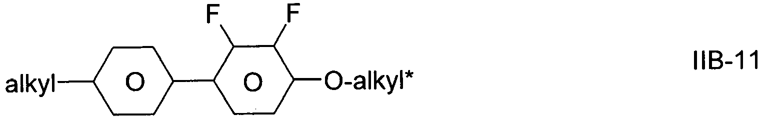 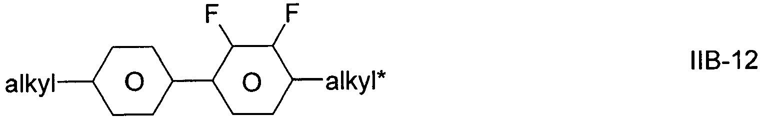 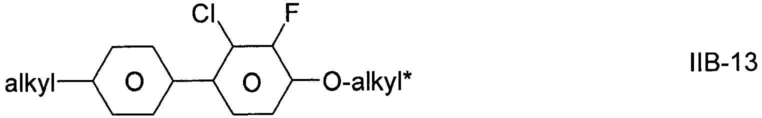 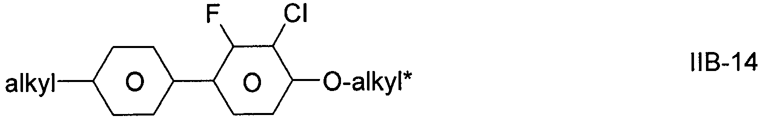 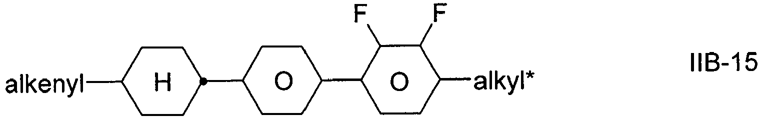 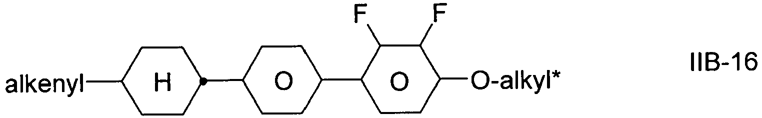 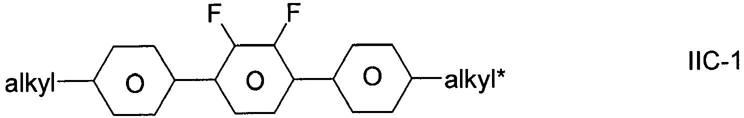 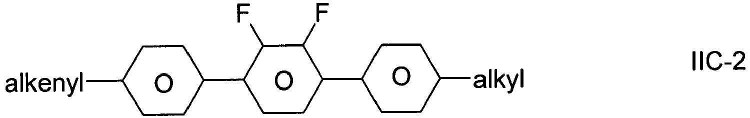 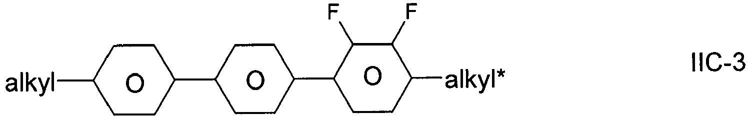 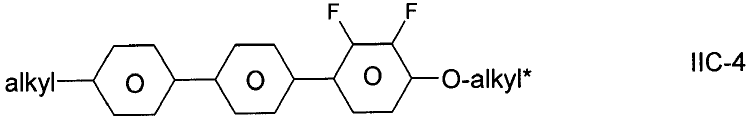 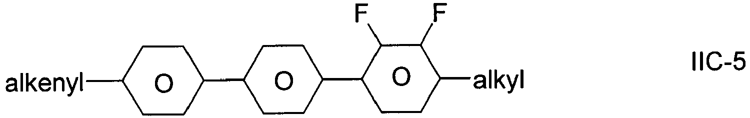 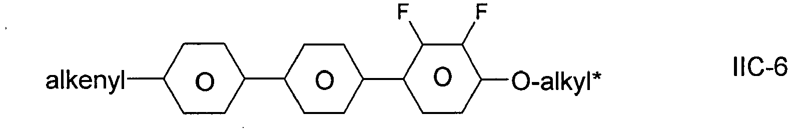 enthält, in denen alkyl und alkyl* jeweils unabhängig voneinander einen geradkettigen Alkylrest mit 1-6 C-Atomen bedeuten und alkenyl einen geradkettigen Alkenylrest mit 2-6 C-Atomen bedeutet.

6. Flüssigkristallines Medium nach einem oder mehreren der Ansprüche 1 bis 5, **dadurch gekennzeichnet, dass** es zusätzlich eine oder mehrere Verbindungen ausgewählt aus den Formeln III und/oder IV 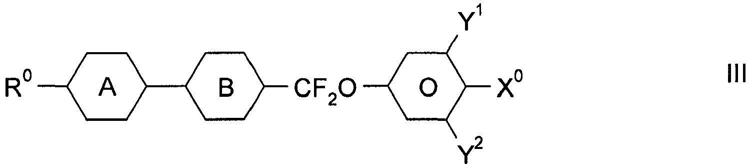 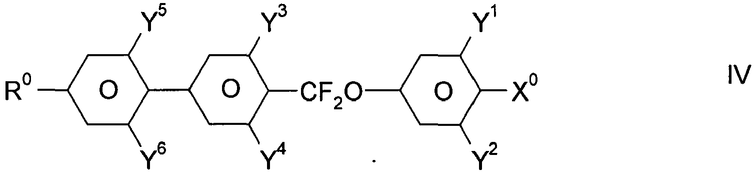 enthält, in denen
R⁰ einen halogenierten oder unsubstituierten Alkyl- oder Alkoxy-rest mit 1 bis 15 C-Atomen bedeutet, wo zusätzlich eine oder mehrere CH₂-Gruppen in diesen Resten jeweils unabhängig voneinander so durch -C≡C-, -CF₂O-, -CH=CH-, 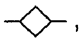 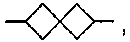 -O-, -CO-O- oder -O-CO- ersetzt sein können, dass O-Atome nicht direkt miteinander verknüpft sind,
X⁰ F, Cl, CN, SF₅, SCN, NCS, einen halogenierten Alkylrest, einen halogenierten Alkenylrest, einen halogenierten Alkoxy-rest oder einen halogenierten Alkenyloxyrest, jeweils mit bis zu 6 C-Atomen, bedeutet und
Y¹⁻⁶ jeweils unabhängig voneinander H oder F bedeuten, 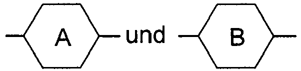 jeweils unabhängig voneinander 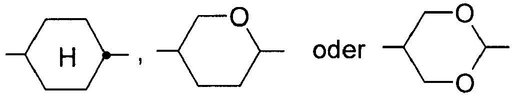 bedeuten.

7. Flüssigkristallines Medium nach einem oder mehreren der Ansprüche 1 bis 6, **dadurch gekennzeichnet, dass** es zusätzlich eine oder mehrere Verbindungen ausgewählt aus den Formeln V bis IX 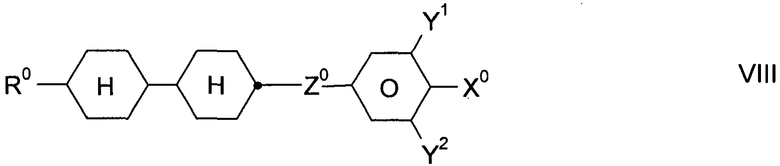 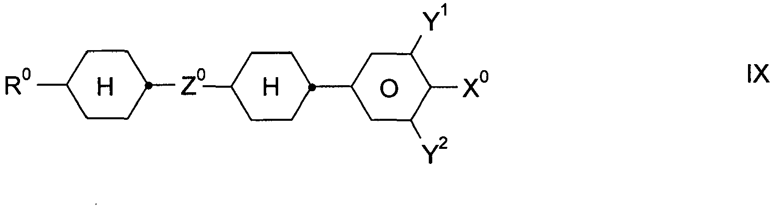 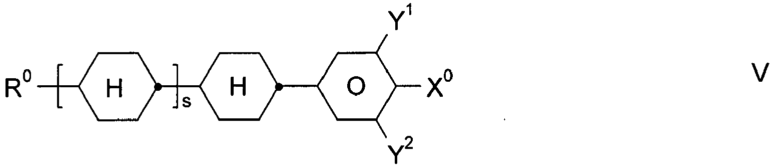 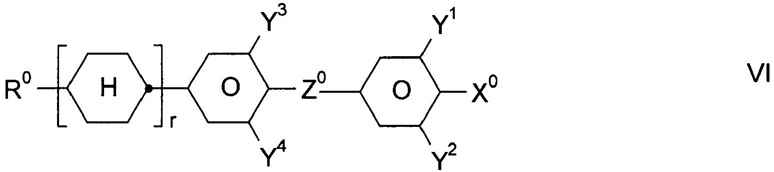 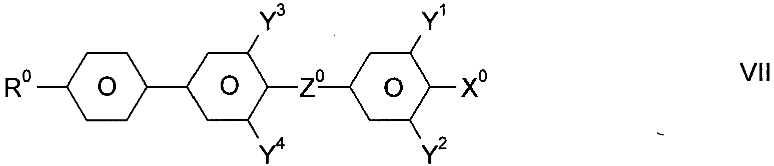 Enthält, in denen
R⁰ einen halogenierten oder unsubstituierten Alkyl- oder Alkoxy-rest mit 1 bis 15 C-Atomen bedeutet, wo zusätzlich eine oder mehrere CH₂-Gruppen in diesen Reste jeweils unabhängig voneinander so durch -C≡C-, -CF₂O-, -O-, 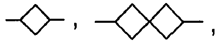 -CH=CH-, -CO-O- oder -O-CO- ersetzt sein können, dass O-Atome nicht direkt miteinander verknüpft sind,
X⁰ F, Cl, CN, SF₅, SCN, NCS, einen halogenierten Alkylrest, einen halogenierten Alkenylrest, einen halogenierten Alkoxy-rest oder einen halogenierten Alkenyloxyrest mit bis zu 6 C-Atomen bedeutet,
Y¹⁻⁴ jeweils unabhängig voneinander H oder F bedeuten,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO- oder -OCF₂-, in Formel VI und VII auch eine Einfachbindung und in Formel VI und IX auch -CF₂O- bedeutet,
r 0 oder 1 bedeutet und
s 0 oder 1 bedeutet.

8. Flüssigkristallines Medium nach einem oder mehreren der Ansprüche 1 bis 7, **dadurch gekennzeichnet, dass** es zusätzlich eine oder mehrere Verbindungen ausgewählt aus den Formeln X bis XIII 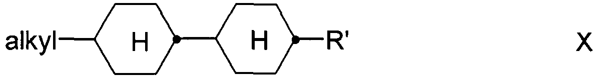 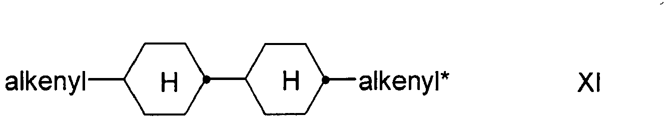 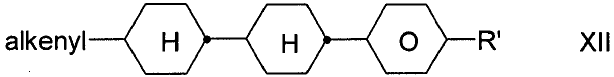 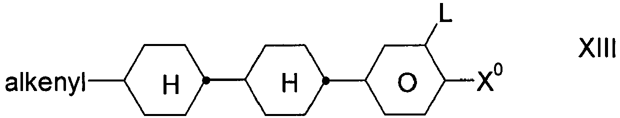 enthält, in denen X⁰ die in Anspruch 7 angegebenen Bedeutungen besitzt und
L H oder F bedeutet,
"alkyl" C₁₋₆-Alkyl bedeutet,
R' C₁₋₆-Alkyl, C₁₋₆-Alkoxy oder C₂₋₆-Alkenyl bedeutet und
"alkenyl" und "alkenyl*" jeweils unabhängig voneinander C₂₋₆-Alkenyl bedeuten.

9. Flüssigkristallines Medium nach einem oder mehreren der Ansprüche 1 bis 8, **dadurch gekennzeichnet, dass** es zusätzlich eine oder mehrere Verbindungen ausgewählt aus den Formeln Xa, Xb, Xc, Xd, Xe, XIa, XIb, XIIa und XIIIa enthält: 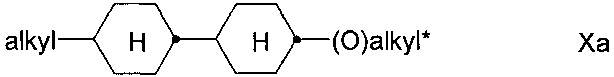 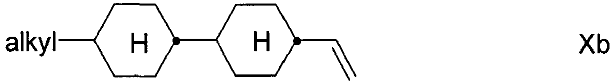 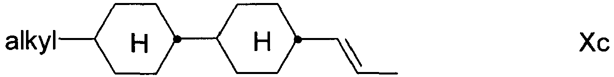 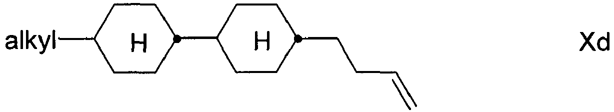 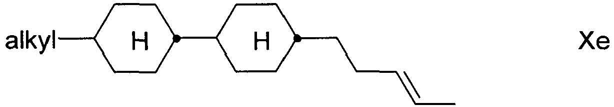 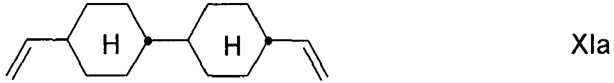 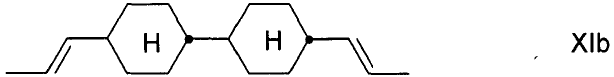 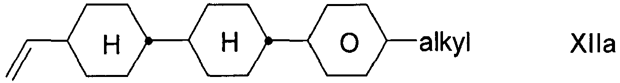 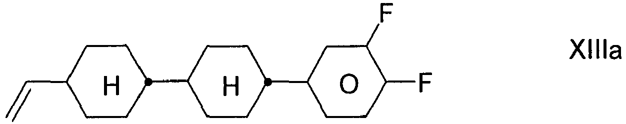 in denen "alkyl" und alkyl* jeweils unabhängig voneinander einen geradkettigen Alkylrest mit 1-6 C-Atomen bedeuten und alkenyl einen geradkettigen Alkenylrest mit 2-6 C-Atomen bedeutet und
(O)alkyl* Alkyl* oder O-Alkyl* (=Alkoxy) bedeutet.

10. Flüssigkristallines Medium nach einem oder mehreren der Ansprüche 1 bis 9, **dadurch gekennzeichnet, dass** es zusätzlich eine oder mehrere Verbindungen der Formel XIV 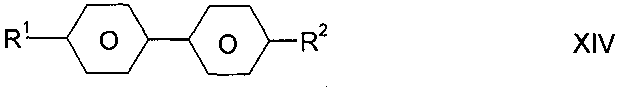 enthält, in der R¹ und R² jeweils unabhängig voneinander n-Alkyl, Alkoxy, Oxaalkyl, Fluoralkyl oder Alkenyl, jeweils mit bis zu 6 C-Atomen, bedeuten.

11. Flüssigkristallines Medium nach einem oder mehreren der Ansprüche 1 bis 10, **dadurch gekennzeichnet, dass** es zusätzlich eine oder mehrere Verbindungen der Formel XVII 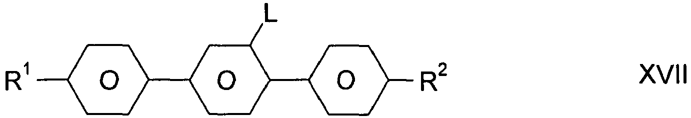 enthält, in der R¹ und R² jeweils unabhängig voneinander n-Alkyl, Alkoxy, Oxaalkyl, Fluoralkyl oder Alkenyl, jeweils mit bis zu 6 C-Atomen, bedeuten und L H oder F bedeutet.

12. Flüssigkristallines Medium nach einem oder mehreren der Ansprüche 1 bis 11, **dadurch gekennzeichnet, dass** es eine oder mehrere Verbindungen ausgewählt aus der Gruppe der Verbindungen der Formeln XXVIII bis XXXI 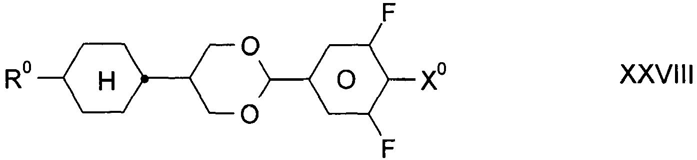 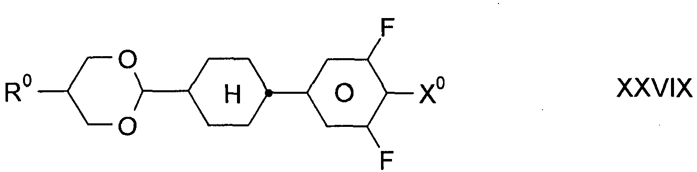 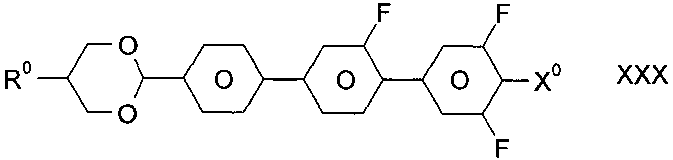 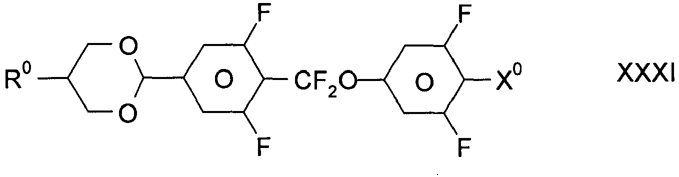 enthält, in denen R⁰ und X⁰ die in Anspruch 7 angegebenen Bedeutungen besitzen.

13. Flüssigkristallines Medium nach einem oder mehreren der Ansprüche 1 bis 12, **dadurch gekennzeichnet, dass** es eine oder mehrere Verbindungen ausgewählt aus der Gruppe der Verbindungen der Formeln XIX, XX, XXI, XXII, XXIII und XXIV 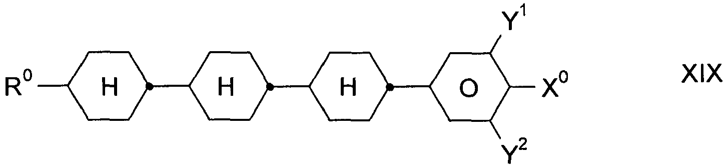 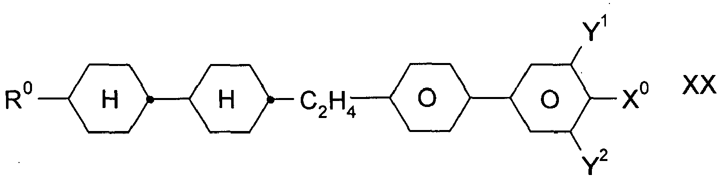 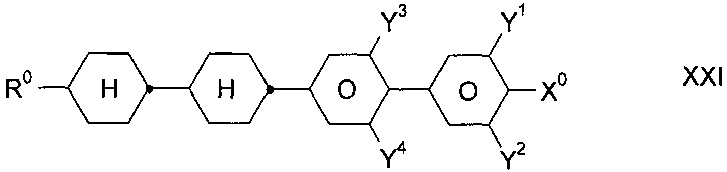 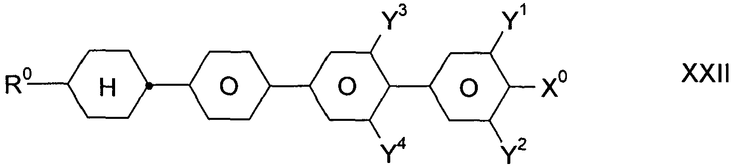 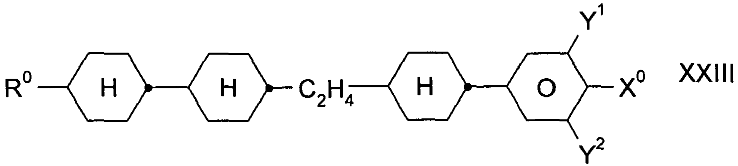 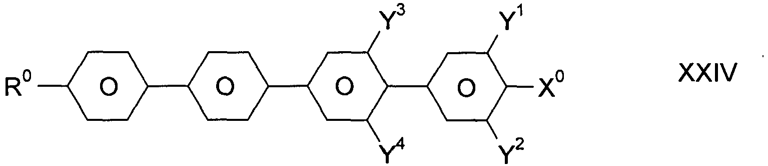 enthält, in denen R⁰ und X⁰ die in Anspruch 7 angegebenen Bedeutungen besitzen und Y¹⁻⁴ jeweils unabhängig voneinander H oder F bedeuten.

14. Flüssigkristallines Medium nach einem oder mehreren der Ansprüche 1 bis 13, **dadurch gekennzeichnet, dass** es ≥ 20 Gew.-% der Verbindung der Formel Xb 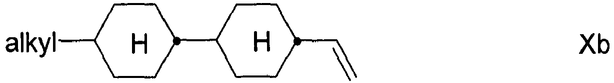 enthält, in der alkyl die in Anspruch 5 angegebene Bedeutung besitzt.

15. Flüssigkristallines Medium nach einem oder mehreren der Ansprüche 1 bis 14, **dadurch gekennzeichnet, dass** es bei 20°C und 1 kHz eine dielektrische Anisotropie (Δε) von > 1,5 aufweist.

16. Flüssigkristallines Medium nach einem oder mehreren der Ansprüche 1 bis 15, **dadurch gekennzeichnet, dass** es zusätzlich einen oder mehrere aus der Gruppe der UV-Stabilisatoren, Dotiermittel und Antioxidantien ausgewählte Zusatzstoff(e) enthält.

17. Flüssigkristallines Medium nach einem oder mehreren der Ansprüche 1 bis 16, **dadurch gekennzeichnet, dass** der Zusatzstoff(e) ausgewählt ist aus

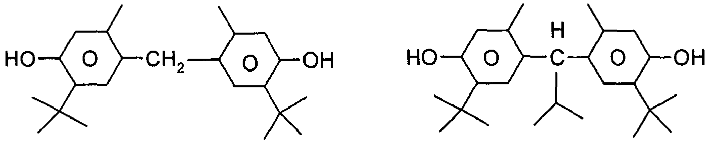

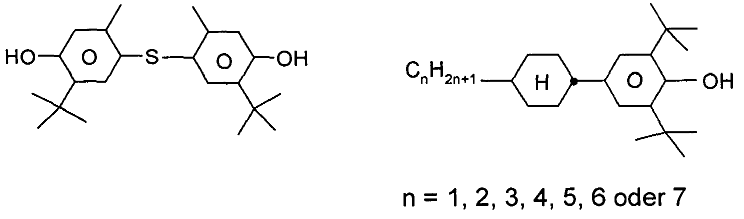

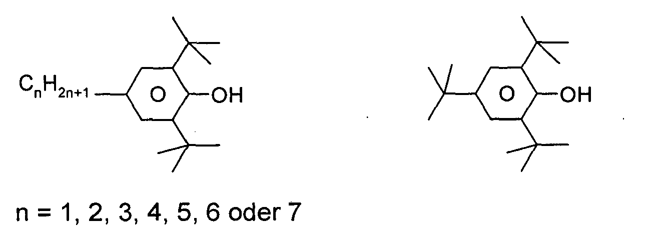

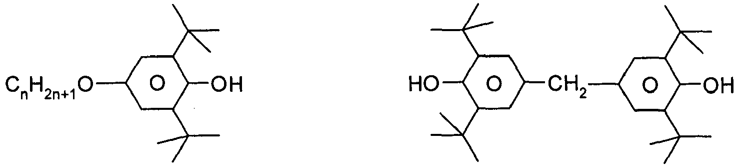

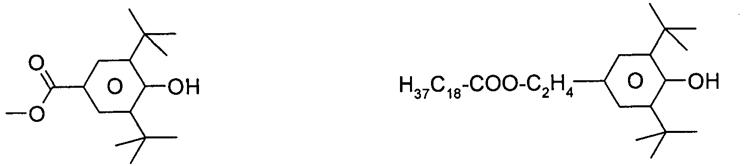

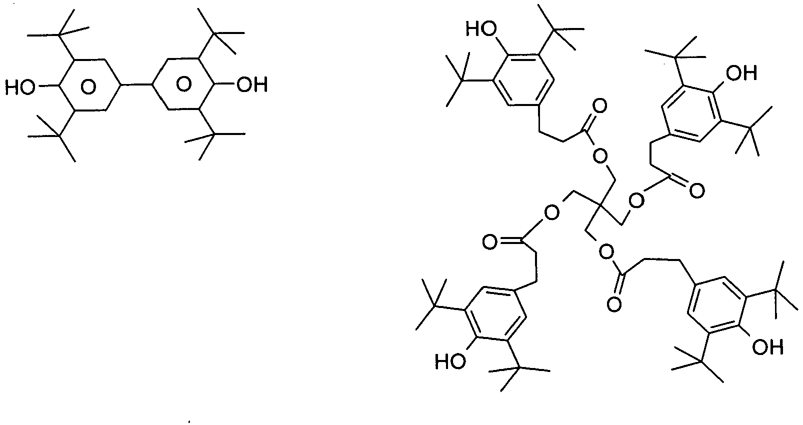

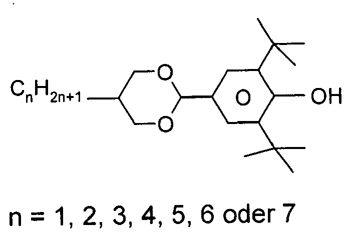

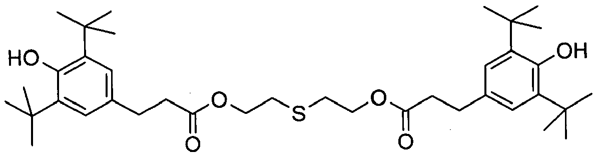

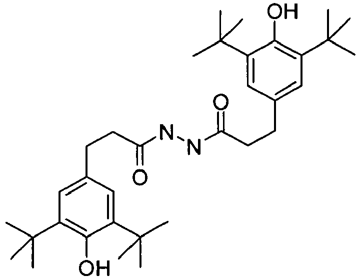

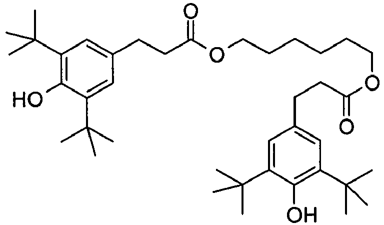

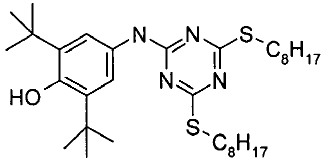

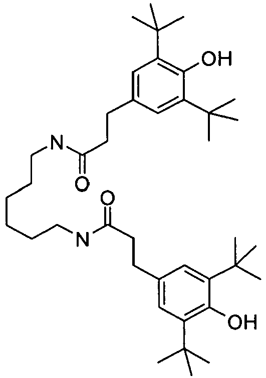

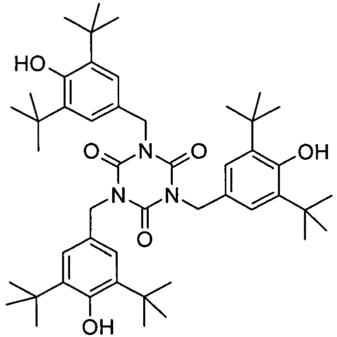

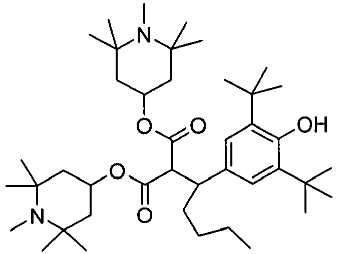

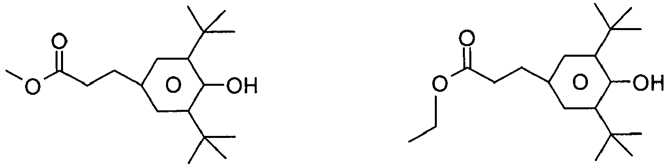

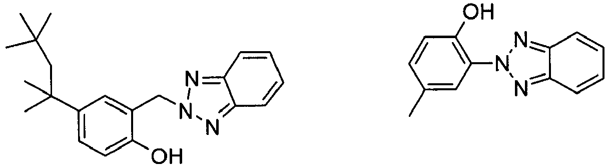

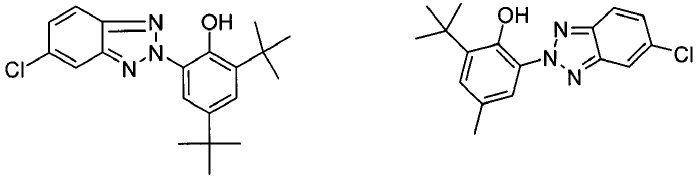

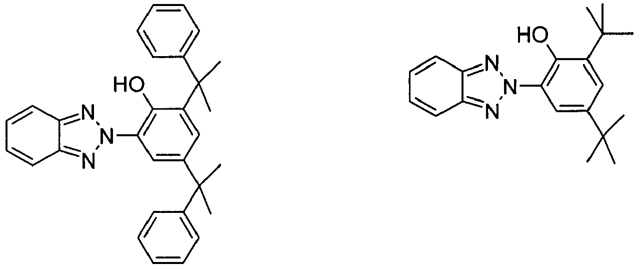

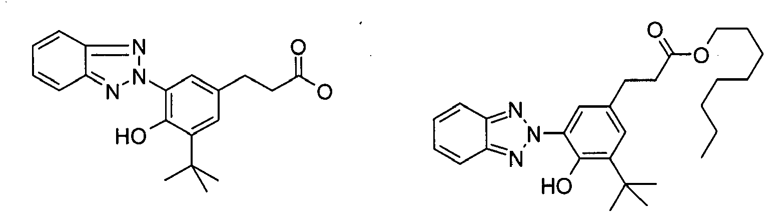

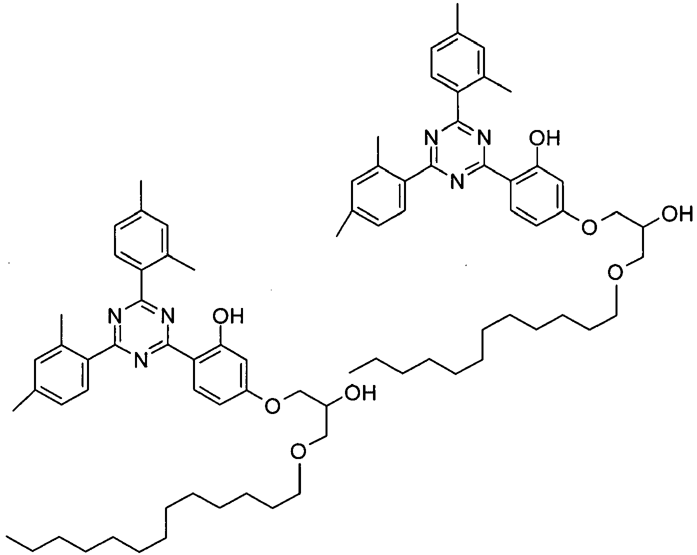

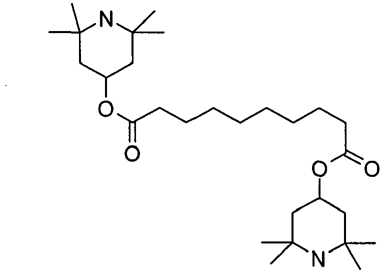

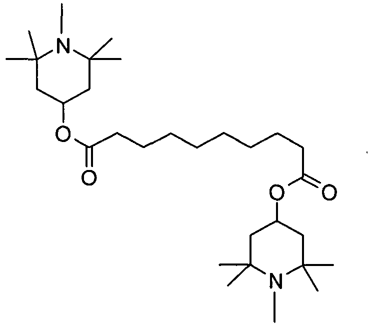

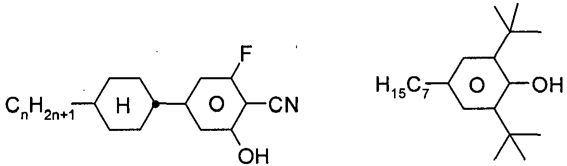

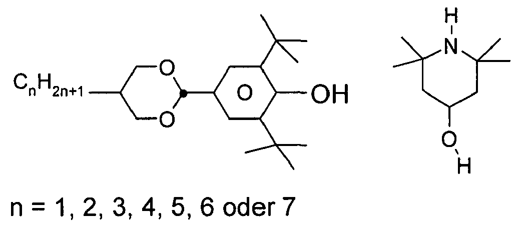

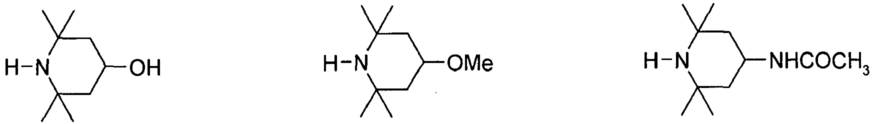

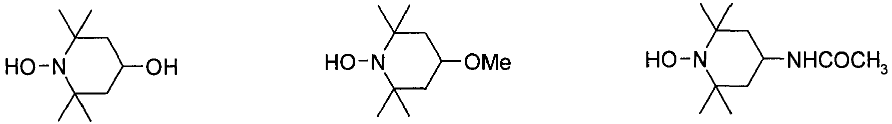

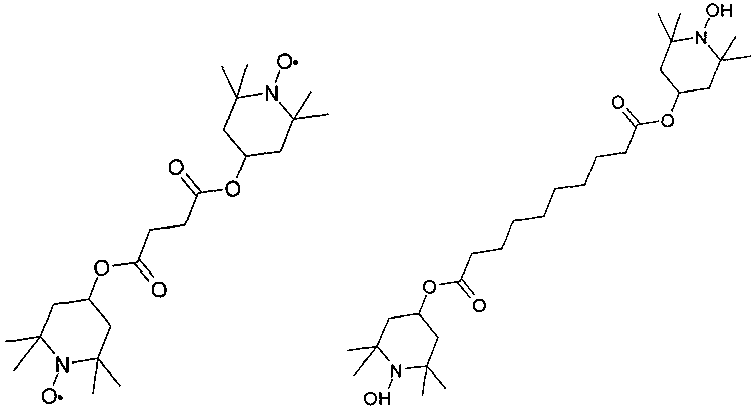

18. Flüssigkristallines Medium nach einem oder mehreren der Ansprüche 1 bis 17, **dadurch gekennzeichnet, dass** es zusätzlich eine oder mehrere polymerisierbare Verbindungen enthält.

19. Flüssigkristallines Medium nach einem oder mehreren der Ansprüche 1 bis 18, **dadurch gekennzeichnet, dass** die polymerisierbare Verbindung aus RM-1 bis RM-86 ausgewählt ist:

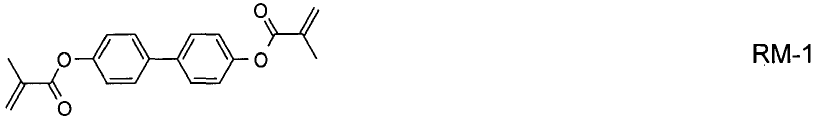

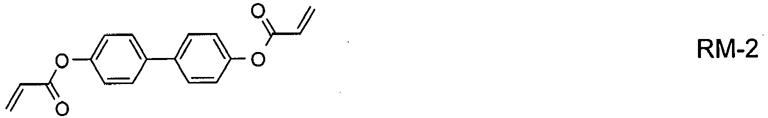

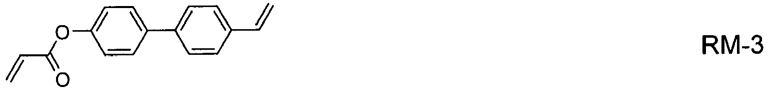

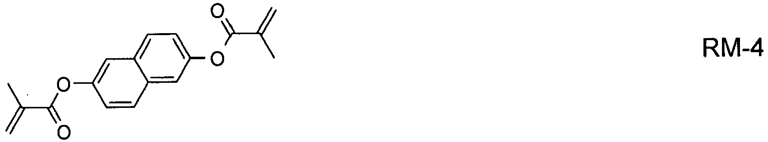

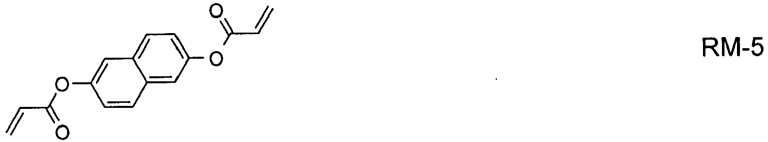

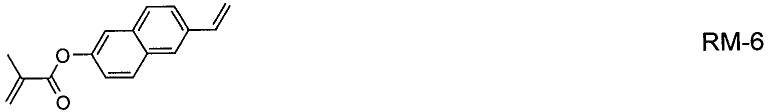

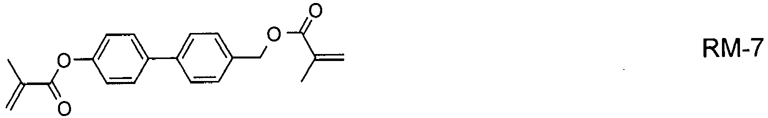

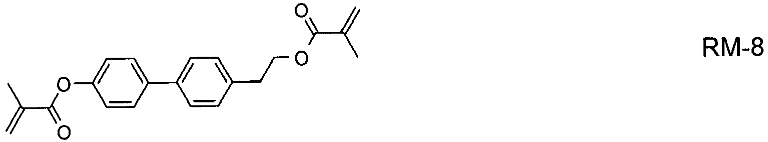

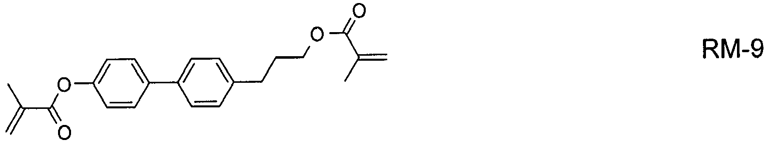

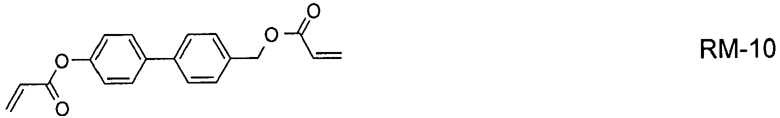

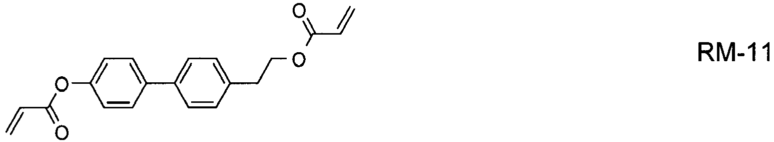

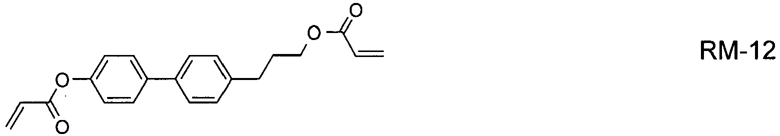

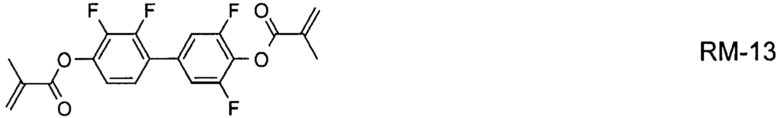

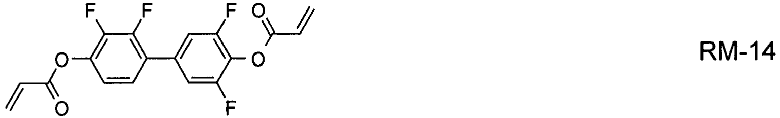

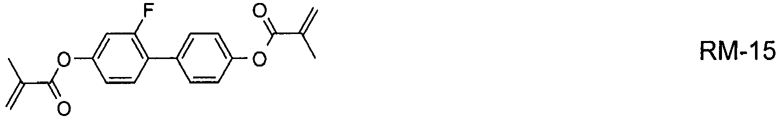

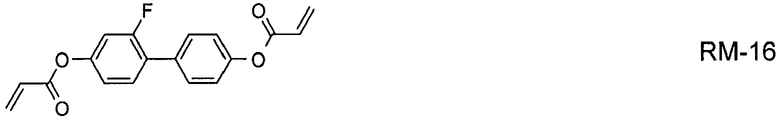

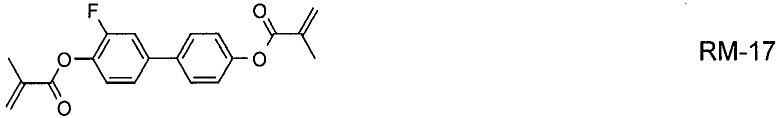

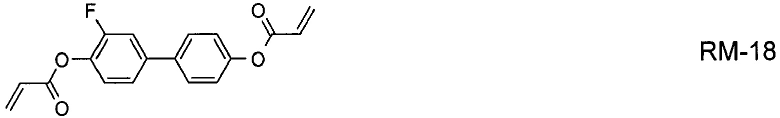

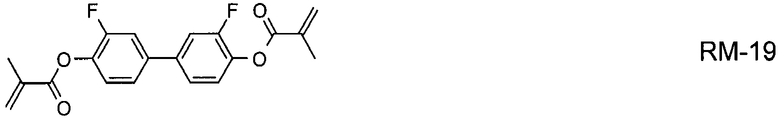

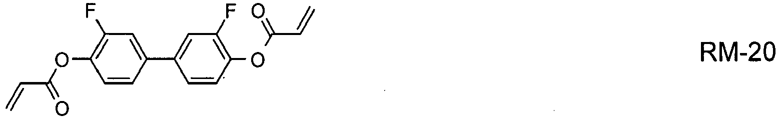

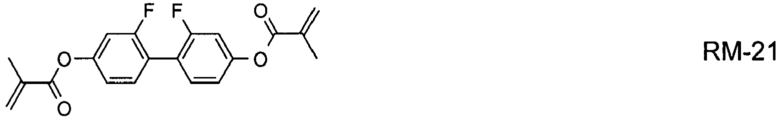

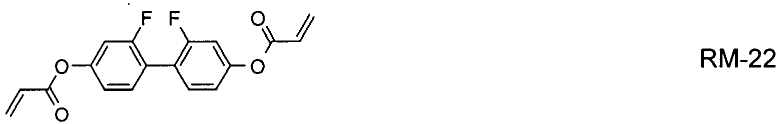

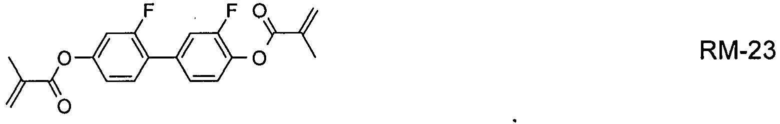

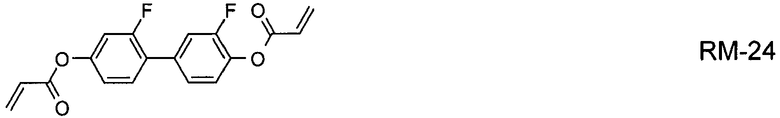

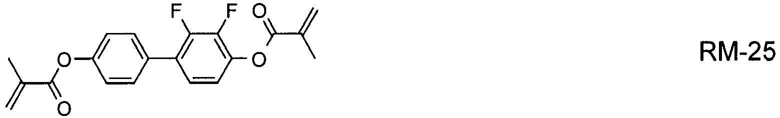

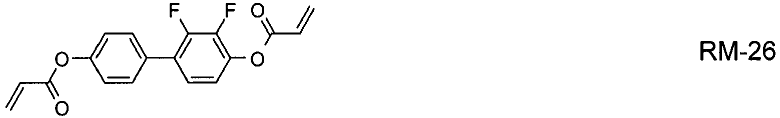

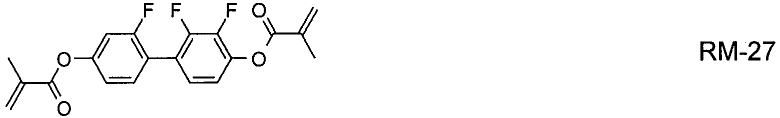

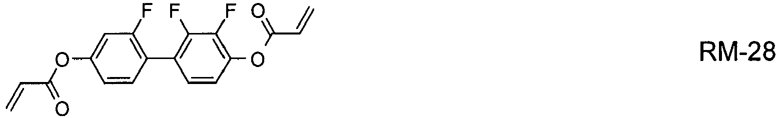

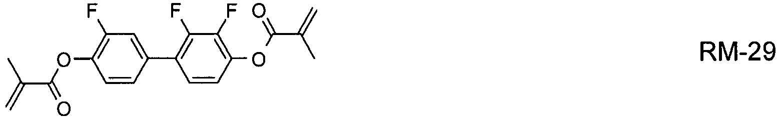

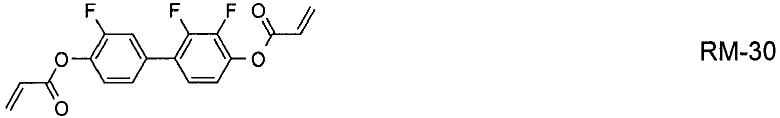

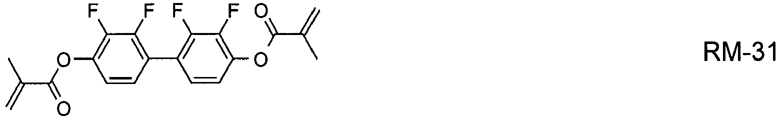

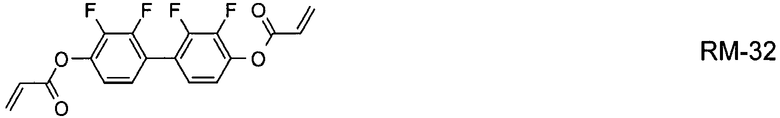

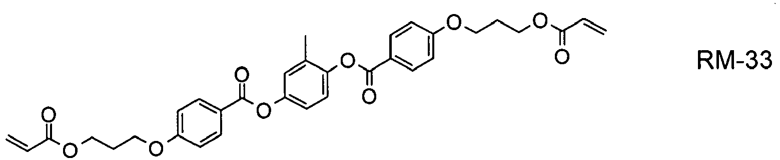

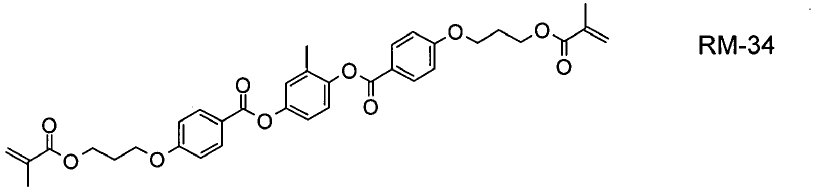

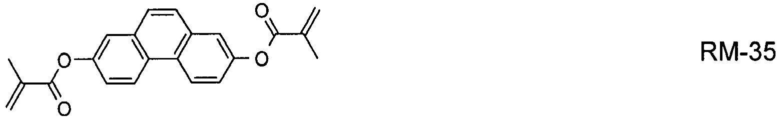

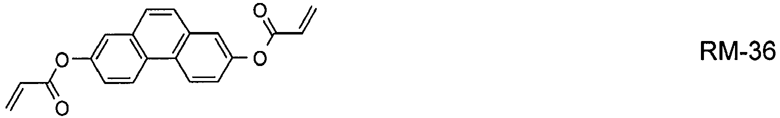

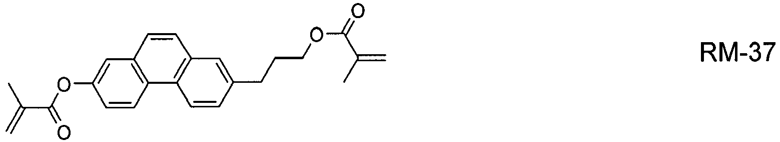

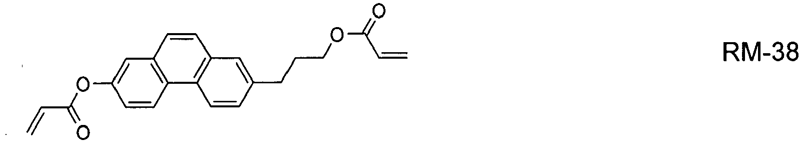

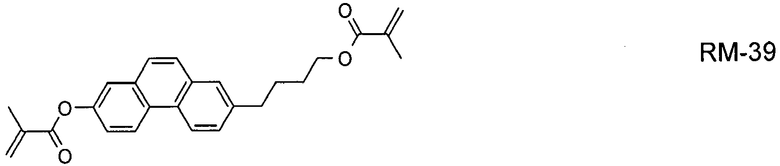

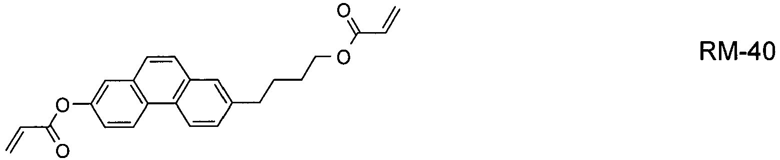

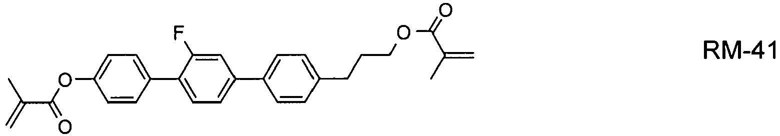

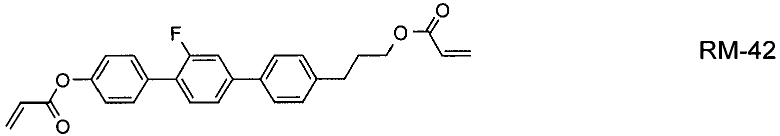

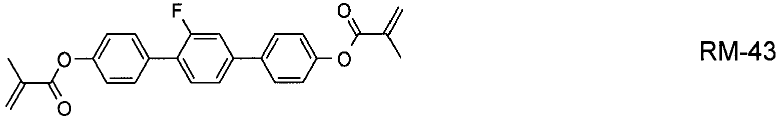

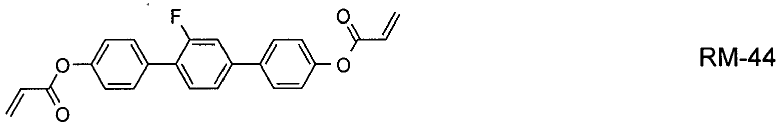

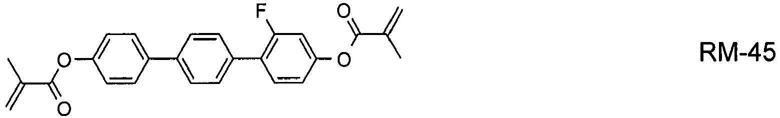

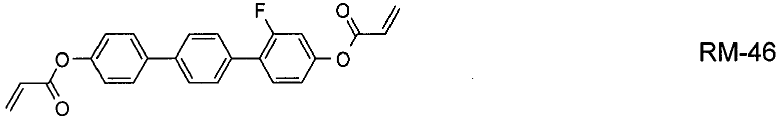

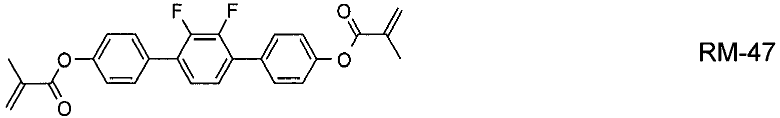

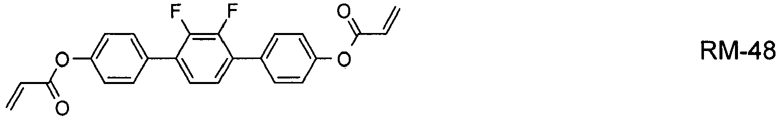

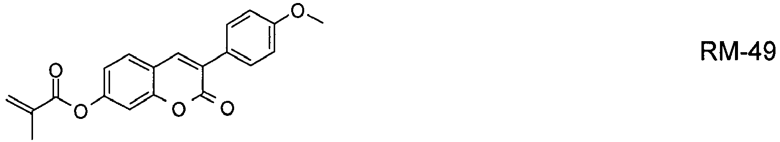

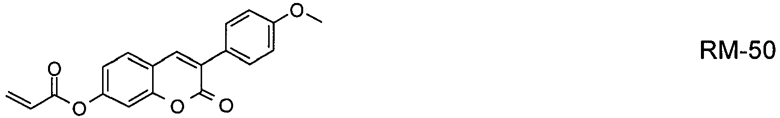

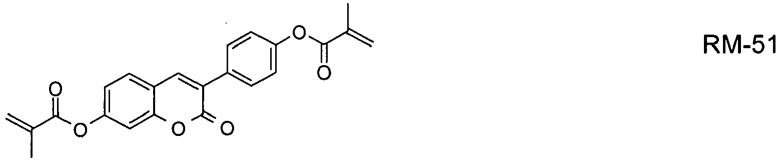

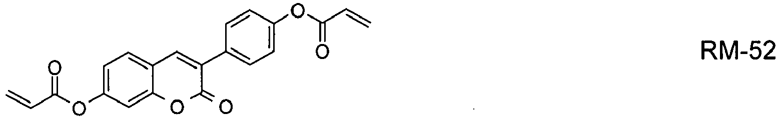

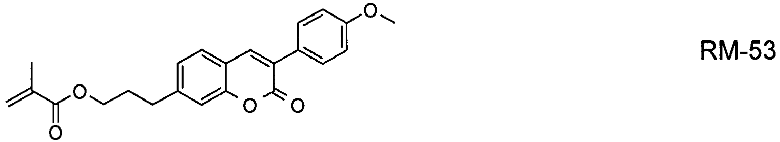

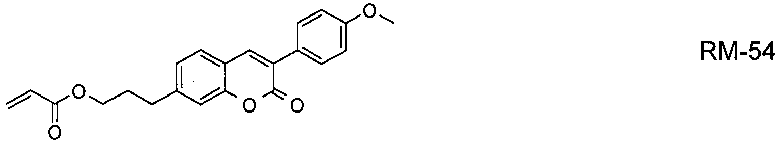

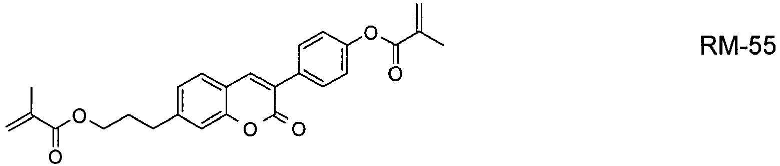

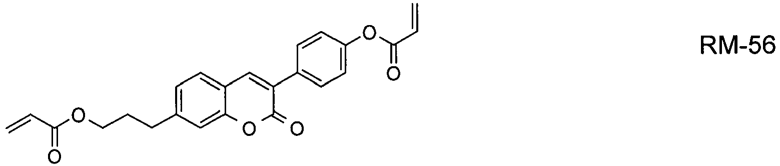

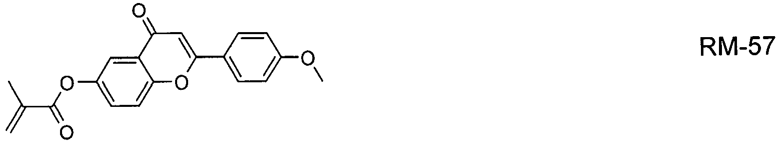

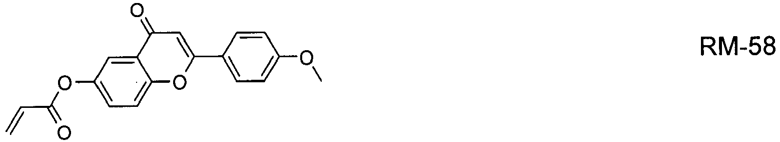

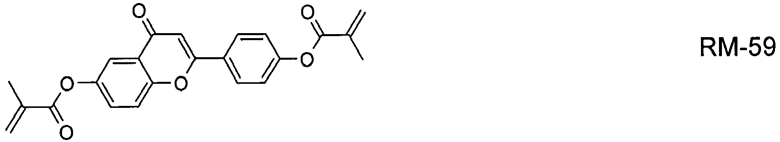

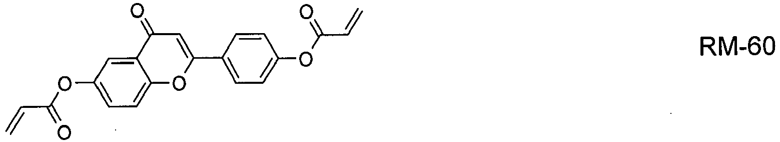

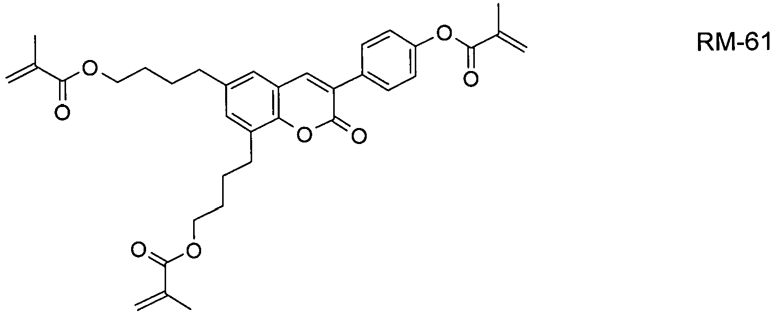

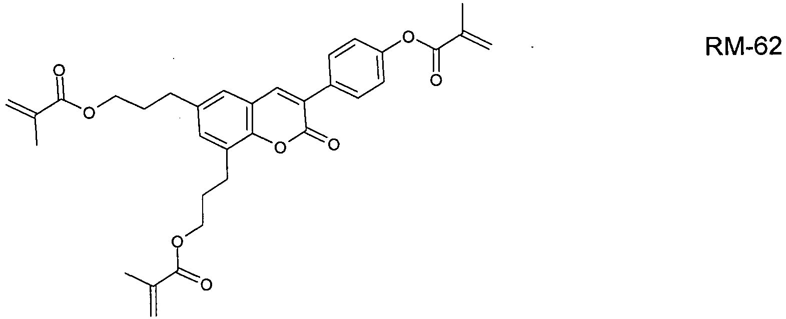

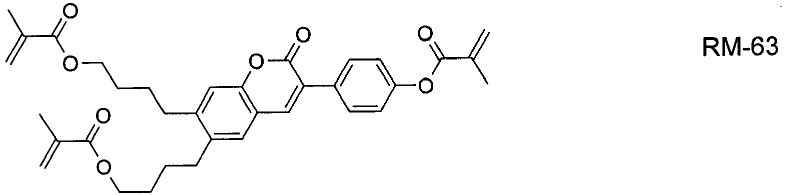

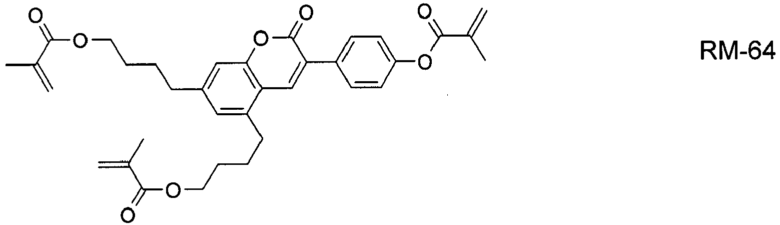

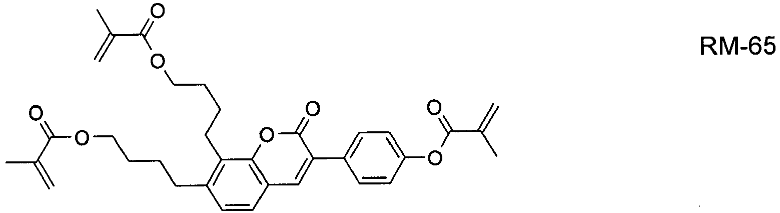

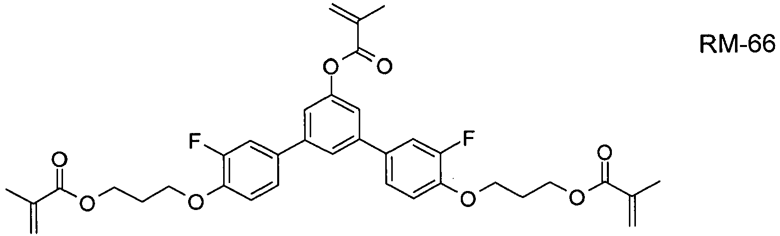

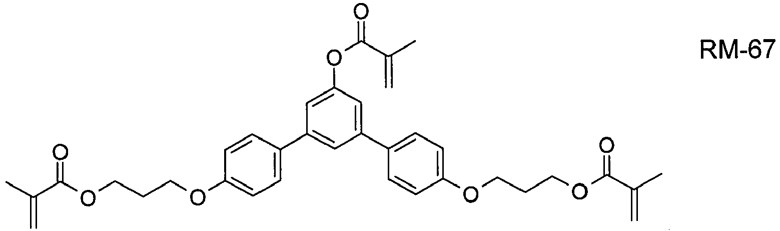

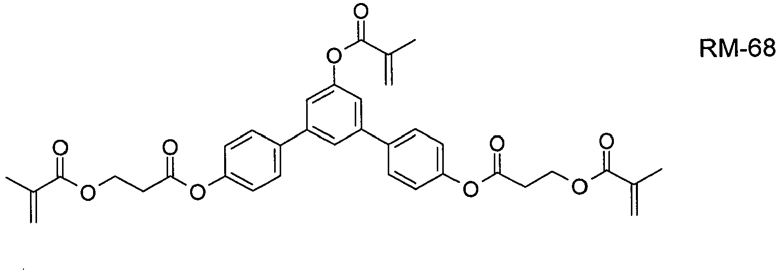

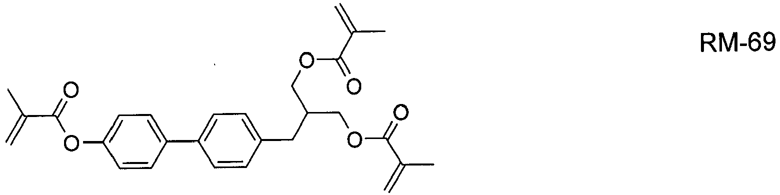

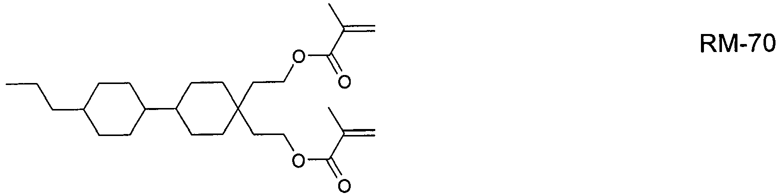

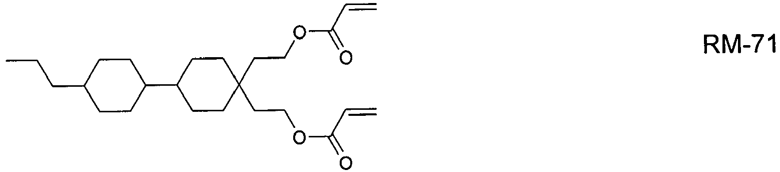

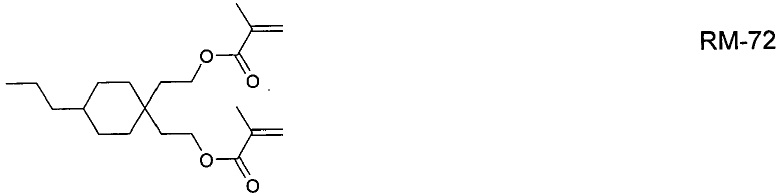

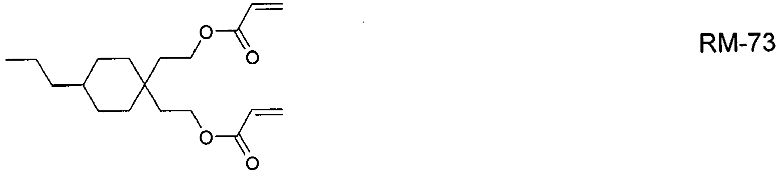

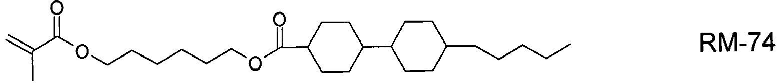

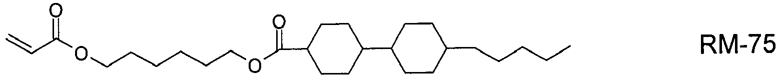

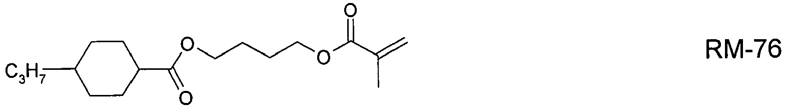

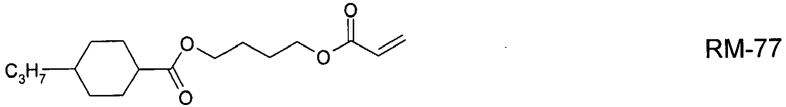

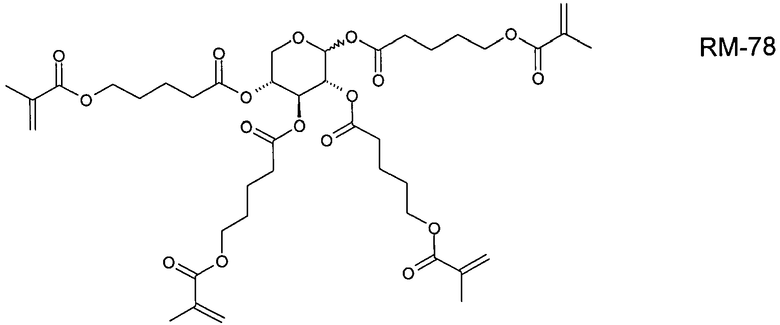

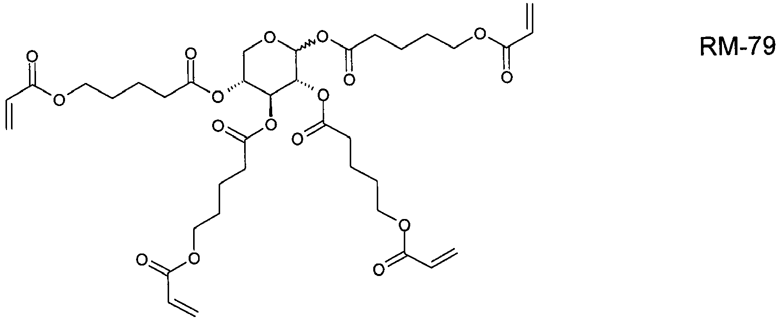

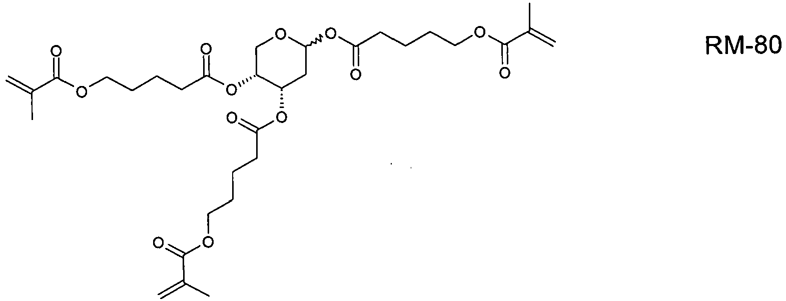

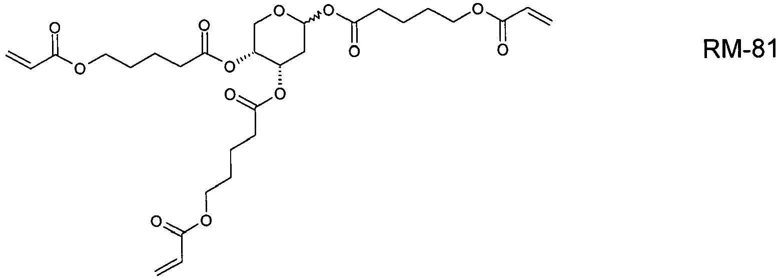

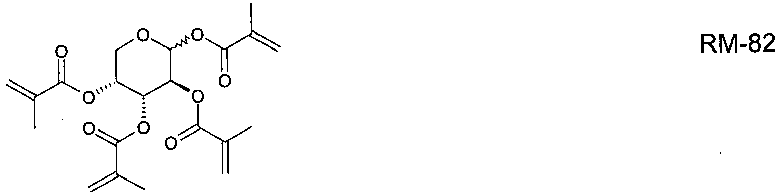

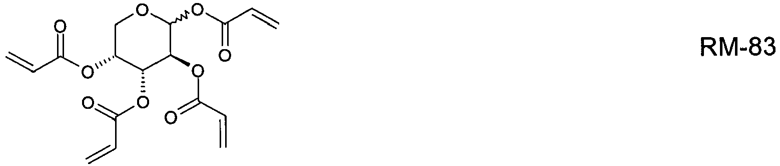

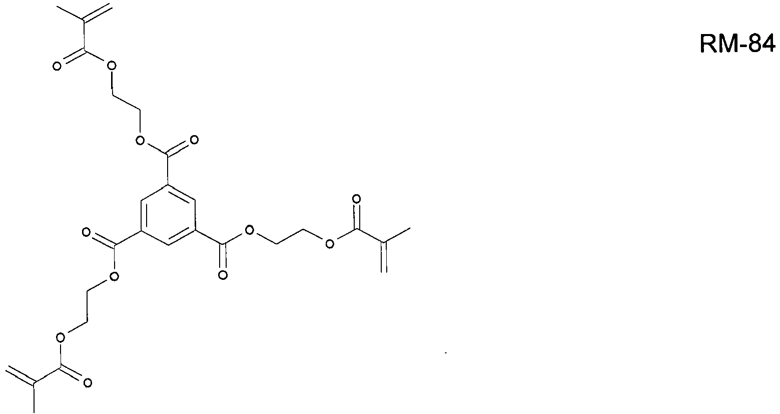

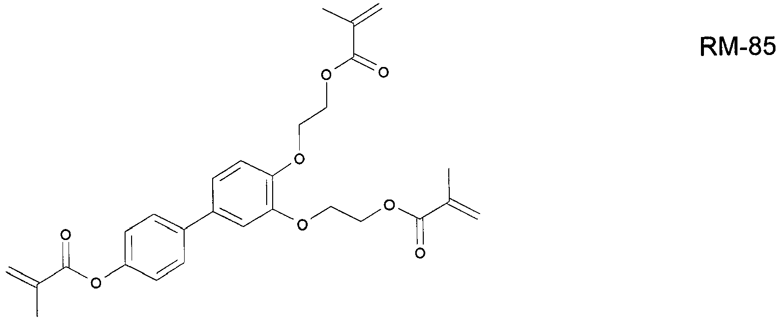

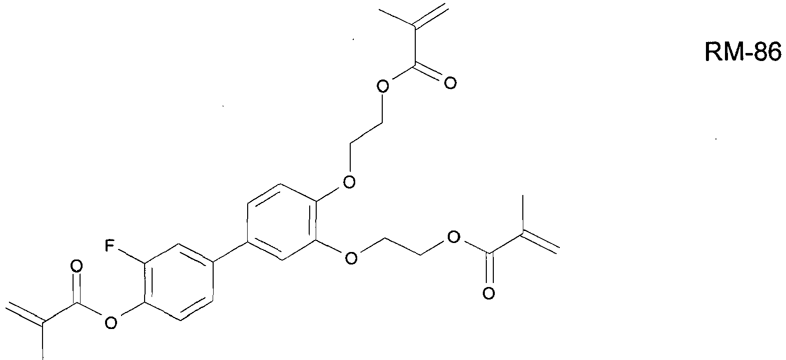

20. Verfahren zur Herstellung eines flüssigkristallinen Mediums nach einem oder mehreren der Ansprüche 1 bis 19, **dadurch gekennzeichnet, dass** man eine oder mehrere Verbindungen der Formel IA und eine oder mehrere Verbindungen ausgewählt aus der Gruppe von Verbindungen der Formel IIA, IIB und IIC wie in Anspruch 1 definiert mit einer oder mehreren mesogenen Verbindungen und gegebenenfalls auch mit einem oder mehreren Zusatzstoffen und/oder mindestens einer polymerisierbaren Verbindung mischt.

21. Verwendung eines flüssigkristallinen Mediums nach einem oder mehreren der Ansprüche 1 bis 19 für elektrooptische Zwecke.

22. Verwendung des flüssigkristallinen Mediums nach Anspruch 21 in Shutterbrillen, für 3D-Anwendungen, in TN- PS-TN-, STN-, TN-TFT-, OCB-, IPS-, PS-IPS-, FFS-, PS-FFS- und PS-VA-IPS-Anzeigen.

23. Elektrooptische Flüssigkristallanzeige enthaltend ein flüssigkristallines Medium nach einem oder mehreren der Ansprüche 1 bis 19.

## Revendications

1. Milieu cristallin liquide présentant une anisotropie positive, **caractérisé en ce qu'**il contient un ou plusieurs composé(s) de la formule IA : 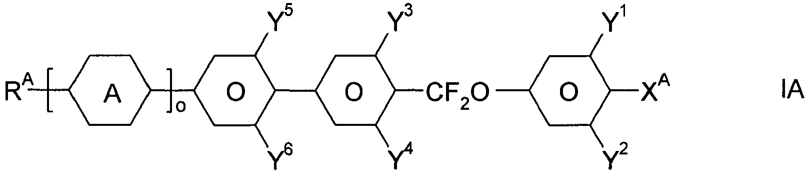 et
au moins un composé choisi parmi le groupe de composés des formules IIA, IIB et IIC : 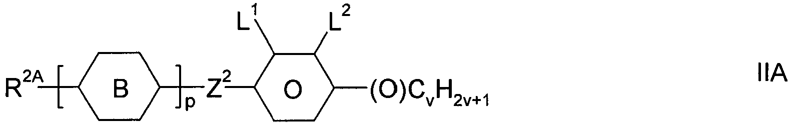 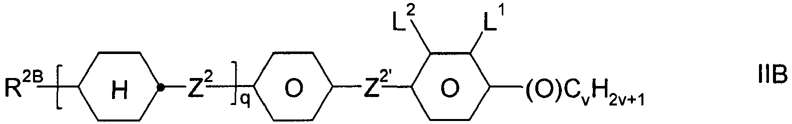 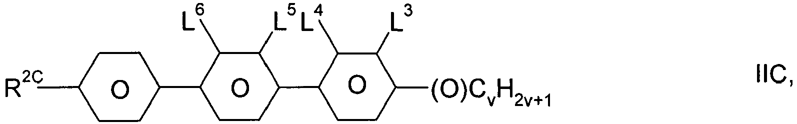 dans lesquelles :
R^{A}, R^{2A}, R^{2B} et R^{2C} représentent chacun, indépendamment les uns des autres, H, un radical alkyle ou alkényle comportant jusqu'à 15 atomes de C, lequel est non substitué, monosubstitué par CN ou CF₃ ou au moins monosubstitué par halogène, où, en outre, un ou plusieurs groupe(s) CH₂ dans ces radicaux peut/peuvent être remplacé(s) par -O-, -S-, 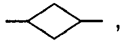 -C≡C-, -CF₂O-, -OCF₂-, -OC-O- ou -O-CO- de telle sorte que des atomes de O ne soient pas liés directement les uns aux autres, 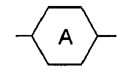 représente 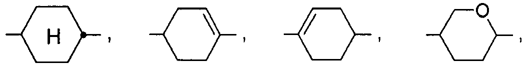 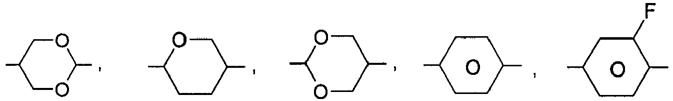 ou 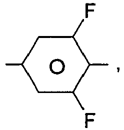 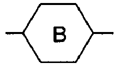 représente 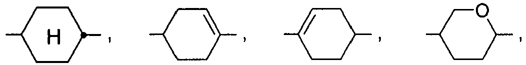 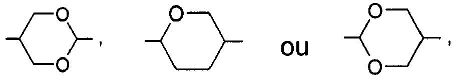
X^{A} représente F, Cl, CN, SF₅, SCN, NCS, un radical alkyle halogéné, un radical alkényle halogéné, un radical alcoxy halogéné ou un radical alkényloxy halogéné dont chacun comporte jusqu'à 6 atomes de C, et
Y¹⁻⁶ représentent chacun, indépendamment les uns des autres, H ou F,
L¹ et L² représentent chacun, indépendamment l'un de l'autre, F, Cl, CF₃ ou CHF₂,
L³⁻⁶ représentent chacun, indépendamment les uns des autres, H, F, Cl, CF₃ ou CHF₂, mais au moins deux de L³⁻⁶ représentent F, Cl, CF₃ ou CHF₂,
Z² et Z^{2'} représentent chacun, indépendamment l'un de l'autre, une liaison simple, -CH₂CH₂-, -CH=CH-, -C≡C-, -CF₂O-, -OCF₂-, -CH₂O-, -OCH₂-, -COO-, -OCO-, -C₂F₄-, -CF=CF-, -CH=CHCH₂O-,
p représente 1 ou 2, et, dans le cas où Z² = liaison simple, p peut également représenter 0,
o et q représentent chacun, indépendamment l'un de l'autre, 0 ou 1,
(O)CᵥH₂ᵥ₊₁ représente OCᵥH₂ᵥ₊₁ ou CᵥH₂ᵥ₊₁, et
v représente 1 à 6,
et **en ce que** :
le milieu cristallin liquide contient au moins deux composés de la formule IA et au moins deux composés de la formule IIA :
et **en ce qu'**en outre, soit
le milieu cristallin liquide contient au total ≥ 20 % en poids de composés de la formule IA et de composés de la formule IIB, sur la base du mélange,
soit
le milieu cristallin liquide contient au total ≥ 20 % en poids de composés de la formule IA et de composés de la formule IIC, sur la base du mélange.

2. Milieu cristallin liquide selon la revendication 1, **caractérisé en ce qu'**il contient un ou plusieurs composé(s) choisi(s) parmi les composés des formules IA-1 à IA-5 : 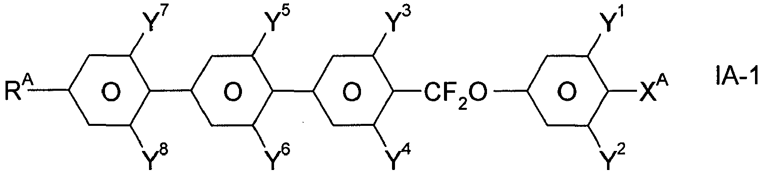 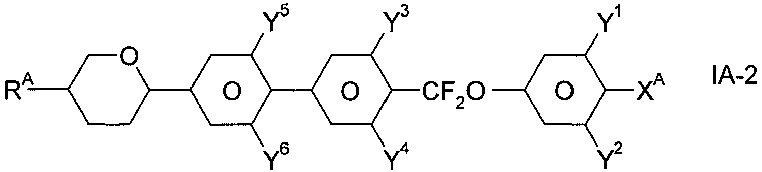 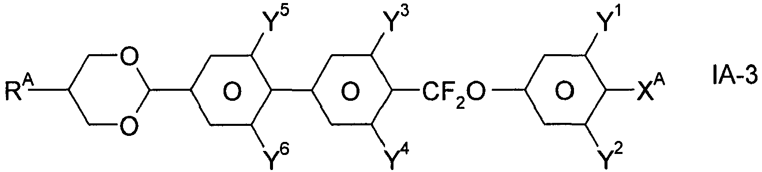 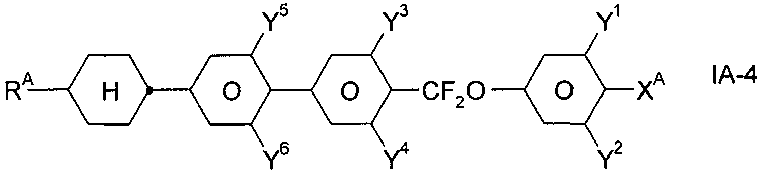 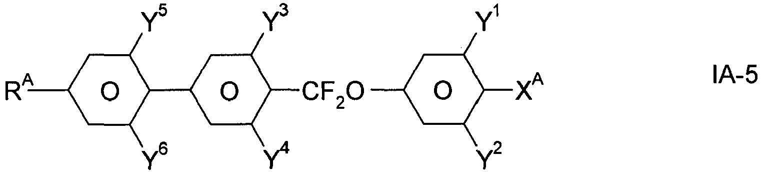 dans lesquelles R^{A}, X^{A} et Y¹⁻⁶ présentent les significations indiquées ci avant selon la revendication 1 et Y⁷ et Y⁸ représentent chacun, indépendamment l'un de l'autre, H ou F.

3. Milieu cristallin liquide selon la revendication 1 ou 2, **caractérisé en ce qu'**il contient un ou plusieurs composé(s) choisi(s) parmi les composés des formules IA-1a à IA-4d : 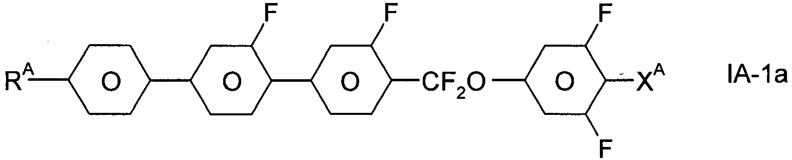 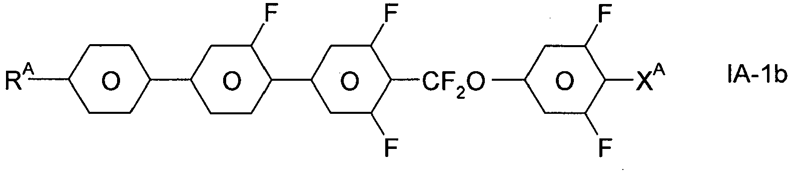 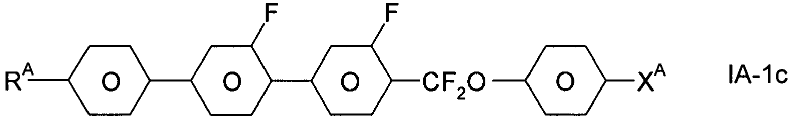 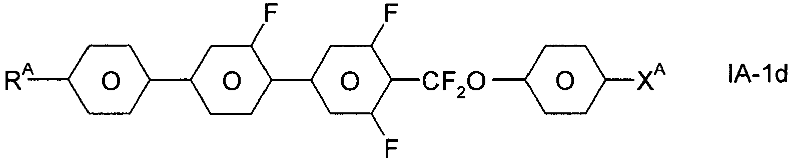 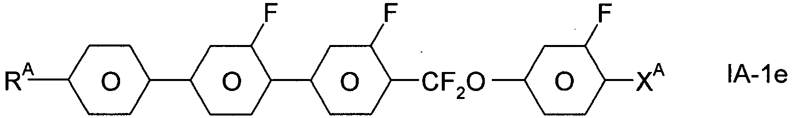 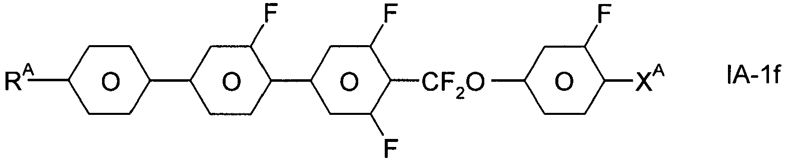 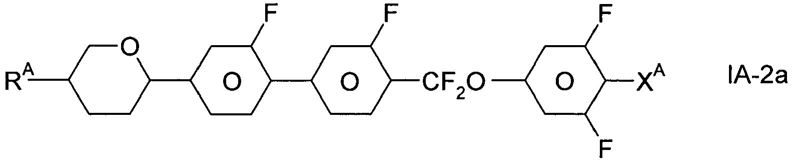 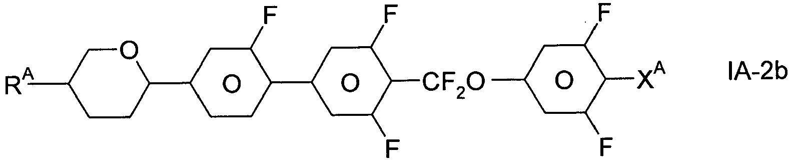 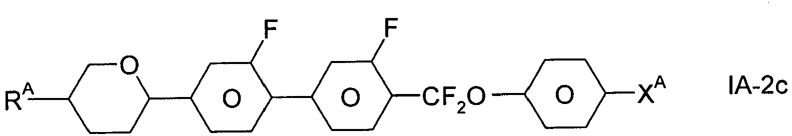 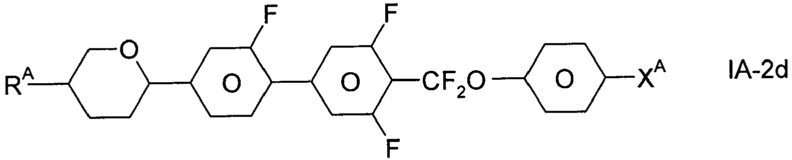 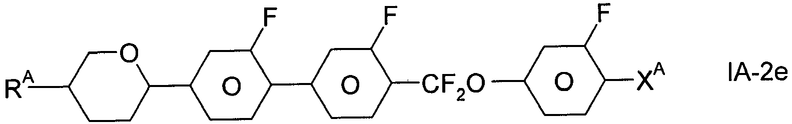 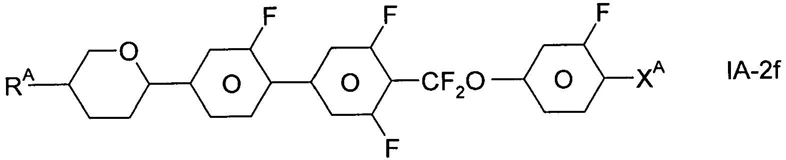 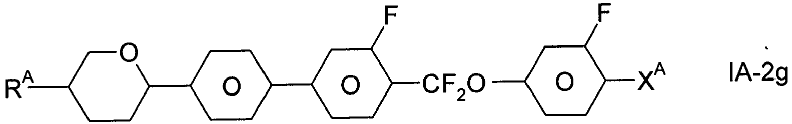 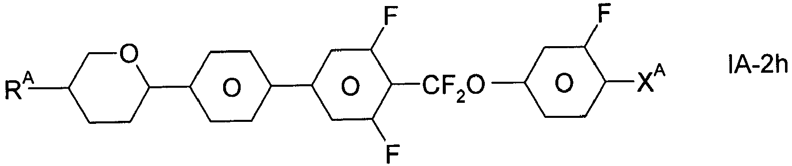 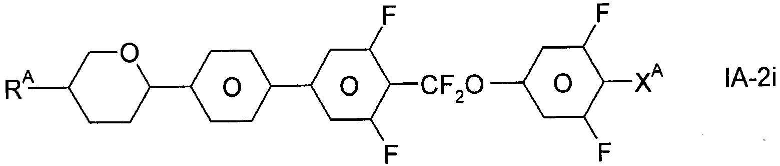 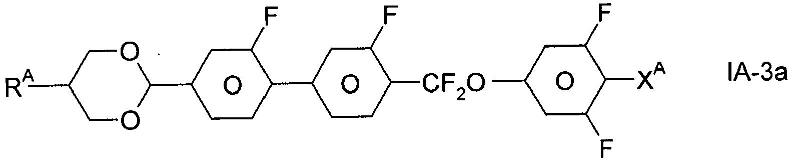 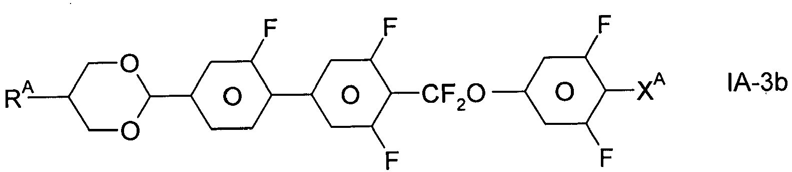 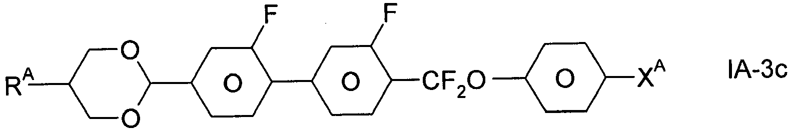 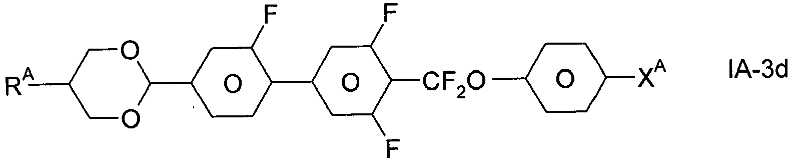 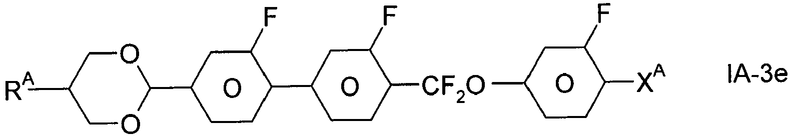 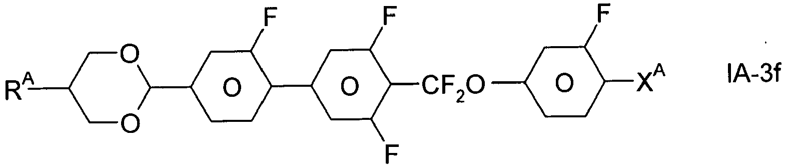 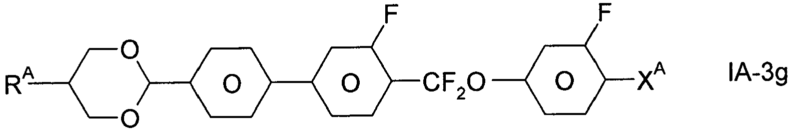 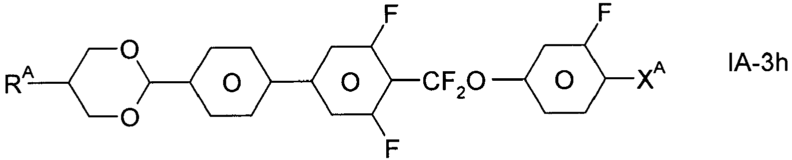 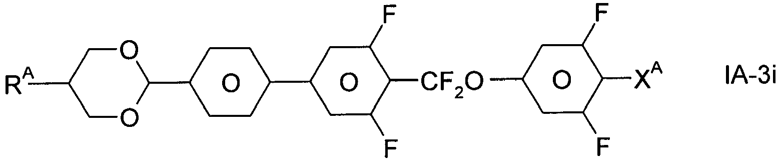 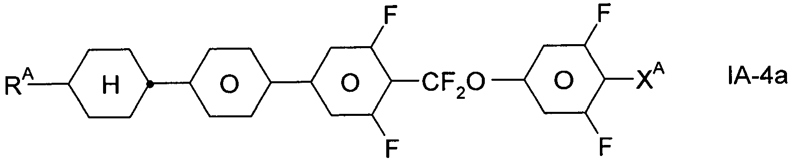 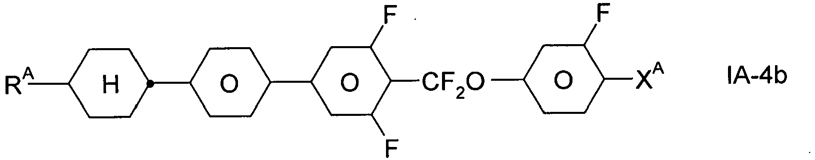 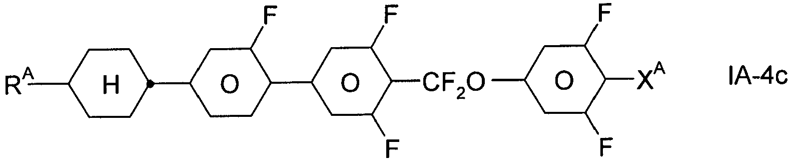 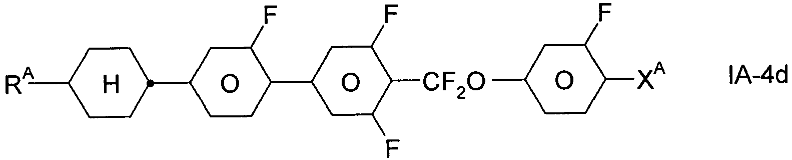 dans lesquelles R^{A} et X^{A} présentent les significations indiquées selon la revendication 1.

4. Milieu cristallin liquide selon une ou plusieurs des revendications 1 à 3, **caractérisé en ce que** X^{A} dans la formule IA représente F, OCF₃, OCHF₂, CF₃, OCHF₂, OCHFCF₃, OCF₂CHFCF₃, CF=CF₂, CH=CF₂, OCF=CF₂ ou OCH=CF₂.

5. Milieu cristallin liquide selon une ou plusieurs des revendications 1 à 4, **caractérisé en ce qu'**il contient un ou plusieurs composé(s) des formules IIA-1 à IIC-6 : 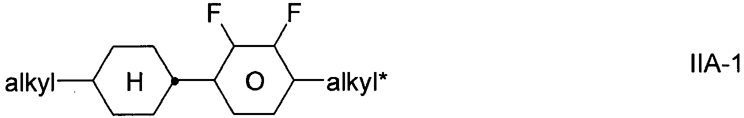 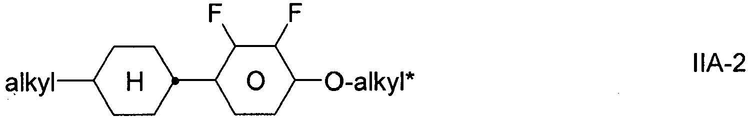 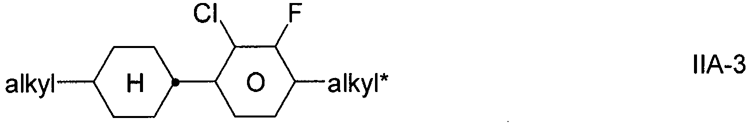 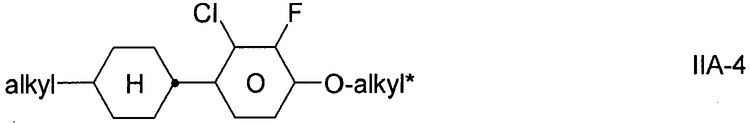 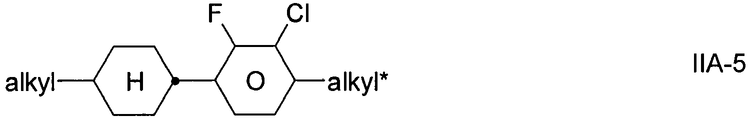 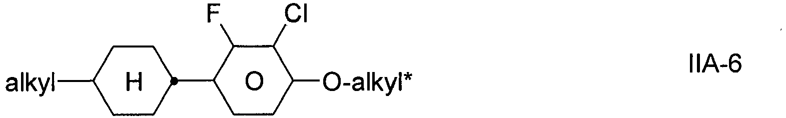 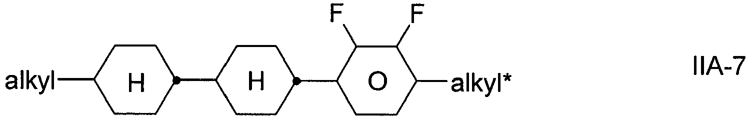 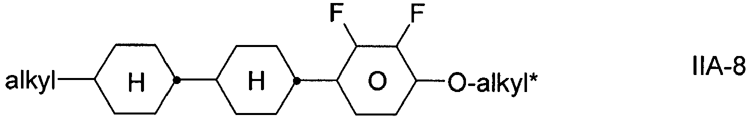 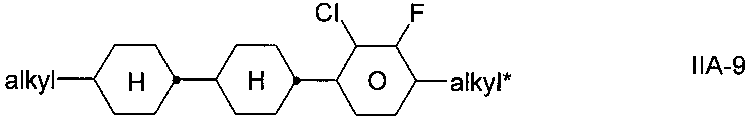 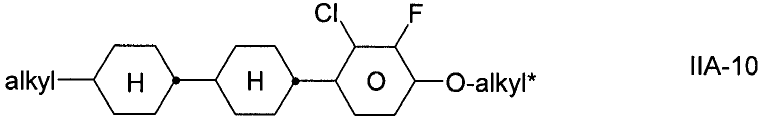 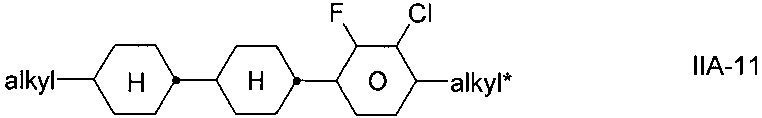 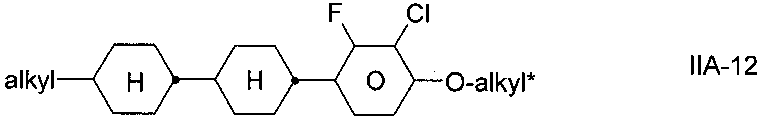 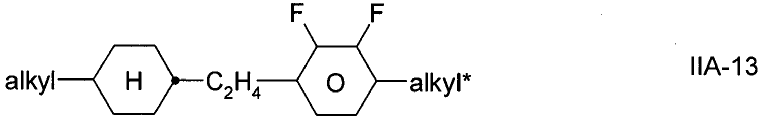 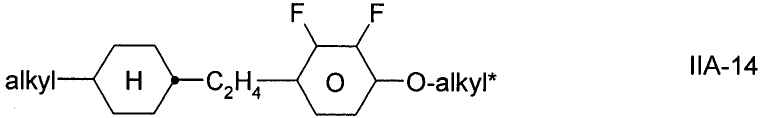 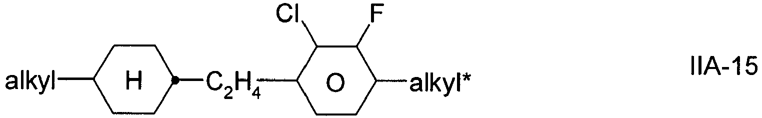 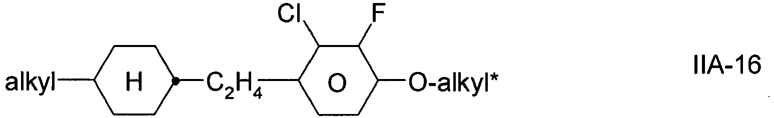 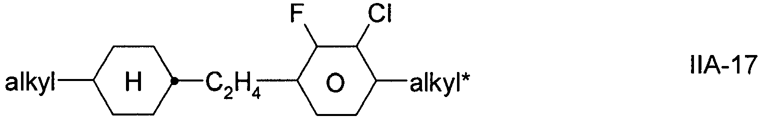 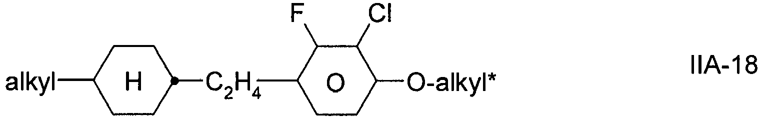 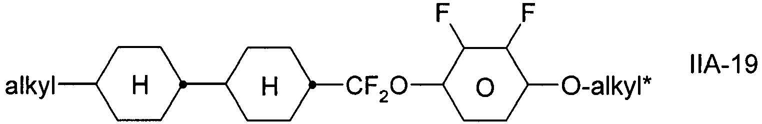 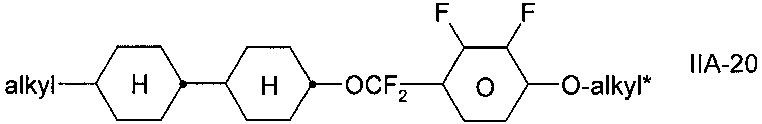 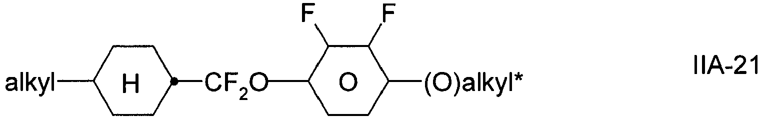 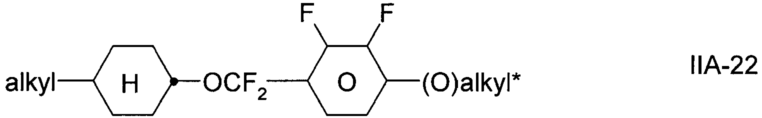 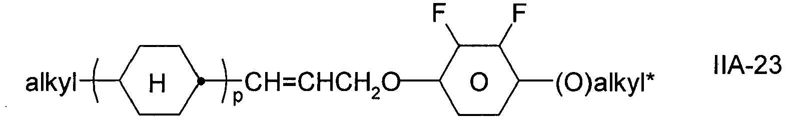 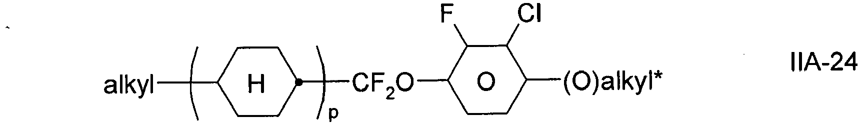 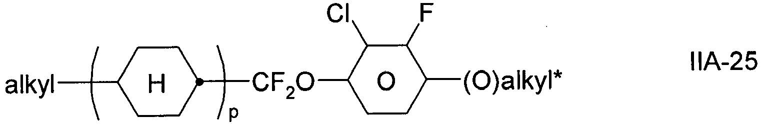 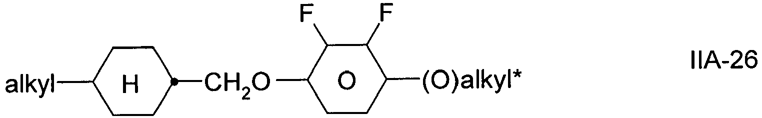 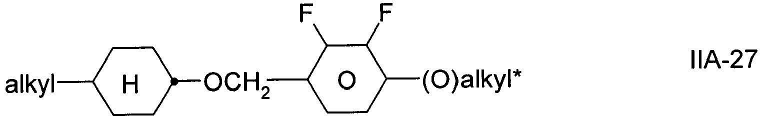 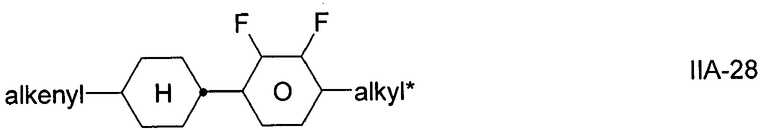 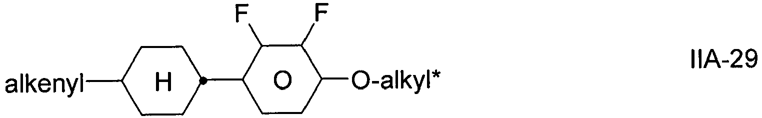 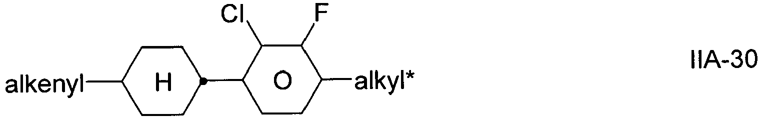 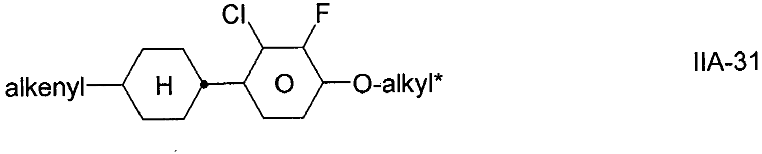 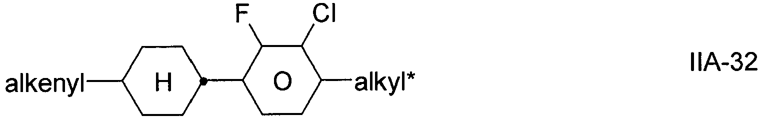 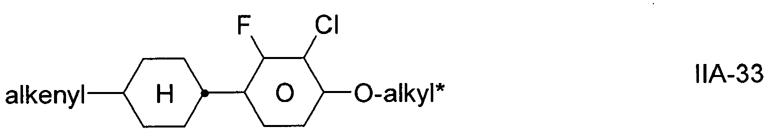 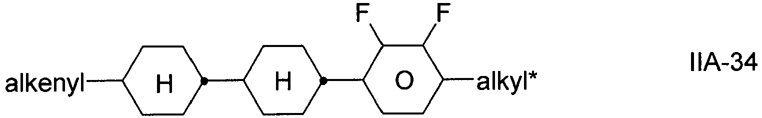 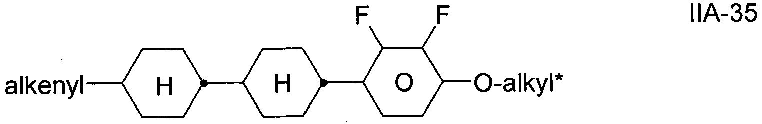 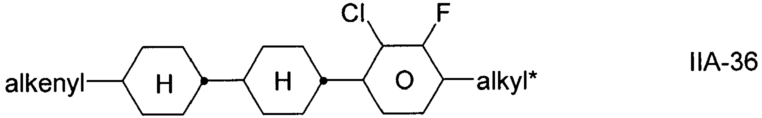 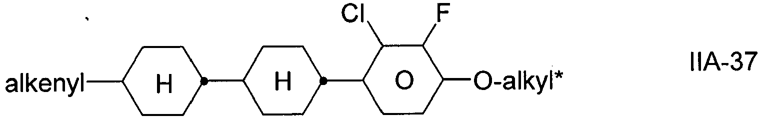 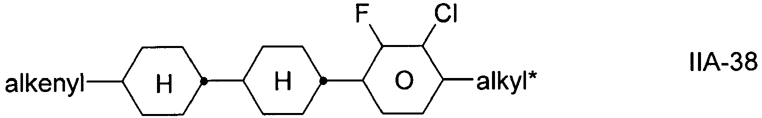 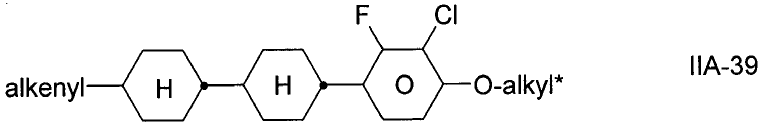 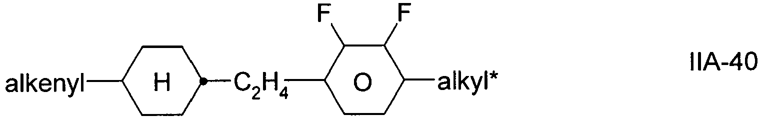 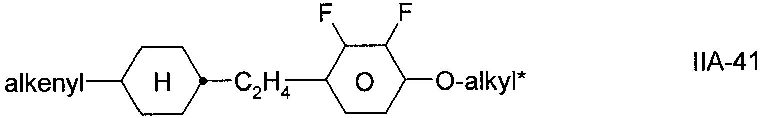 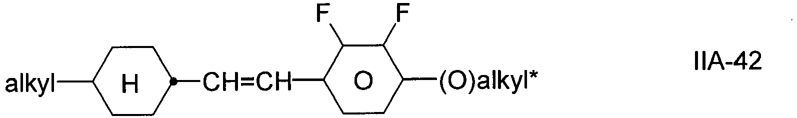 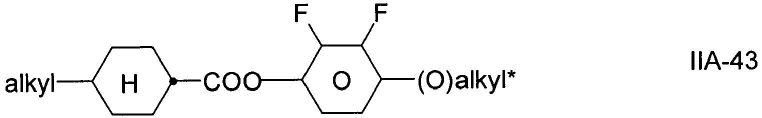 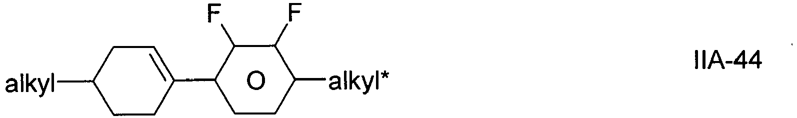 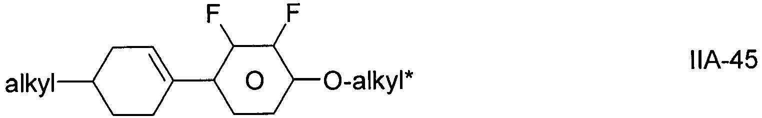 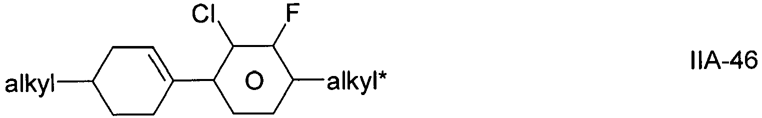 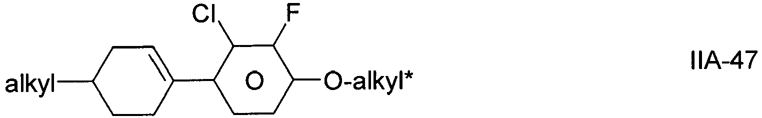 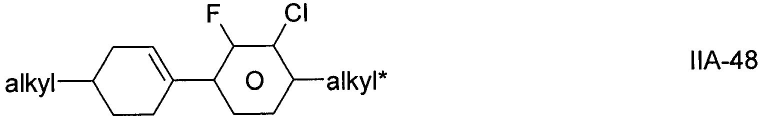 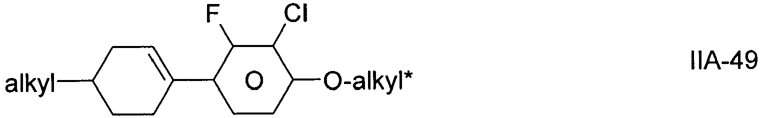 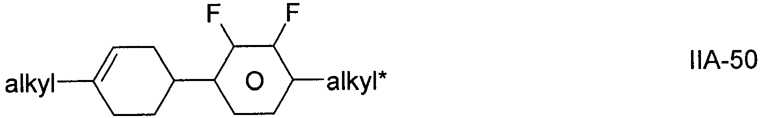 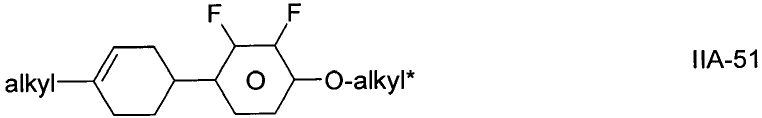 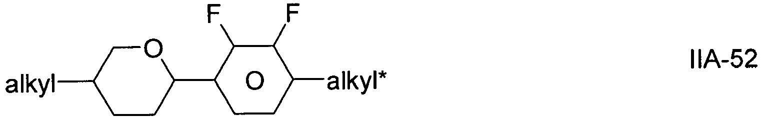 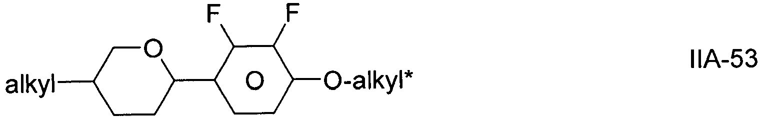 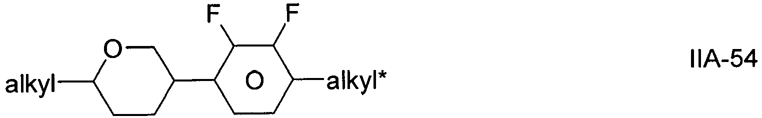 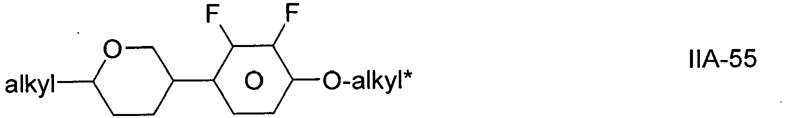 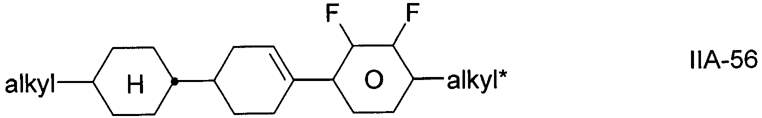 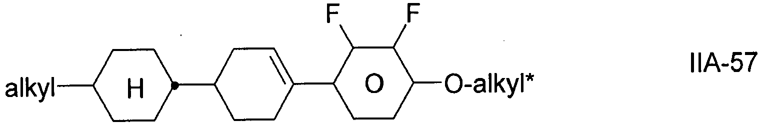 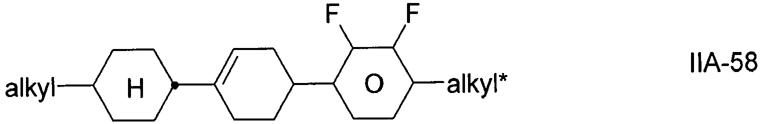 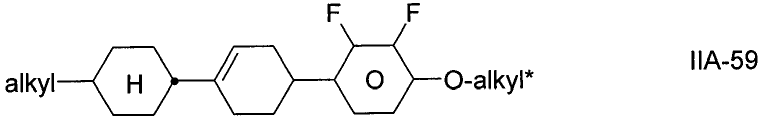 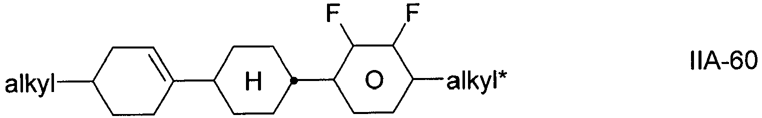 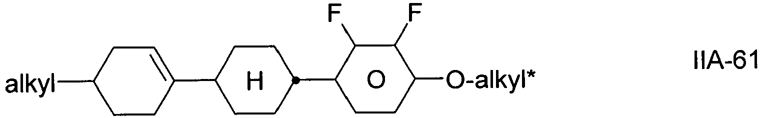 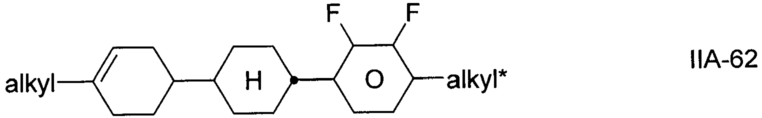 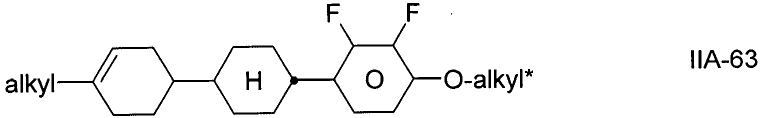 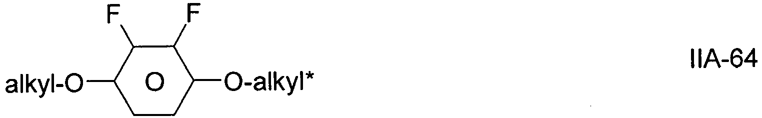 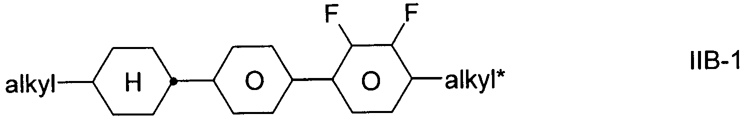 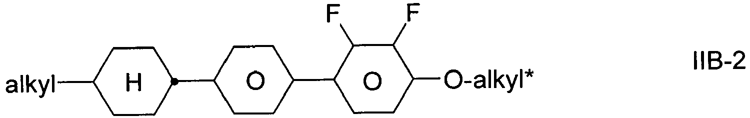 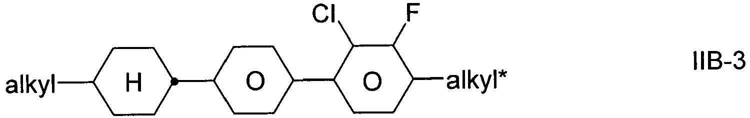 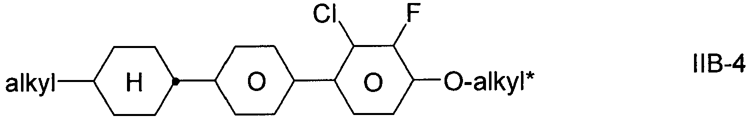 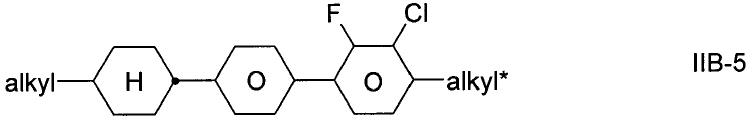 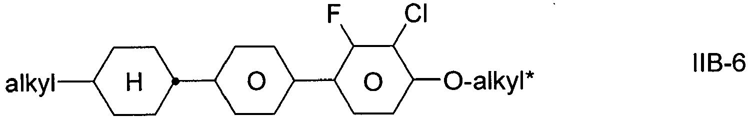 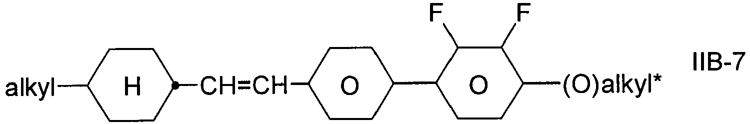 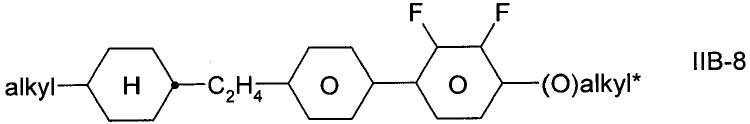 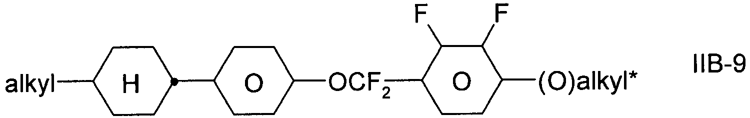 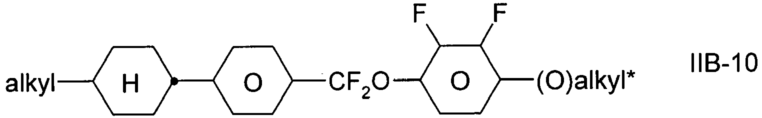 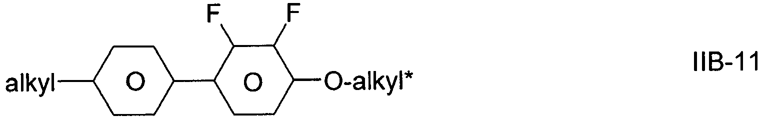 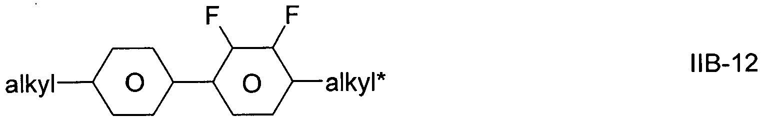 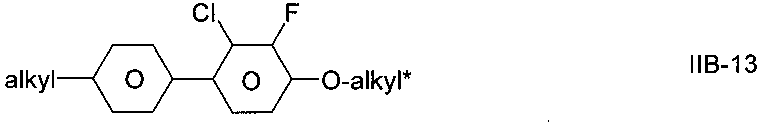 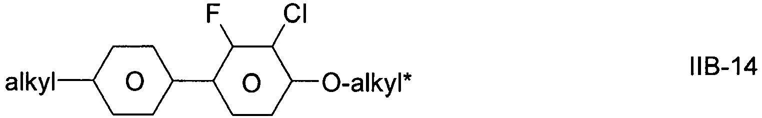 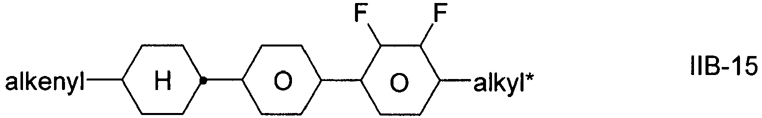 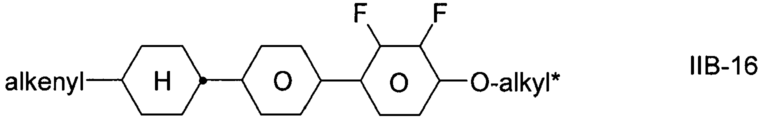 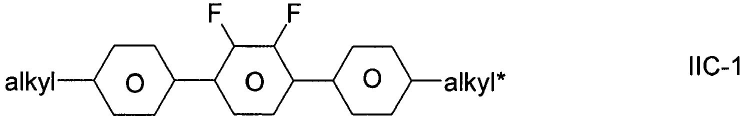 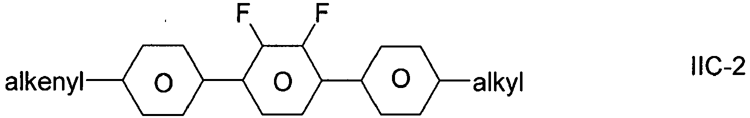 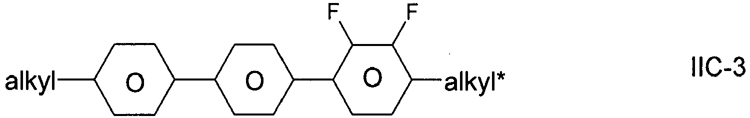 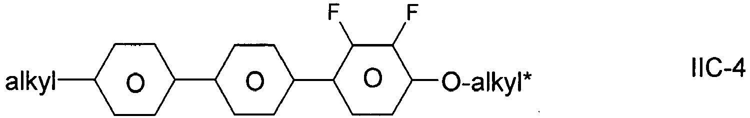 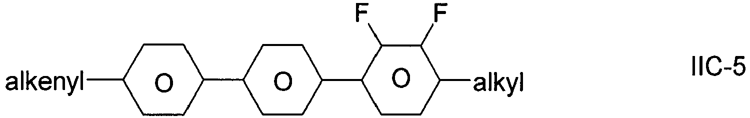 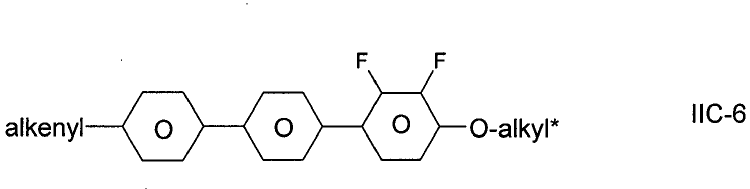 dans lesquelles "alkyl" et "alkyl*" représentent chacun, indépendamment l'un de l'autre, un radical alkyle en chaîne droite comportant 1-6 atome(s) de C et alkényle représente un radical alkényle en chaîne droite comportant 2-6 atomes de C.

6. Milieu cristallin liquide selon une ou plusieurs des revendications 1 à 5, **caractérisé en ce qu'**il contient de façon additionnelle un ou plusieurs composé(s) choisi(s) parmi les formules III et/ou IV : 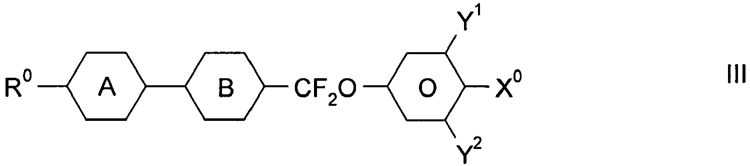 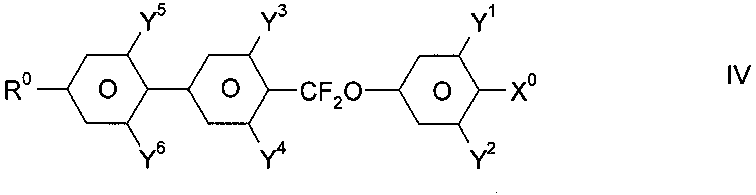 dans lesquelles :
R⁰ représente un radical alkyle ou alcoxy halogéné ou non substitué comportant 1 à 15 atome(s) de C, où, en outre, un ou plusieurs groupe(s) CH₂ dans ces radicaux peut/peuvent chacun être remplacé(s), indépendamment les uns des autres, par -C≡C-, -CF₂O-, -CH=CH-, 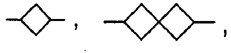 -O-, -CO-O- ou -O-CO- de telle sorte que des atomes de O ne soient pas liés directement les uns aux autres,
X⁰ représente F, Cl, CN, SF₅, SCN, NCS, un radical alkyle halogéné, un radical alkényle halogéné, un radical alcoxy halogéné ou un radical alkényloxy halogéné dont chacun comporte jusqu'à 6 atomes de C, et
Y¹⁻⁶ représentent chacun, indépendamment les uns des autres, H ou F, 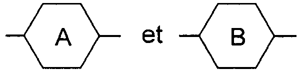 représentent chacun, indépendamment l'un de l'autre,

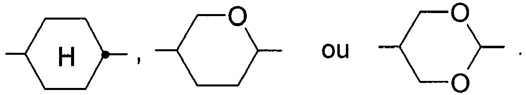

7. Milieu cristallin liquide selon une ou plusieurs des revendications 1 à 6, **caractérisé en ce qu'**il contient de façon additionnelle un ou plusieurs composé(s) choisi(s) parmi les formules V à IX : 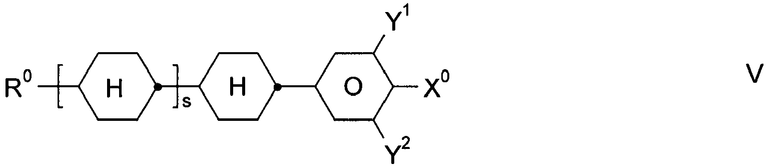 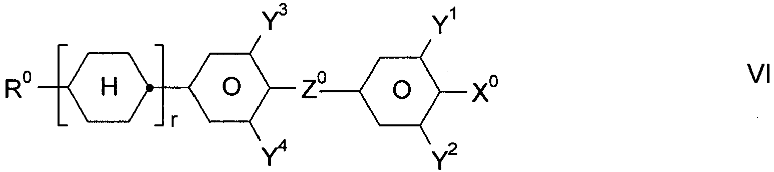 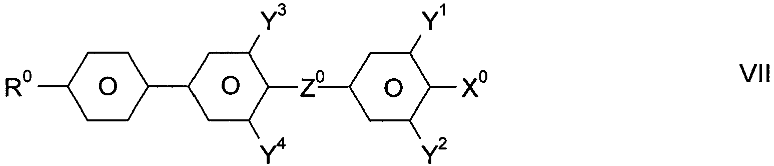 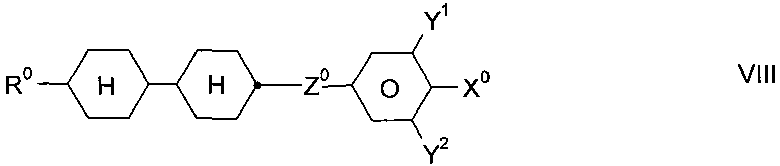 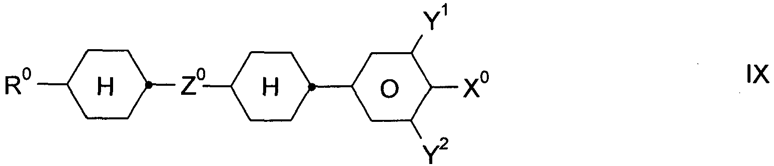 dans lesquelles :
R⁰ représente un radical alkyle ou alcoxy halogéné ou non substitué comportant 1 à 15 atome(s) de C, où, en outre, un ou plusieurs groupe(s) CH₂ dans ces radicaux peut/peuvent chacun être remplacé(s), indépendamment les uns des autres, par -C≡C-, -CF₂O-, -O-, 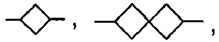 -CH=CH-, -CO-O- ou -O-CO- de telle sorte que des atomes de O ne soient pas liés directement les uns aux autres,
X⁰ représente F, Cl, CN, SF₅, SCN, NCS, un radical alkyle halogéné, un radical alkényle halogéné, un radical alcoxy halogéné ou un radical alkényloxy halogéné comportant jusqu'à 6 atomes de C,
Y¹⁻⁴ représentent chacun, indépendamment les uns des autres, H ou F,
Z⁰ représente -C₂H₄-, -(CH₂)₄-, -CH=CH-, -CF=CF-, -C₂F₄-, -CH₂CF₂-, -CF₂CH₂-, -CH₂O-, -OCH₂-, -COO- ou -OCF₂-, dans les formules VI et VII, également une liaison simple et dans les formules VI et IX, également -CF₂O-,
r représente 0 ou 1, et
s représente 0 ou 1.

8. Milieu cristallin liquide selon une ou plusieurs des revendications 1 à 7, **caractérisé en ce qu'**il contient de façon additionnelle un ou plusieurs composé(s) choisi(s) parmi les formules X à XIII : 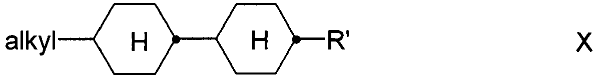 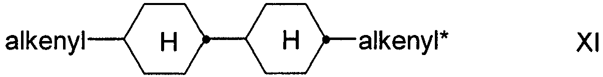 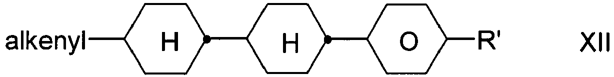 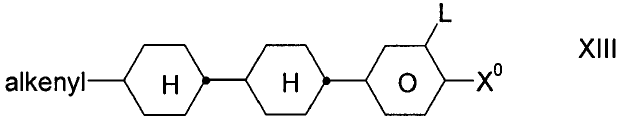 dans lesquelles X⁰ présente les significations indiquées selon la revendication 7, et
L représente H ou F,
"alkyl" représente C₁₋₆-alkyle,
R' représente C₁₋₆-alkyle, C₁₋₆-alcoxy ou C₂₋₆-alkényle, et
"alkenyl" et "alkenyl*" représentent chacun, indépendamment l'un de l'autre, C₂₋₆-alkényle.

9. Milieu cristallin liquide selon une ou plusieurs des revendications 1 à 8, **caractérisé en ce qu'**il contient de façon additionnelle un ou plusieurs composé(s) choisi(s) parmi les formules Xa, Xb, Xc, Xd, Xe, XIa, XIb, Xlla et Xllla : 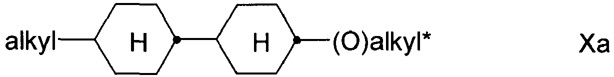 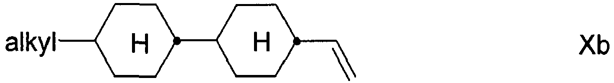 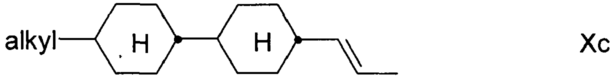 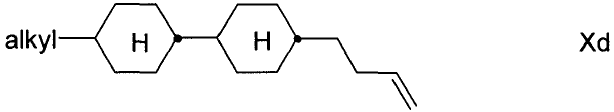 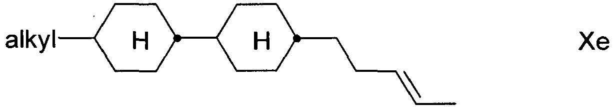 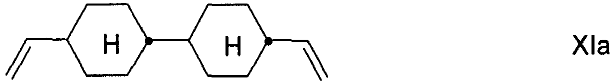 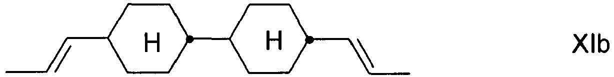 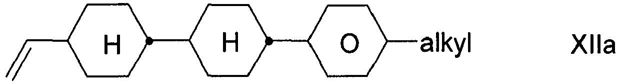 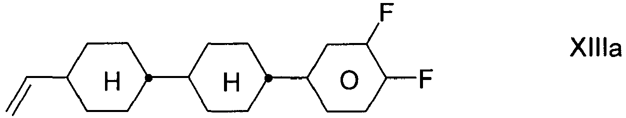 dans lesquelles "alkyl" et "alkyl*" représentent chacun, indépendamment l'un de l'autre, un radical alkyle en chaîne droite comportant 1-6 atome(s) de C et "alkenyl" représente un radical alkényle en chaîne droite comportant 2-6 atomes de C, et
"(O)alkyl*" représente alkyle* ou O-alkyle* (= alcoxy).

10. Milieu cristallin liquide selon une ou plusieurs des revendications 1 à 9, **caractérisé en ce qu'**il contient de façon additionnelle un ou plusieurs composé(s) de la formule XIV : 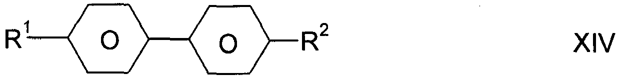 dans laquelle R¹ et R² représentent chacun, indépendamment l'un de l'autre, n-alkyle, alcoxy, oxaalkyle, fluoroalkyle ou alkényle dont chacun comporte jusqu'à 6 atomes de C.

11. Milieu cristallin liquide selon une ou plusieurs des revendications 1 à 10, **caractérisé en ce qu'**il contient de façon additionnelle un ou plusieurs composé(s) de la formule XVII : 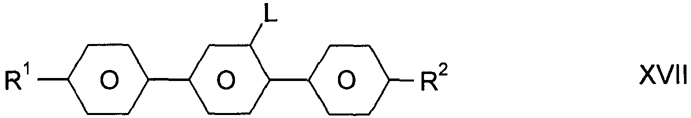 dans laquelle R¹ et R² représentent chacun, indépendamment l'un de l'autre, n-alkyle, alcoxy, oxaalkyle, fluoroalkyle ou alkényle dont chacun comporte jusqu'à 6 atomes de C, et L représente H ou F.

12. Milieu cristallin liquide selon une ou plusieurs des revendications 1 à 11, **caractérisé en ce qu'**il contient un ou plusieurs composé(s) choisi(s) parmi le groupe des composés des formules XXVIII à XXXI : 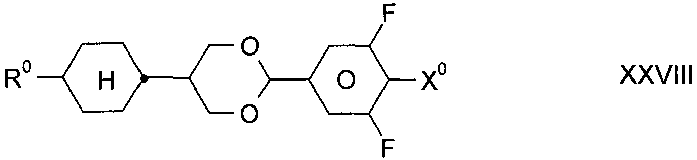 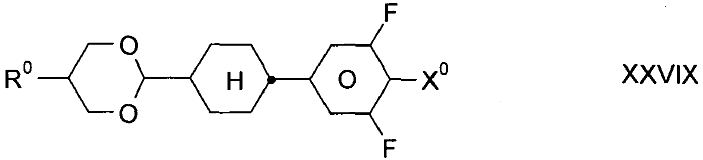 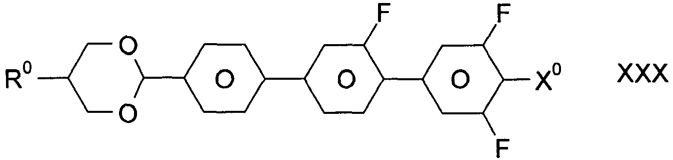 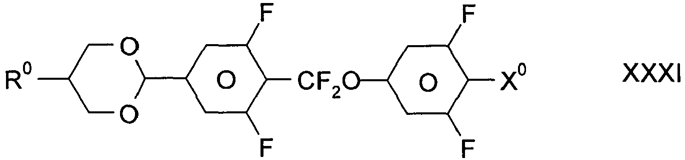 dans lesquelles R⁰ et X⁰ présentent les significations indiquées selon la revendication 7.

13. Milieu cristallin liquide selon une ou plusieurs des revendications 1 à 12, **caractérisé en ce qu'**il contient un ou plusieurs composé(s) choisi(s) parmi le groupe des composés des formules XIX, XX, XXI, XXII, XXIII et XXIV : 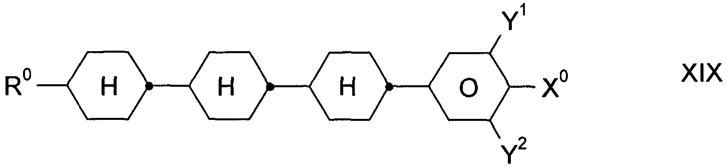 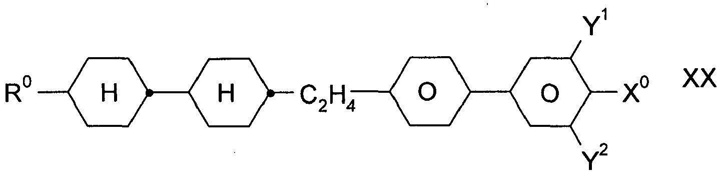 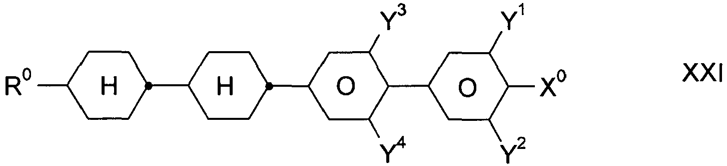 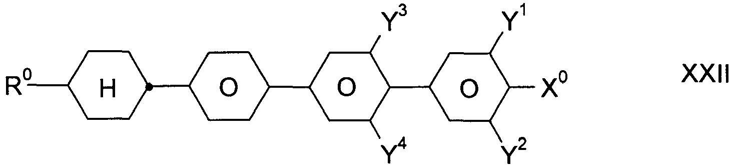 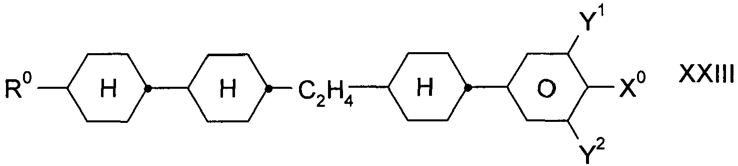 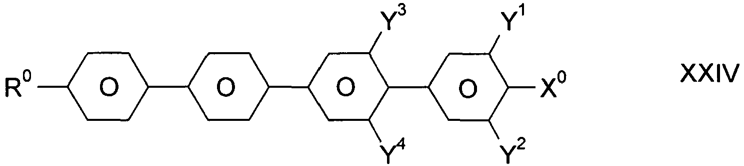 dans lesquelles R⁰ et X⁰ présentent les significations indiquées selon la revendication 7, et Y¹⁻⁴ représentent chacun, indépendamment les uns des autres, H ou F.

14. Milieu cristallin liquide selon une ou plusieurs des revendications 1 à 13, **caractérisé en ce qu'**il contient ≥ 20 % en poids du composé de la formule Xb : 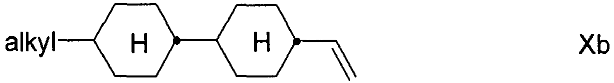 dans laquelle "alkyl" présente la signification indiquée selon la revendication 5.

15. Milieu cristallin liquide selon une ou plusieurs des revendications 1 à 14, **caractérisé en ce qu'**il présente une anisotropie diélectrique (Δε) > 1,5 à 20 °C et 1 kHz.

16. Milieu cristallin liquide selon une ou plusieurs des revendications 1 à 15, **caractérisé en ce qu'**il contient de façon additionnelle un ou plusieurs additif(s) choisi(s) parmi le groupe des stabiliseurs UV, des dopants et des antioxydants.

17. Milieu cristallin liquide selon une ou plusieurs des revendications 1 à 16, **caractérisé en ce que** l'additif/les additif(s) est/sont choisi(s) parmi :

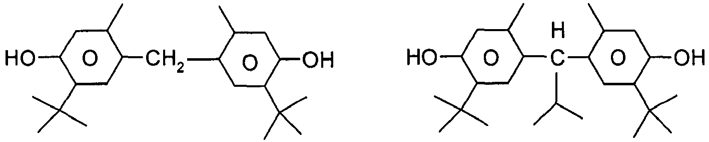

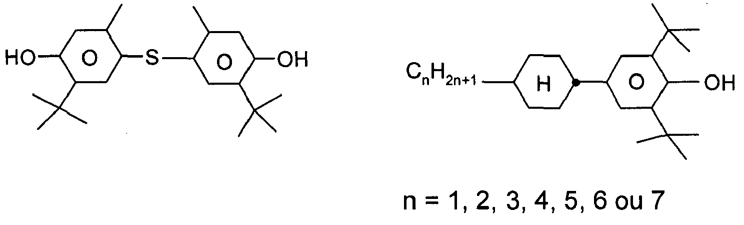

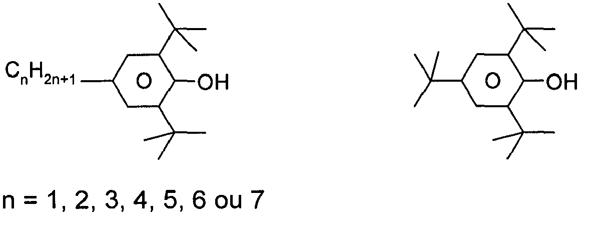

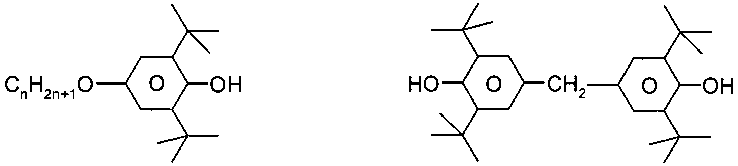

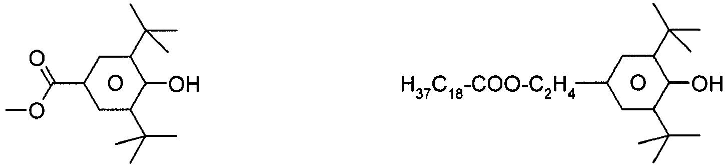

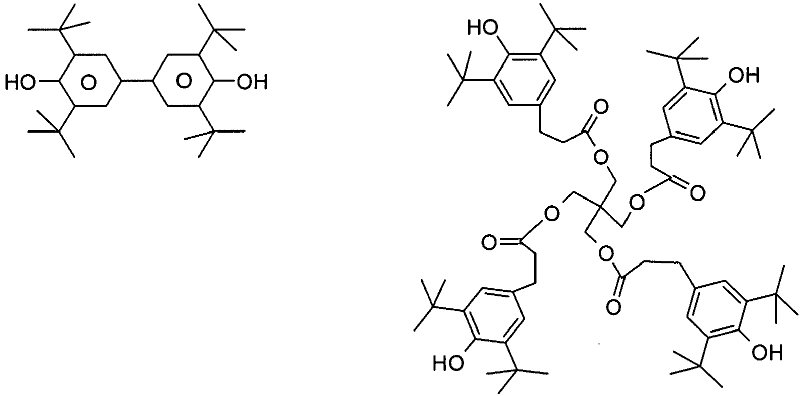

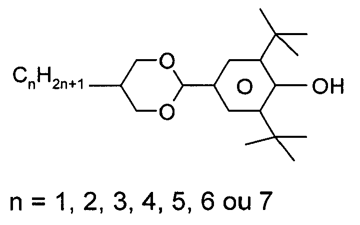

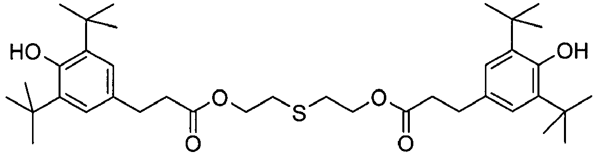

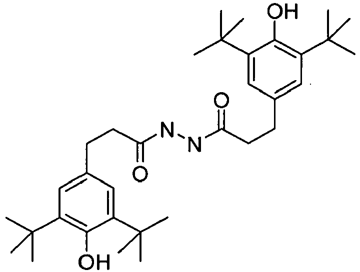

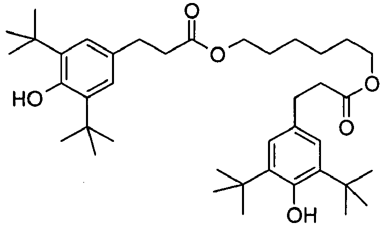

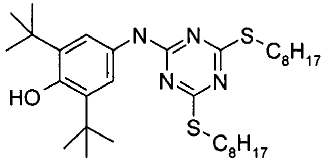

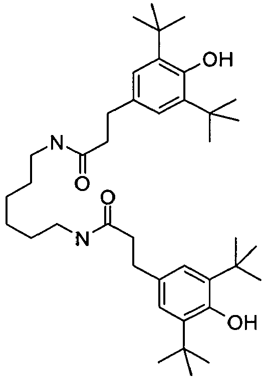

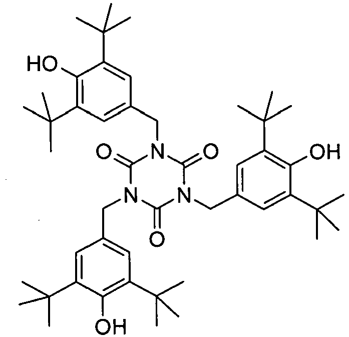

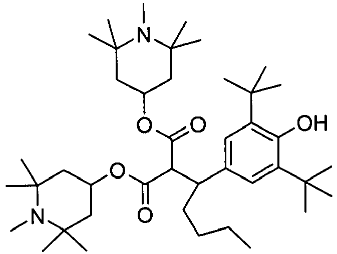

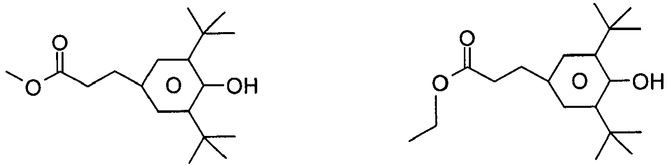

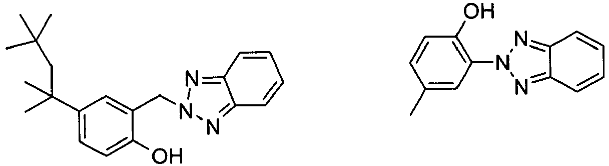

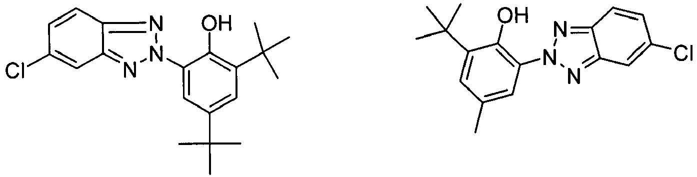

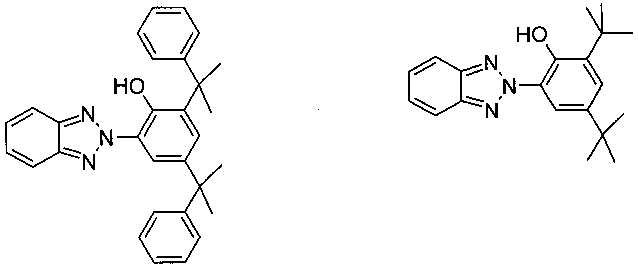

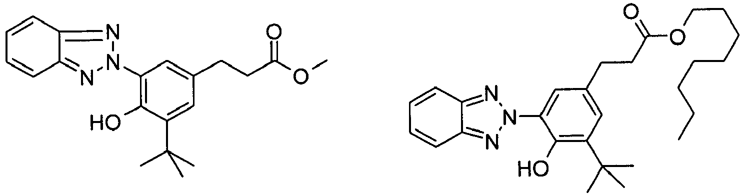

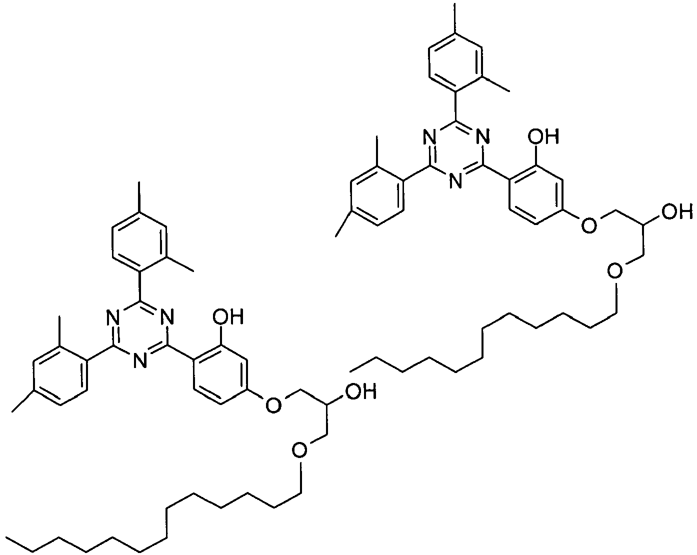

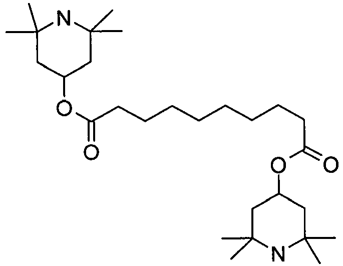

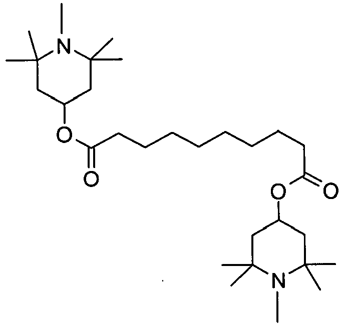

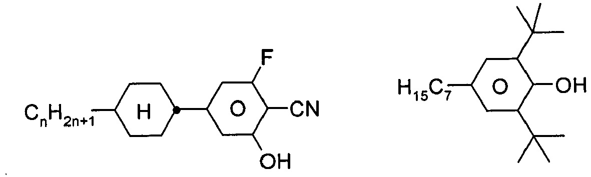

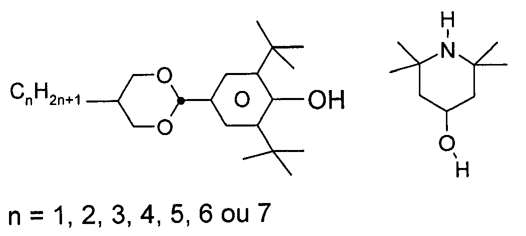

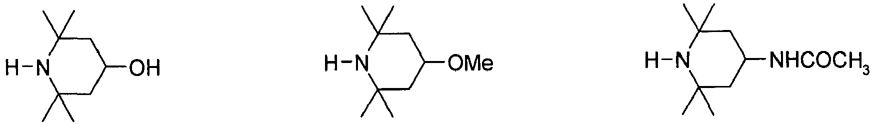

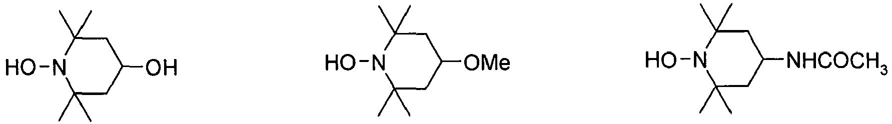

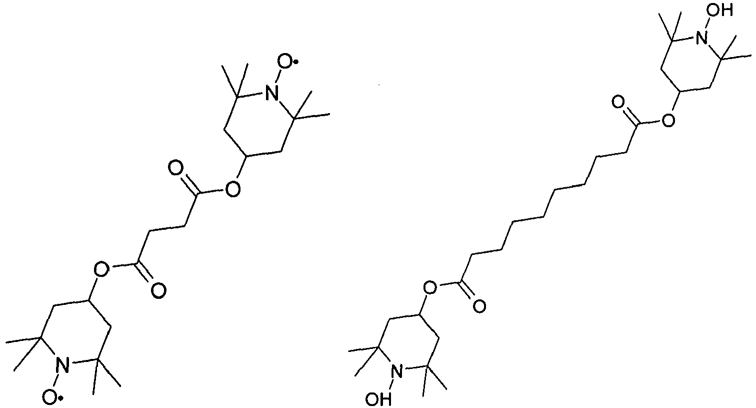

18. Milieu cristallin liquide selon une ou plusieurs des revendications 1 à 17, **caractérisé en ce qu'**il contient de façon additionnelle un ou plusieurs composé(s) polymérisable(s).

19. Milieu cristallin liquide selon une ou plusieurs des revendications 1 à 18, **caractérisé en ce que** le composé polymérisable est choisi parmi RM-1 à RM-86 :

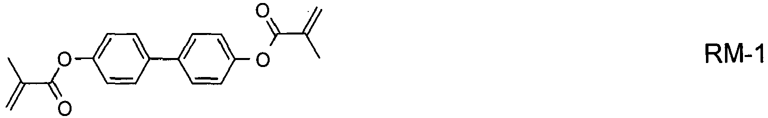

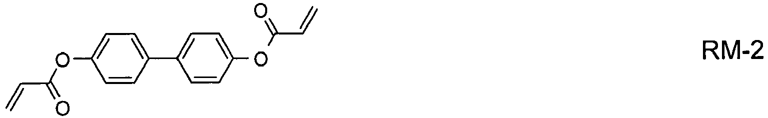

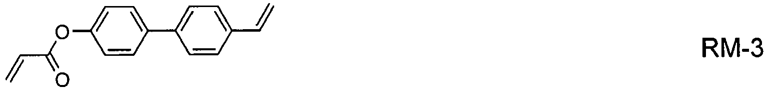

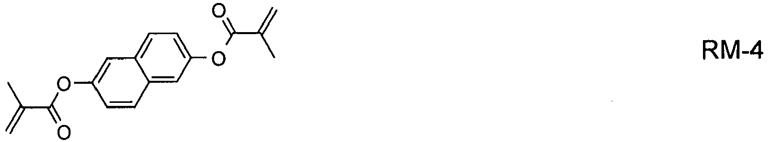

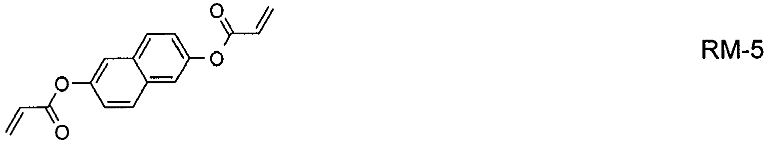

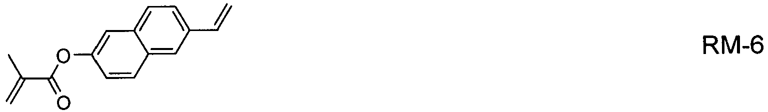

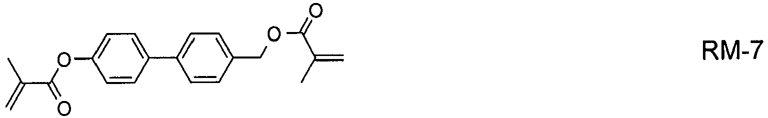

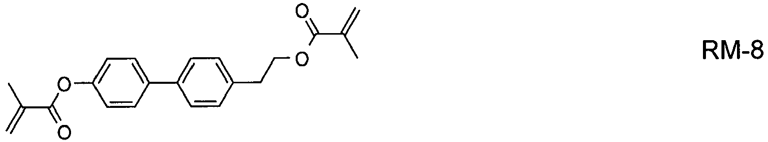

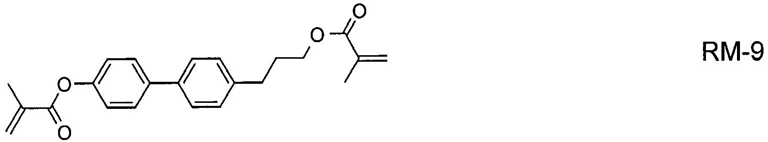

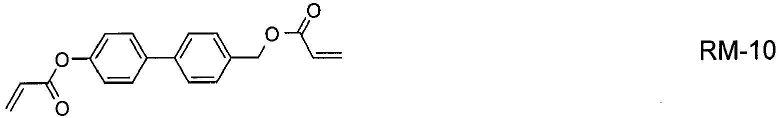

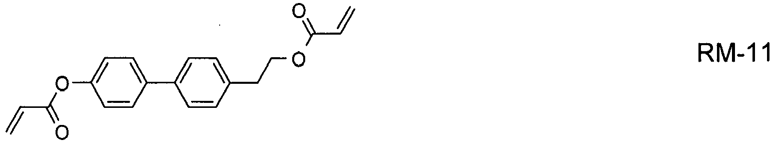

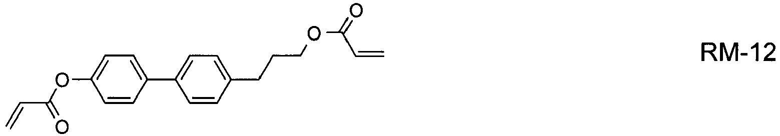

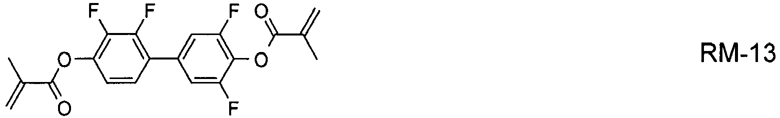

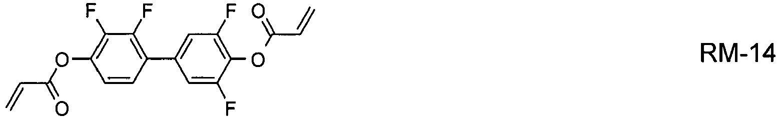

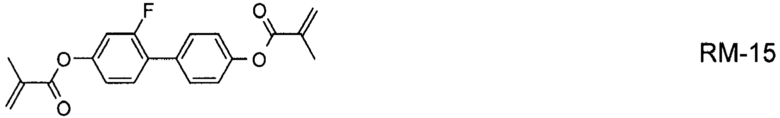

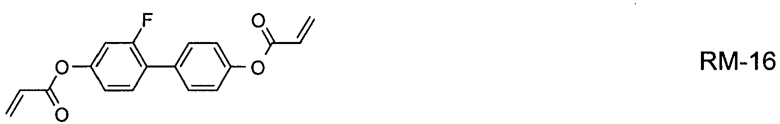

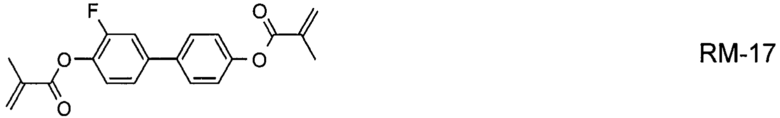

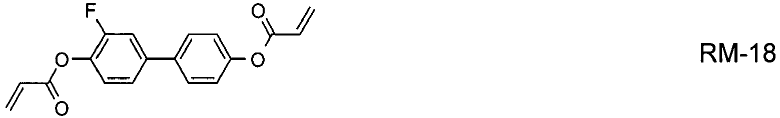

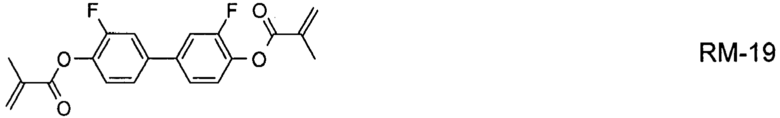

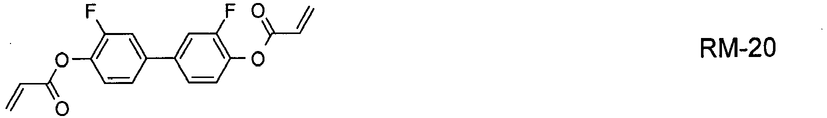

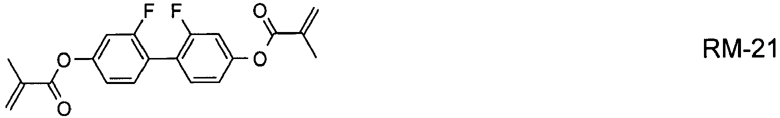

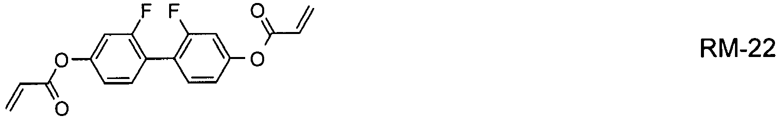

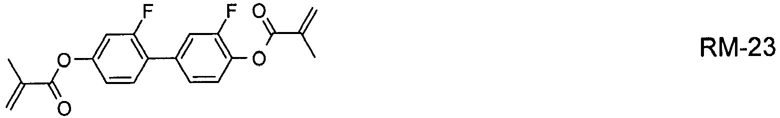

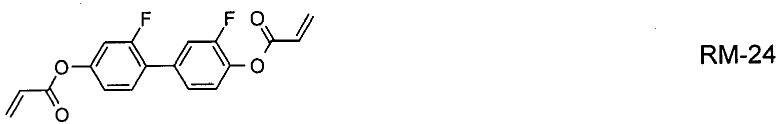

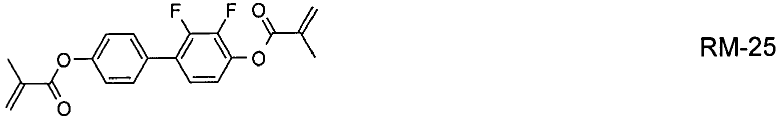

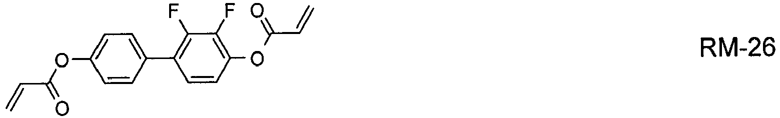

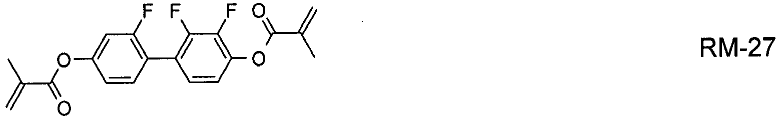

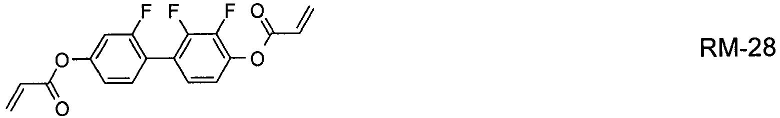

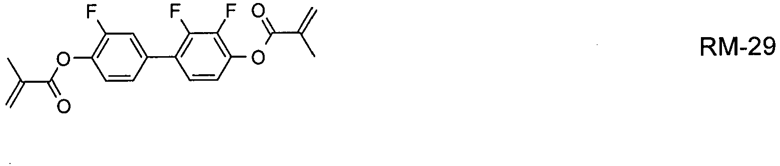

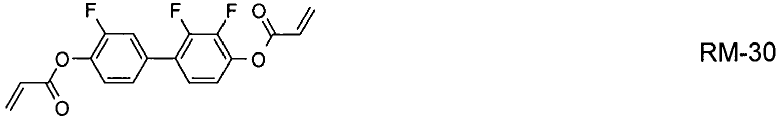

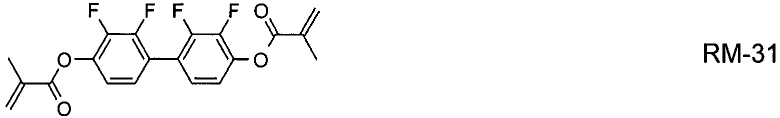

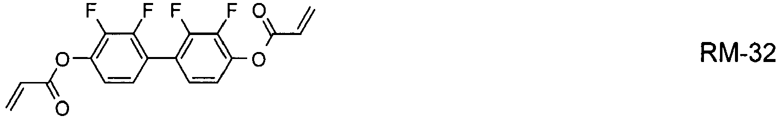

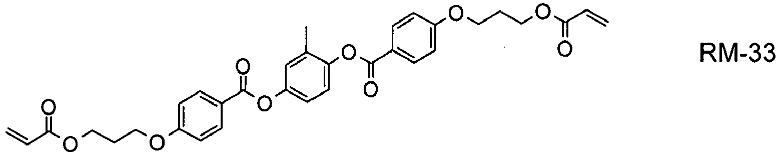

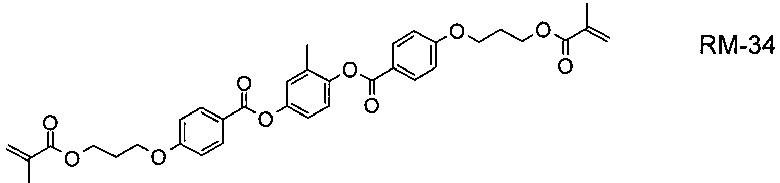

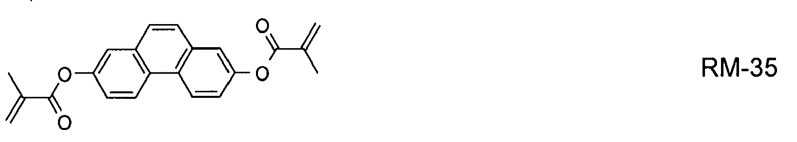

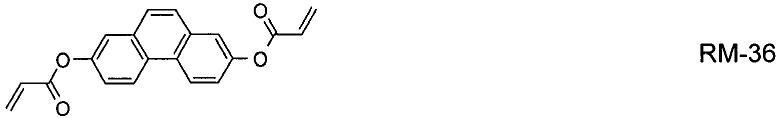

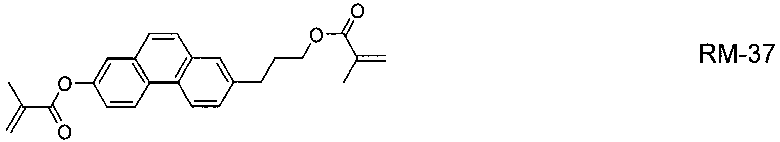

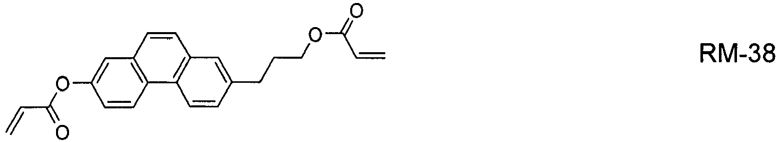

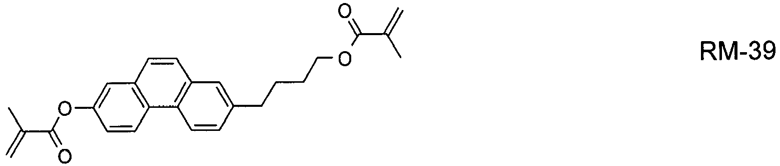

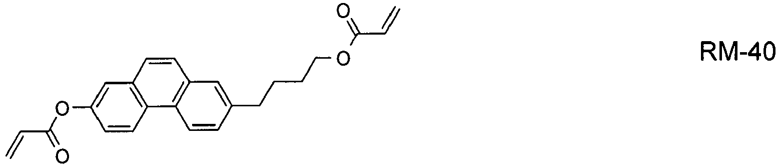

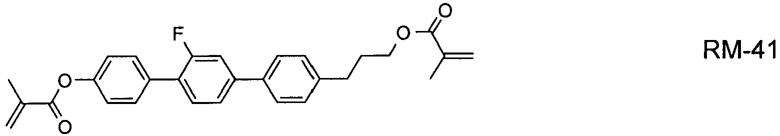

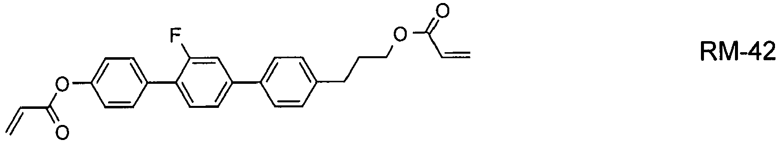

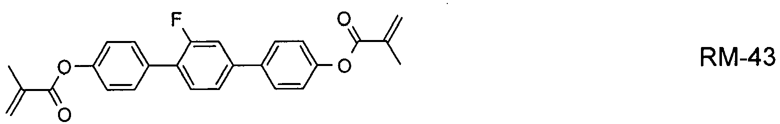

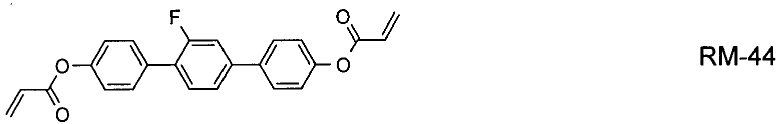

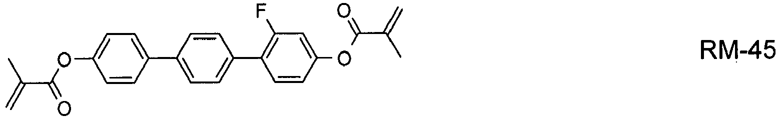

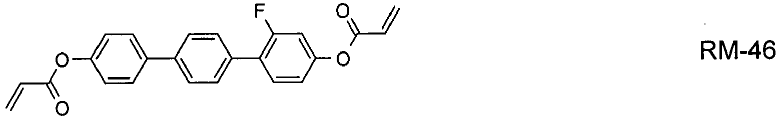

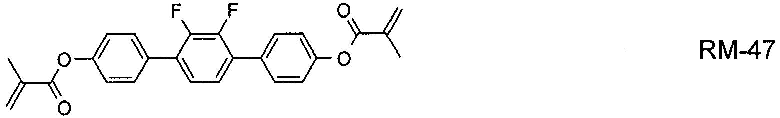

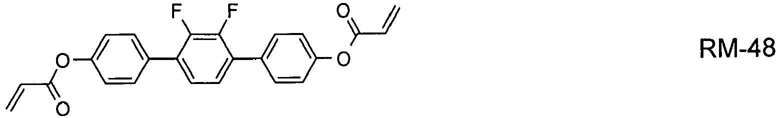

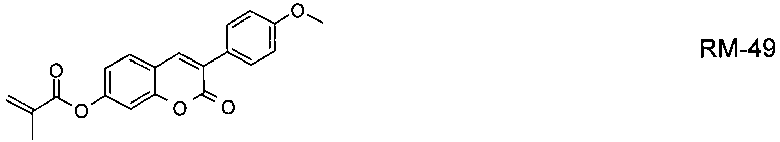

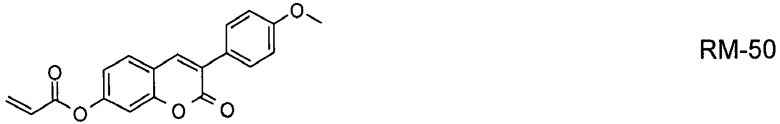

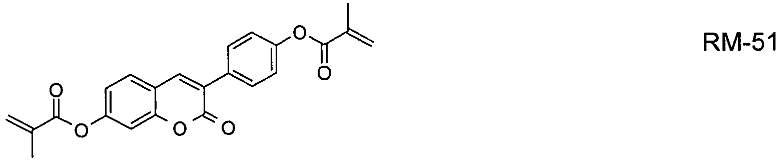

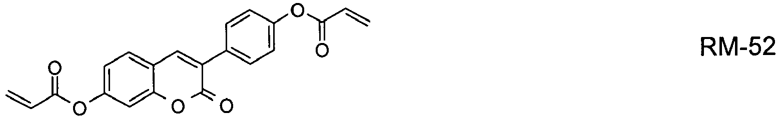

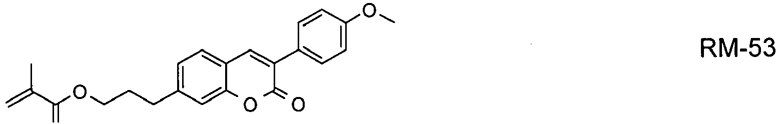

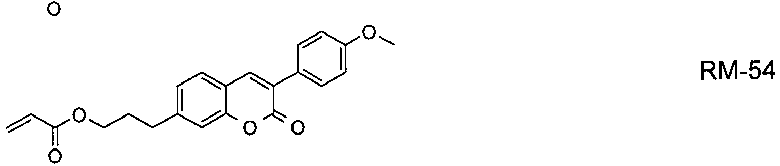

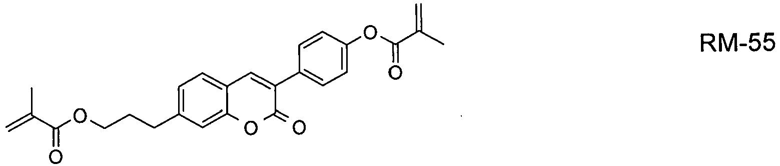

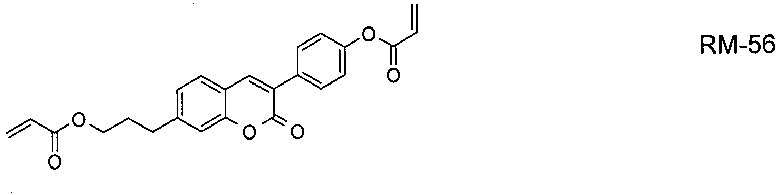

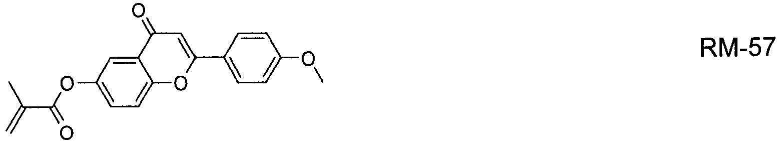

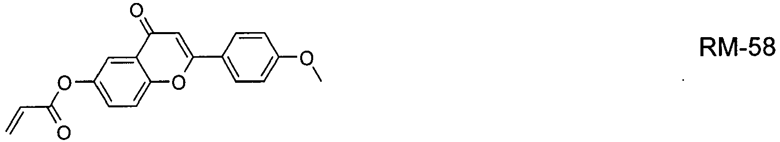

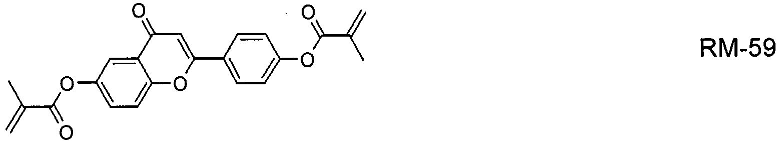

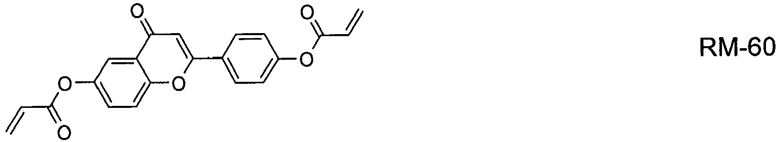

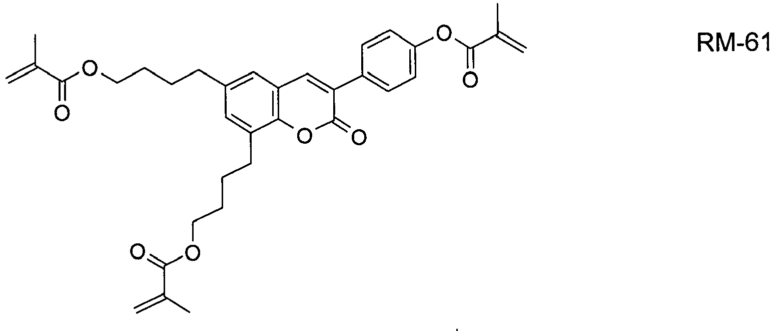

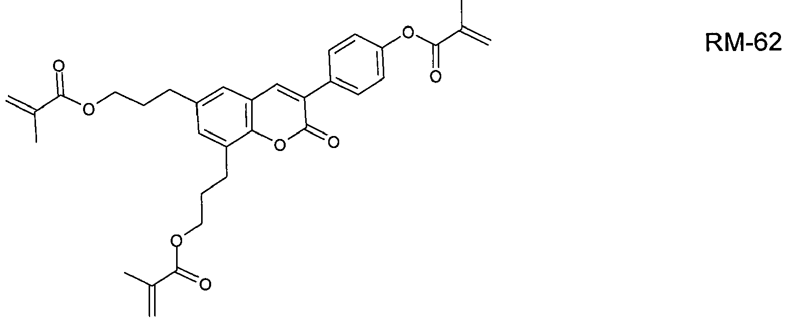

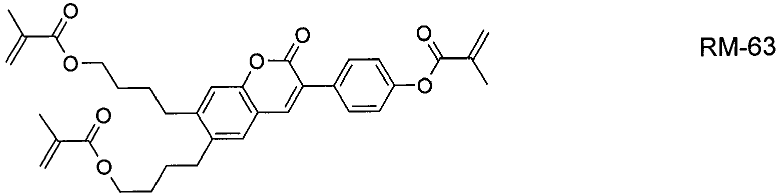

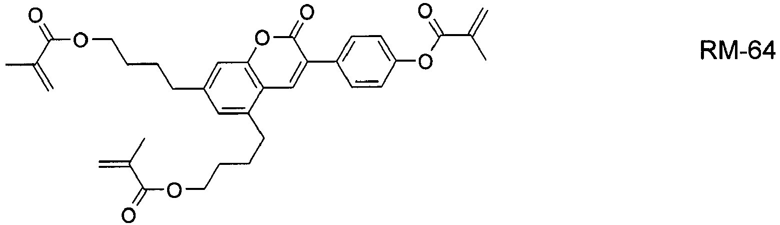

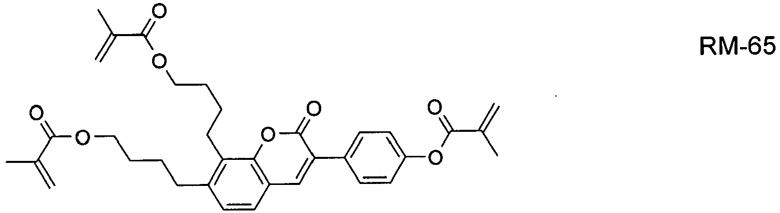

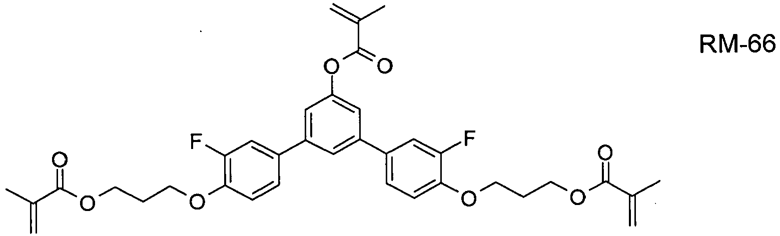

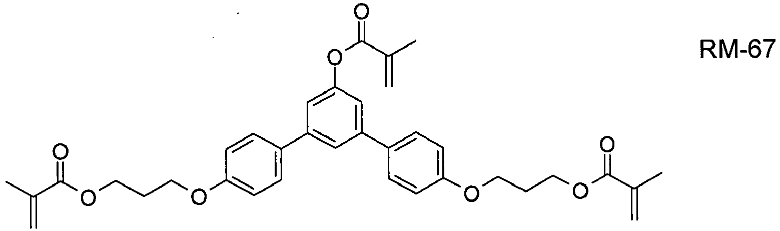

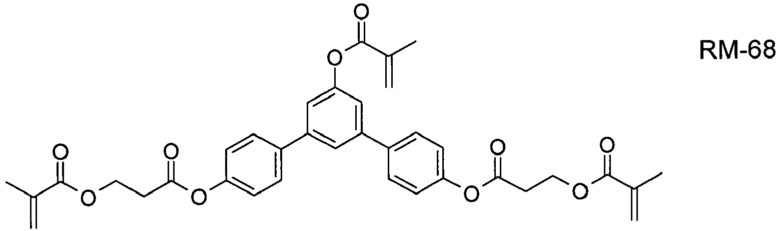

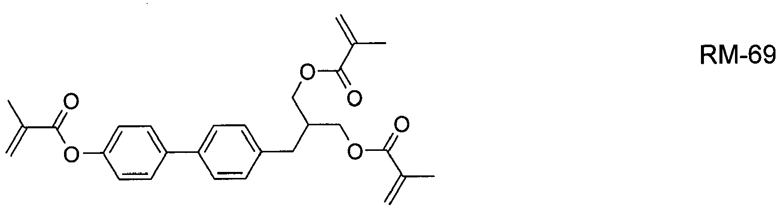

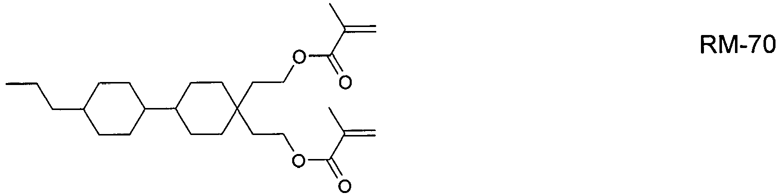

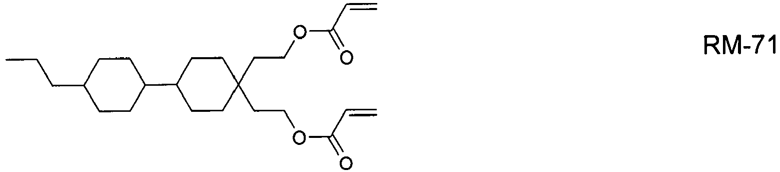

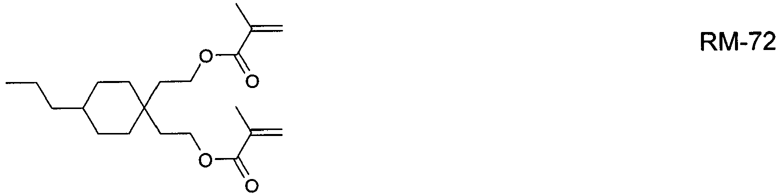

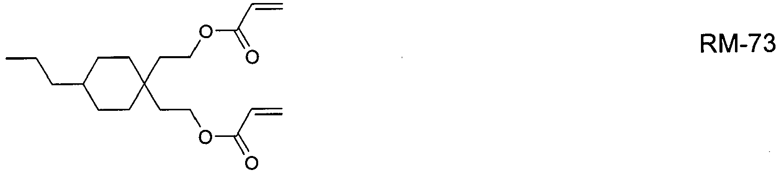

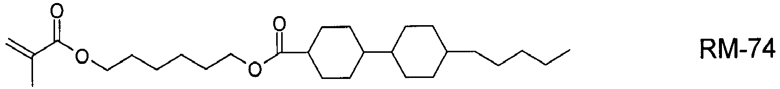

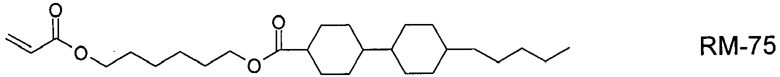

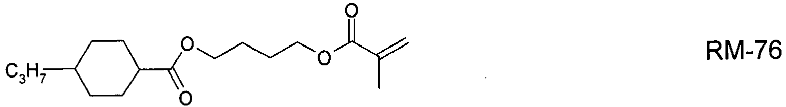

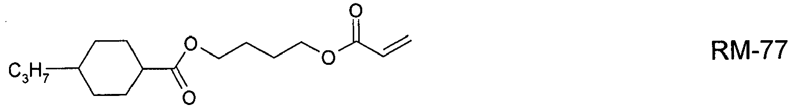

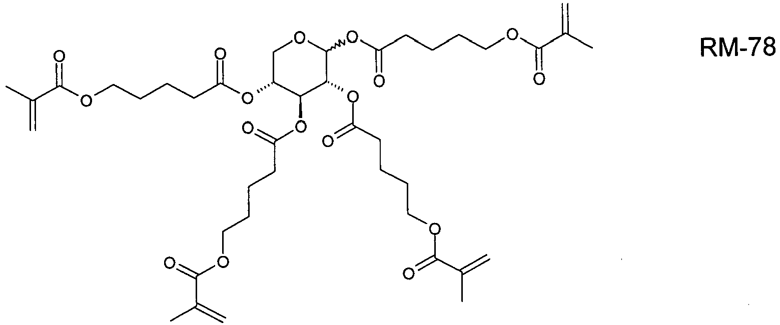

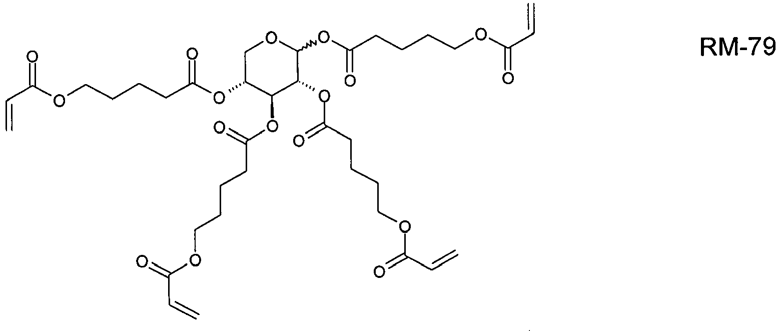

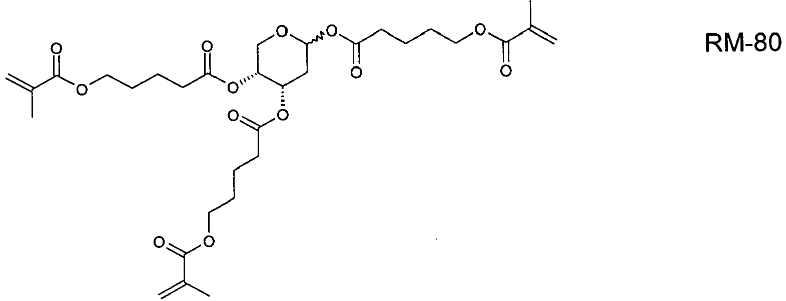

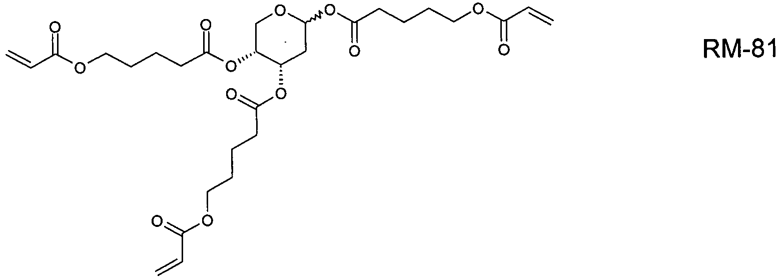

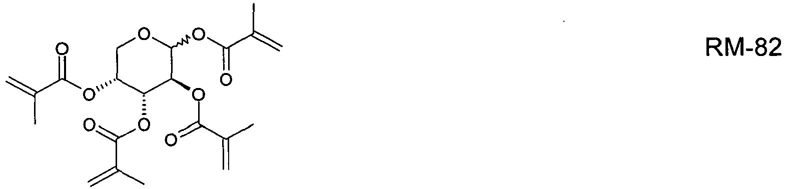

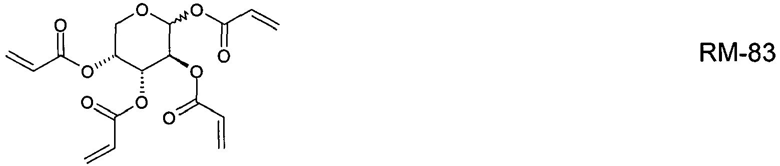

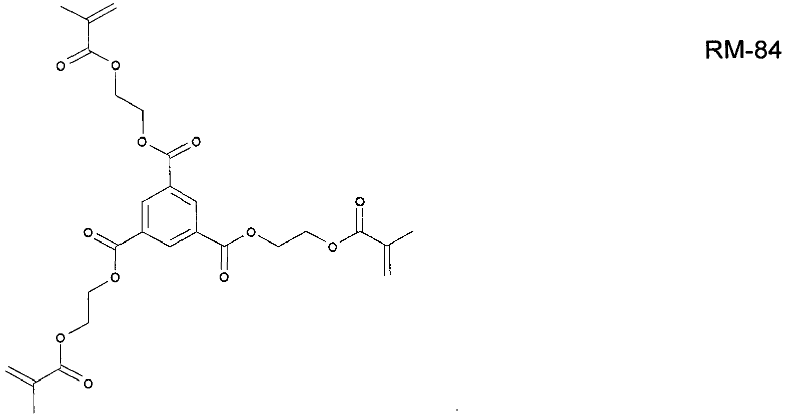

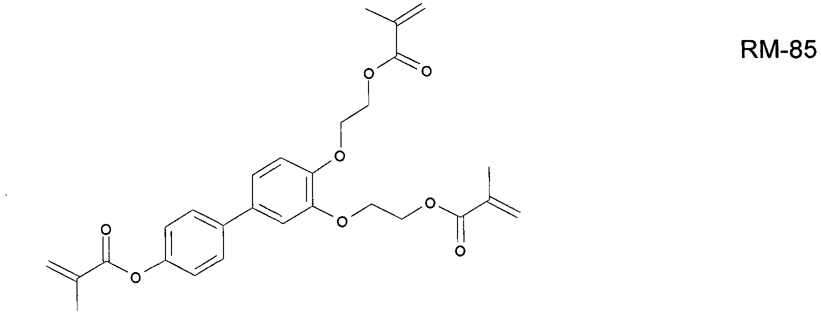

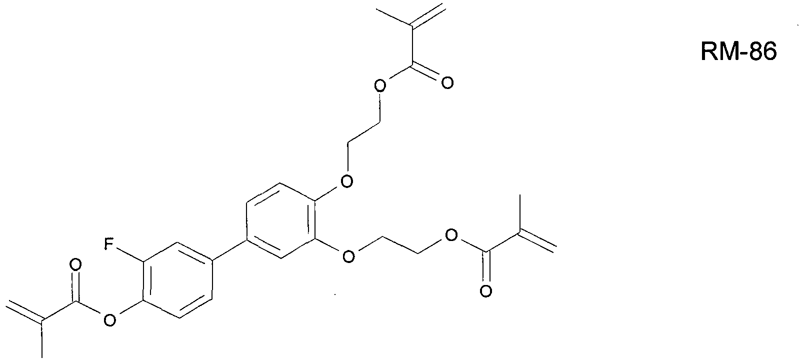

20. Procédé pour la préparation d'un milieu cristallin liquide selon une ou plusieurs des revendications 1 à 19, **caractérisé en ce qu'**un ou plusieurs composé(s) de la formule IA et un ou plusieurs composé(s) choisi(s) parmi le groupe de composés des formulés IIA, IIB et IIC comme défini selon la revendication 1 sont mélangés avec un ou plusieurs composé(s) mésogène(s) et, en option, également avec un ou plusieurs additif(s) et/ou au moins un composé polymérisable.

21. Utilisation d'un milieu cristallin liquide selon une ou plusieurs des revendications 1 à 19 à des fins électro-optiques.

22. Utilisation du milieu cristallin liquide selon la revendication 21 dans des lunettes à obturateurs, pour des applications 3D, dans des affichages TN, PS-TN, STN, TN-TFT, OCB, IPS, PS-IPS, FFS, PS-FFS et PS-VA-IPS.

23. Affichage électro-optique à cristaux liquides contenant un milieu cristallin liquide selon une ou plusieurs des revendications 1 à 19.
